# EUROPEAN PATENT SPECIFICATION

(11) **EP 3 263 673 B1**
(45) Date of publication and mention of the grant of the patent: **02.10.2019**
(21) Application number: 17177994.5
(22) Date of filing: 27.06.2017
(51) Int. Cl.: C09K 19/04, C09K 19/54, C09K 19/56, C09K 19/02, C09K 19/12, C09K 19/18, C09K 19/20, C09K 19/30, C09K 19/32, G02F 1/00

(54) **LIQUID-CRYSTALLINE MEDIUM**
FLÜSSIGKRISTALLINES MEDIUM
MILIEU À BASE DE CRISTAUX LIQUIDES

(30) Priority: 30.06.2016 EP 16177392
(43) Date of publication of application: 03.01.2018
(73) Proprietor: Merck Patent GmbH, 64293 Darmstadt (DE)
(72) Inventor: Yoon, Hyun-Jin, ANYANG-SI, GYEONGGI-DO, 14101 (KR); Park, Mi-Na, Cheonan-si, Chungcheongnam-do (KR); Jeong, Ji-Won, GIMPO-SI, GYEONGGI-DO 10073 (KR); Lee, Eun-Kyu, PYEONGTAEK-SI, GYEONGGI-DO, 17931 (KR); Jin, Min-Ok, GUNPO-SI, GYEONGGI-DO 15824 (KR); Yun, Yong-Kuk, HWASEONG 18477 (KR)

(56) References cited:
- EP-A1- 2 985 334
- EP-A2- 2 918 658
- US-A1- 2010 213 423

## Description

The invention relates to a liquid-crystalline medium based on a mixture of polar compounds comprising a self-alignment additive for vertical alignment and additionally at least one compound of formula I as described more closely within this disclosure (reactive hindered amine), especially for vertically aligned display applications.

Media of this type can be used, in particular, for electro-optical displays having active-matrix addressing based on the ECB effect.

The principle of electrically controlled birefringence, the ECB effect or also DAP (deformation of aligned phases) effect, was described for the first time in 1971 (M.F. Schieckel and K. Fahrenschon, "Deformation of nematic liquid crystals with vertical orientation in electrical fields", Appl. Phys. Lett. 19 (1971), 3912). This was followed by papers by J.F. Kahn (Appl. Phys. Lett. 20 (1972), 1193) and G. Labrunie and J. Robert (J. Appl. Phys. 44 (1973), 4869).

The papers by J. Robert and F. Clerc (SID 80 Digest Techn. Papers (1980), 30), J. Duchene (Displays 7 (1986), 3) and H. Schad (SID 82 Digest Techn. Papers (1982), 244) showed that liquid-crystalline phases must have high values for the ratio of the elastic constants K₃/K₁, high values for the optical anisotropy Δn and values for the dielectric anisotropy of Δε ≤ -0.5 in order to be suitable for use in high-information display elements based on the ECB effect. Electro-optical display elements based on the ECB effect have a homeotropic edge alignment (VA technology = vertically aligned).

Displays which use the ECB effect, as so-called VAN (vertically aligned nematic) displays, for example in the MVA (multi-domain vertical alignment, for example: Yoshide, H. et al., paper 3.1: "MVA LCD for Notebook or Mobile PCs ...", SID 2004 International Symposium, Digest of Technical Papers, XXXV, Book I, pp. 6 to 9, and Liu, C.T. et al., paper 15.1: "A 46-inch TFT-LCD HDTV Technology ...", SID 2004 International Symposium, Digest of Technical Papers, XXXV, Book II, pp. 750 to 753), PVA (patterned vertical alignment, for example: Kim, Sang Soo, paper 15.4: "Super PVA Sets New State-of-the-Art for LCD-TV", SID 2004 International Symposium, Digest of Technical Papers, XXXV, Book II, pp. 760 to 763), ASV (advanced super view, for example: Shigeta, Mitzuhiro and Fukuoka, Hirofumi, paper 15.2: "Development of High Quality LCDTV", SID 2004 International Symposium, Digest of Technical Papers, XXXV, Book II, pp. 754 to 757) modes, have established themselves as one of the three more recent types of liquid-crystal display that are currently the most important, in particular for television applications, besides IPS (in-plane switching) displays (for example: Yeo, S.D., paper 15.3: "An LC Display for the TV Application", SID 2004 International Symposium, Digest of Technical Papers, XXXV, Book II, pp. 758 & 759) and the long-known TN (twisted nematic) displays. The technologies are compared in general form, for example, in Souk, Jun, SID Seminar 2004, seminar M-6: "Recent Advances in LCD Technology", Seminar Lecture Notes, M-6/1 to M-6/26, and Miller, Ian, SID Seminar 2004, seminar M-7: "LCD-Television", Seminar Lecture Notes, M-7/1 to M-7/32. Although the response times of modern ECB displays have already been significantly improved by addressing methods with overdrive, for example: Kim, Hyeon Kyeong et al., paper 9.1: "A 57-in. Wide UXGA TFT-LCD for HDTV Application", SID 2004 International Symposium, Digest of Technical Papers, XXXV, Book I, pp. 106 to 109, the achievement of video-compatible response times, in particular on switching of grey shades, is still a problem which has not yet been satisfactorily solved.

Industrial application of this effect in electro-optical display elements requires LC phases, which have to satisfy a multiplicity of requirements. Particularly important here are chemical resistance to moisture, air and physical influences, such as heat, infrared, visible and ultraviolet radiation and direct and alternating electric fields.

Furthermore, industrially usable LC phases are required to have a liquid-crystalline mesophase in a suitable temperature range and low viscosity.

None of the hitherto-disclosed series of compounds having a liquid-crystalline mesophase includes a single compound which meets all these requirements. Mixtures of two to 25, preferably three to 18, compounds are therefore generally prepared in order to obtain substances which can be used as LC phases. However, it has not been possible to prepare optimum phases easily in this way since no liquid-crystal materials having significantly negative dielectric anisotropy and adequate long-term stability were hitherto available.

Matrix liquid-crystal displays (MLC displays) are known. Non-linear elements which can be used for individual switching of the individual pixels are, for example, active elements (i.e. transistors). The term "active matrix" is then used, where a distinction can be made between two types:
1. MOS (metal oxide semiconductor) transistors on a silicon wafer as substrate
2. thin-film transistors (TFTs) on a glass plate as substrate.

In the case of type 1, the electro-optical effect used is usually dynamic scattering or the guest-host effect. The use of single-crystal silicon as substrate material restricts the display size, since even modular assembly of various part-displays results in problems at the joints.

In the case of the more promising type 2, which is preferred, the electro-optical effect used is usually the TN effect.

A distinction is made between two technologies: TFTs comprising compound semiconductors, such as, for example, CdSe, or TFTs based on polycrystalline or amorphous silicon. The latter technology is being worked on intensively worldwide.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The term MLC displays here covers any matrix display with integrated non-linear elements, i.e. besides the active matrix, also displays with passive matrix (PM displays).

MLC displays of this type are particularly suitable for TV applications (for example pocket TVs) or for high-information displays in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORI-MACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates. Since the specific resistance of the liquid-crystal mixture generally drops over the life of an MLC display owing to interaction with the inside surfaces of the display, a high (initial) resistance is very important for displays that have to have acceptable resistance values over a long operating period.

VA displays have significantly better viewing-angle dependencies and are therefore principally used for televisions and monitors. However, there continues to be a need here to improve the response times, in particular with respect to the use of televisions having frame rates (image change frequency/repetition rates) of greater than 60 Hz. At the same time, however, the properties, such as, for example, the low-temperature stability, must not be impaired.

The reliability of liquid crystal (LC) mixtures is one of the major issues in today's LCD industry. A main aspect is the stability of the liquid crystal molecules towards the light emitted from the backlight unit of the LCD. Light induced reactions of the LC material can cause display defects known as image sticking. This strongly reduces the lifetime of the LCD and is one of the main reliability criterions in LCD industry.

The document EP 2 985 334 A1 discloses a LC mixture comprising a stabilizer of the 2,2,6,6-tetramethylpiperidine type and a self-alignment additive for vertical alignment. The stabilizer is not of the polymerizable type.

In the document US 2010/0213423 A1 a polymerizable light stabilizer is disclosed, which is used only for a polymerized alignment material, which is a polyamide acid composition.

In conventional VA-displays a polyimide (PI) layer is needed for inducing the required homeotropic orientation of the LC. Besides of the significant costs due to its production, unfavourable interaction between PI and LC often leads to a reduction of the electric resistance of the VA-display. The number of suitable LC molecules is thus significantly reduced, at the expenses of the overall switching performances (e.g. higher switching times) of the display. Getting rid of PI is thus desirable, while providing for the required homeotropic orientation.

Thus, there is a demand to find LC mixtures which do not require a polyimide layer for the homeotropic orientation but still show a high performance and reliability.

Some self-aligning additives for inducing PI-less vertical alignment have been proposed in the publications WO 2012/038026 and EP 2918658.

The invention thus has an object of providing liquid-crystal mixtures, in particular for monitor and TV applications, which are based on the ECB effect especially for VA, PSA, PS-VA, PVA, MVA, PM-VA, HT-VA and VA-IPS applications, which do not have the above-mentioned disadvantages or only do so to a reduced extent. In particular, it must be ensured for monitors and televisions that they also operate at extremely high and extremely low temperatures and have short response times and at the same time have improved reliability behaviour, in particular have no or significantly reduced image sticking after long operating times.

It has now been found that these and other objects can be achieved if liquid-crystalline media according to the invention are used in LC displays, especially and preferred in displays without any orientation layer (polyimide layer).

The invention thus relates to a liquid crystalline medium, preferably based on a mixture of polar compounds, comprising a self-alignment additive for vertical alignment,
characterized in that it additionally contains at least one compound of the formulae I-1 to I-45, or a polymer comprising its polymerized form, 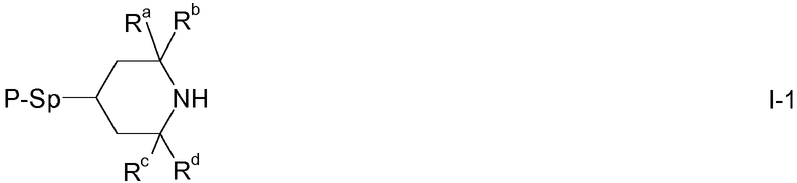 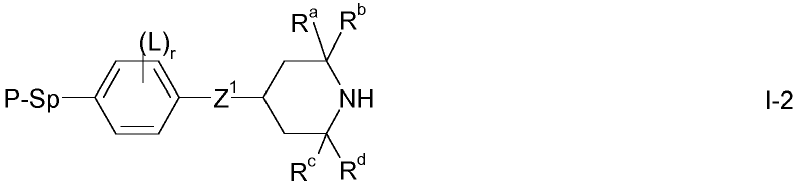 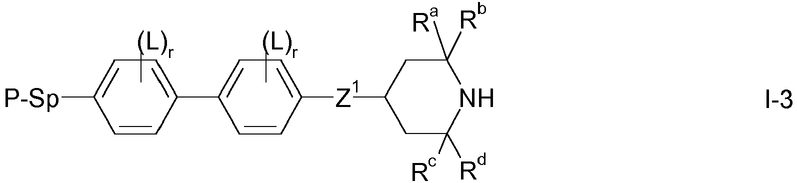 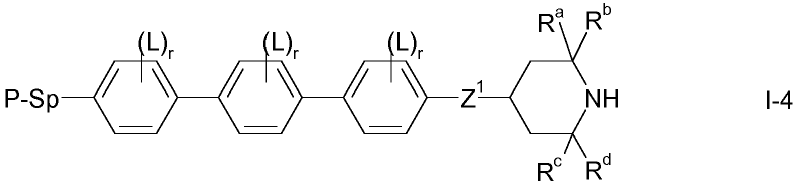 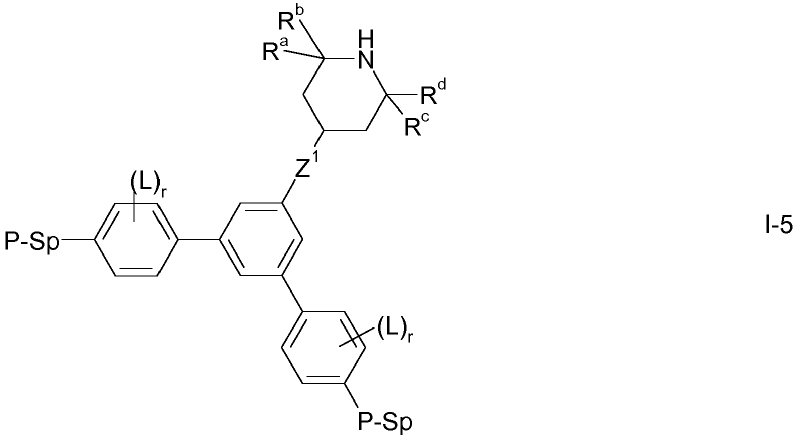 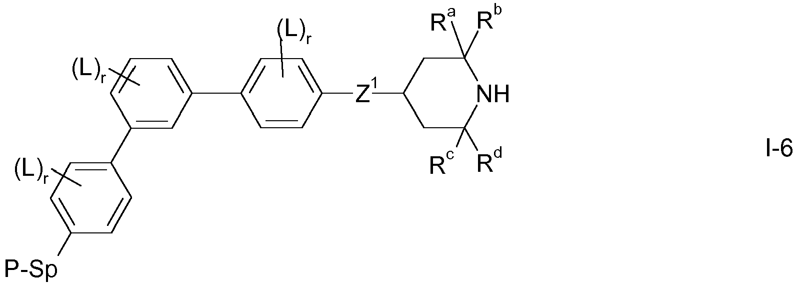 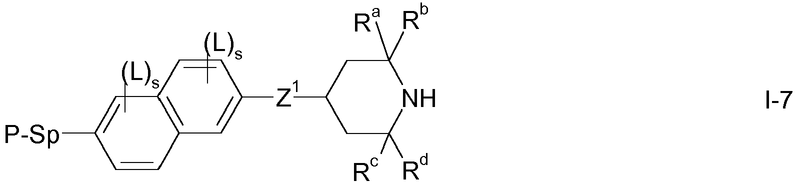 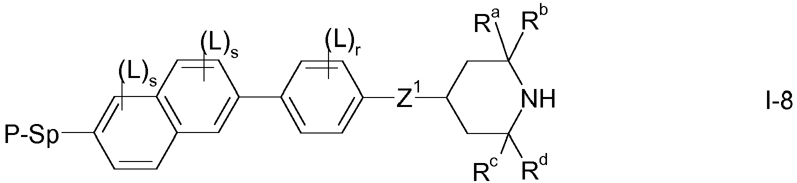 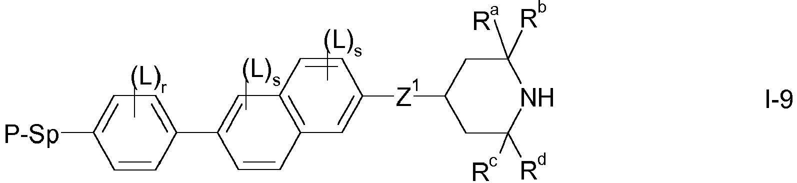 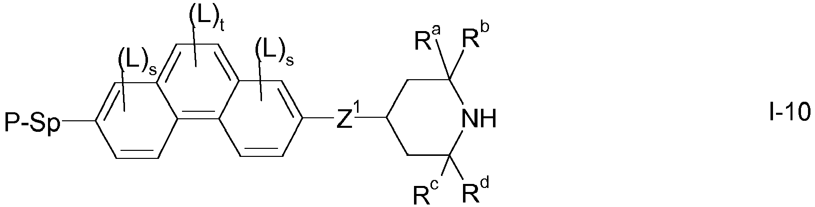 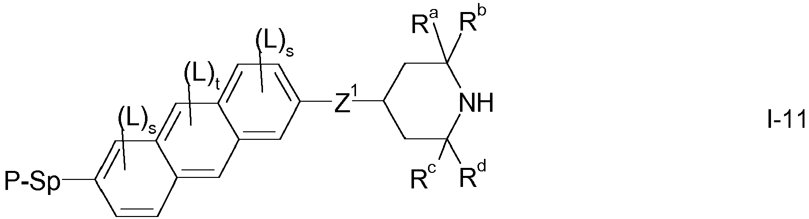 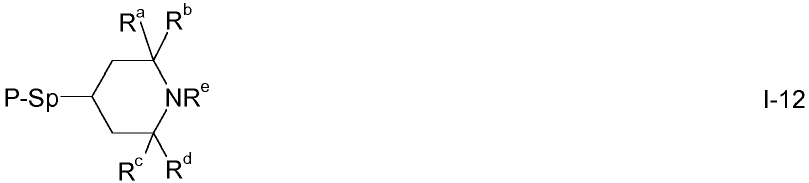 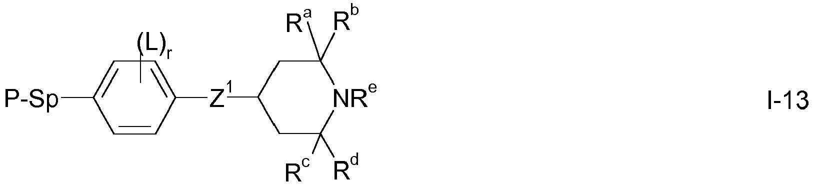 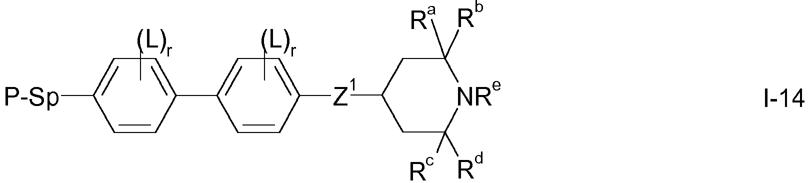 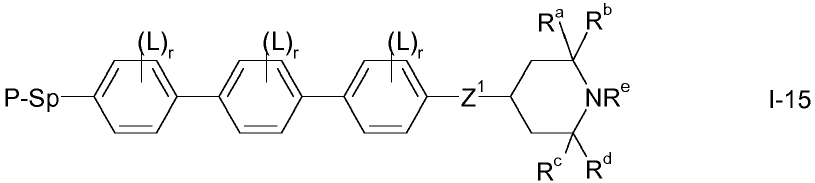 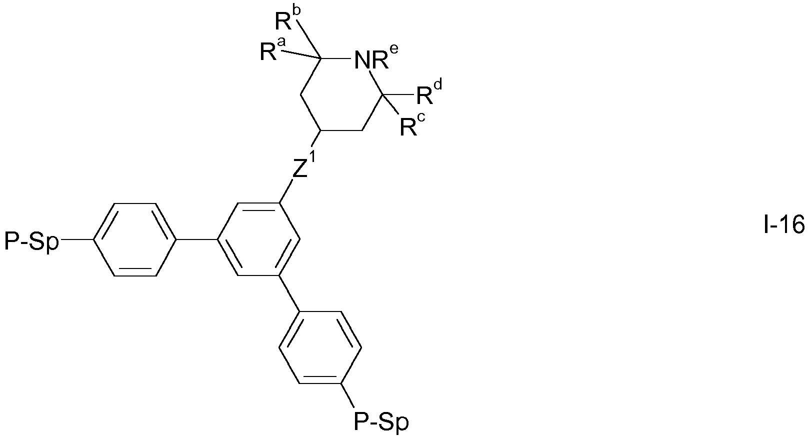 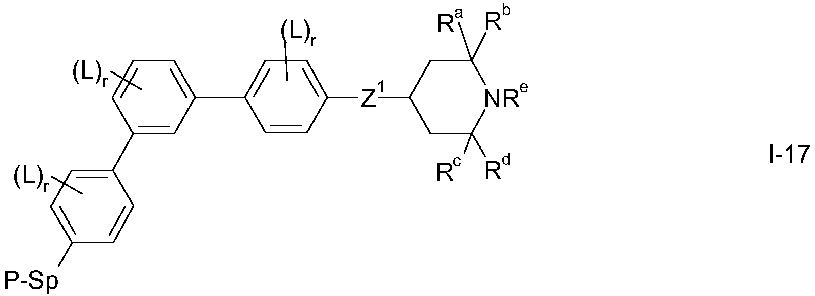 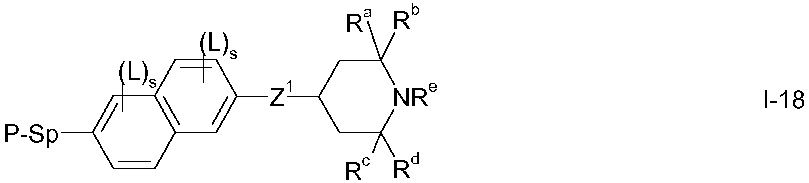 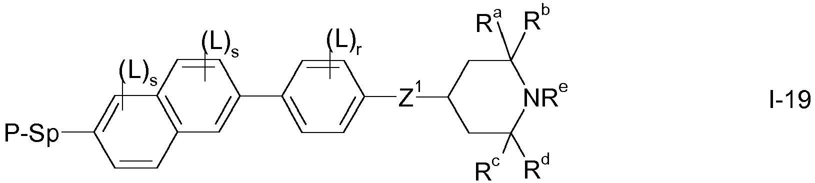 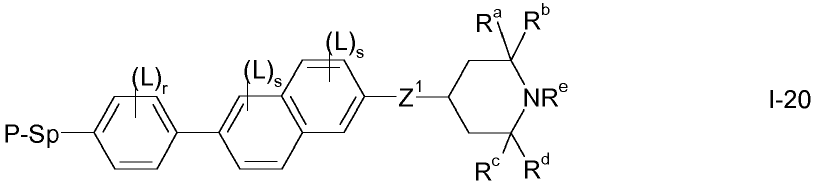 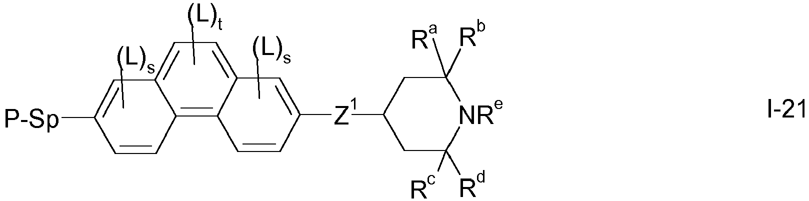 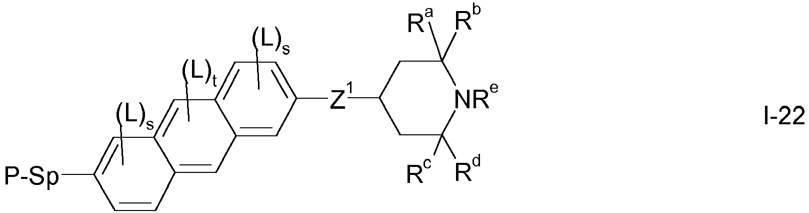 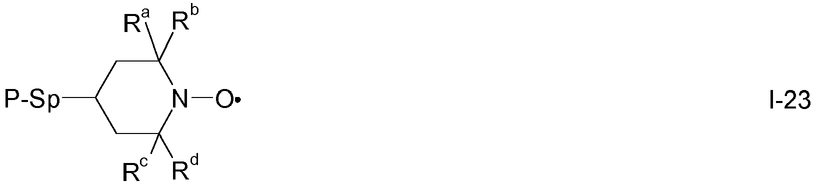 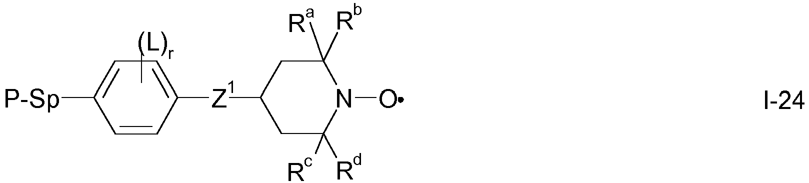 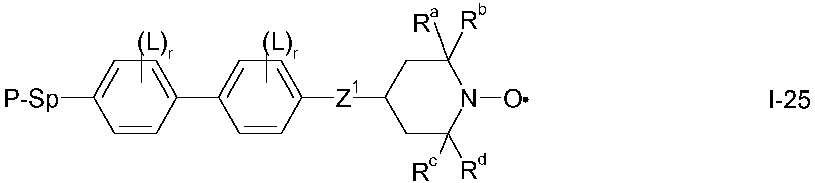 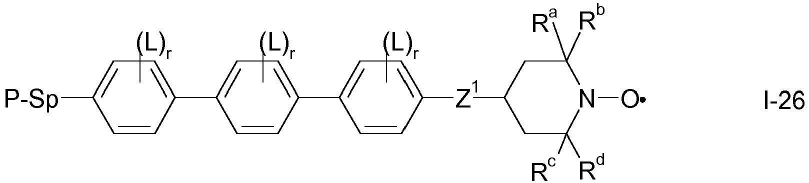 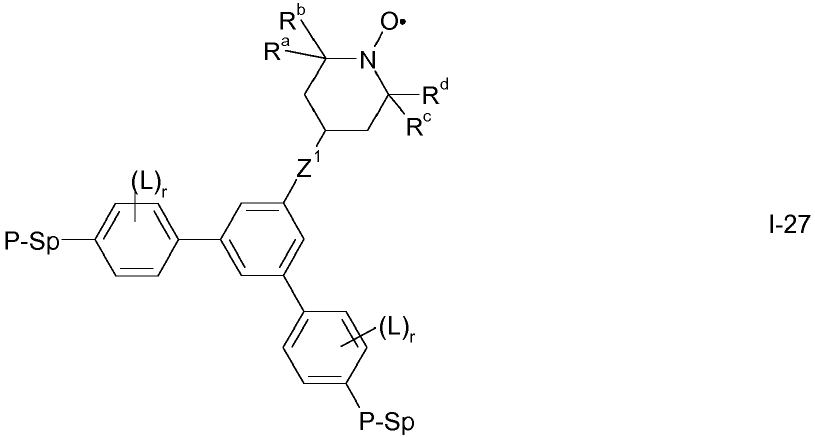 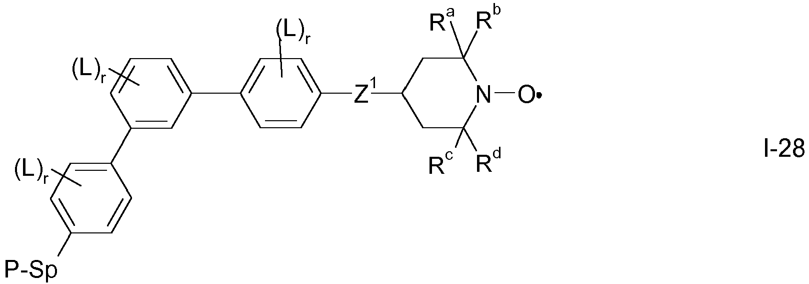 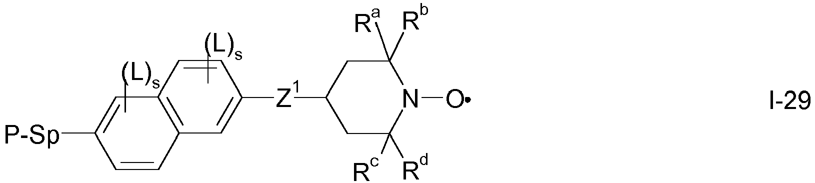 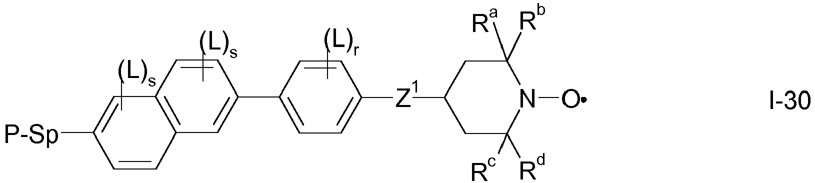 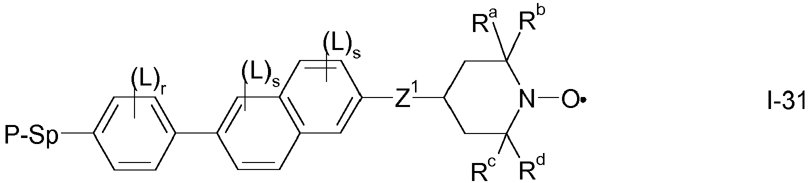 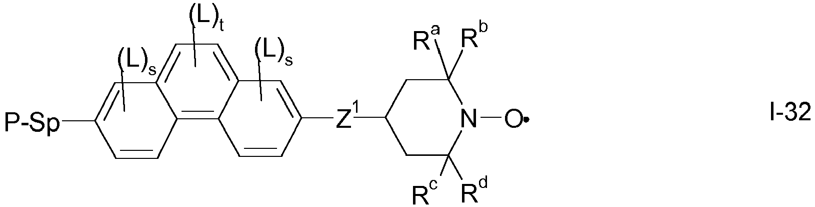 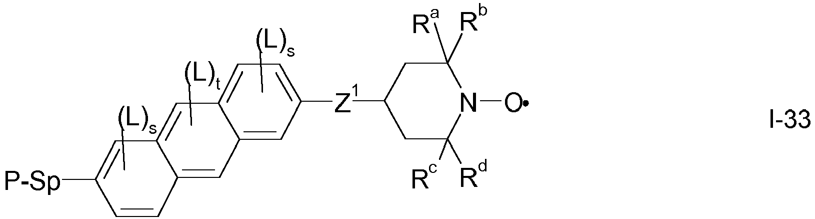 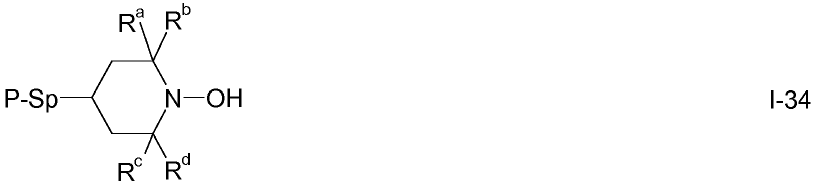 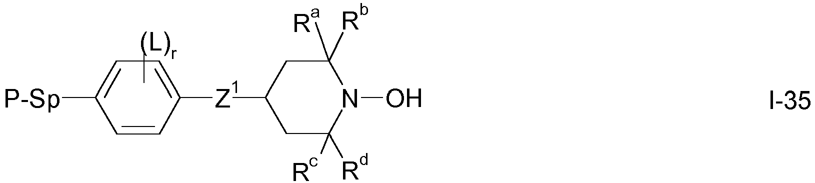 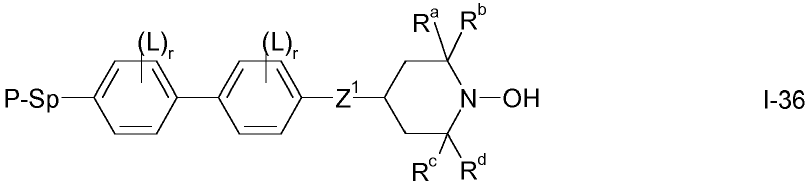 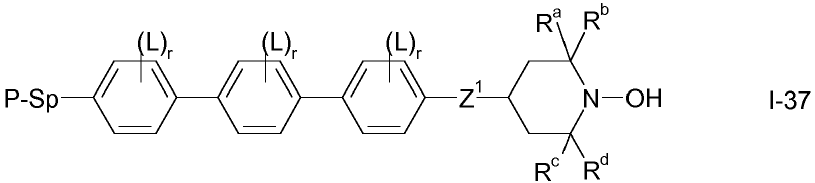 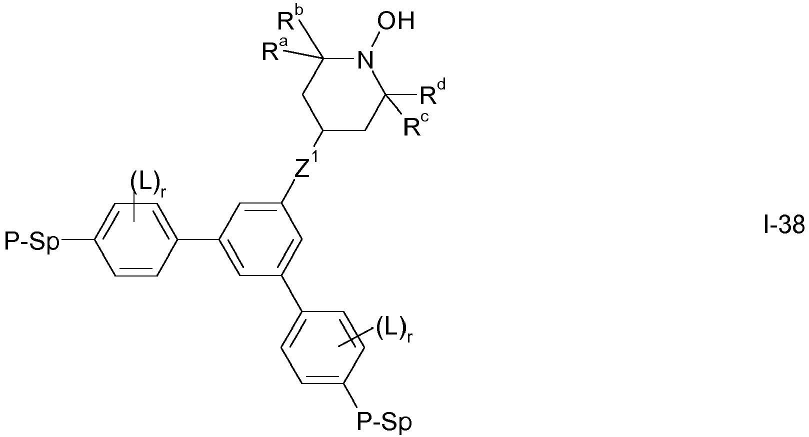 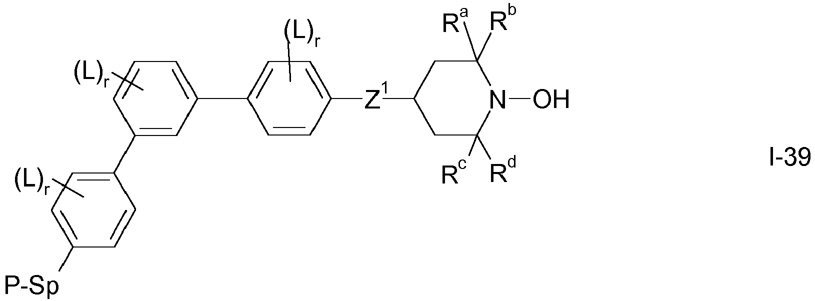 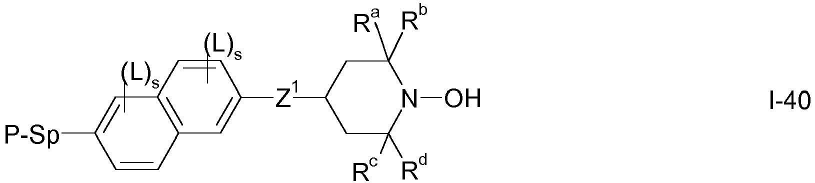 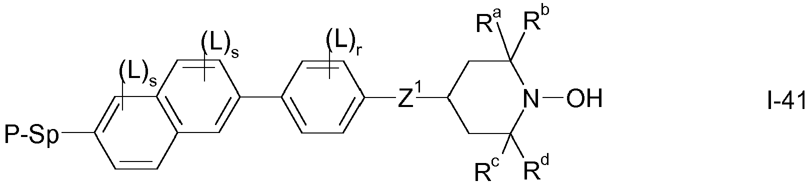 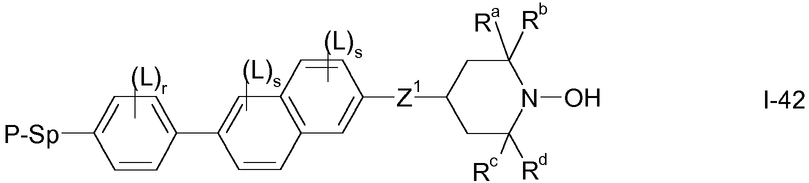 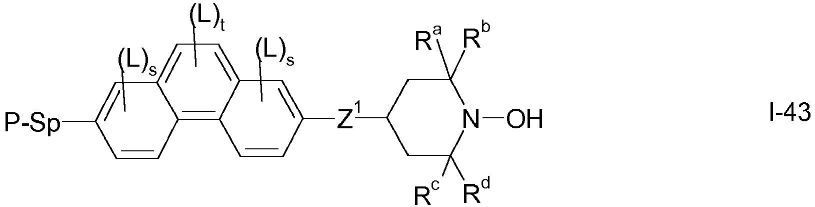 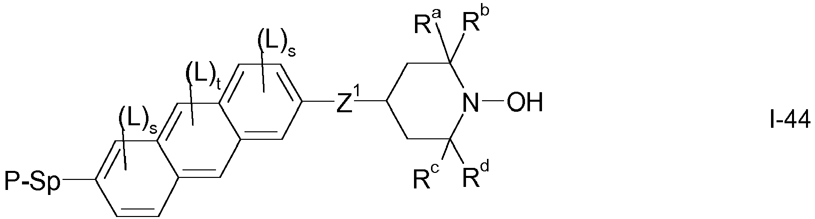 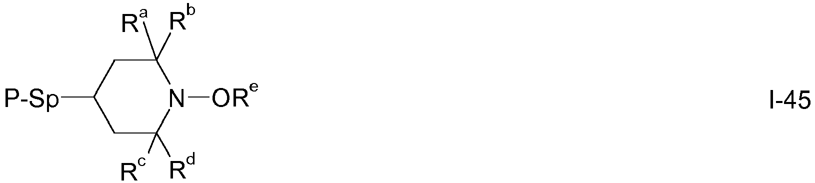 wherein the individual radicals, independently of each other, and on each occurrence identically or differently, have the following meanings
- R^{a}, R^{b}, R^{c}, R^{d}: straight chain or branched alkyl with 1 to 10 C atoms, preferably with 1 to 6 C atoms, very preferably with 1 to 4 C atoms,
- P: vinyloxy, acrylate, methacrylate, fluoroacrylate, chloroacrylate, oxetane or epoxy, preferably acrylate or methacrylate,
- Sp: a spacer group or a single bond,
- Z¹: -O-, -S-, -CO-, -CO-O-, -O-CO- , -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -CH=CF-, -CF=CH-, -C≡C-, -CH=CH-CO-O-, -O-CO-CH=CH-, -CH2-CH2-CO-O-, -O-CO-CH₂-CH₂-, -CR⁰⁰R⁰⁰⁰-, or a single bond, with the proviso that, if m1 is 0, Z¹ is a single bond,
- R⁰⁰, R⁰⁰⁰: H or alkyl having 1 to 12 C atoms,
- L: P-Sp-, F, CI, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl or P-Sp-,
- n: 1, 2, 3 or 4,
- R^{e}: is alkyl having 1 to 12 C atoms,
- r: is 0, 1, 2, 3 or 4, and
- s: is 0, 1, 2 or 3.

The invention more specifically relates to a liquid-crystalline medium comprising
- a polymerisable component A) comprising one or more polymerisable compounds, at least one of which is a compound of formula I, and
- a liquid-crystalline component B), hereinafter also referred to as "LC host mixture", comprising, preferably consisting of, one or more mesogenic or liquid-crystalline compounds.

The invention preferably relates to a liquid-crystalline medium comprising
- a polymerisable component A) comprising two or more polymerisable compounds, at least one of which is a compound of formula I, and at least one other of which is different from formula I,
- a liquid-crystalline component B), hereinafter also referred to as "LC host mixture", comprising, preferably consisting of, one or more mesogenic or liquid-crystalline compounds.

The liquid-crystalline component B) of a liquid-crystalline medium according to the present invention is hereinafter also referred to as "LC host mixture", and preferably comprises one or more, preferably at least two mesogenic or LC compounds selected from low-molecular-weight compounds which are unpolymerisable.

The invention furthermore relates to a liquid-crystalline medium as described above and below, wherein the LC host mixture or component B) comprises at least one mesogenic or LC compound comprising an alkenyl group.

The invention furthermore relates to a liquid-crystalline medium or LC display as described above and below, wherein the compounds of formula I, or the polymerisable compounds of component A), are polymerised.

The invention furthermore relates to a process for preparing a liquid-crystalline medium as described above and below, comprising the steps of mixing one or more mesogenic or LC compounds, or an LC host mixture or LC component B) as described above and below, with a self-alignment additive and one or more compounds of formula I, and optionally with further LC compounds and/or additives.

The invention furthermore relates to the use of liquid-crystalline media according to the invention in PSA displays, in particular the use in PSA displays containing a liquid-crystalline medium, for the production of a tilt angle in the liquid-crystalline medium by in-situ polymerisation of the compound(s) of the formula I in the PSA display, preferably in an electric or magnetic field.

The invention furthermore relates to an LC display comprising a liquid-crystalline medium according to the invention, in particular a PSA display, particularly preferably a PS-VA, PS-OCB, PS-IPS, PS-FFS, PS-UB-FFS, PS-posi-VA or PS-TN display.

The invention furthermore relates to an LC display comprising a liquid-crystalline medium according to the invention, which is preferably a PSA display, very preferably a PS-VA, PS-OCB, PS-IPS, PS-FFS, PS-UB-FFS, PS-posi-VA or PS-TN display.

The invention furthermore relates to a LC display of the PSA type comprising two substrates, at least one which is transparent to light, an electrode provided on each substrate or two electrodes provided on only one of the substrates, and located between the substrates a layer of a liquid-crystalline medium as described above and below, wherein the polymerisable compounds are polymerised between the substrates of the display.

The invention furthermore relates to a process for manufacturing an LC display as described above and below, comprising the steps of filling or otherwise providing a liquid-crystalline medium, which comprises one or more polymerisable compounds as described above and below, between the substrates of the display, and polymerising the polymerisable compounds.

One category of light stabilisers for polymers consists of what are known as hindered amine light stabilizers (abbreviated as HALS). They are derivatives of 2,2,6,6-tetramethyl piperidine and are reported as stabilizers against light-induced degradation of plastics. A variety of structures, including polymerized HALS are known, see e.g. Kröhnke, Christoph et al. "Antioxidants" in Ullmann's Encyclopedia of Industrial Chemistry (2015), Wiley-VCH, DOI10.1002/14356007.a03_091.pub2.

As used herein, the terms "reactive mesogen" and "RM" will be understood to mean a compound containing a mesogenic or liquid-crystalline skeleton, and one or more functional groups attached thereto which are suitable for polymerisation. Such groups are also referred to as "polymerisable group" or a chemical structure substituent "P".

Unless stated otherwise, the term "polymerisable compound" as used herein will be understood to mean a polymerisable monomeric compound.

As used herein, the term "low-molecular-weight compound" will be understood to mean to a compound that is monomeric and/or is not prepared by a polymerisation reaction, as opposed to a "polymeric compound" or a "polymer".

As used herein, the term "unpolymerisable compound" will be understood to mean a compound that does not contain a functional group that is suitable for polymerisation under the conditions usually applied for the polymerisation of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerisable group(s) in a polymerisable mesogenic compound. Whereas the mesogenic group generally contains rings, the spacer group is generally without ring systems, i.e. is in chain form, where the chain may also be branched. The term chain is applied, for example, to an alkylene group. Substitutions on and in the chain, for example by -O- or -COO-, are generally included. In functional terms, the spacer (the spacer group) is a linker between functional structural parts of a molecule which facilitates a certain spatial flexibility between these parts. In a preferred embodiment Sp denotes an alkylene or alkyleneoxy group, preferably with 2 to 5 carbon atoms.

Above and below, 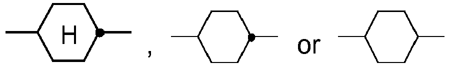 denote a trans-1,4-cyclohexylene ring, and 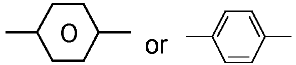 denote a 1,4-phenylene ring.

Above and below "organic group" denotes a carbon group or hydrocarbon group.

"Carbon group" denotes a mono- or polyvalent organic group containing at least one carbon atom, where this either contains no further atoms (such as, for example, -C≡C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" generally denotes F, CI, Br or I.

-CO-, -C(=O)-, -(CO)- and -C(O)- denote a carbonyl group, i.e.

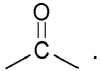

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic hydrocarbon group or a group derived therefrom. The term "heteroaryl" denotes "aryl" as defined above, containing one or more heteroatoms, preferably selected from N, O, S, Se, Te, Si and Ge.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxy-carbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are C₁-C₂₀ alkyl, C₂-C₂₀ alkenyl, C₂-C₂₀ alkynyl, C₃-C₂₀ allyl, C₄-C₂₀ alkyldienyl, C₄-C₂₀ polyenyl, C₆-C₂₀ cycloalkyl, C₄-C₁₅ cycloalkenyl, C₆-C₃₀ aryl, C₆-C₃₀ alkylaryl, C₆-C₃₀ arylalkyl, C₆-C₃₀ alkylaryloxy, C₆-C₃₀ arylalkyloxy, C₂-C₃₀ heteroaryl, C₂-C₃₀ heteroaryloxy.

Particular preference is given to C₁-C₁₂ alkyl, C₂-C₁₂ alkenyl, C₂-C₁₂ alkynyl, C₆-C₂₅ aryl and C₂-C₂₅ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, CI, Br, I or CN and in which one or more non-adjacent CH₂ groups may each be replaced, independently of one another, by -C(R^{x})=C(R^{x})-, -C≡C-, -N(R^{x})-, -O-, -S-, -CO-, -CO-O-, -O-CO-, -O-CO-O- in such a way that O and/or S atoms are not linked directly to one another.

Herein, R^{x} preferably denotes H, F, CI, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or CI, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

The term alkoxyalkyl denotes a group of the formula -alkylene-alkoxy
Aryl and heteroaryl groups can be monocyclic or polycyclic, i.e. they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]-thiophene, thieno[3,2b]thiophene, dithienothiophene, isobenzothiophene, dibenzothiophene, benzothiadiazothiophene, or combinations of these groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4, 7-methanoindane-2,5-diyl.

Preferred substituents L are selected from P-Sp-, F, Cl, -CN, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl.

Very preferred substituents L are, for example, F, CI, CN, CH₃, C₂H₅, OCH₃, OC₂H₅, COCH₃, COC₂H₅, COOCH₃, COOC₂H₅, CF₃, OCF₃, OCHF₂, OC₂F₅.

A substituted phenylene of formula 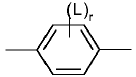 is preferably 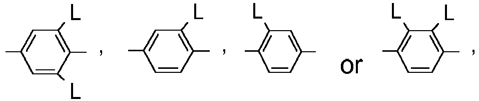 in which L has one of the meanings indicated above.

If the spacer group Sp is different from a single bond, it is preferably selected of the formula Sp"-X", so that the respective radical P-Sp-conforms to the formula P-Sp"-X"-, wherein
Sp" denotes alkylene having 1 to 20, preferably 1 to 12, C atoms, which is optionally mono- or polysubstituted by F, CI, Br, I or CN and in which, in addition, one or more non-adjacent CH₂ groups may each be replaced, independently of one another, by -O-, -S-, -NH-, -N(R⁰)-, -Si(R⁰R⁰⁰)-, -CO-, -CO-O-, -O-CO- , -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C-in such a way that O and/or S atoms are not linked directly to one another,
X" denotes -O-, -S-, -CO-, -CO-O-, -O-CO- , -O-CO-O-, -CO-N(R⁰)-, -N(R⁰)-CO-, -N(R⁰)-CO-N(R⁰⁰)-, -OCH₂-, -CH₂O-,-SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
R⁰ and R⁰⁰ each, independently of one another, denote H or alkyl having 1 to 20 C atoms, and
Y² and Y³ each, independently of one another, denote H, F, Cl or CN.
X" is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for
example, -(CH₂)ₚ₁-, -(CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methylimino-ethylene, 1-methylalkylene, ethenylene, propenylene and butenylene.

Preferably R^{a-d} in formulae 1-3 are selected, independently of each other, from methyl, ethyl, n-propyl, isopropyl, n-butyl, isobutyl, t-butyl, very preferably methyl.

Preferably R^{a}, R^{b}, R^{c} and R^{d} in formulae 1-3 have the same meaning.

Preferably m1 in formula I is 0 or 1.

Preferably Z¹ in formula I denotes -CO-O-, -O-CO- or a single bond, very preferably -CO-O- or a single bond.

Preferably P in formula I is an acrylate or methacrylate group.

Preferably Sp in formula I is a single bond.

Preferably Z¹ in formulae I-1 to I-45 is -CO-O-, -O-CO-, or a single bond, very preferably -CO-O- or a single bond.

Preferably P in formulae I-1 to I-45 is acrylate or methacrylate.

Preferably Sp in formulae I-1 to I-45 is a single bond.

Preferably R^{a}, R^{b}, R^{c} and R^{d} in I-1 to I-45 are methyl.

Further preferred compounds of formulae I-1 to I-45 are independently selected from the following preferred embodiments, including any combination thereof:
- The compounds contain exactly one polymerisable group (represented by the group P),
- P is acrylate or methacrylate, more preferably methacrylate,
- Sp is a single bond,
- Sp, when being different from a single bond, is selected from -(CH₂)ₐ-, -(CH₂)ₐ-O-, -(CH₂),--CO-O-, -(CH₂)ₐ-O-CO-, wherein a is 2, 3, 4, 5 or 6, and the O-atom or the CO-group, respectively, is connected to the benzene ring,
- R^{a}, R^{b}, R^{c} and R^{d} are methyl,
- R^{e} is methyl, ethyl, n-propyl, iso-propyl, tert-butyl, n-butyl or n-pentyl,
- m1 is 0, 1 or 2,
- m2 is 0, 1 or 2,
- Z¹ denotes -CO-O-, -O-CO- or a single bond, preferably -CO-O-,
- L denotes F, CI, CN, or alkyl or alkoxy with 1 to 6 C atoms that is optionally fluorinated, very preferably F, CI, CN, CH₃, OCH₃, OCF₃, OCF₂H or OCFH₂, most preferably F,
- r is 0 or 1,
- s is 0,
- t is 0
- u is 0, 1 or 2.

The liquid-crystalline media according to the invention are highly suitable for the use in displays which do not contain any orientation layer. Liquid crystal display devices, in general have a structure in which a liquid crystal mixture is sealed between a pair of insulating substrates, such as glass substrates, in such a manner that the liquid crystal molecules thereof are orientated in a predetermined direction, and an orientation film is formed on the respective substrates on the side of the liquid crystal mixture. As a material of an orientation film there is usually used a polyimide (PI). Homeotropic orientation of the LC molecules is especially necessary for LC modes like PVA, PS-VA, VA, etc., and can be achieved by the use of self-aligning additives, without the need of an orientation film. The mixtures according to the invention show an improved light and temperature stability compared to LC mixtures without compound of formula I. The media according to the invention are also suitable for liquid-crystalline base mixtures comprising different kinds of alkenyl compounds, which may provide advantageous properties. Finally, problems summarized as image sticking can thus be avoided by the use of media according to the invention as the self-aligning VA medium.

In a preferred embodiment, the LC medium according to the invention contains at least one additional polymerisable compound (also called reactive mesogen, RM) or contains a polymer comprising its polymerized form. Such kind of LC mixtures are highly suitable for PI-free PS (polymer stabilised)-VA displays or PSA (polymer sustained alignment) displays. The alignment of the LC molecules is induced by the self-aligning additives and the induced orientation (pre-tilt) may be additionally tuned or stabilized by the polymerization of the reactive mesogens (RMs), under conditions suitable for a multidomain switching. By the tuning of the UV-curing conditions it is possible in one single step to improve simultaneously SWT and contrast ratio. Reliability of the mixture (VHR) after light stress (both UV-curing and Backlight (BLT)) is improved compared to LC mixtures without any self-aligning additive filled in a "classic" PI-coated test cell. Furthermore, the UV-curing may be performed by using cut-filters at a wavelength by which the polymerization of the RMs is still reasonably fast and the VHR values are on an acceptable level.

The media according to the invention preferably exhibit very broad nematic phase ranges having clearing points ≥ 70°C, preferably ≥ 75°C, in particular ≥ 80°C, very favourable values for the capacitive threshold, relatively high values for the holding ratio and at the same time very good low-temperature stabilities at -20°C and -30°C, as well as very low rotational viscosities and short response times.

The media according to the invention preferably exhibit a voltage holding ratio (VHR) of 98.0 % or more, more preferably of 98.5 % or more, and most preferably of 99.0 % or more under the methods indicated throughout this disclosure, e.g typically at 60 °C and a cell thickness d ∼ 4.0 µm, ITO coating on both sides, no additional layers.

Some preferred embodiments of the media according to the invention are indicated below.

The self-alignment additive for vertical alignment is preferably selected of formula II

MES-R² II

in which
MES is a mesogenic group comprising one or more rings, which are connected directly or indirectly to each other, and optionally one or more polymerizable groups, which are connected to MES directly or via a spacer,
   and
R² is a polar anchor group, preferably comprising at least one -OH or primary or secondary amine function.

Preferably the polar anchor group R² is a linear or branched alkyl group with 1 to 12 carbon atoms, wherein any -CH₂- is optionally replaced by -O-, -S-, -NR⁰- or -NH-, and which is substituted with one, two or three polar groups selected from -OH, -NH₂ or -NR⁰H, wherein R⁰ is alkyl with 1 to 10 carbon atoms. More preferably R² is a group R^{a} as defined below.

More preferably the self-alignment additive for vertical alignment is preferably selected of formula IIa

R¹-[A²-Z²]ₘ-A¹-R^{a} (IIa)

in which
- A¹, A²: each, independently of one another, denote an aromatic, heteroaromatic, alicyclic or heterocyclic group, which may also contain fused rings, and which may also be mono- or polysubstituted by a group L or -Sp-P,
- L: in each case, independently of one another, denotes H, F, CI, Br, I, -CN, -NO₂, -NCO, -NCS, -OCN, -SCN, -C(=O)N(R⁰)₂, -C(=O)R⁰, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F or CI,
- P: denotes a polymerisable group,
- Sp: denotes a spacer group or a single bond,
- Z²: in each case, independently of one another, denotes a single bond, -O-, -S-, -CO-, -CO-O-, -OCO-, -O-CO-O-, -OCH₂-, -CH₂O-,-SCH₂-, -CH₂S-, -CF₂O-, -OCF₂-, -CF₂S-, -SCF₂-, -(CH₂)ₙ1-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH-(-Sp-P)-, -CH(-Sp-P)CH(-Sp-P)-,
- n1: denotes 1, 2, 3 or 4,
- m: denotes 0, 1, 2, 3, 4, 5 or 6,
- R⁰: in each case, independently of one another, denotes alkyl having 1 to 12 C atoms,
- R⁰⁰: in each case, independently of one another, denotes H or alkyl having 1 to 12 C atoms,
- R¹: independently of one another, denotes H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another and in which, in addition, one or more H atoms may be replaced by F or Cl, or a group -Sp-P, and
- R^{a}: denotes a polar anchor group having at least one group selected from -OH, -NH₂, NHR¹¹, C(O)OH and -CHO, where R¹¹ denotes alkyl having 1 to 12 C atoms.

The anchor group R^{a} of the self-alignment additive is preferably defined as
- R^{a}: an anchor group of the formula 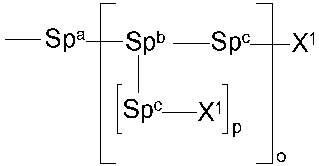
or 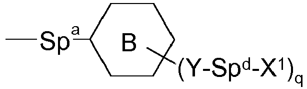 wherein
- p: denotes 1 or 2,
- q: denotes 2 or 3,
- B: denotes a substituted or unsubstituted ring system or condensed ring system, preferably a ring system selected from benzene, pyridine, cyclohexane, dioxane or tetra-hydropyran,
- Y,: independently of one another, denotes -O-, -S-, -C(O)-, -C(O)O-, -OC(O)-, -NR¹¹- or a single bond,
- o: denotes 0 or 1,
- X¹,: independently of one another, denotes H, alkyl, fluoroalkyl, OH, NH₂, NHR¹¹, NR¹¹₂, OR¹¹, C(O)OH, -CHO, where at least one group X¹ denotes a radical selected from -OH, -NH₂, NHR¹¹, C(O)OH and -CHO,
- R¹¹: denotes alkyl having 1 to 12 C atoms,
- Sp^{a}, Sp^{c}, Sp^{d}: each, independently of one another, denote a spacer group or a single bond, and
- Sp^{b}: denotes a tri- or tetravalent group, preferably CH, N or C.

The compound of formula II optionally includes polymerizable compounds. Within this disclosure the "medium comprising a compound of formula II" refers to both, the medium comprising the compound of formula II and, alternatively, to the compound in its polymerized form in connection with the medium.

In the compounds of the formulae II Z¹ and Z² preferably denote a single bond, -C₂H₄-, -CF₂O- or -CH₂O-. In a specifically preferred embodiment Z¹ and Z² each independently denote a single bond.

In the compounds of the formula II L¹ and L² each independently preferably denote F or alkyl, preferably CH₃, C₂H₅ or C₃H₇.

Preferred compounds of the formula II are illustrated by the following sub-formulae II-A to II-D 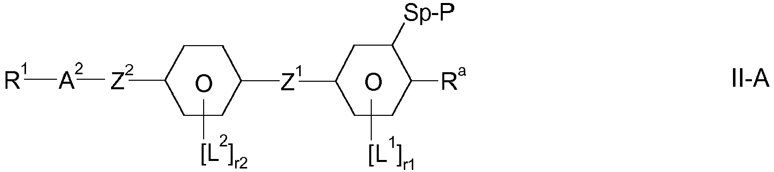 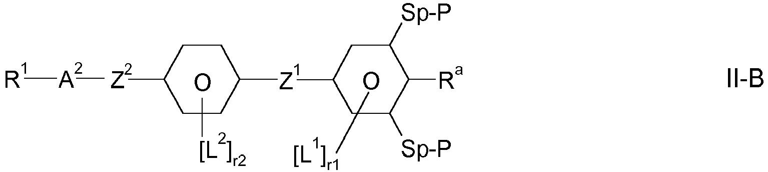 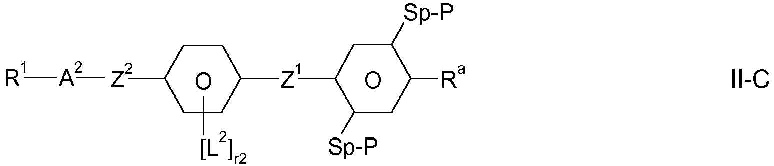 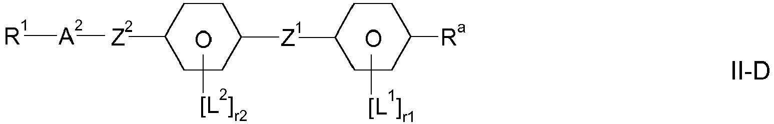
in which R¹, R^{a}, A², Z¹, Z², Sp, and P have the meanings as defined for formula II above,
L¹, L² are independently defined as L in formula II above, and
r1, r2 independently are 0, 1, 2, 3, or 4, preferably 0, 1 or 2.

In a preferred embodiment, r2 denotes 1 and/or r1 denotes 0.

The polymerisable group P preferably has the preferred meanings provided for P in formula I, most preferably methacrylate.

In the above formulae II or II-A to II-D Z¹ and Z² preferably independently denote a single bond or -CH₂CH₂-, and very particularly a single bond.

R^{a} denotes preferably 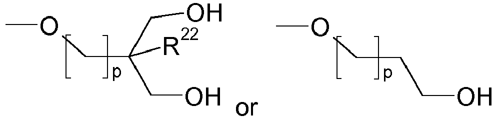
wherein p = 1, 2, 3, 4, 5 or 6, and
R²² is methyl, ethyl, n-propyl, i-propyl, n-butyl, tert-butyl or n-pentyl,

in particular 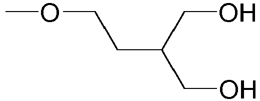 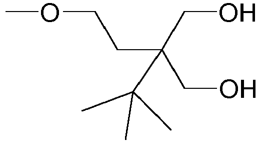 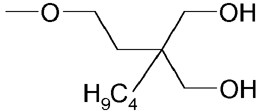 or

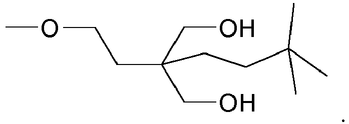

In the formula II and in the sub-formulae of the formula II R¹ preferably denotes a straight-chain alkyl or branched alkyl radical having 1-8 C atoms, preferably a straight-chain alkyl radical. In the compounds of the formulae II or IIa R¹ more preferably denotes CH₃, C₂H₅, n-C₃H₇, n-C₄H₉, n-C₅H₁₁, n-C₆H₁₃ or CH₂CH(C₂H₅)C₄H₉. R¹ furthermore may denote alkenyloxy, in particular OCH₂CH=CH₂, OCH₂CH=CHCH₃, OCH₂CH=CHC₂H₅, or alkoxy, in particular OC₂H₅, OC₃H₇, OC₄H₉, OC₅H₁₁ and OC₆H₁₃. Particularly prefable R¹ denotes a straight chain alkyl residue, preferably C₅H₁₁.

In particular preferred compounds of the formula II are selected from the compounds of the sub-formulae II-1 to II-79, 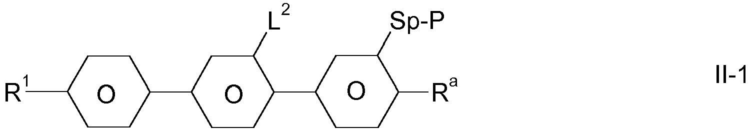 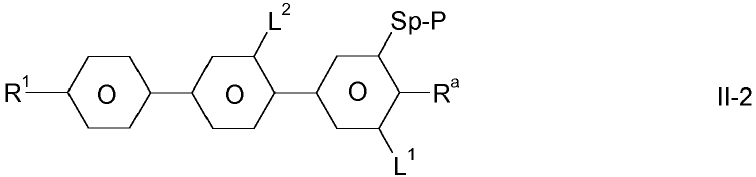 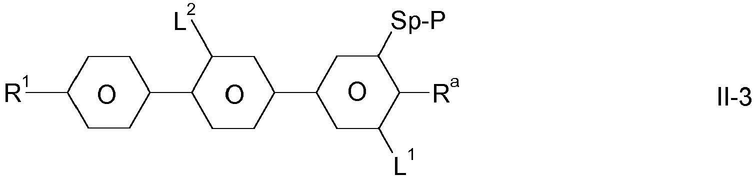 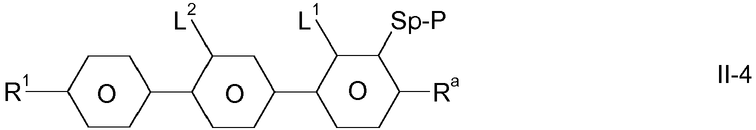 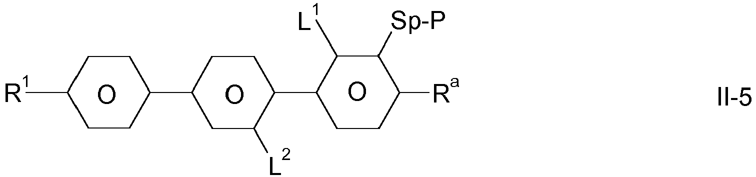 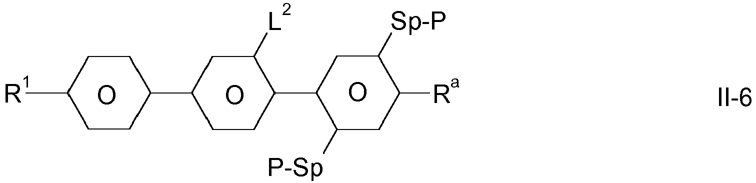 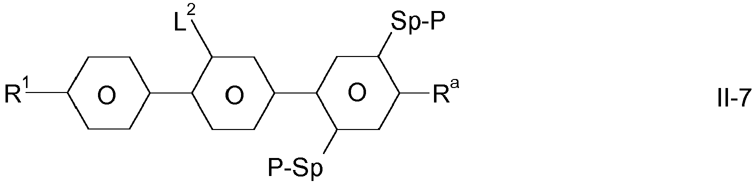 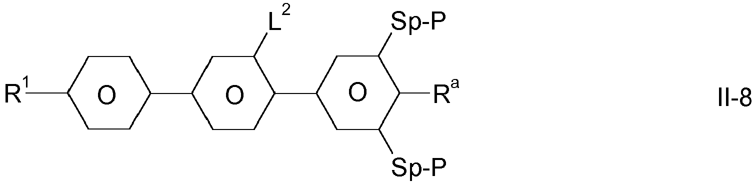 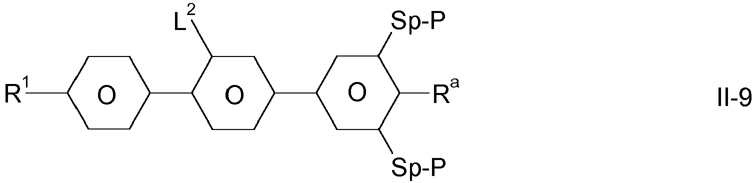 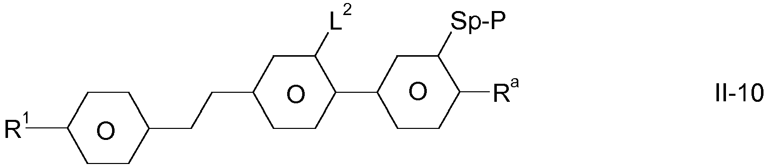 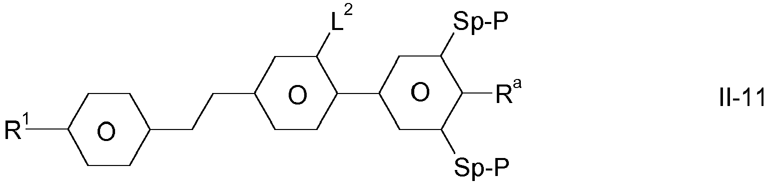 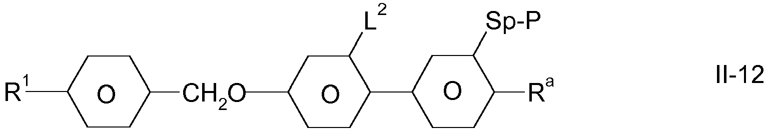 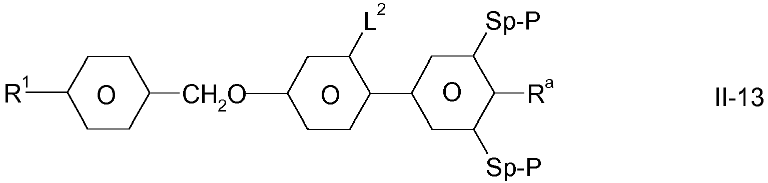 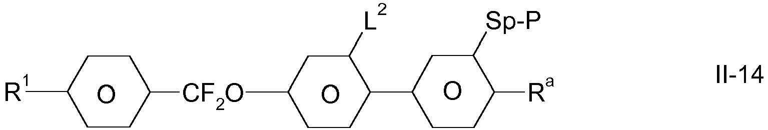 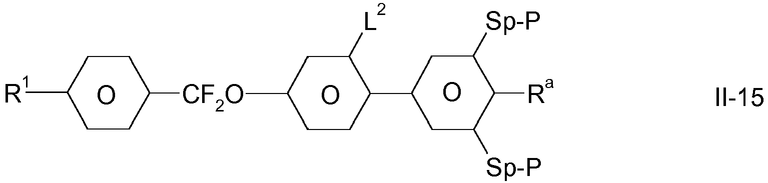 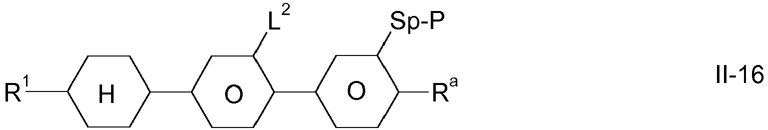 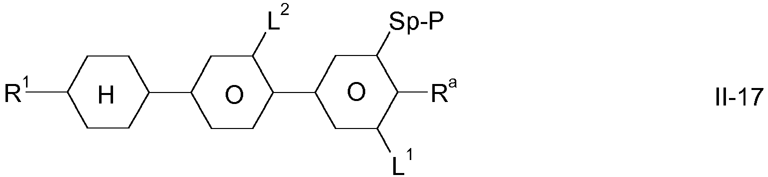 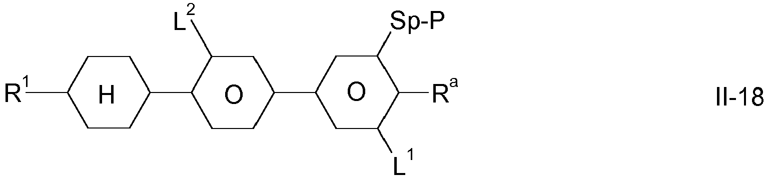 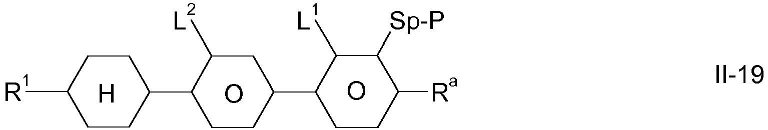 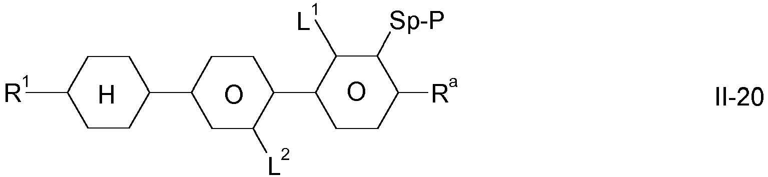 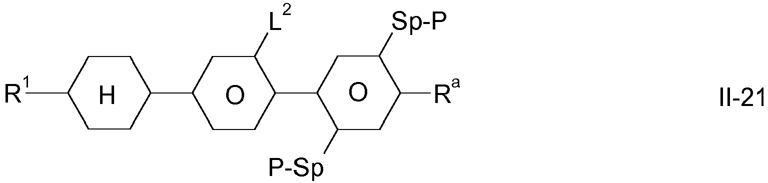 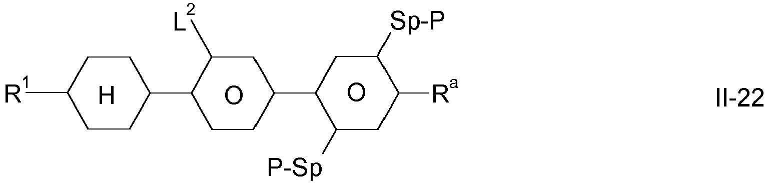 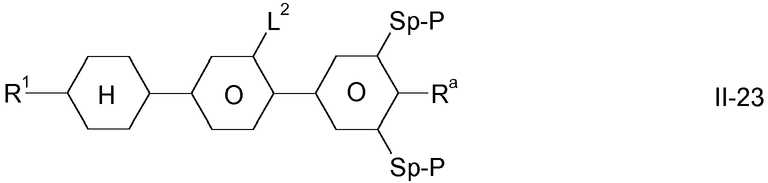 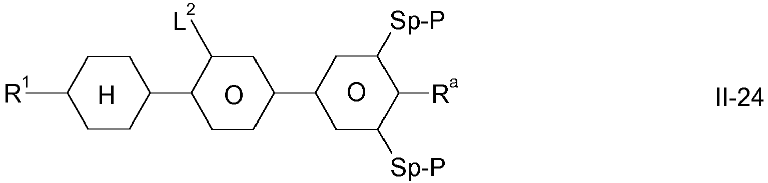 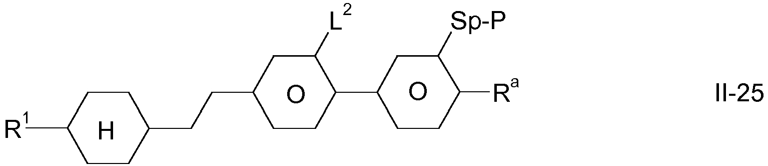 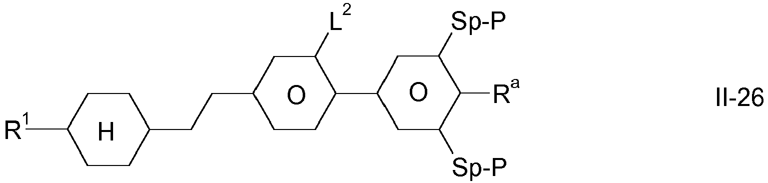 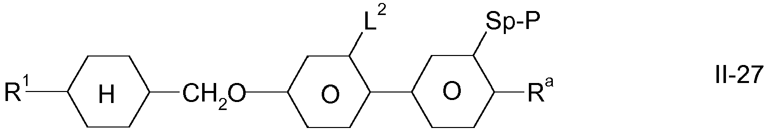 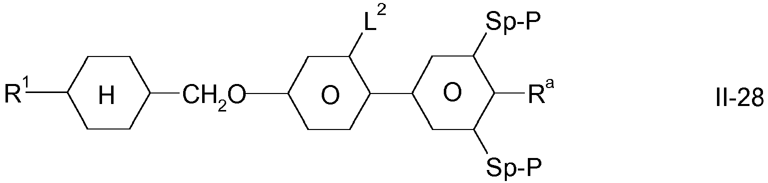 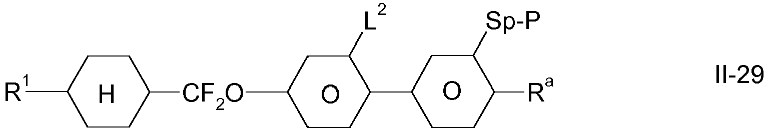 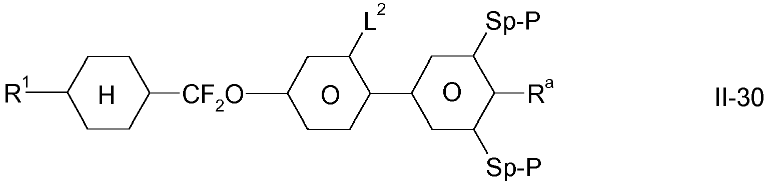 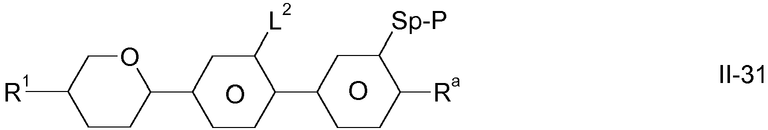 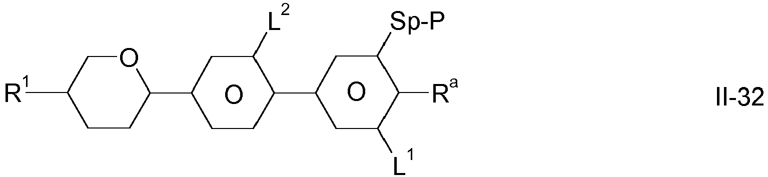 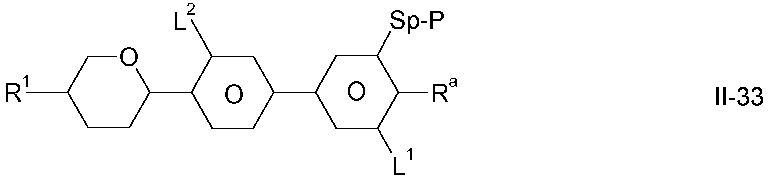 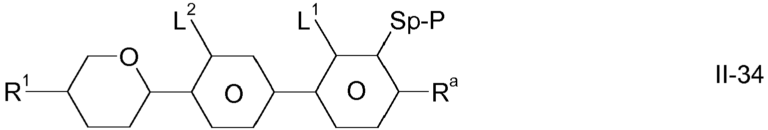 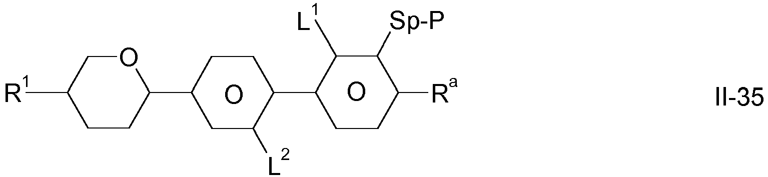 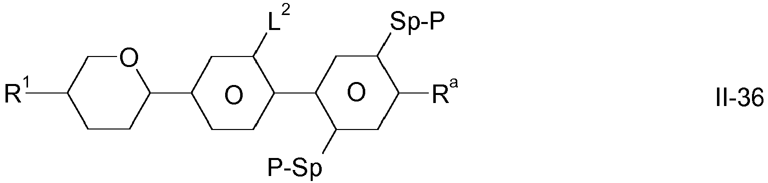 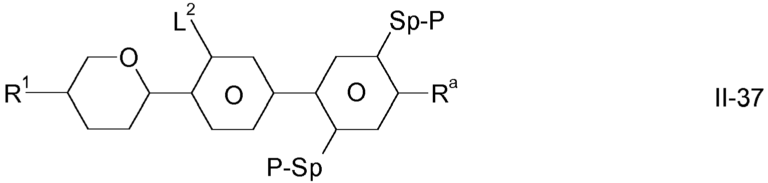 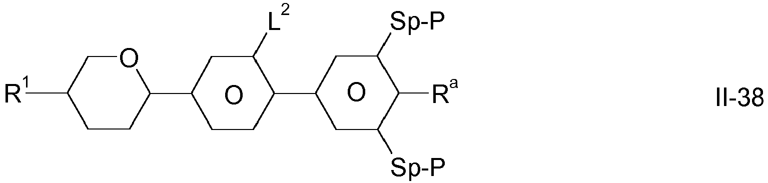 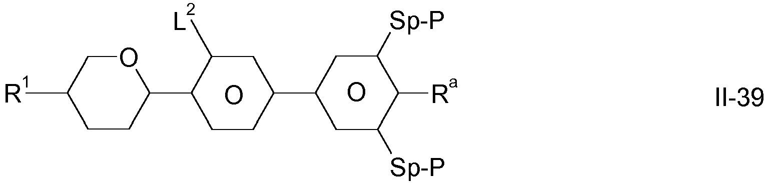 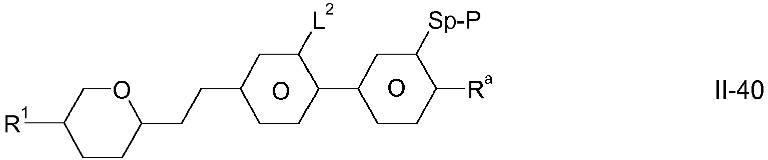 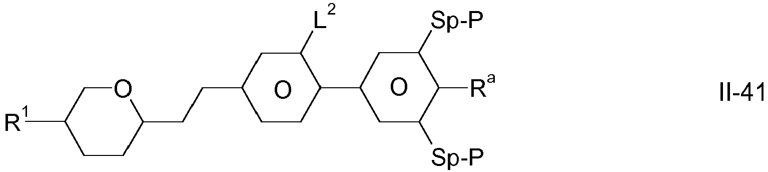 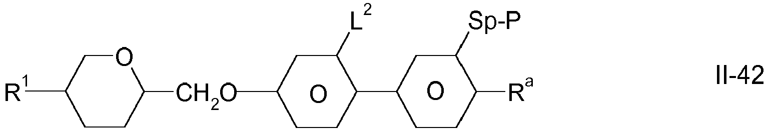 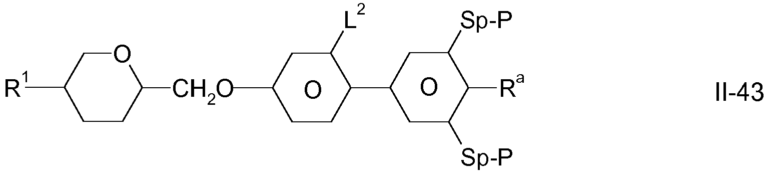 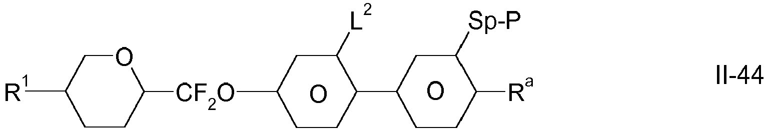 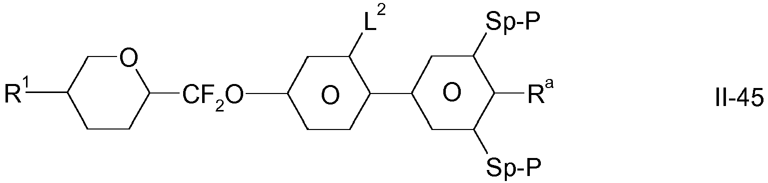 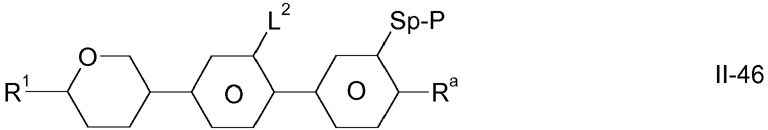 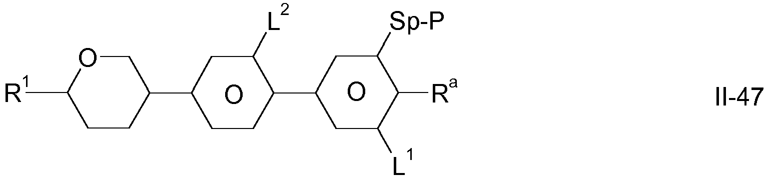 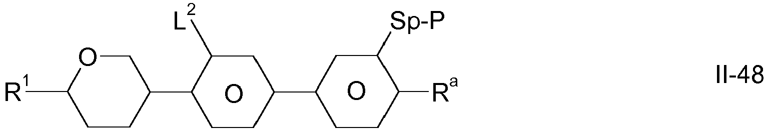 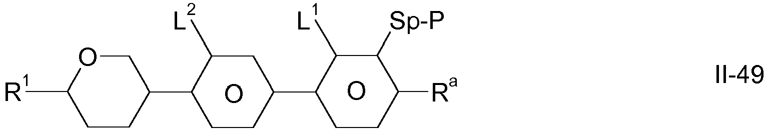 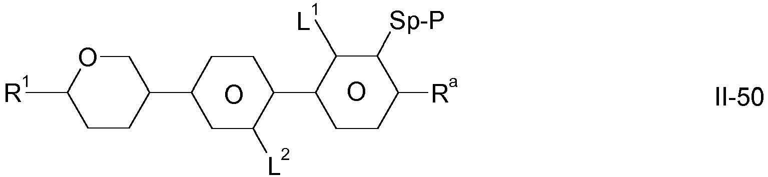 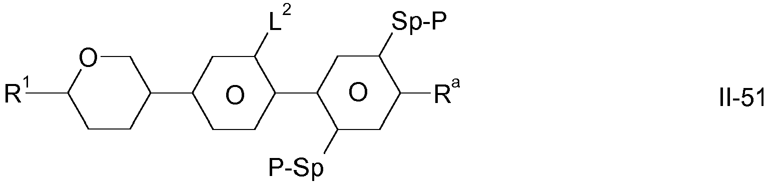 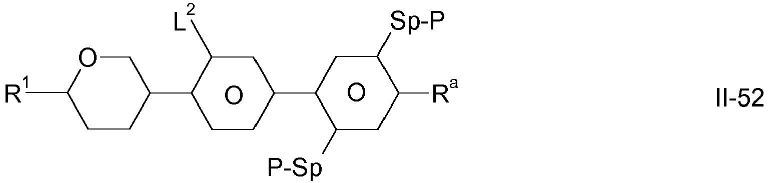 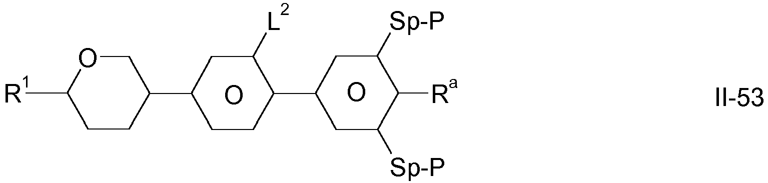 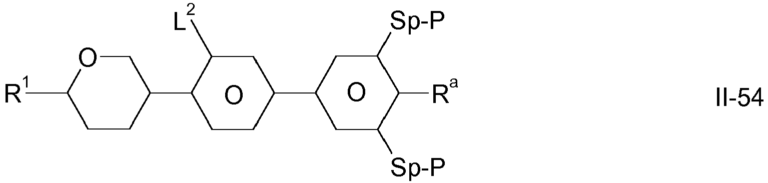 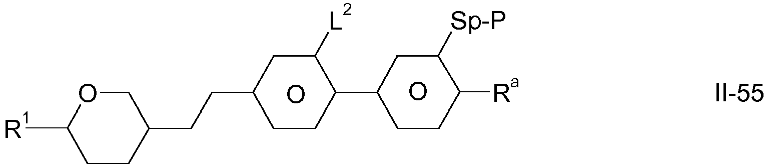 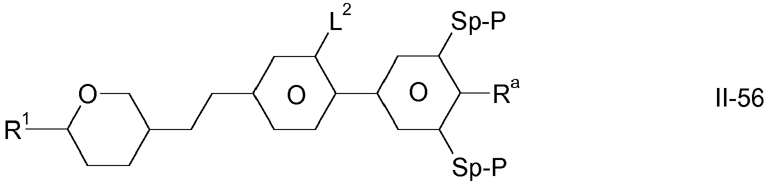 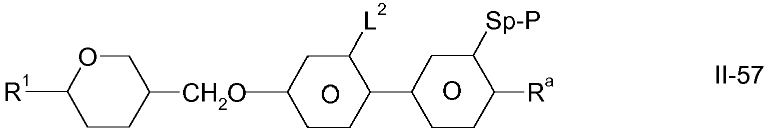 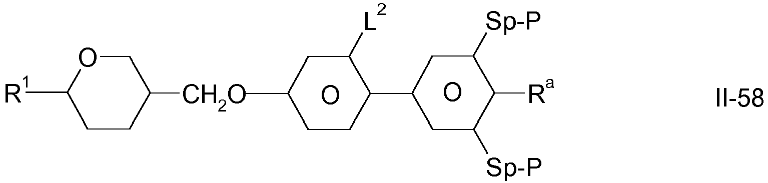 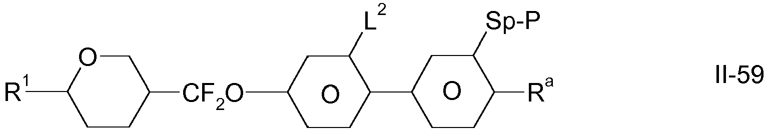 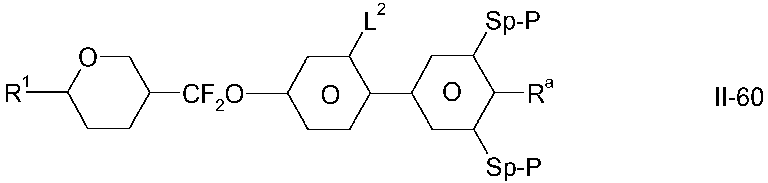 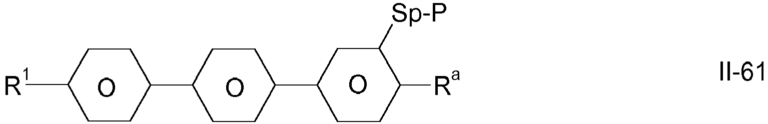 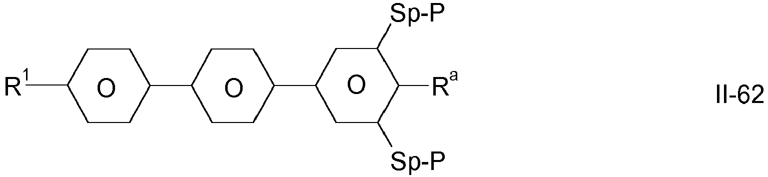 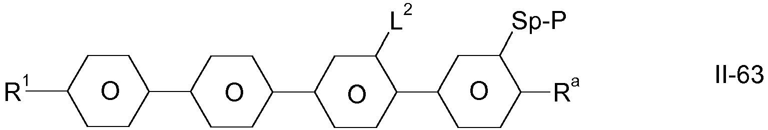 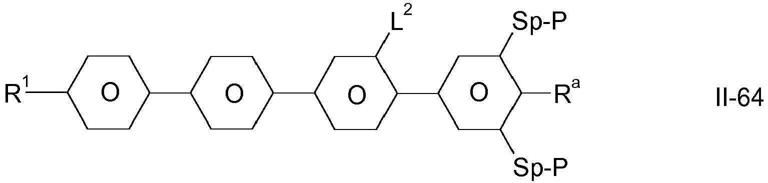 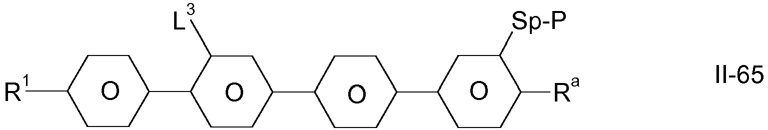 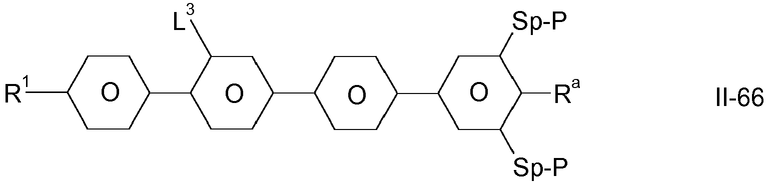 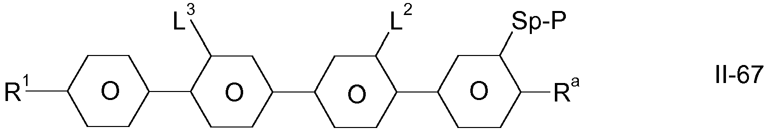 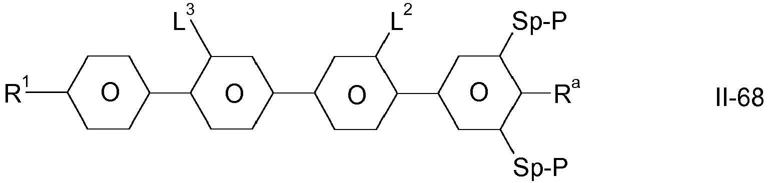 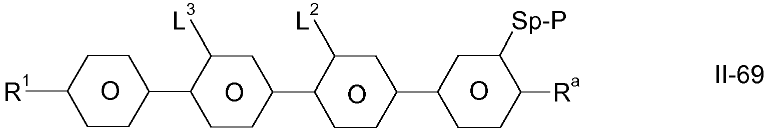 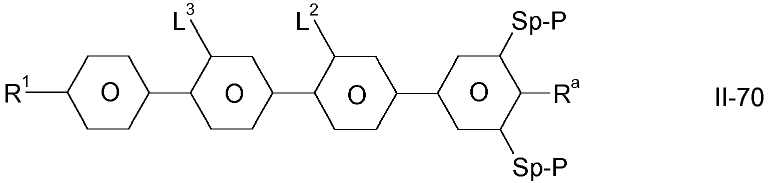 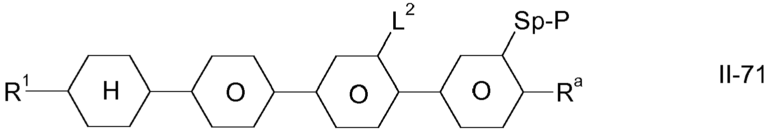 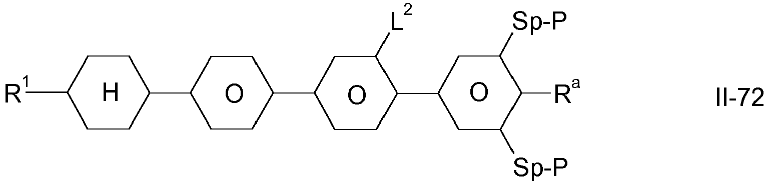 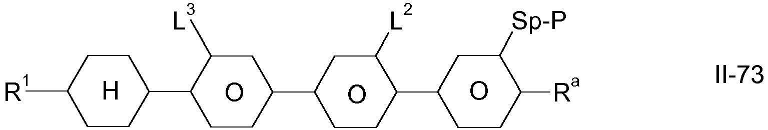 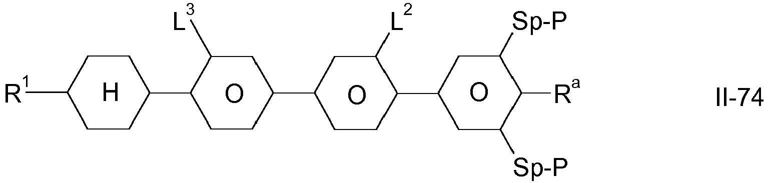 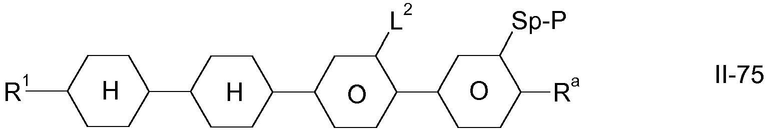 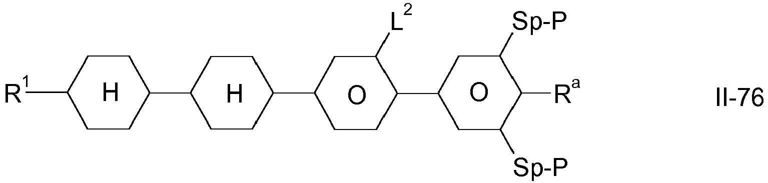 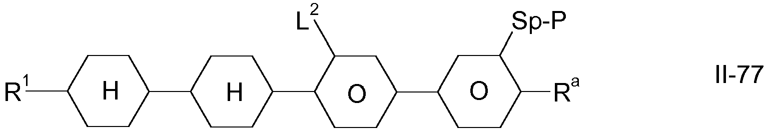 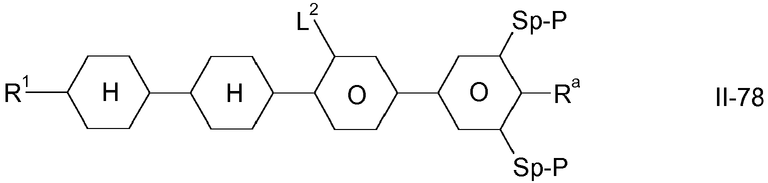 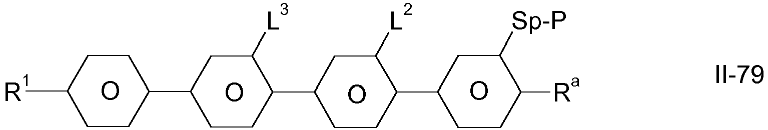 in which R¹, L¹, L², Sp, P and R^{a} have the meanings as given above, and L³ is defined as L².

The mixtures according to the invention very particularly contain at least one self-aligning additive selected from the following group of compounds of the sub-formulae II-1a to II-1h, II-8a to II8h, II-16a to II-16h, II-23a to II-23h, 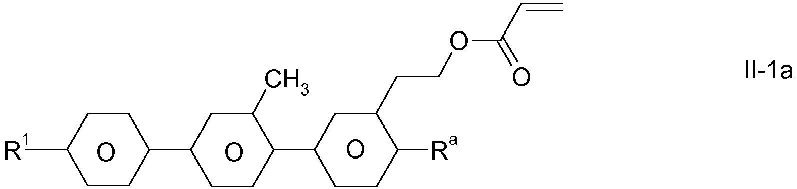 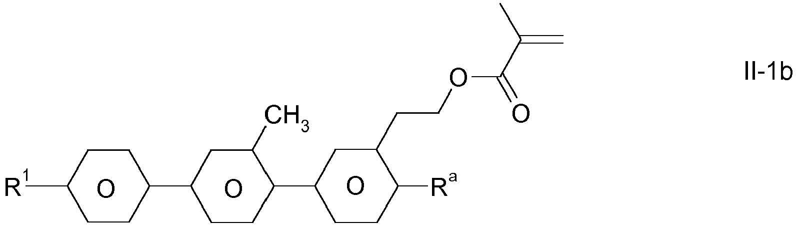 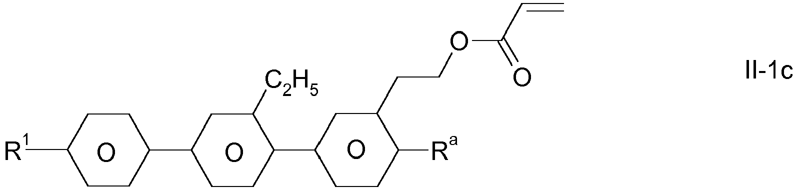 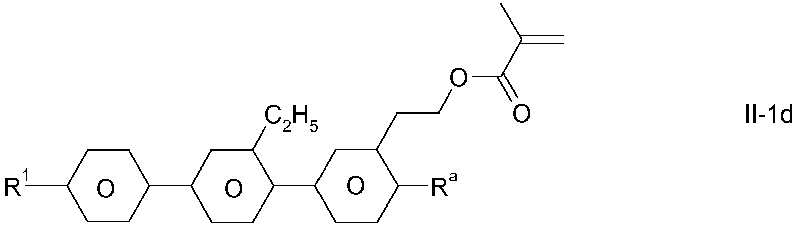 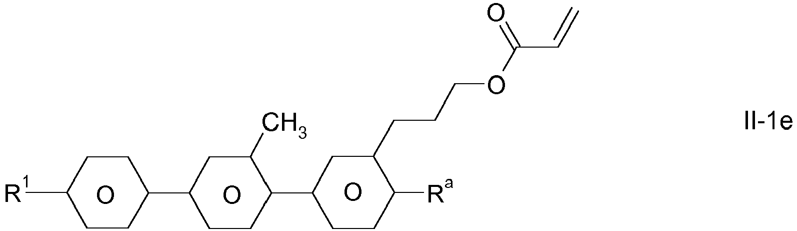 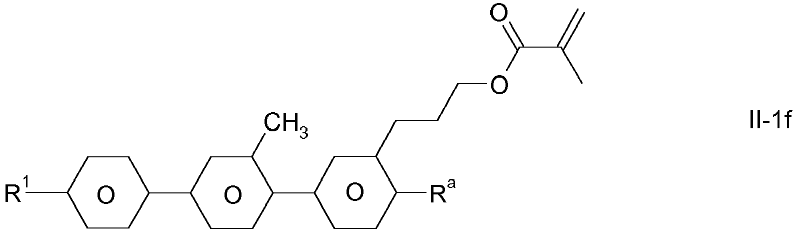 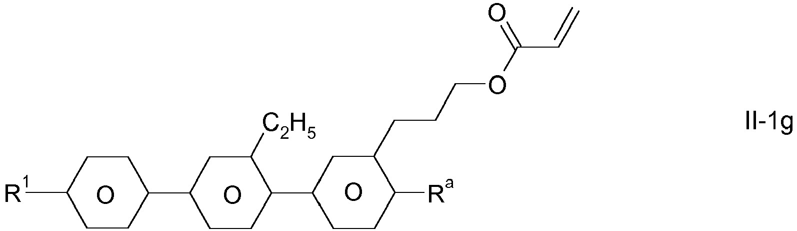 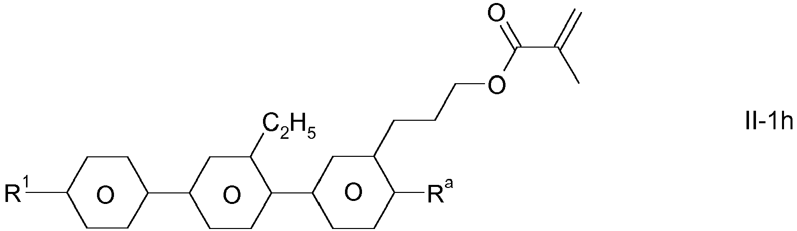 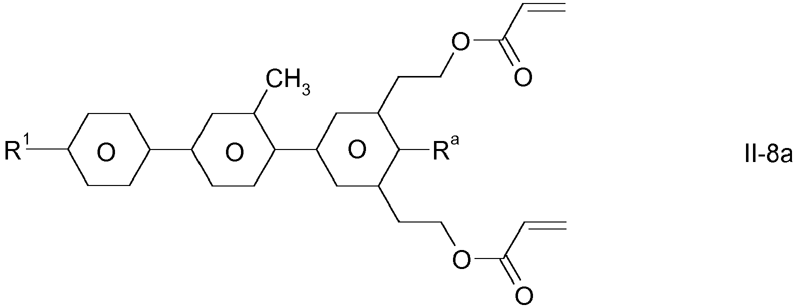 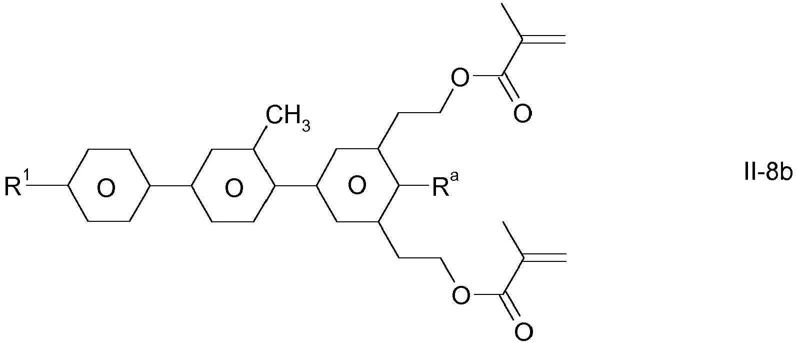 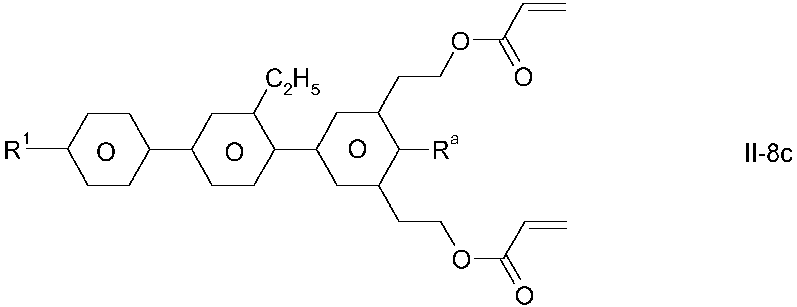 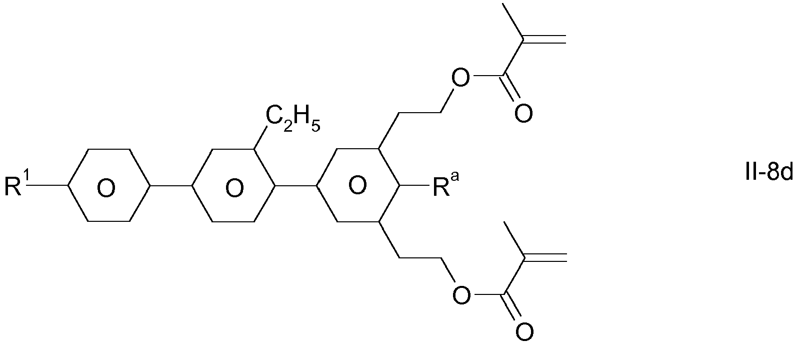 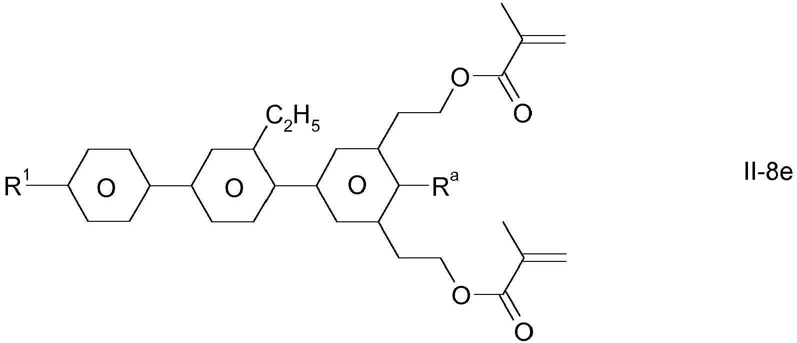 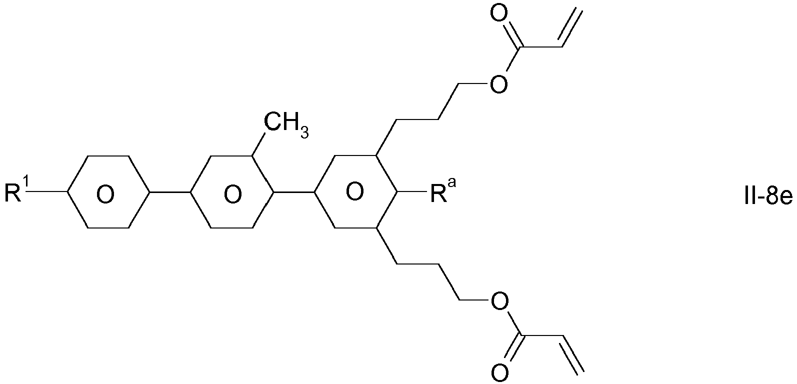 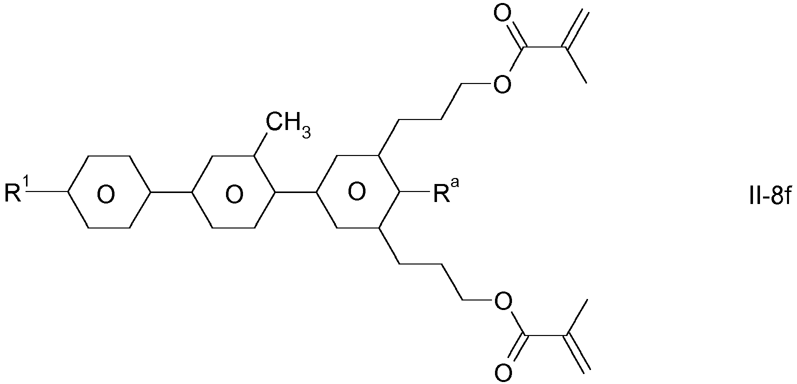 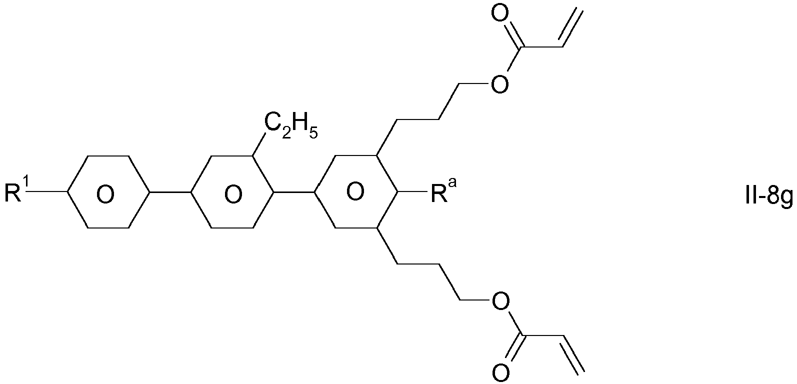 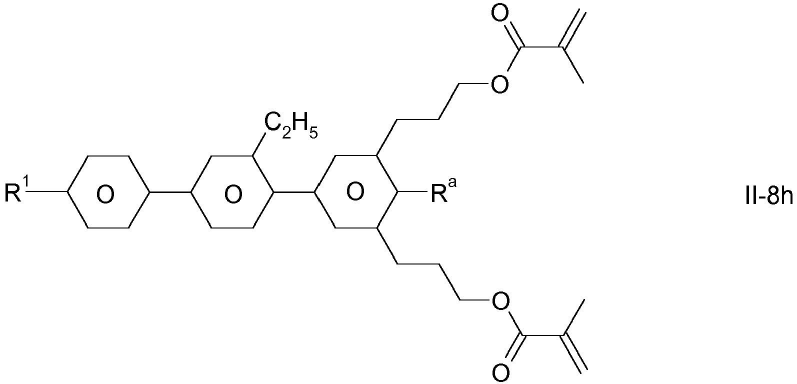 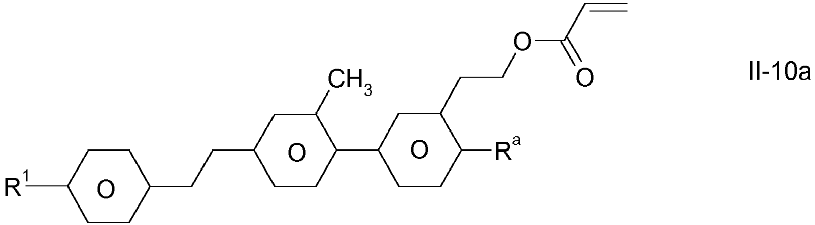 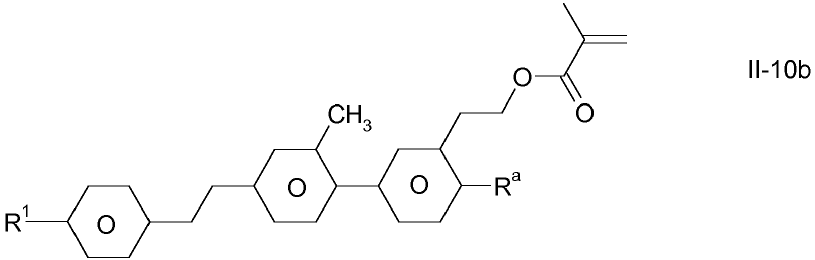 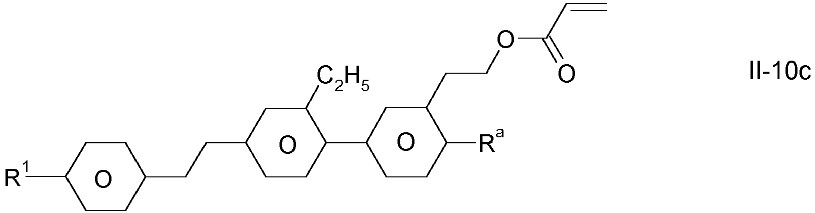 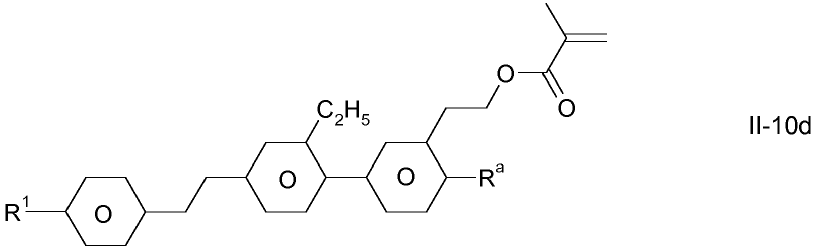 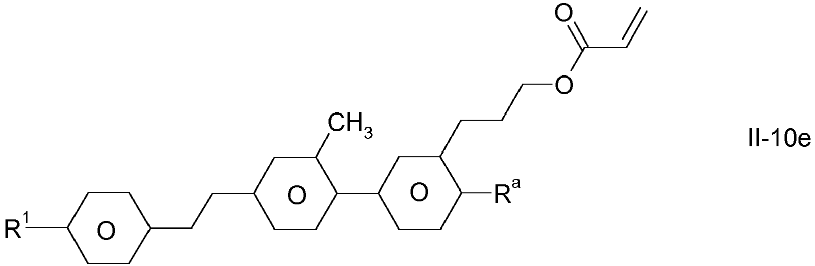 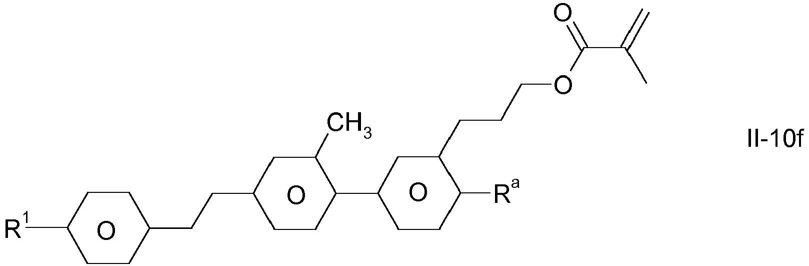 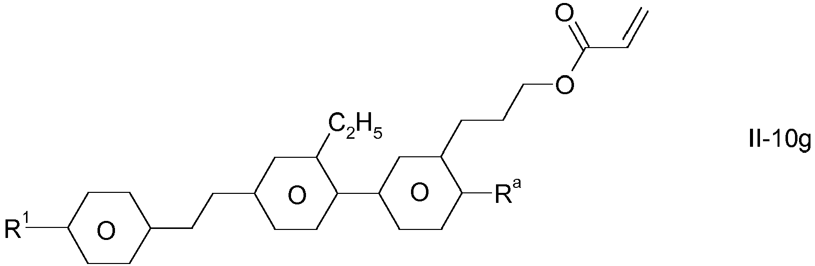 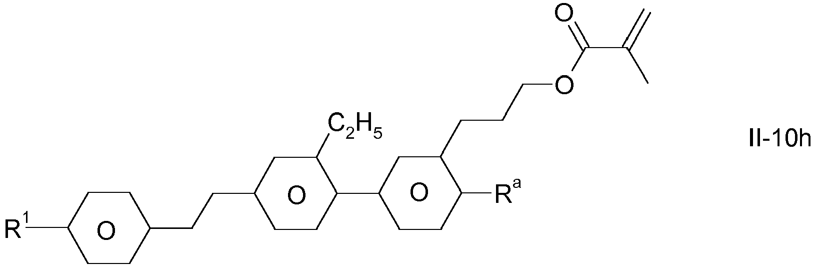 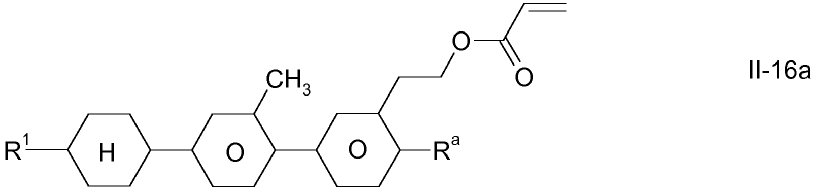 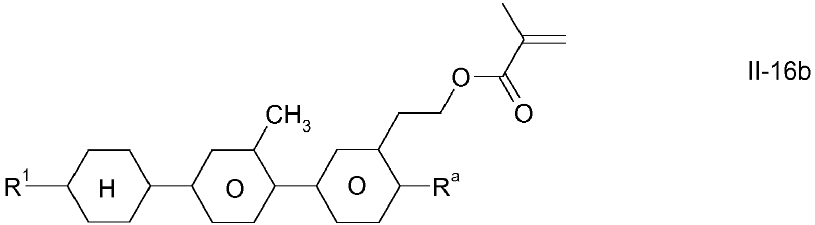 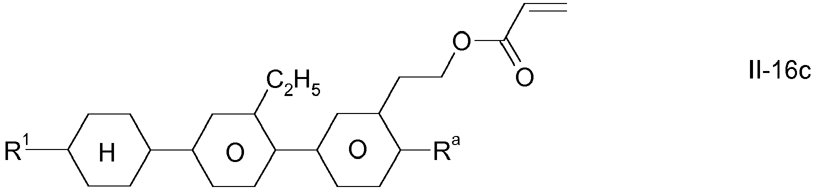 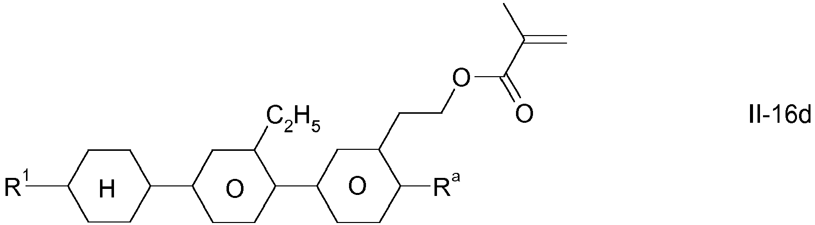 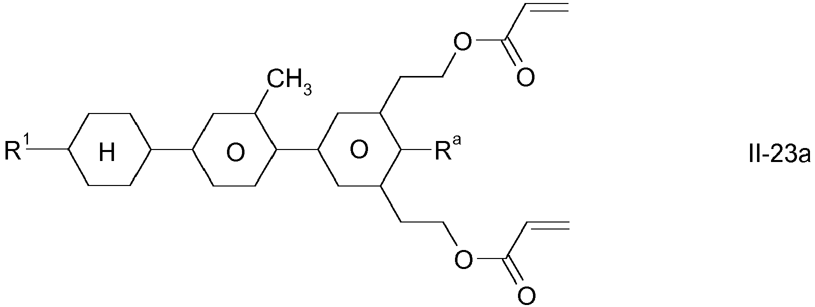 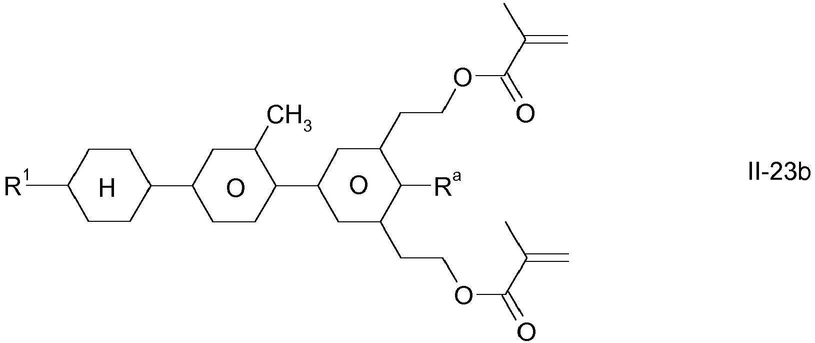 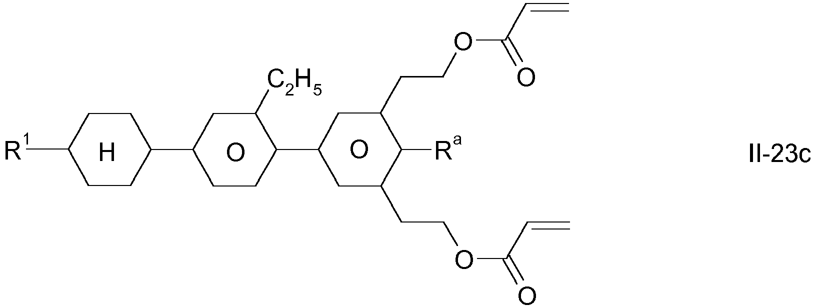 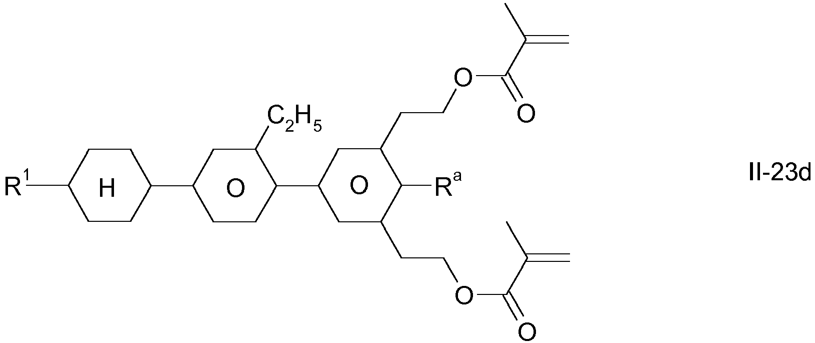 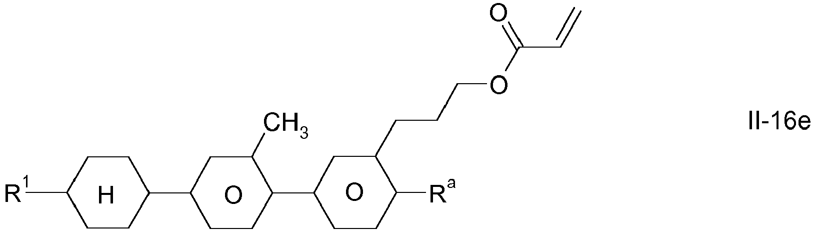 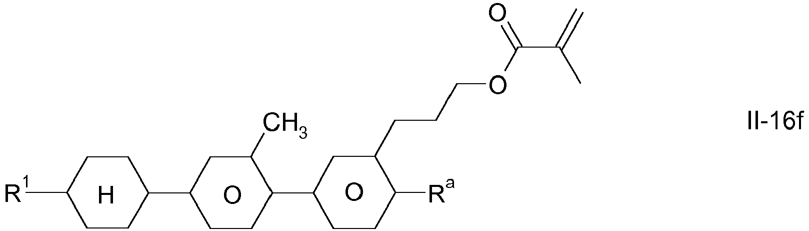 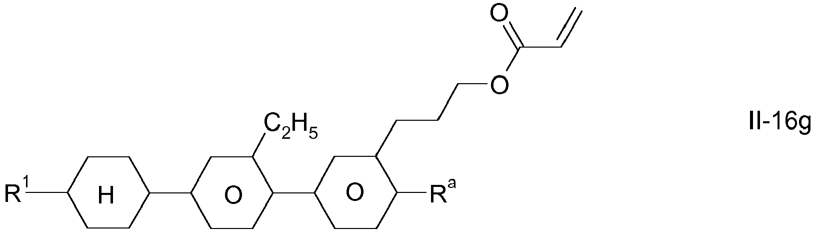 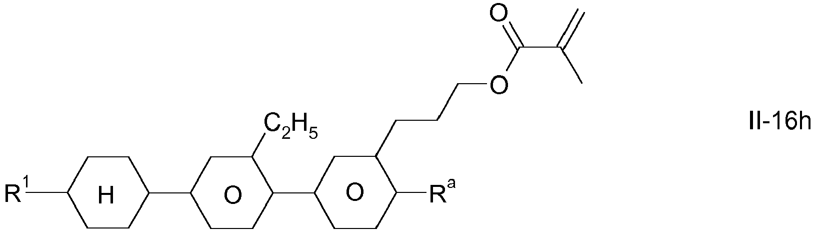 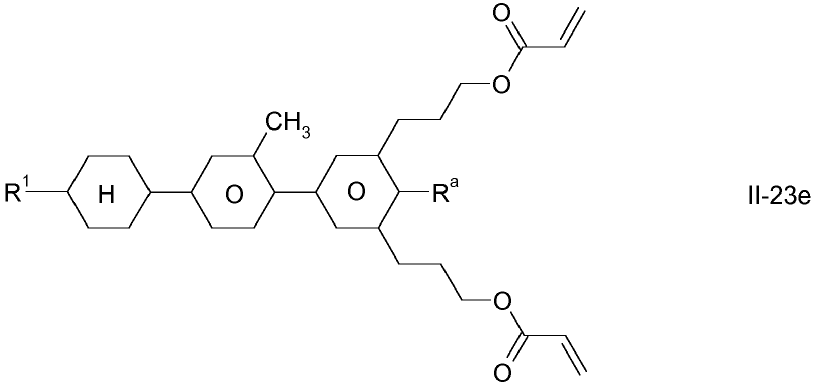 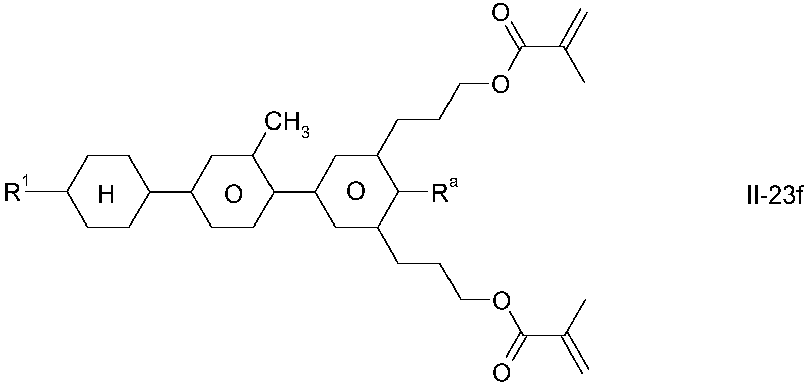 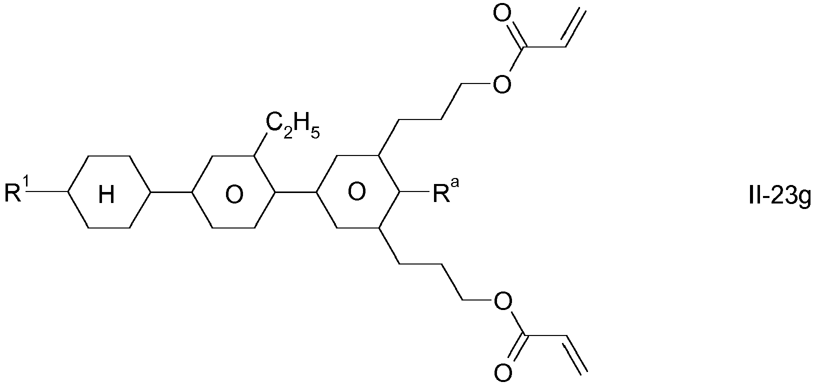 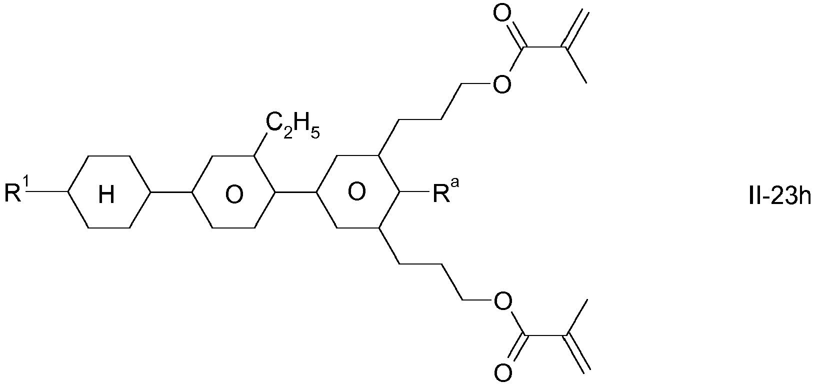 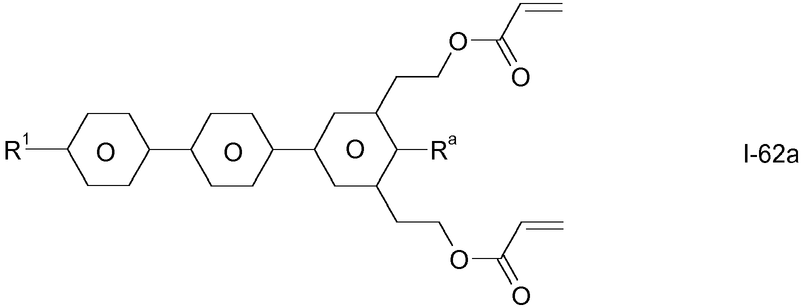 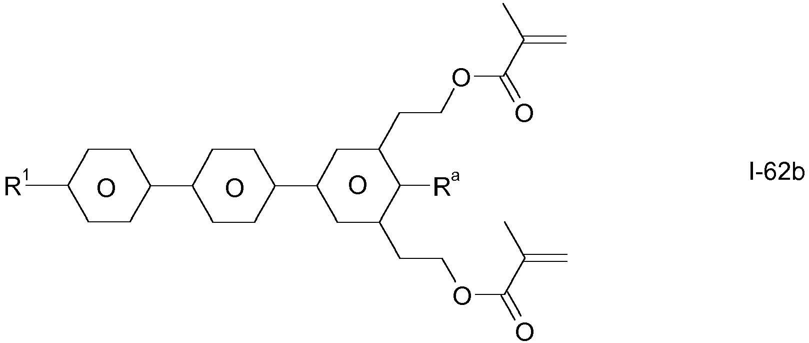 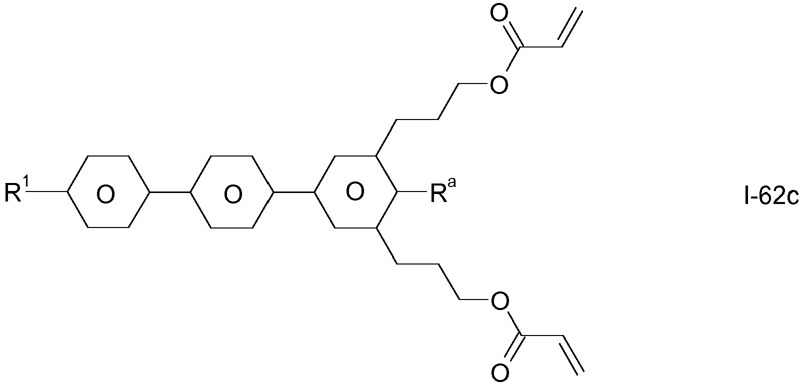 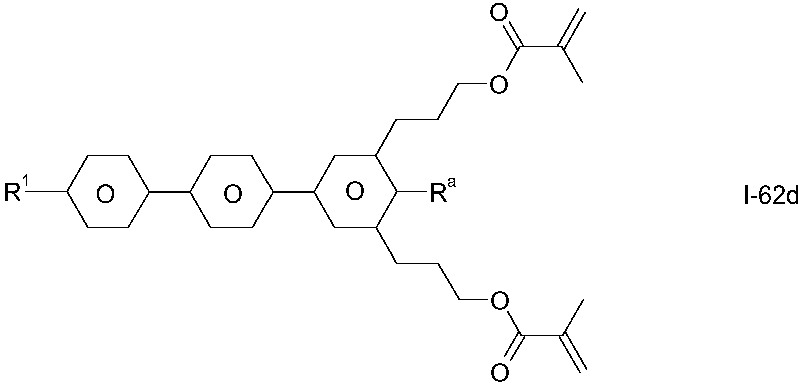 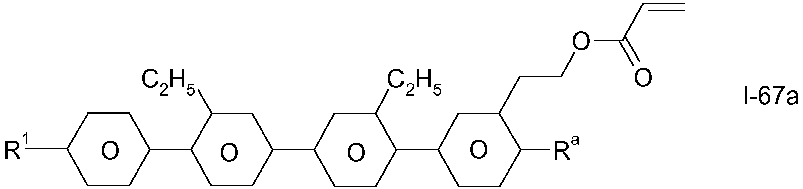 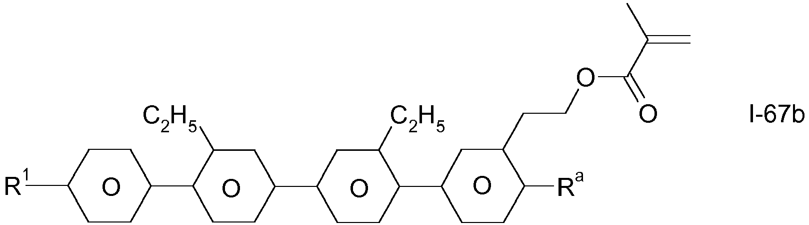 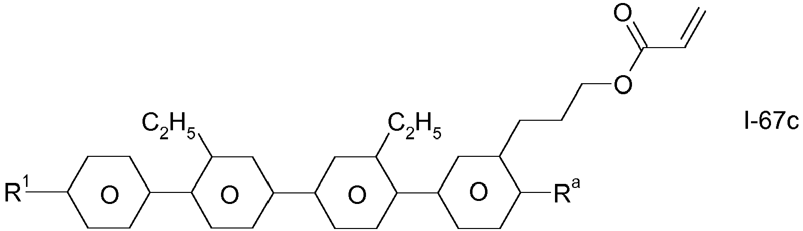 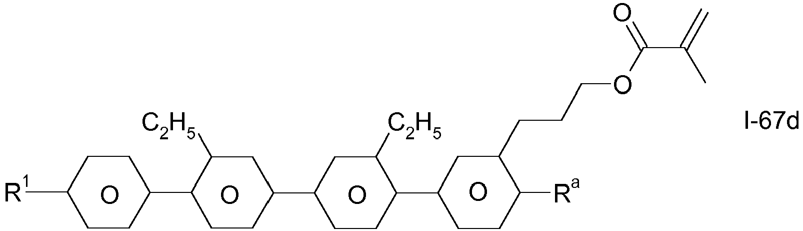 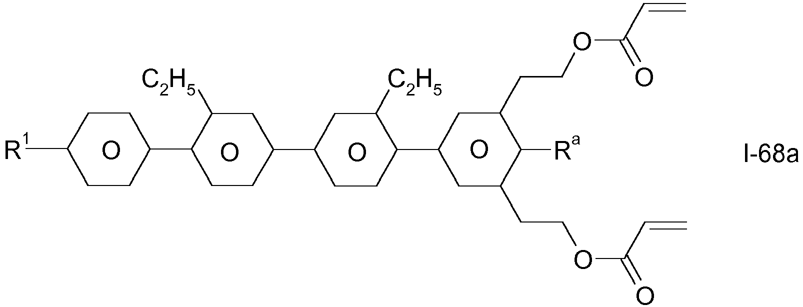 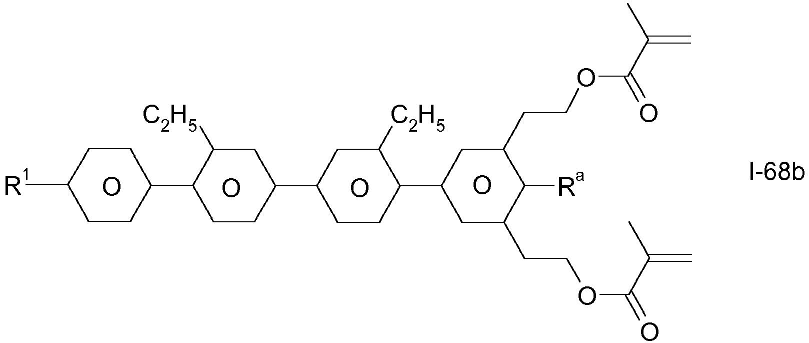 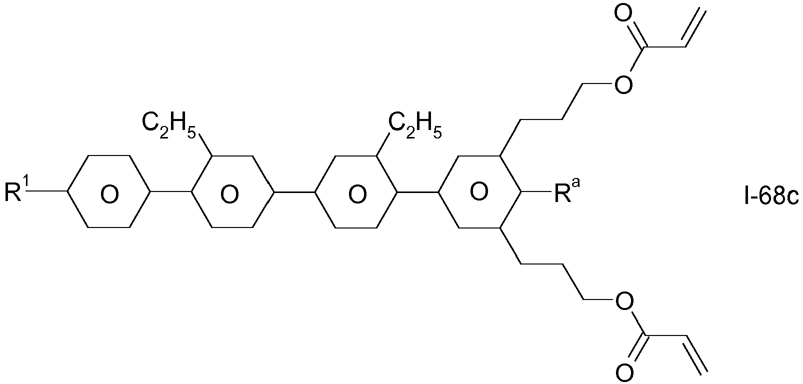 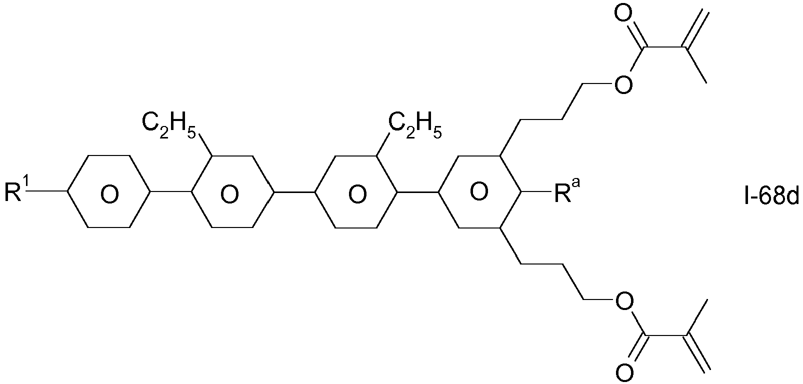 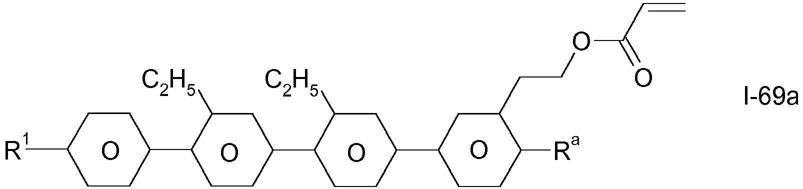 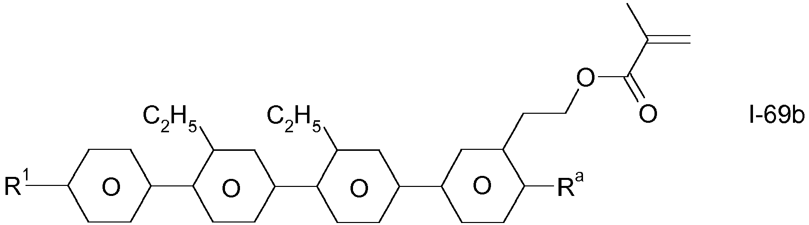 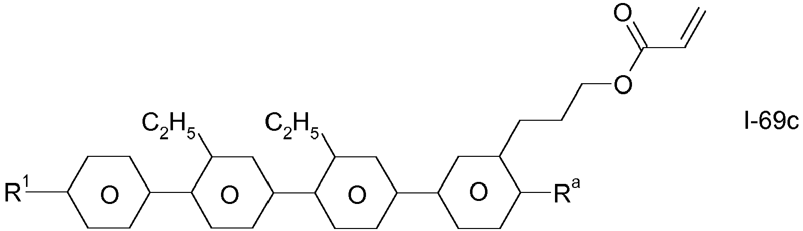 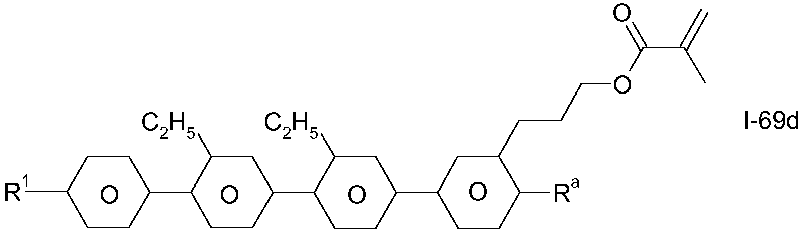 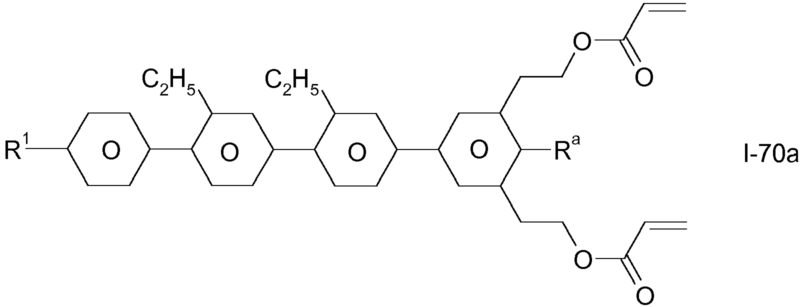 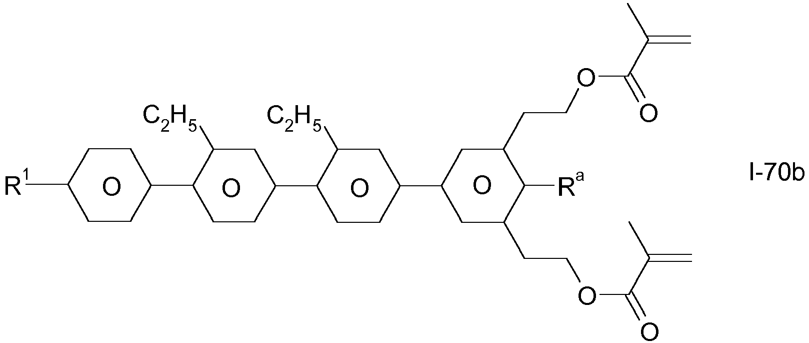 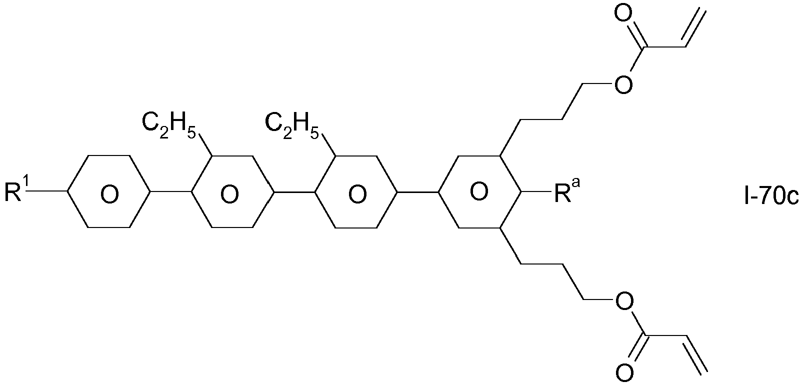 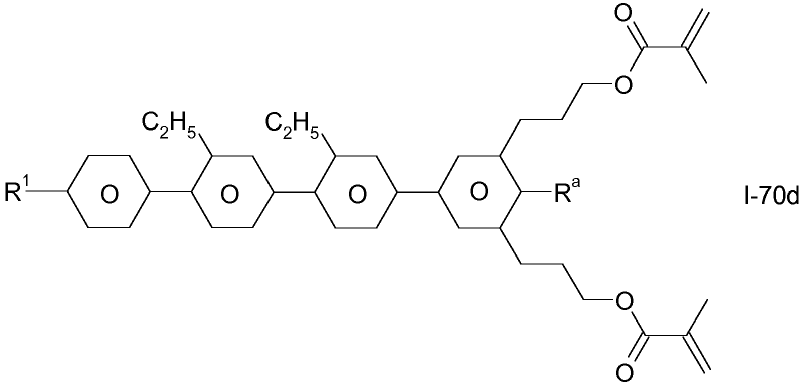 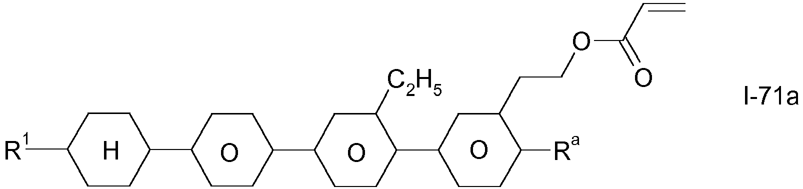 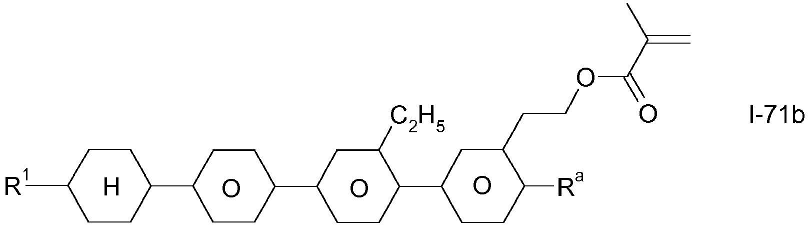 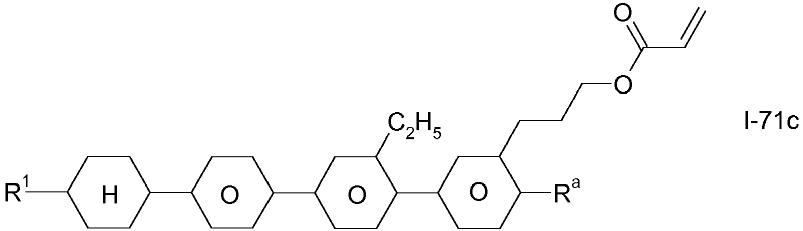 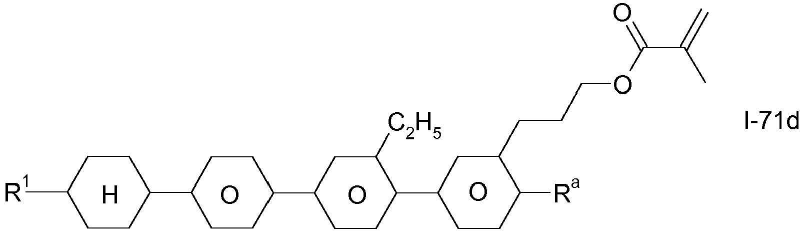 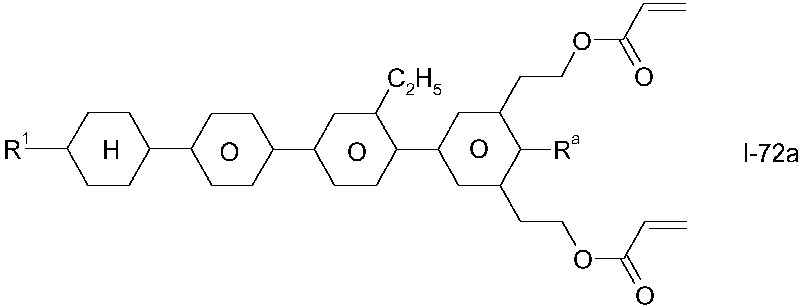 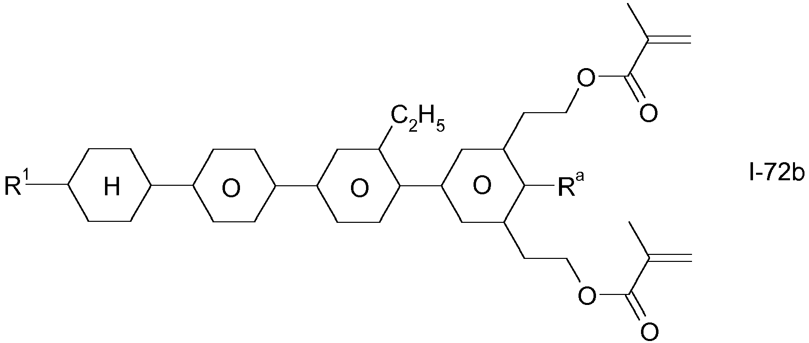 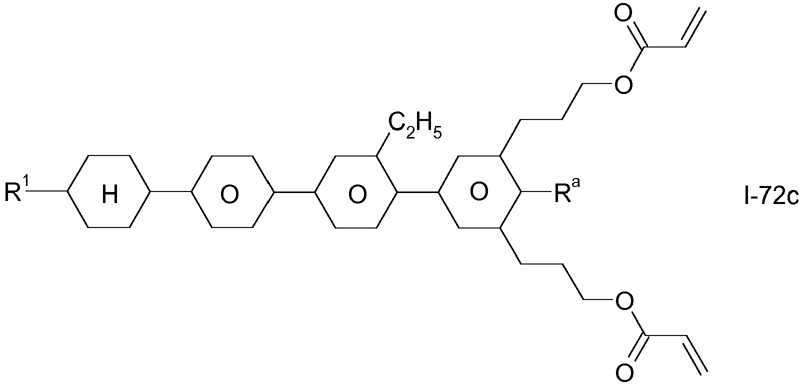 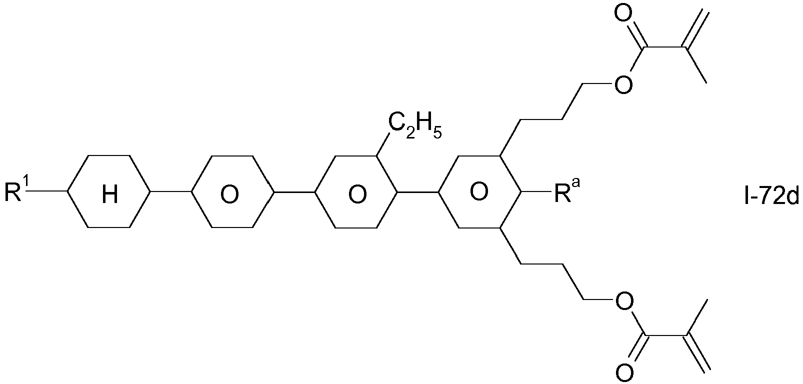 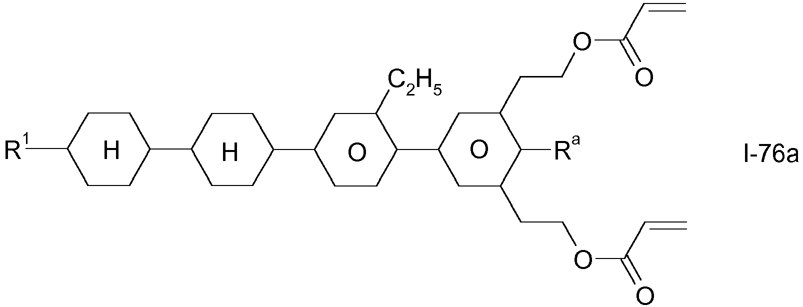 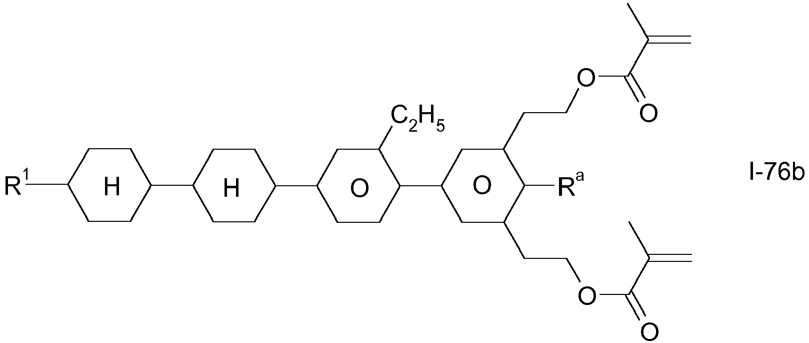 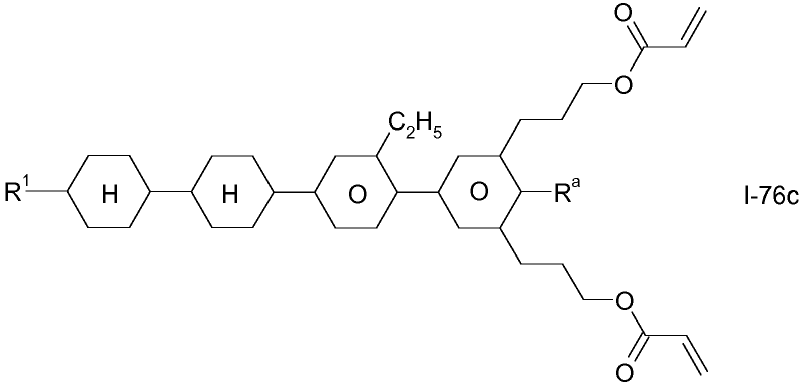 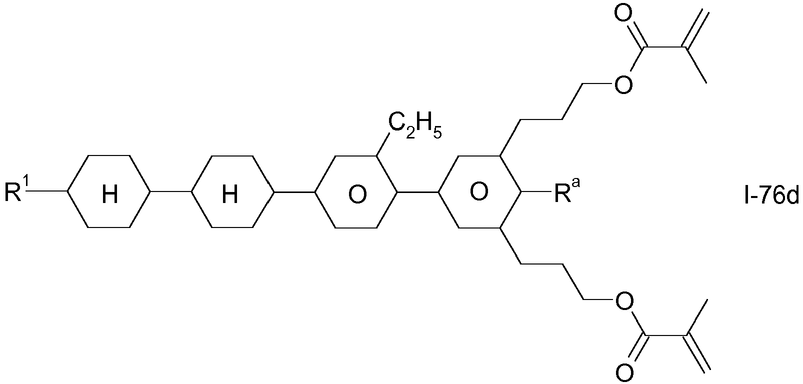 in which R^{a} denotes an anchor group as described above and below, one of its preferred meanings, or preferably a group of formula 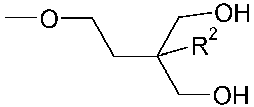
wherein R²² is methyl, ethyl, n-propyl, i-propyl, n-butyl, tert-butyl or n-pentyl, most preferably H,
and R¹ has the meanings given in Claim 1, preferably denotes a straight-chain alkyl radical having 1 to 8 carbon atoms, preferably C₂H₅, n-C₃H₇, n-C₄H₉, n-C₅H₁₁, n-C₆H₁₃ or n-C₇H₁₅, most preferably n-C₅H₁₁.

Preferred LC mixtures according to the present invention contain at least one compound of the formula II or its preferred formulae.

In the compounds of the formula II and in the sub-formulae of the compounds of the formula II the group R^{a} preferably denotes

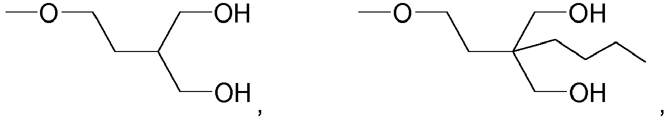

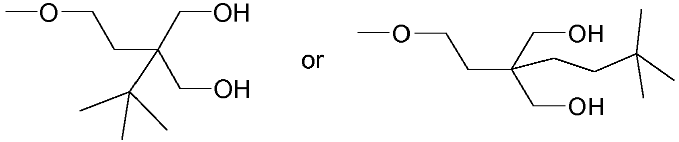

The compounds of the formula II can be prepared by methods known per se, which are described in standard works for organic chemistry as such, for example, Houben-Weyl, Methoden der organischen Chemie, Thieme-Verlag, Stuttgart.

The compounds of the formula II can be prepared for example as follows:

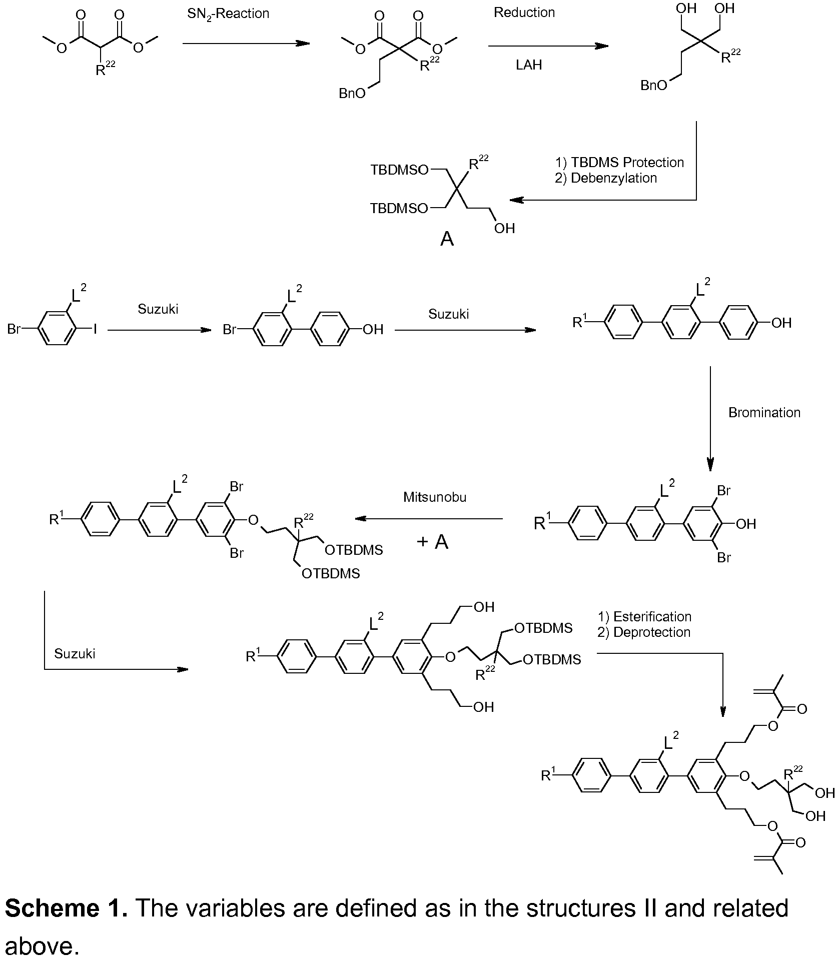

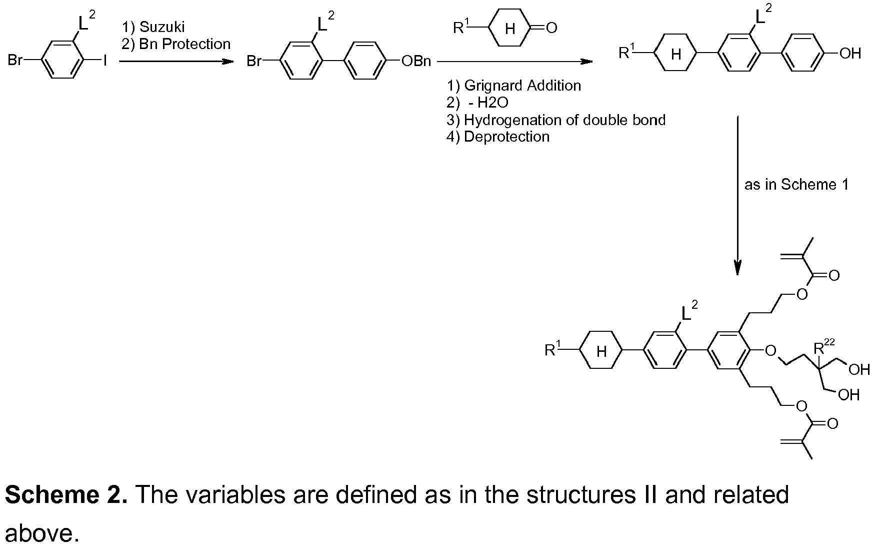

The media according to the invention preferably contain one, two, three, four or more, preferably one, self-aligning additive.

The self-aligning additives of the formula II are preferably employed in the liquid-crystalline medium in amounts of ≥ 0.01 % by weight, preferably 0.1-5 % by weight, based on the mixture as a whole. Particular preference is given to liquid-crystalline media which contain 0.1-5 %, preferably 0.2-3 %, by weight of one or more self-aligning additives, based on the total mixture.

The use of preferably 0.2 to 3 % by weight of one or more compounds of the formula II results in a complete homeotropic alignment of the LC layer for conventional LC thickness (3 to 4 µm) and for the substrate materials used in display industry. Special surface treatment may allow to significantly reduce the amount of the compound(s) of the formula II to amounts in the lower range.

The polymerisable compounds and components of the present invention are especially suitable for use in an LC host mixture that comprises one or more mesogenic or LC compounds comprising an alkenyl group (hereinafter also referred to as "alkenyl compounds"), wherein said alkenyl group is stable to a polymerisation reaction under the conditions used for polymerisation of the compounds of formula I and of the other polymerisable compounds contained in the liquid-crystalline medium.

Thus, in a preferred embodiment of the present invention, the liquid-crystalline medium comprises one or more low-molecular compounds comprising an alkenyl group, ("alkenyl compound"), where this alkenyl group is preferably stable to a polymerisation reaction under the conditions used for the polymerisation of the polymerisable compounds of formula I and of the other polymerisable compounds contained in the liquid-crystalline medium.

The alkenyl groups in the alkenyl compounds are preferably selected from straight-chain, branched or cyclic alkenyl, in particular having 2 to 25 C atoms, particularly preferably having 2 to 12 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F and/or Cl.

Preferred alkenyl groups are straight-chain alkenyl having 2 to 7 C atoms and cyclohexenyl, in particular ethenyl, propenyl, butenyl, pentenyl, hexenyl, heptenyl, 1,4-cyclohexen-1-yl and 1,4-cyclohexen-3-yl.

The concentration of compounds containing an alkenyl group in the LC host mixture (i.e. without any polymerisable compounds) is preferably from 5% to 100%, very preferably from 20% to 60%.

Especially preferred are LC mixtures containing 1 to 5, preferably 1, 2 or 3 compounds having an alkenyl group.

The mesogenic and LC compounds containing an alkenyl group are preferably selected from the following formulae: 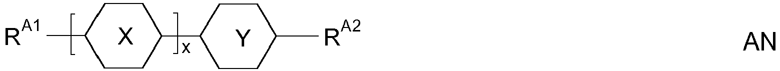 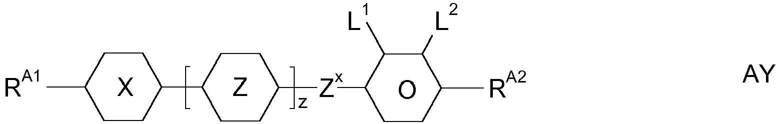 in which the individual radicals, on each occurrence identically or differently, each, independently of one another, have the following meaning: 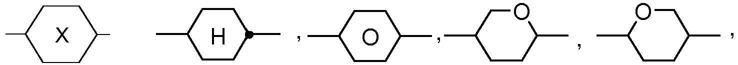 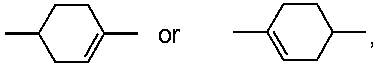 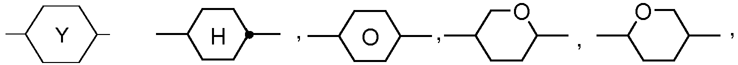 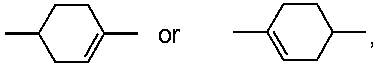 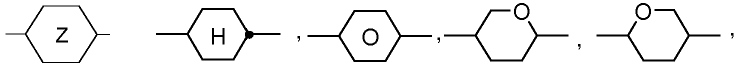 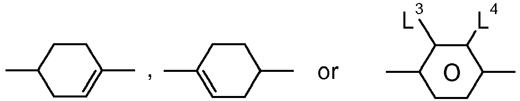
- R^{A1}: alkenyl having 2 to 9 C atoms or, if at least one of the rings X, Y and Z denotes cyclohexenyl, also one of the meanings of R^{A2},
- R^{A2}: alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
- z^{x}: -CH₂CH₂-, -CH=CH-, -CF₂O-, -OCF₂-, -CH₂O-,-OCH₂-, -CO-O-, -O-CO-, -C₂F₄-, -CF=CF-, -CH=CH-CH₂O-, or a single bond, preferably a single bond,
- L¹⁻²: each, independently of one another, H, F, CI, OCF₃, CF₃, CH₃, CH₂F or CHF₂H, preferably H, F or Cl, wherein at least L¹ or L² is not H,
- L³⁻⁴: each, independently of one another, H, F, Cl, OCF₃, CF₃, CH₃, CH₂F or CHF₂H, preferably H, F or Cl,
- x: 1 or 2,
- z: 0 or 1.

R^{A2} is preferably straight-chain alkyl or alkoxy having 1 to 8 C atoms or straight-chain alkenyl having 2 to 7 C atoms.

The liquid-crystalline medium preferably comprises no compounds containing a terminal vinyloxy group (-O-CH=CH₂), in particular no compounds of the formula AN or AY in which R^{A1} or R^{A2} denotes or contains a terminal vinyloxy group (-O-CH=CH₂).

Preferably, L¹ and L² denote F, or one of L¹ and L² denotes F and the other denotes Cl, and L³ and L⁴ preferably denote F, or one of L³ and L⁴ denotes F and the other denotes Cl.

The compounds of the formula AN are preferably selected from the following sub-formulae: 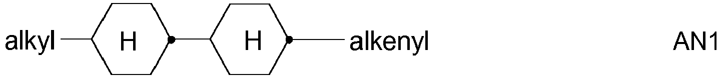 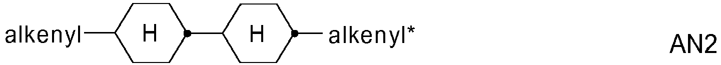 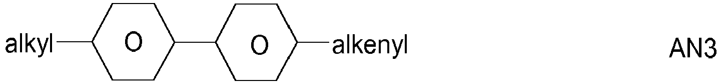 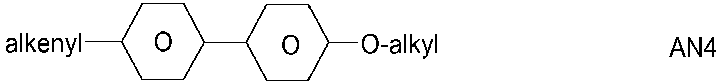 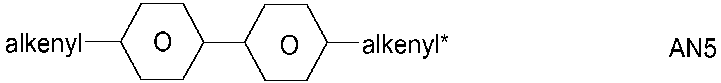 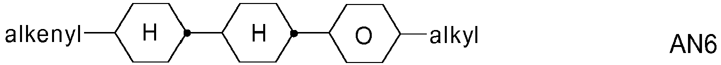 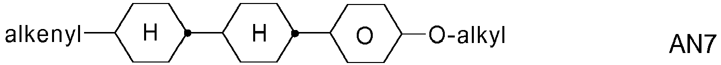 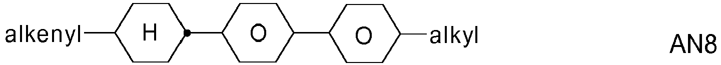 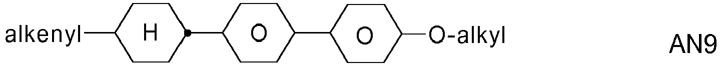 in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred compounds of the formula AN are selected from the following sub-formulae: 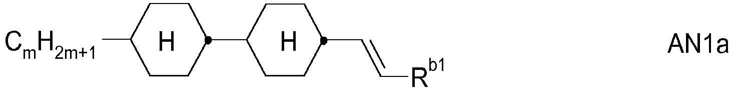 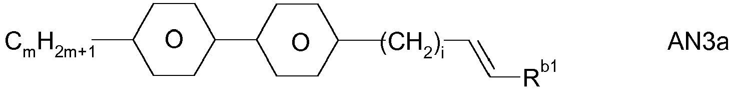 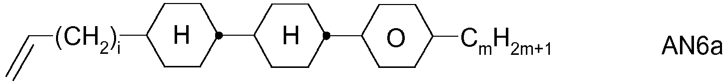 in which m denotes 1, 2, 3, 4, 5 or 6, i denotes 0, 1, 2 or 3, and R^{b1} denotes H, CH₃ or C₂H₅.

Very particularly preferred compounds of the formula AN are selected from the following sub-formulae:

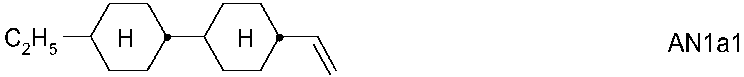

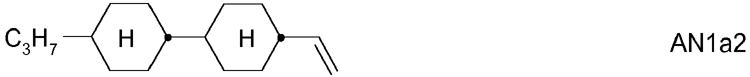

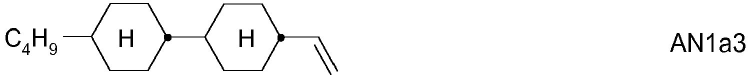

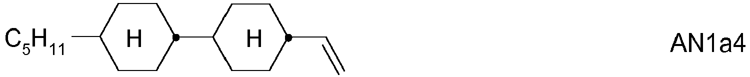

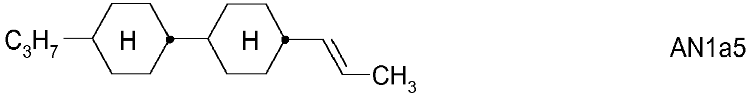

Most preferred are compounds of formula AN1a2 and AN1a5.

The compounds of the formula AY are preferably selected from the following sub-formulae: 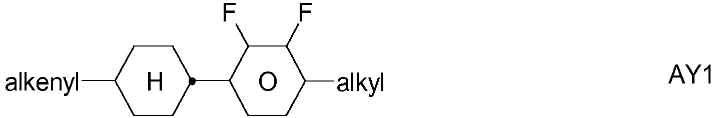 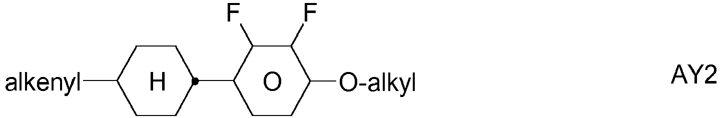 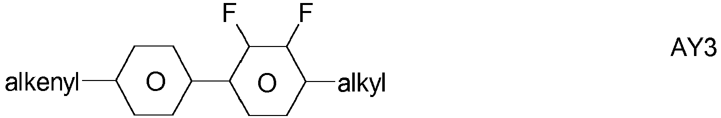 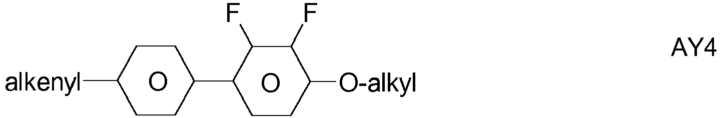 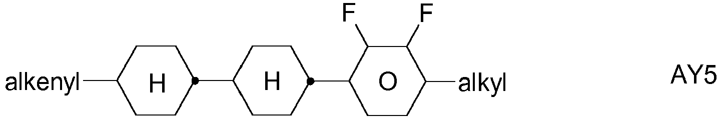 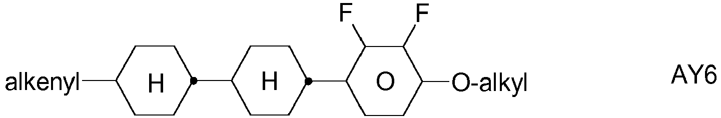 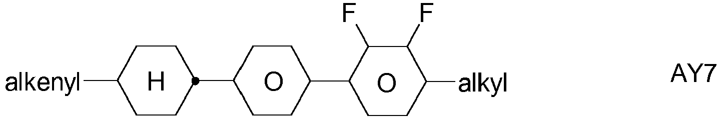 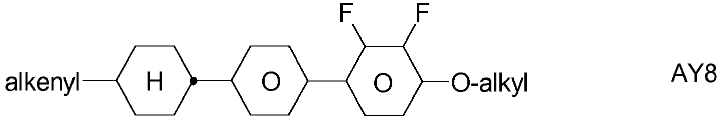 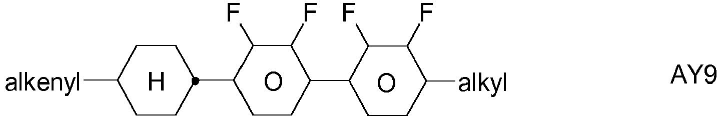 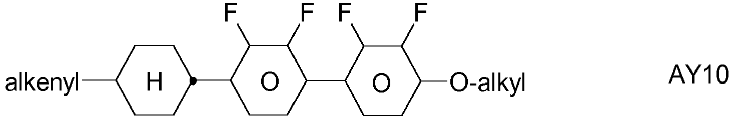 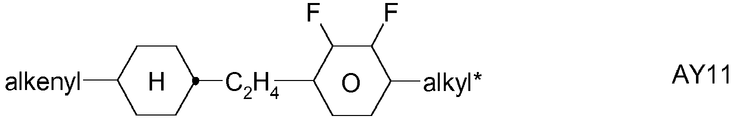 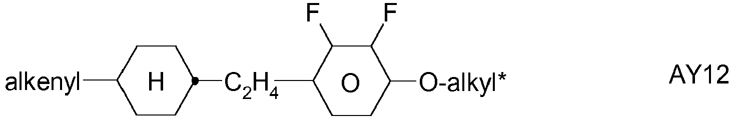 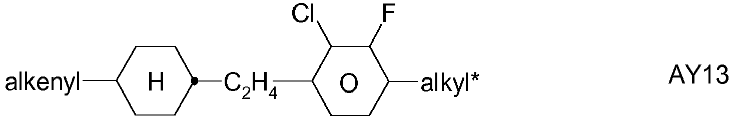 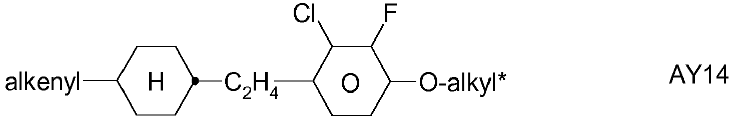 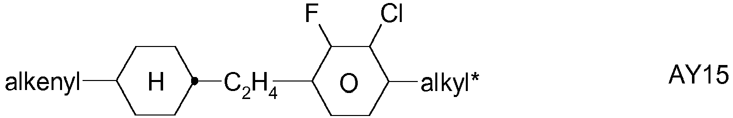 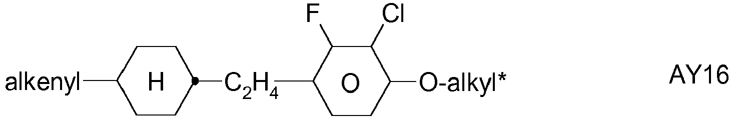 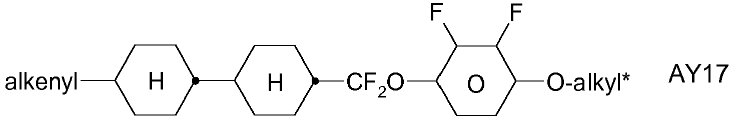 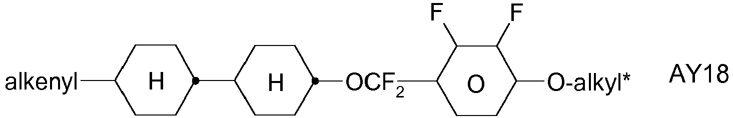 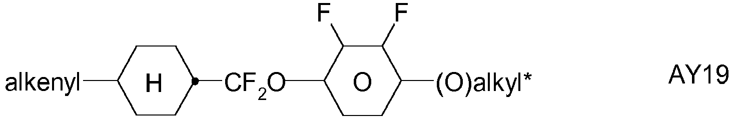 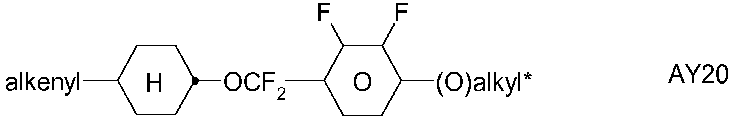 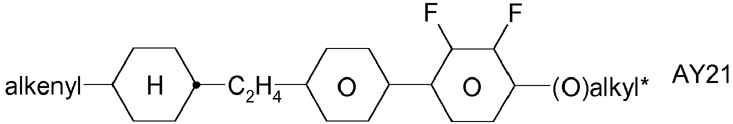 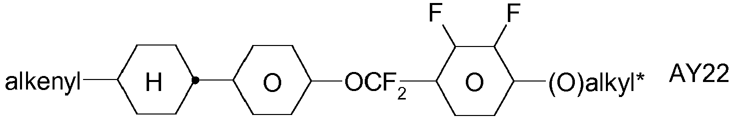 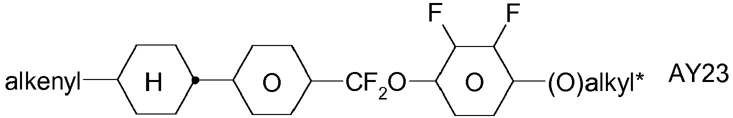 in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred compounds of the formula AY are selected from the following sub-formulae: 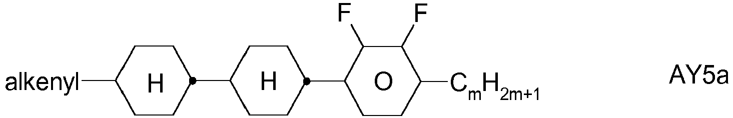 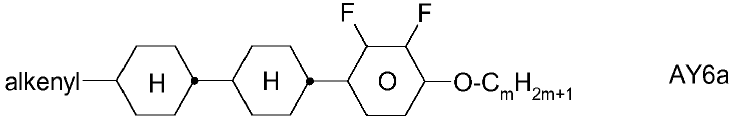 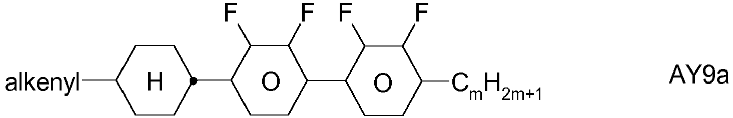 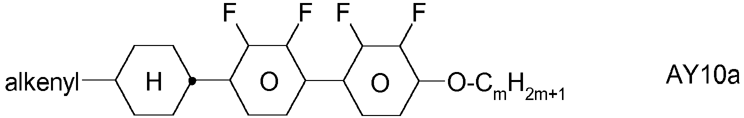 in which m and n each, independently of one another, denote 1, 2, 3, 4, 5 or 6, and alkenyl denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Further preferred embodiments of the liquid-crystalline medium according to the invention are indicated below:
a) Liquid-crystalline medium which additionally comprises one or more compounds selected from the group of the compounds of the formulae CY, PY and PYP: 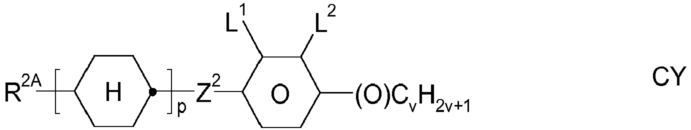 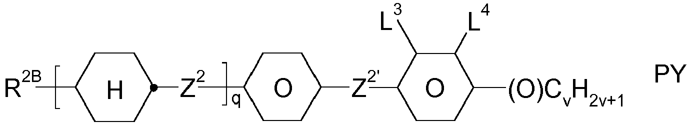 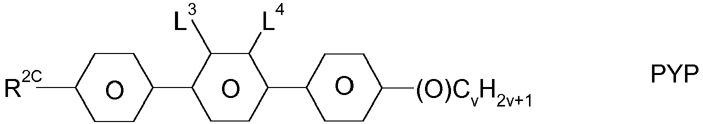 in which
   - R^{2A}, R^{2B} and R^{2C}: each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 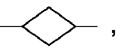 -C≡C-, -CF₂O-, -OCF₂-, -OC-O- or -O-CO- in such a way that O atoms are not linked directly to one another,
   - L¹⁻⁴: each, independently of one another, denote F, Cl, CF₃ or CHF₂,
   - Z² and Z^{2'}: each, independently of one another, denote a single bond, -CH₂CH₂-, -CH=CH-, -CF₂O-, -OCF₂-, -CH₂O-,-OCH₂-, -COO-, -OCO-, -C₂F₄-, -CF=CF-, -CH=CHCH₂O-,
   - p: denotes 0, 1 or 2,
   - q: denotes 0 or 1, and
   - v: denotes 1 to 6,
   with the proviso, that compounds according to formula AY as defined above are not included.
   In the compounds of the formulae CY and PY, Z² may have identical or different meanings. In the compounds of the formula PY, Z² and Z^{2'} may have identical or different meanings.
   In the compounds of the formulae CY, PY and PYP, R^{2A}, R^{2B} and R^{2C} each preferably denote alkyl having 1-6 C atoms, in particular CH₃, C₂H₅, n-C₃H₇, n-C₄H₉, n-C₅H₁₁.
   In the compounds of the formulae CY and PY, L¹, L², L³ and L⁴ preferably denote L¹ = L² = F and L³ = L⁴ = F, furthermore L¹ = F and L² = Cl, L¹ = Cl and L² = F, L³ = F and L⁴ = Cl, L³ = Cl and L⁴ = F. Z² and Z^{2'} in the formulae CY and PY preferably each, independently of one another, denote a single bond, furthermore a -C₂H₄- or -CH₂O-bridge.
   If in the formula PY Z² = -C₂H₄- or -CH₂O-, Z^{2'} is preferably a single bond or, if Z^{2'} = -C₂H₄- or -CH₂O-, Z² is preferably a single bond. In the compounds of the formulae CY and PY, (O)CᵥH₂ᵥ₊₁ preferably denotes OCᵥH₂ᵥ₊₁, furthermore CᵥH₂ᵥ₊₁. In the compounds of the formula PYP, (O)CᵥH₂ᵥ₊₁ preferably denotes CᵥH₂ᵥ₊₁. In the compounds of the formula PYP, L³ and L⁴ preferably each denote F.
   Preferred compounds of the formulae CY, PY and PYP are indicated below: 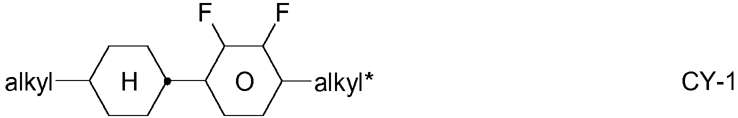 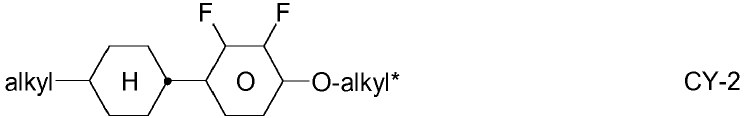 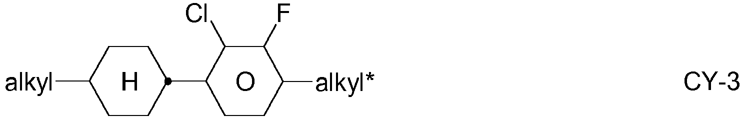 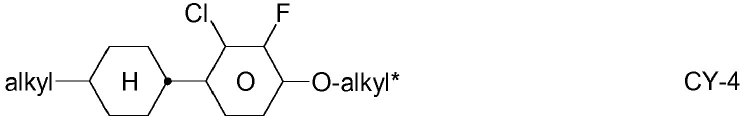 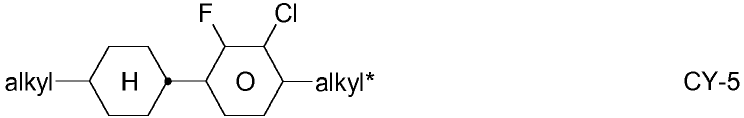 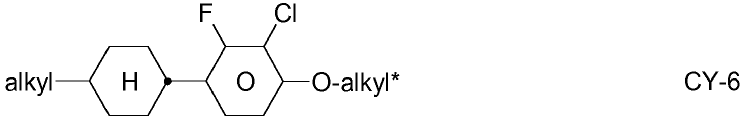 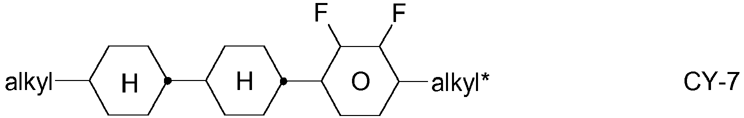 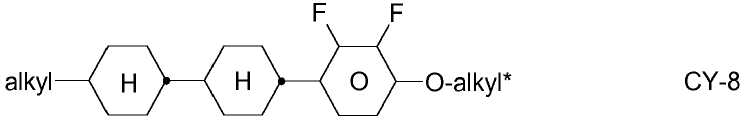 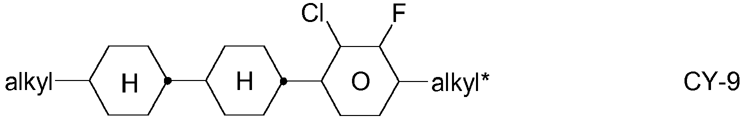 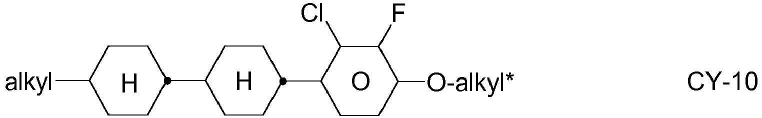 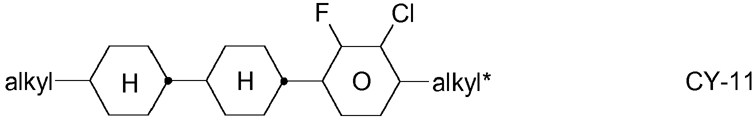 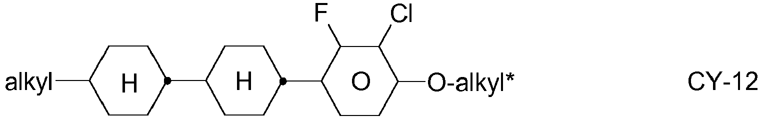 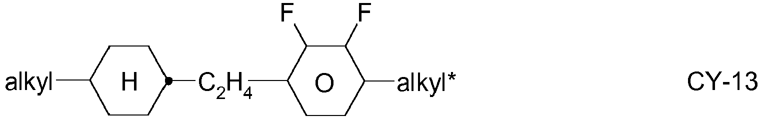 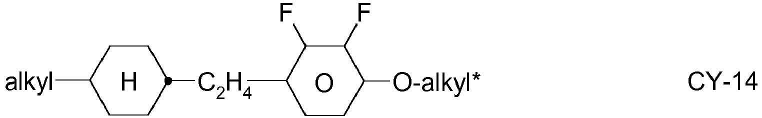 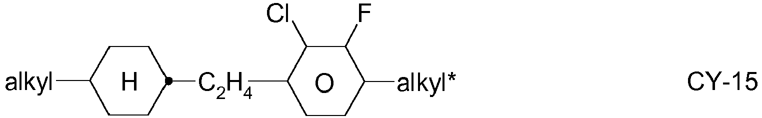 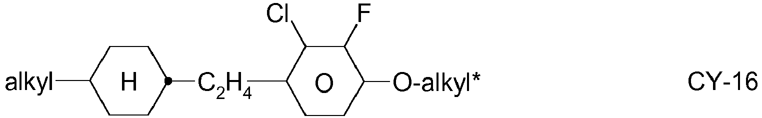 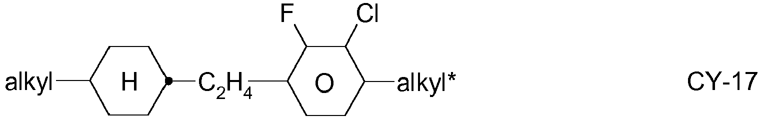 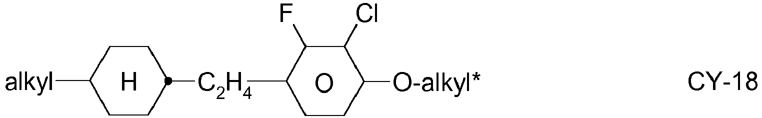 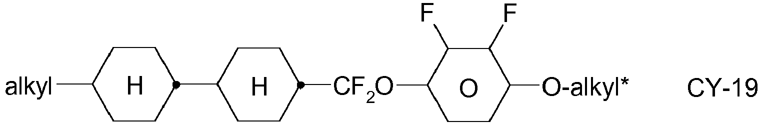 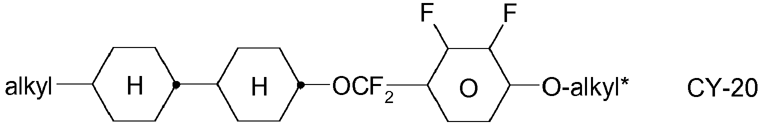 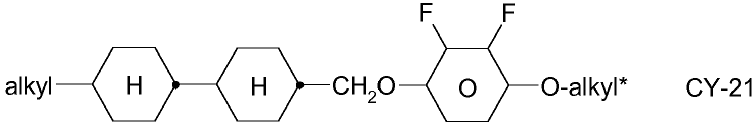 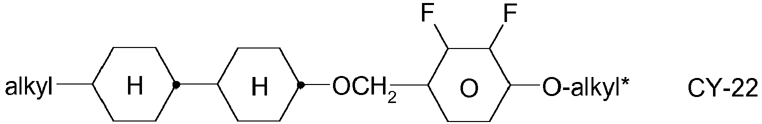 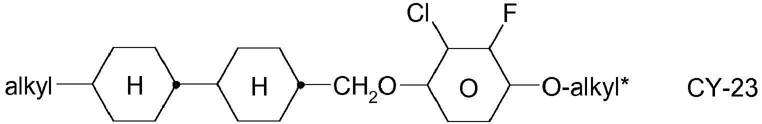 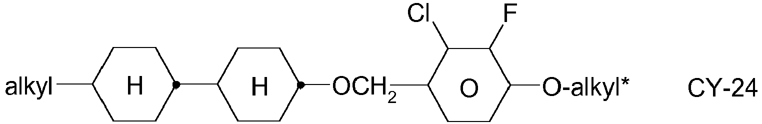 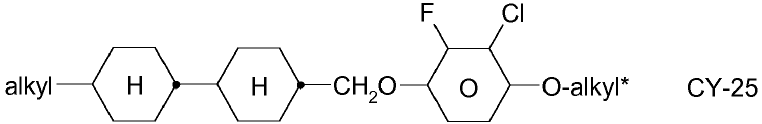 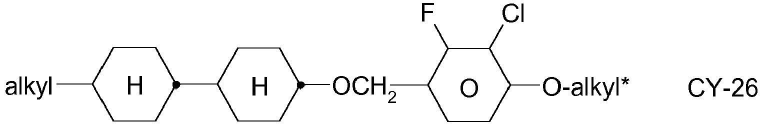 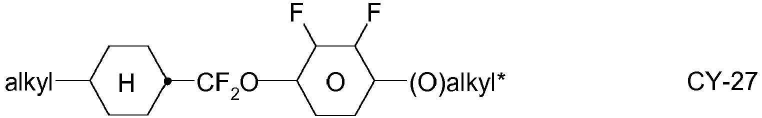 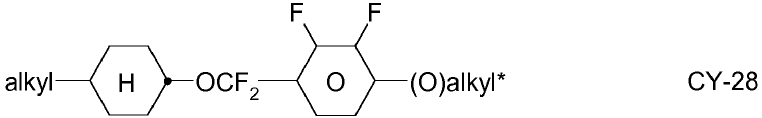 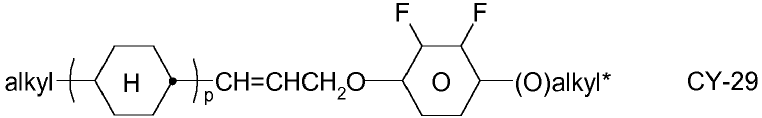 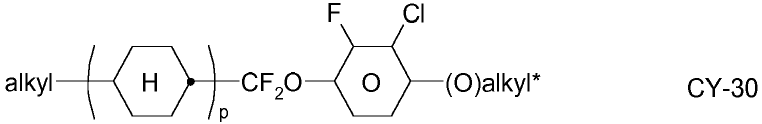 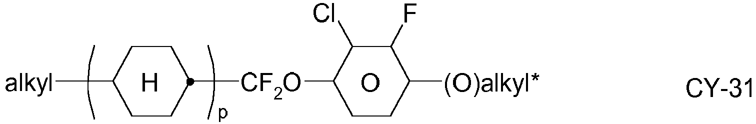 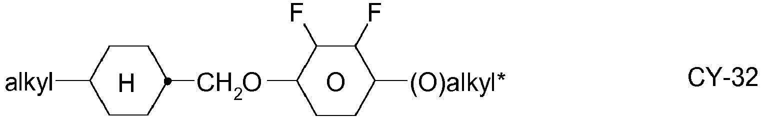 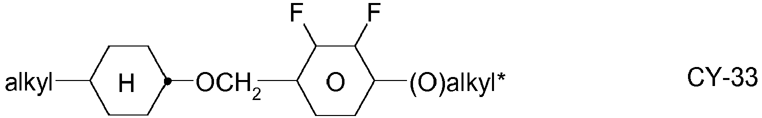 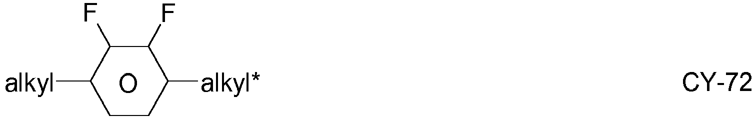 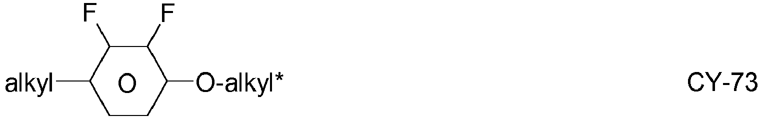 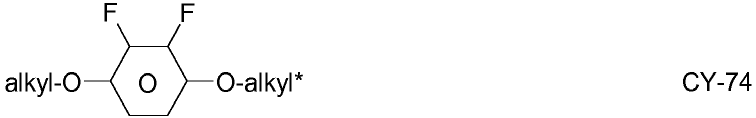 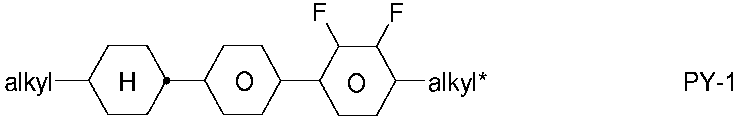 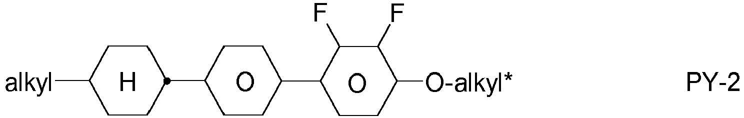 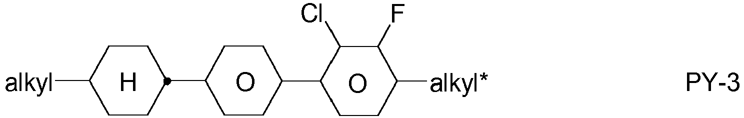 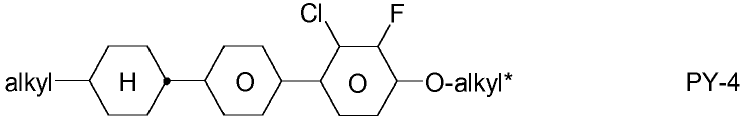 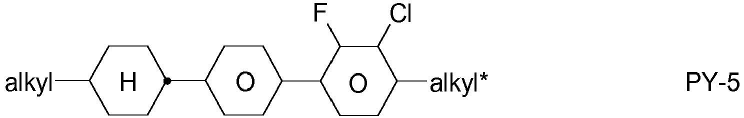 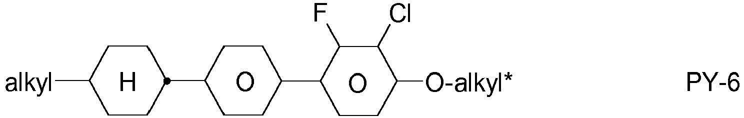 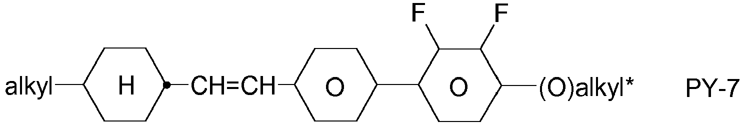 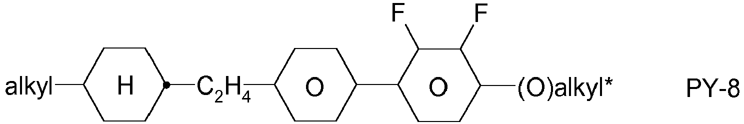 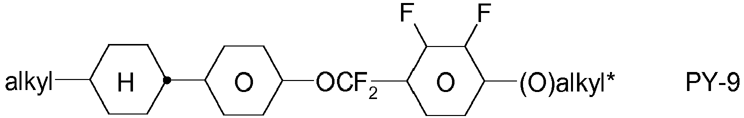 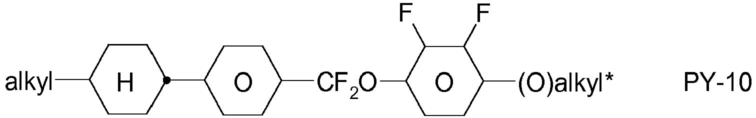 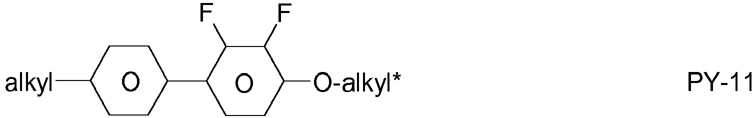 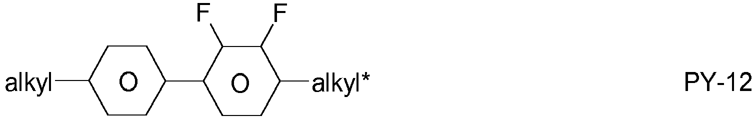 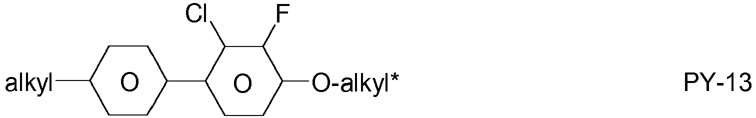 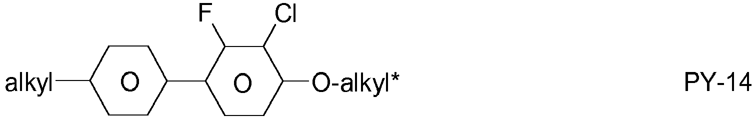 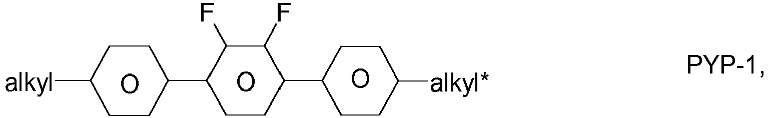 in which alkyl and alkyl* each, independently of one another, denote a straight-chain alkyl radical having 1-6 C atoms and in which alkenyl and alkenyl* each, independently of one another, denote a straight-chain alkenyl radical having 2-6 C atoms.
   Particularly preferred mixtures according to the invention comprise one or more compounds of the formulae CY-2, CY-8, CY-14, CY-29, CY-74, PY-2, PY-11 and PYP-1.
   The proportion of compounds of the formulae CY and/or PY in the mixture as a whole is preferably at least 10 % by weight.
   Particularly preferred media according to the invention comprise at least one compound of the formula PYP-1, 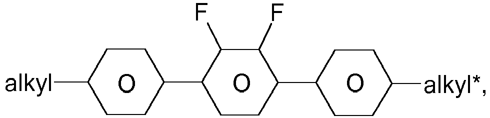 in which alkyl and alkyl* have the meanings indicated above, preferably in amounts of ≥ 3 % by weight, in particular ≥ 5 % by weight and particularly preferably 5-25 % by weight.
b) Liquid-crystalline medium which comprises one or more compounds of the formula III, 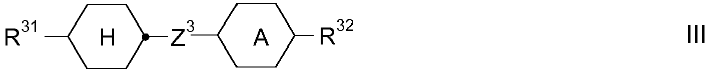 in which
   - R³¹ and R³²: each, independently of one another, denote a straight-chain alkyl, alkoxyalkyl, alkenyl or alkoxy radical having up to 12 C atoms, and 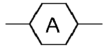 denotes 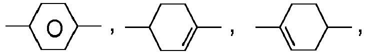 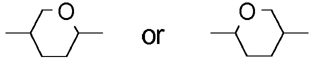
   - Z³: denotes a single bond, -CH₂CH₂-, -CH=CH-, -CF₂O-, -OCF₂-, -CH₂O-, -O CH₂-, -COO-, -OCO-, -C₂F₄-, -C₄H₈-, -CF=CF-.

   Preferred compounds of the formula III are indicated below: 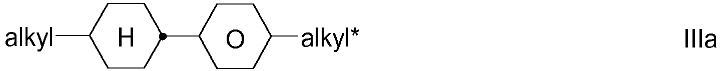 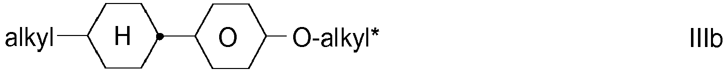 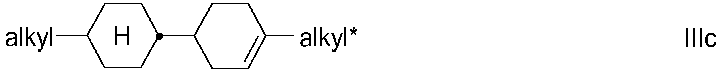 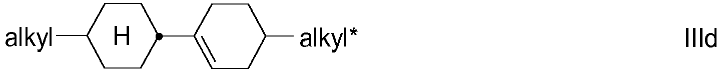 in which
   - alkyl and alkyl*: each, independently of one another, denote a straight-chain alkyl radical having 1-6 C atoms.

   The medium according to the invention preferably comprises at least one compound of the formula IIIa and/or formula IIIb.
   The proportion of compounds of the formula III in the mixture as a whole is preferably at least 5% by weight.
c) Liquid-crystalline medium which additionally comprises one or more tetracyclic compounds of the formulae 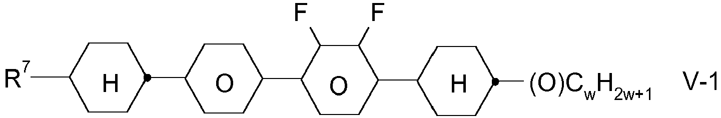 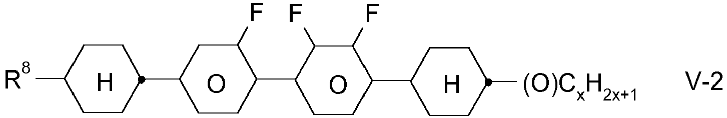 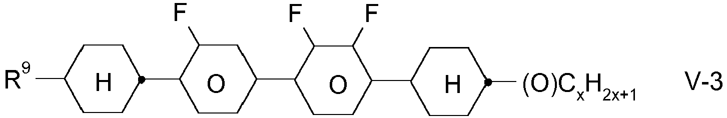 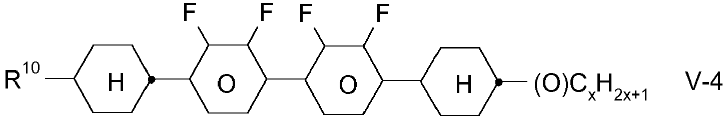 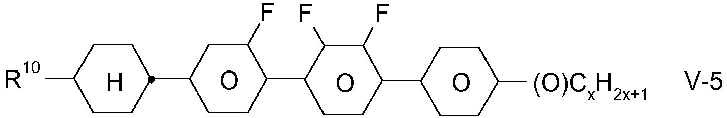 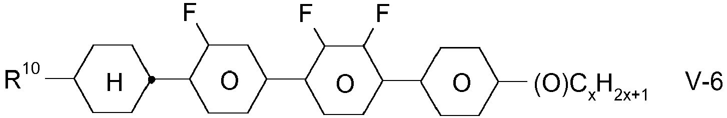 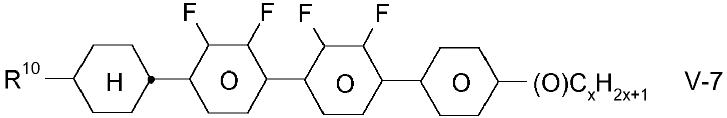 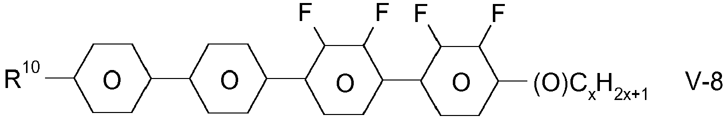 in which
   - R⁷⁻¹⁰: each, independently of one another, have one of the meanings indicated for R^{2A} in Claim 10, and
   - w and x: each, independently of one another, denote 1 to 6.

   Particular preference is given to mixtures comprising at least one compound of the formula V-8.
d) Liquid-crystalline medium which comprises one or more compounds of the formulae Y-1 to Y-6, 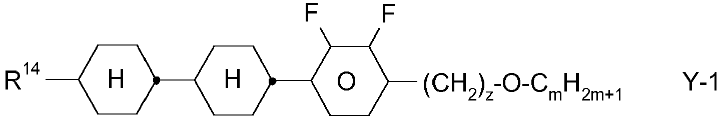 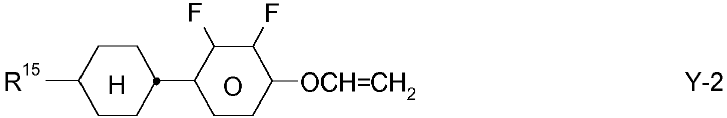 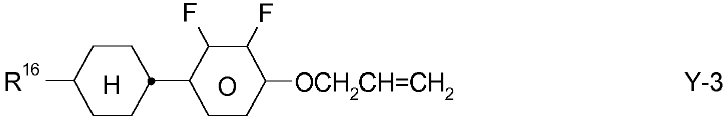 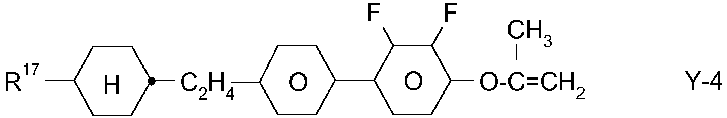 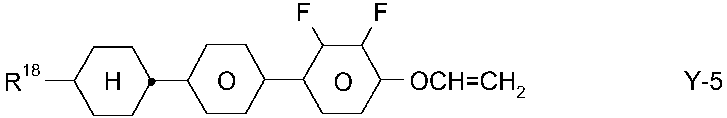 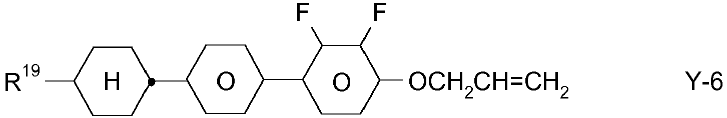 in which R¹⁴-R¹⁹ each, independently of one another, denote an alkyl or alkoxy radical having 1-6 C atoms; z and m each, independently of one another, denote 1-6; x denotes 0, 1, 2 or 3.
   The medium according to the invention particularly preferably comprises one or more compounds of the formulae Y-1 to Y-6, preferably in amounts of ≥ 5% by weight.
e) Liquid-crystalline medium additionally comprising one or more fluorinated terphenyls of the formulae T-1 to T-21, 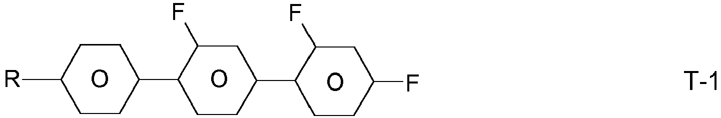 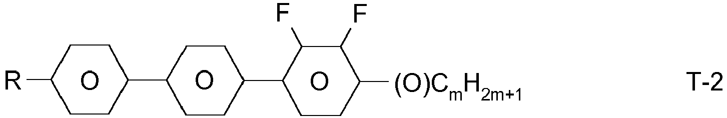 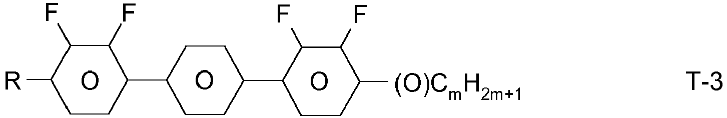 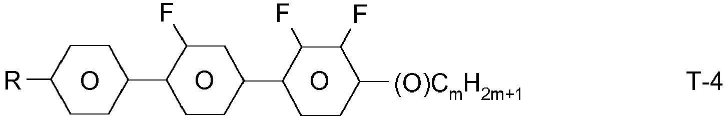 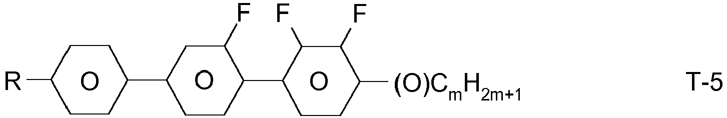 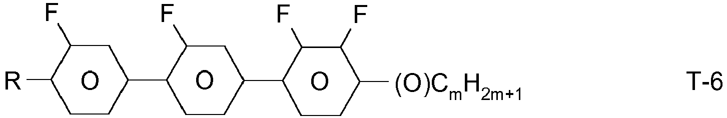 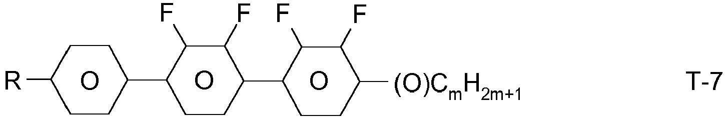 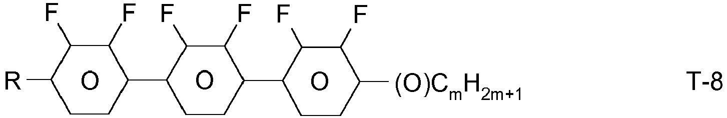 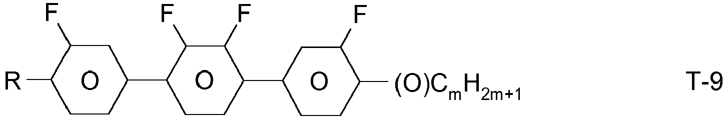 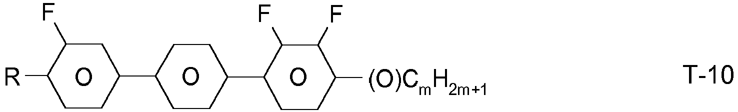 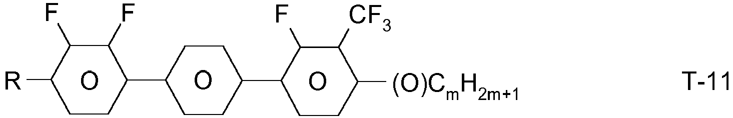 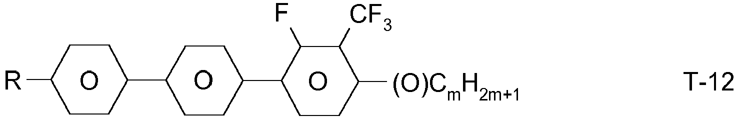 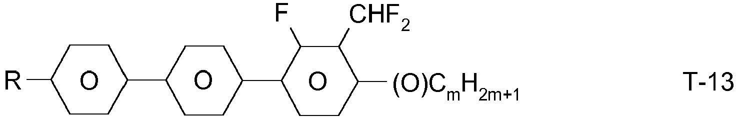 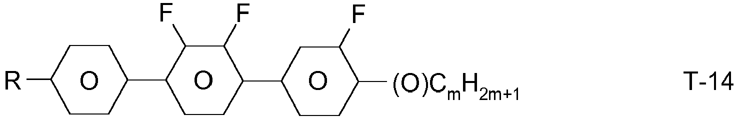 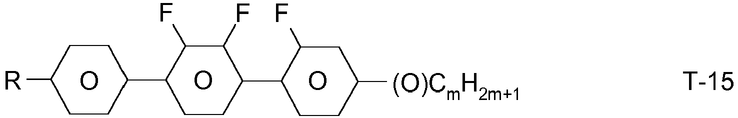 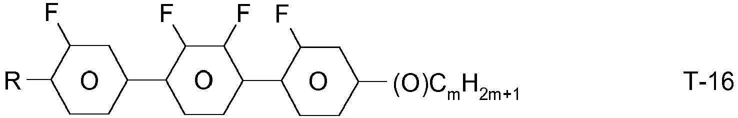 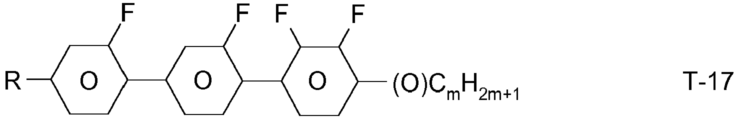 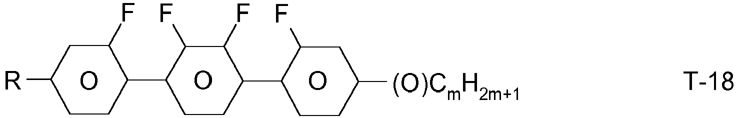 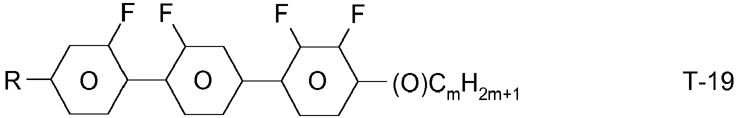 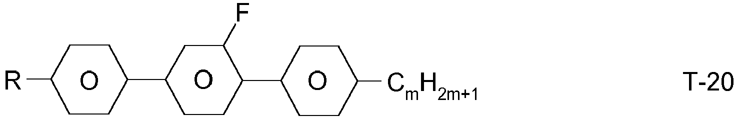 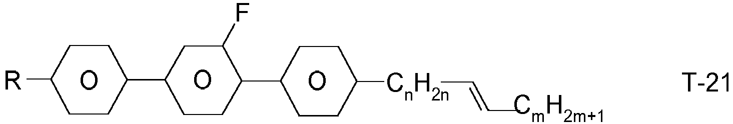 in which
   R denotes a straight-chain alkyl or alkoxy radical having 1-7 C atoms, and m = 0, 1, 2, 3, 4, 5 or 6 and n denotes 0, 1, 2, 3 or 4.
   R preferably denotes methyl, ethyl, propyl, butyl, pentyl, hexyl, methoxy, ethoxy, propoxy, butoxy, pentoxy.

   The medium according to the invention preferably comprises the terphenyls of the formulae T-1 to T-21 in amounts of 2-30 % by weight, in particular 5-20 % by weight.
   Particular preference is given to compounds of the formulae T-1, T-2, T-20 and T-21. In these compounds, R preferably denotes alkyl, furthermore alkoxy, each having 1-5 C atoms. In the compounds of the formula T-20, R preferably denotes alkyl or alkenyl, in particular alkyl. In the compound of the formula T-21, R preferably denotes alkyl.
   The terphenyls are preferably employed in the mixtures according to the invention if the Δn value of the mixture is to be ≥ 0.1. Preferred mixtures comprise 2-20 % by weight of one or more terphenyl compounds selected from the group of the compounds T-1 to T-21.
f) Liquid-crystalline medium additionally comprising one or more biphenyls of the formulae B-1 to B-3, 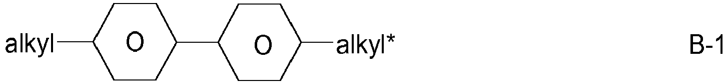 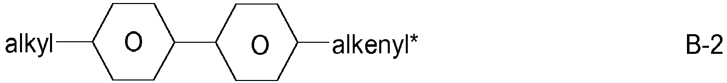 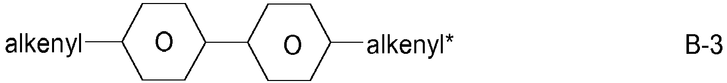 in which
   - alkyl and alkyl*: each, independently of one another, denote a straight-chain alkyl radical having 1-6 C atoms, and
   - alkenyl and alkenyl*: each, independently of one another, denote a straight-chain alkenyl radical having 2-6 C atoms.

   The proportion of the biphenyls of the formulae B-1 to B-3 in the mixture as a whole is preferably at least 3% by weight, in particular ≥ 5% by weight.
   Of the compounds of the formulae B-1 to B-3, the compounds of the formula B-2 are particularly preferred.
   Particularly preferred biphenyls are 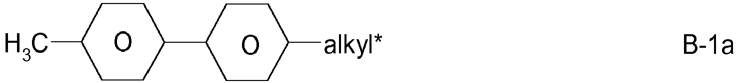 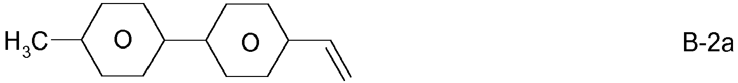 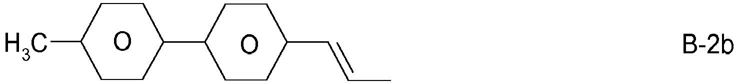 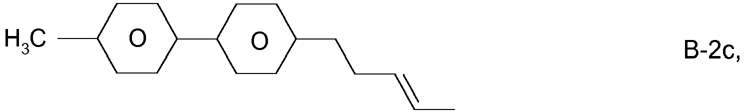 in which alkyl* denotes an alkyl radical having 1-6 C atoms. The medium according to the invention particularly preferably comprises one or more compounds of the formulae B-1a and/or B-2c.
g) Liquid-crystalline medium comprising at least one compound of the formulae Z-1 to Z-7, 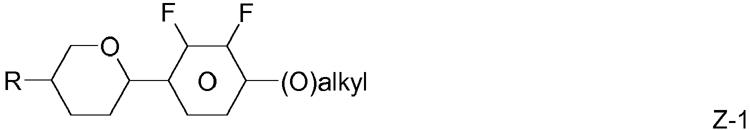 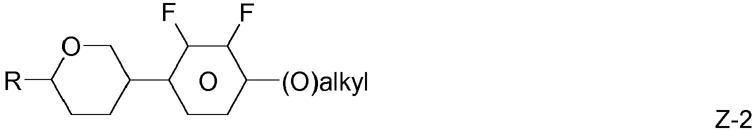 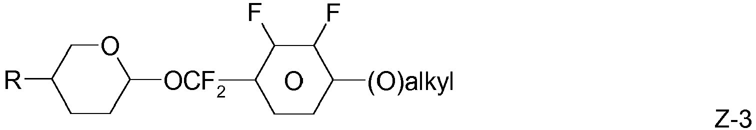 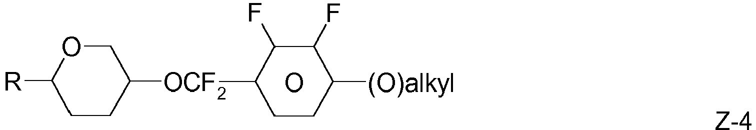 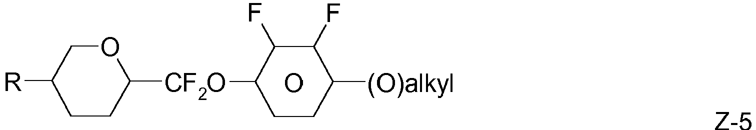 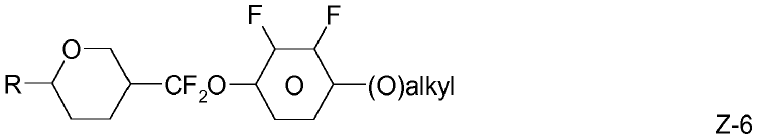 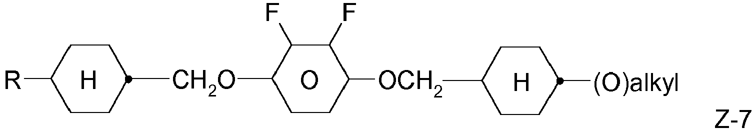 in which R and alkyl have the meanings indicated above.
h) Liquid-crystalline medium comprising at least one compound of the formulae O-1 to O-11, 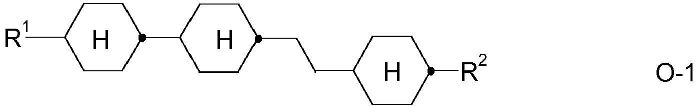 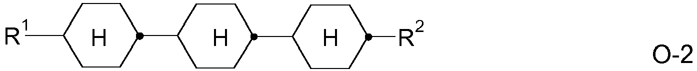 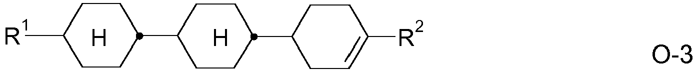 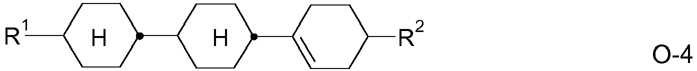 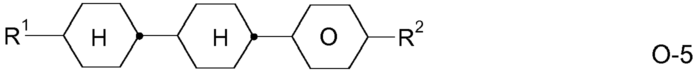 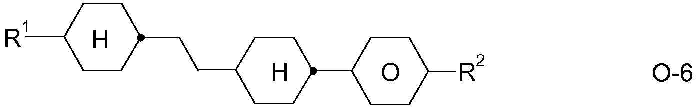 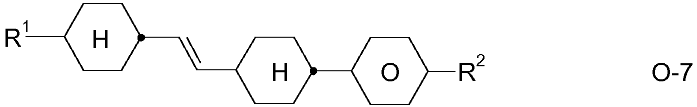 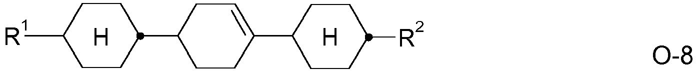 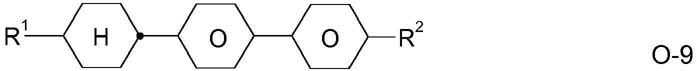 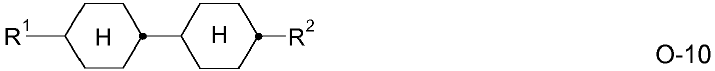 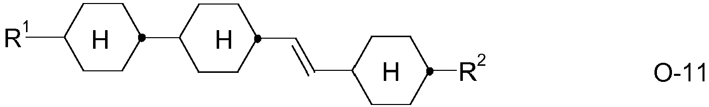 in which R¹ and R² have the meanings indicated for R^{2A}. R¹ and R² preferably each, independently of one another, denote straight-chain alkyl or Alkenyl having up to 6 carbon atoms.
   Mixtures according to the invention very particularly preferably comprise the compounds of the formula O-5, O-7, O-9, O-10 and/or O-11, in particular in amounts of 5-30 %.
   Preferred compounds of the formulae O-5 and O-10 are indicated below: 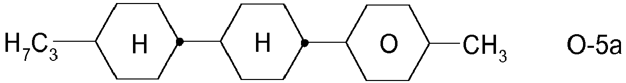 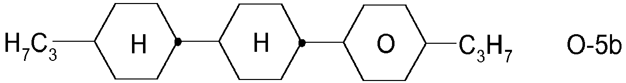 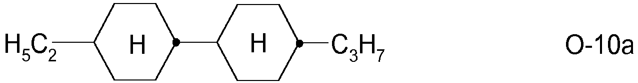 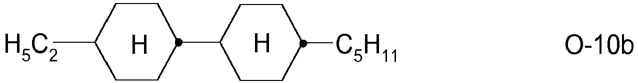 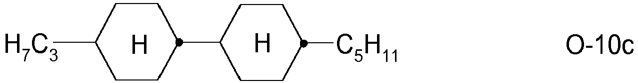 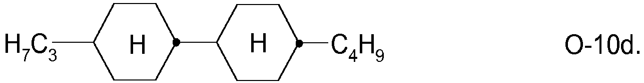
   The medium according to the invention particularly preferably comprises the tricyclic compounds of the formula O-10a and/or of the formula O-10b in combination with one or more bicyclic compounds of the formulae O-10a to O-10d. The total proportion of the compounds of the formulae O-5a and/or O-5b in combination with one or more compounds selected from the bicyclic compounds of the formulae O-10a to O-10d is 5-40 %, very particularly preferably 15-35 %.
   Very particularly preferred mixtures comprise compounds O-5a and O-10a: 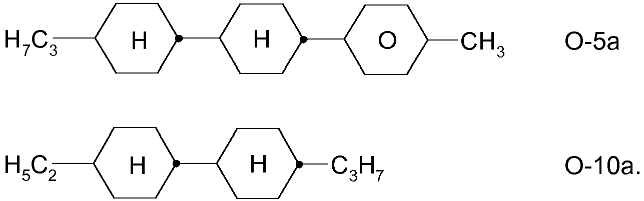
   Compounds O-5a and O-10a are preferably present in the mixture in a concentration of 15-35 %, particularly preferably 15-25 % and especially preferably 18-22 %, based on the mixture as a whole.
   Very particularly preferred mixtures comprise compounds O-5b and O-10a: 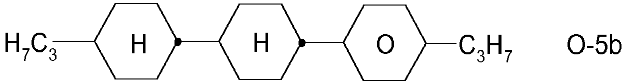 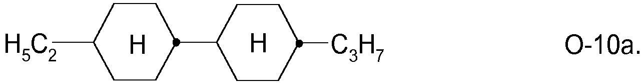
   Compounds O-5b and O-10a are preferably present in the mixture in a concentration of 15-35 %, particularly preferably 15-25 % and especially preferably 18-22 %, based on the mixture as a whole.
   Very particularly preferred mixtures comprise the following three compounds: 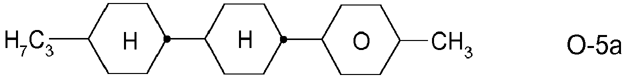 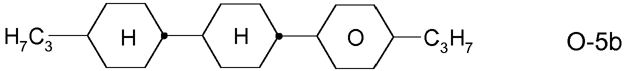 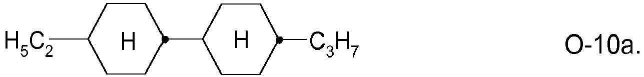
   Compounds O-5a, O-5b and O-10a are preferably present in the mixture in a concentration of 15-35 %, particularly preferably 15-25 % and especially preferably 18-22 %, based on the mixture as a whole.
i) Preferred liquid-crystalline media according to the invention comprise one or more substances which contain a tetrahydronaphthyl or naphthyl unit, such as, for example, the compounds of the formulae N-1 to N-5, 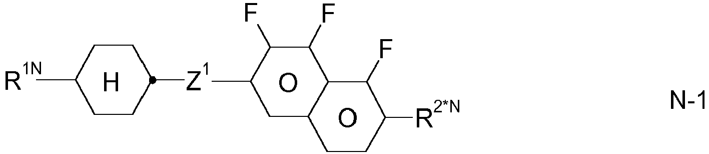 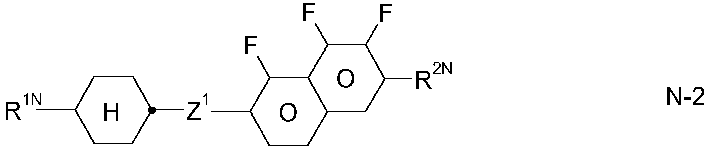 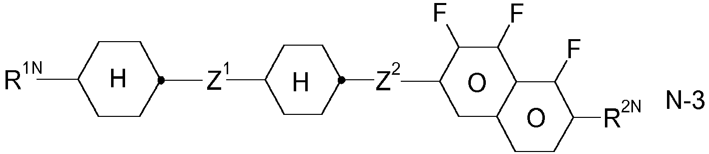 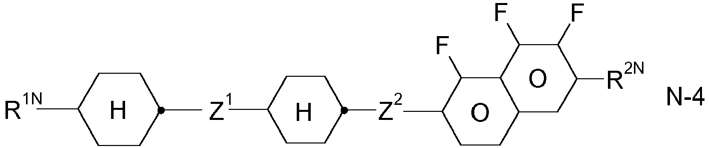 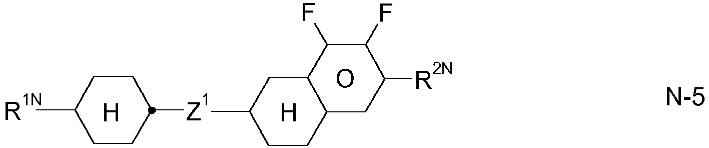 in which R^{1N} and R^{2N} each, independently of one another, have the meanings indicated for R^{2A} in Claim 10, preferably denote straight-chain alkyl, straight-chain alkoxy or straight-chain alkenyl, and
   - Z¹ and Z²: each, independently of one another, denote -C₂H₄-, -CH=CH-, -(CH₂)₄-, -(CH₂)₃O-, -O(CH₂)₃-,-CH=CHCH₂CH₂-, -CH₂CH₂CH=CH-, -CH₂O-, -OCH₂-, -CO O-, -OCO-, -C₂F₄-, -CF=CF-, -CF=CH-, -CH=CF-, -CF₂O-, -OCF₂-, -CH₂- or a single bond.
k) Preferred mixtures comprise one or more compounds selected from the group of the difluorodibenzochromane compounds of the formula BC, chromans of the formula CR, fluorinated phenanthrenes of the formulae PH-1 and PH-2, fluorinated dibenzofurans of the formula BF-1 and BF-2 and fluorinated dibenzothiophene compounds of the formula BS-1 and BS-2, 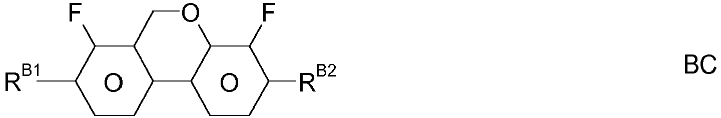 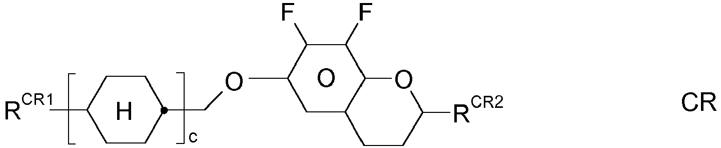 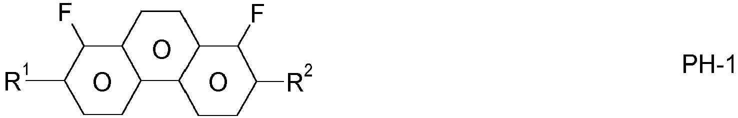 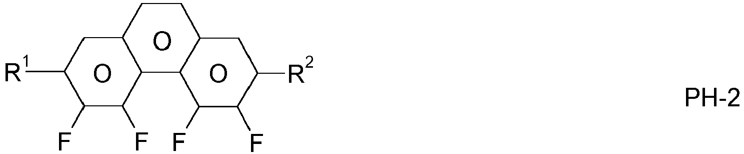 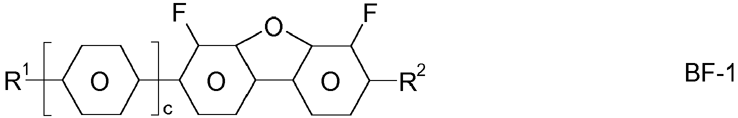 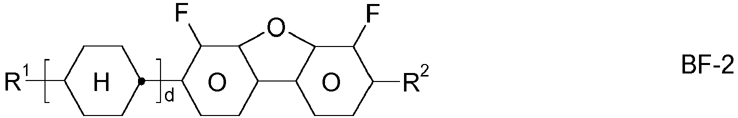 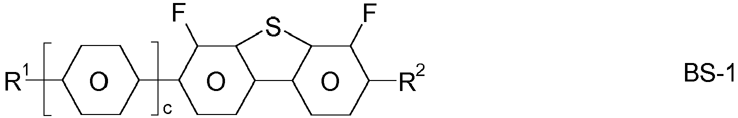 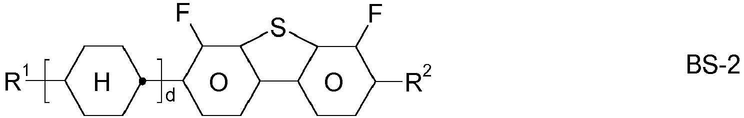 in which
   R^{B1}, R^{B2}, R^{CR1}, R^{CR2}, R¹, R² each, independently of one another, have the meaning of R^{2A}. c denotes 0, 1 or 2 and d denotes 1 or 2.
   The mixtures according to the invention preferably comprise the compounds of the formulae BC, CR, PH-1, PH-2, BF-1, BF-2, BS-1 and/or BS-2 in amounts of 3 to 20 % by weight, in particular in amounts of 3 to 15 % by weight.
   Particularly preferred compounds of the formulae BC, CR, BF-1 are the compounds BC-1 to BC-7 and CR-1 to CR-5, 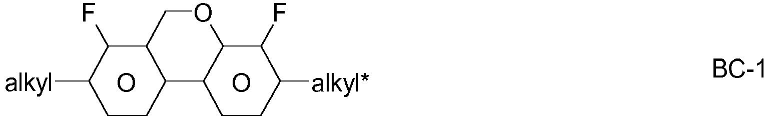 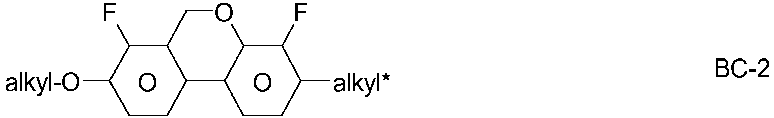 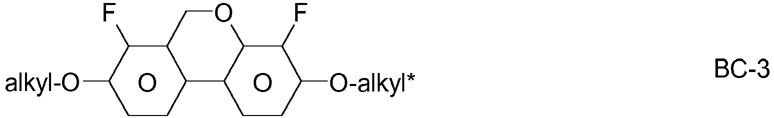 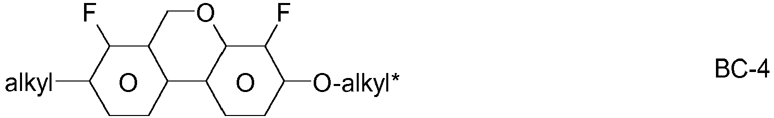 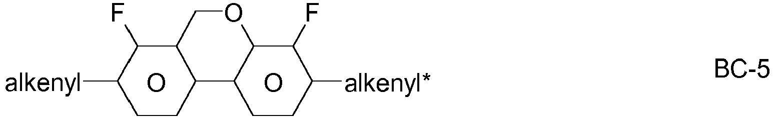 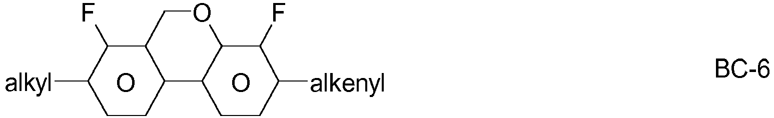 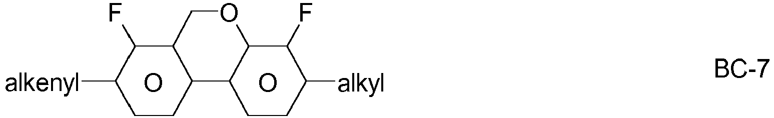 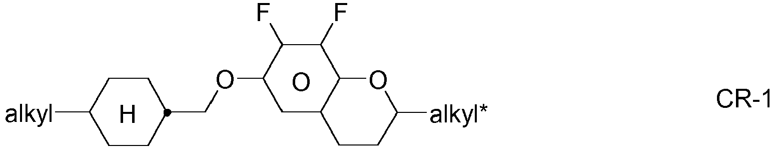 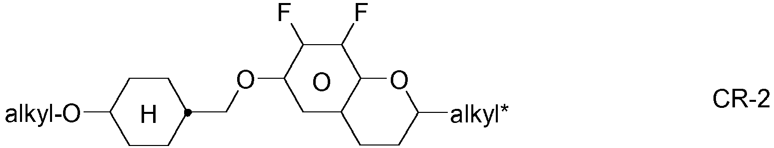 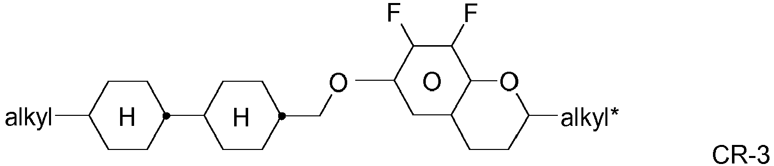 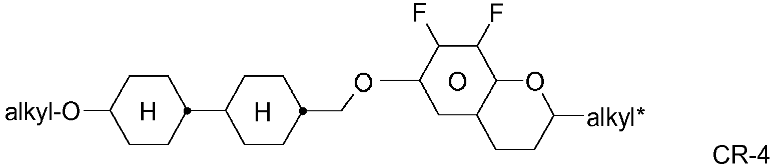 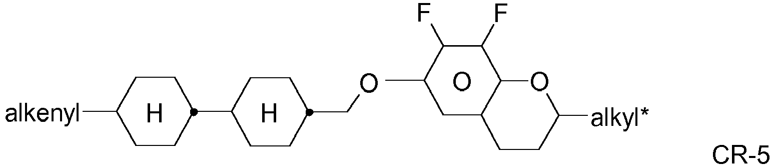 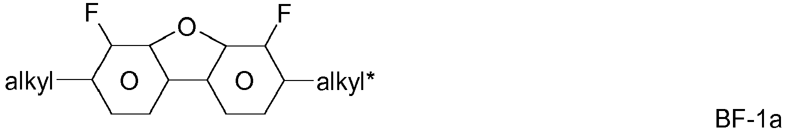 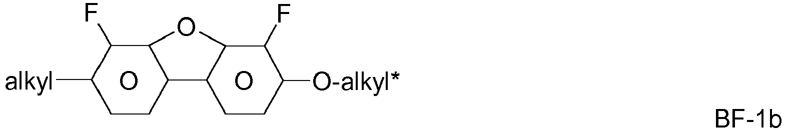 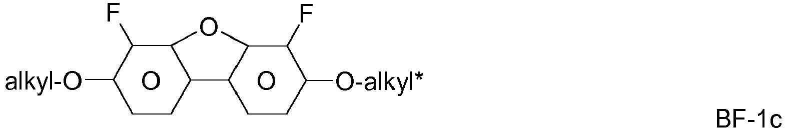 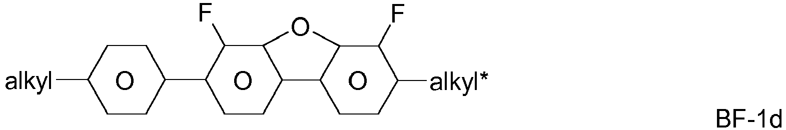 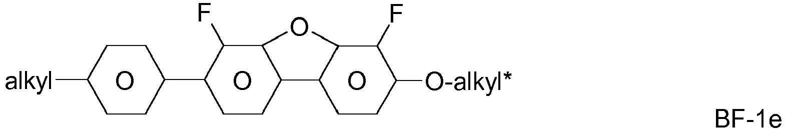 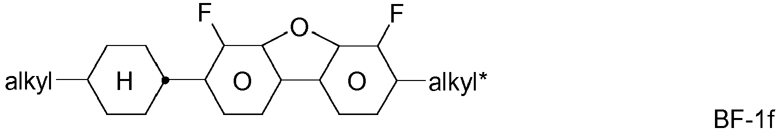 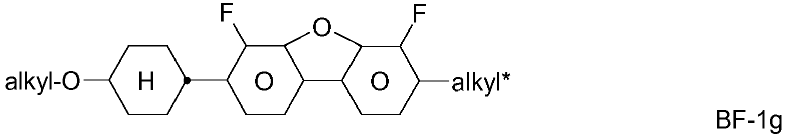 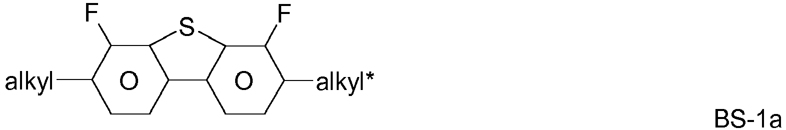 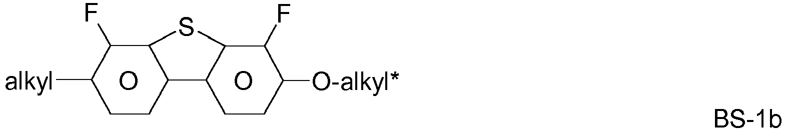 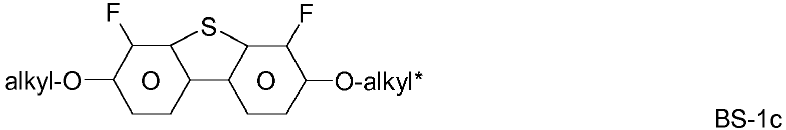 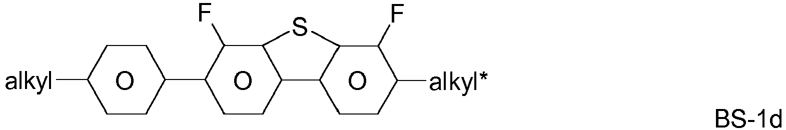 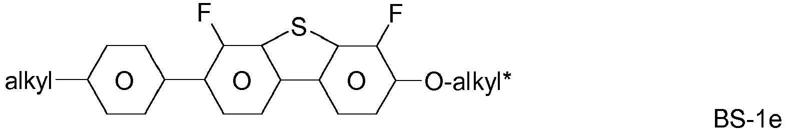 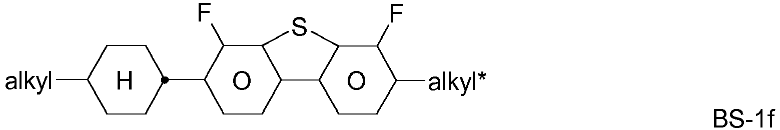 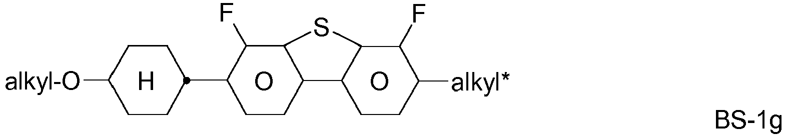 in which
   - alkyl and alkyl*: each, independently of one another, denote a straight-chain alkyl radical having 1-6 C atoms, and
   - alkenyl and alkenyl*: each, independently of one another, denote a straight-chain alkenyl radical having 1-6 C atoms.

   Mixtures comprising a compound of formula BF-1c are especially preferred, and alkyl and alkyl* are independently methyl, ethyl, propyl, butyl of pentyl or hexyl, which are preferably straight-chained.
l) Preferred mixtures comprise one or more indane compounds of the formula In, 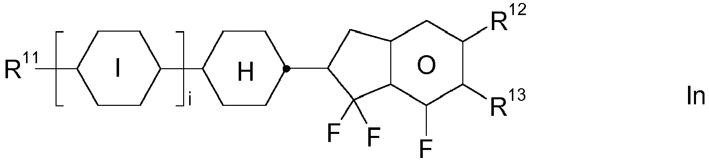 in which
   - R¹¹, R¹², R¹³: each, independently of one another, denote a straight-chain alkyl, alkoxy, alkoxyalkyl or alkenyl radical having 1-6 C atoms,

   - R¹² and R¹³: additionally denote H or halogen, 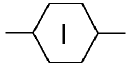 denotes 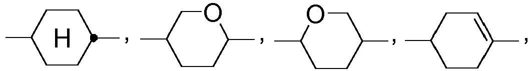 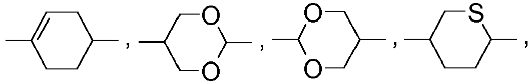 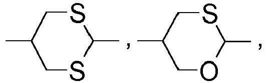
   - i: denotes 0, 1 or 2.

   In the case that R¹² and/or R¹³ denote halogen, halogen is preferably F.
   Preferred compounds of the formula In are the compounds of the formulae In-1 to In-16 indicated below: 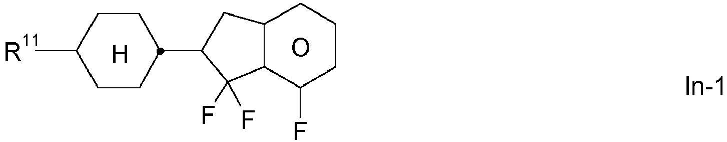 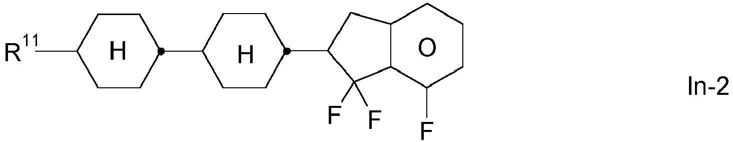 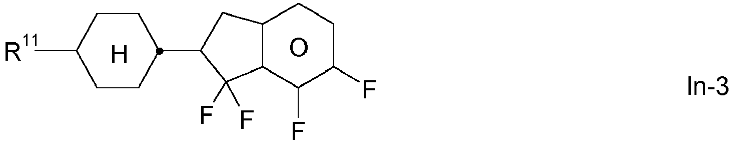 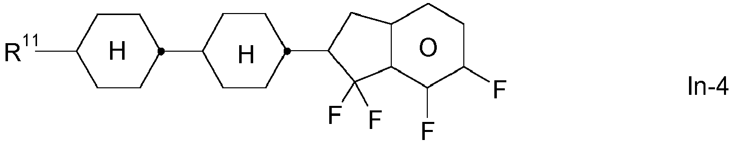 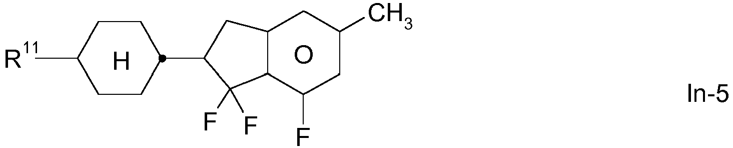 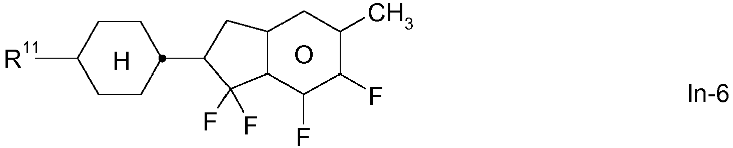 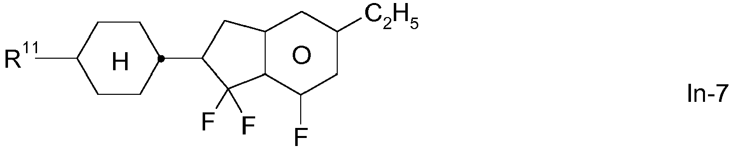 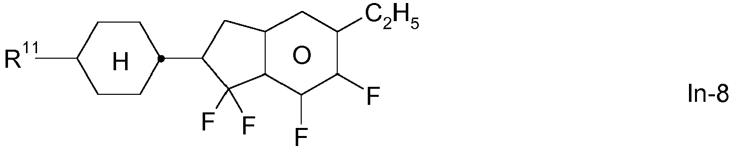 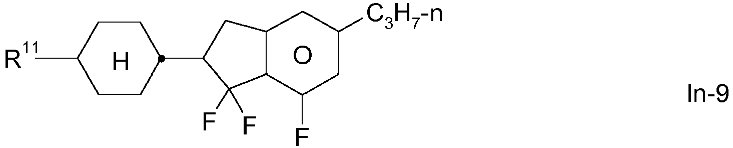 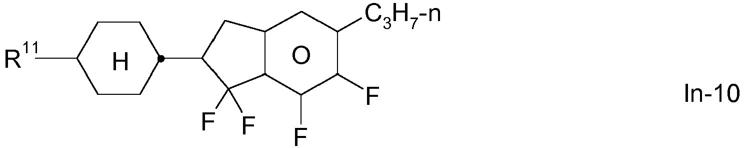 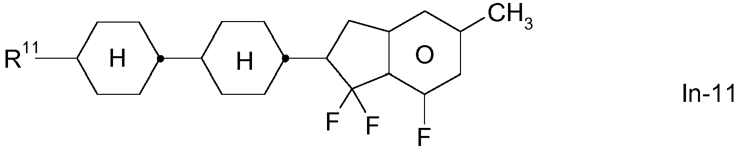 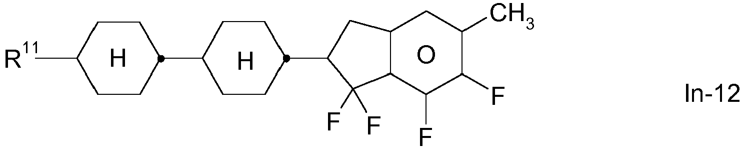 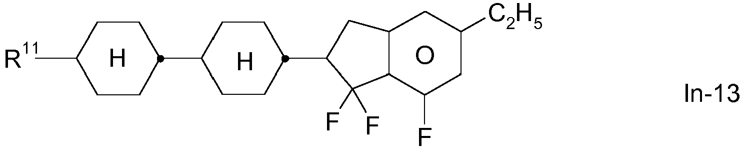 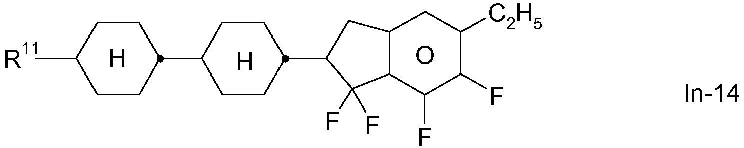 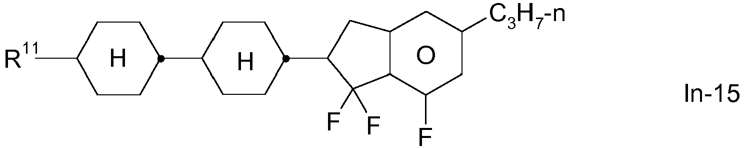 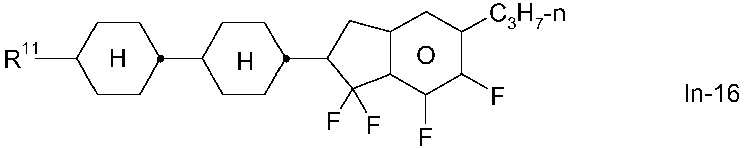
   Particular preference is given to the compounds of the formulae In-1, In-2, In-3 and In-4.
   The compounds of the formula In and the sub-formulae In-1 to In-16 are preferably employed in the mixtures according to the invention in concentrations ≥ 5 % by weight, in particular 5 - 30 % by weight and very particularly preferably 5 - 25 % by weight.
m) Preferred mixtures additionally comprise one or more compounds of the formulae L-1 to L-11, 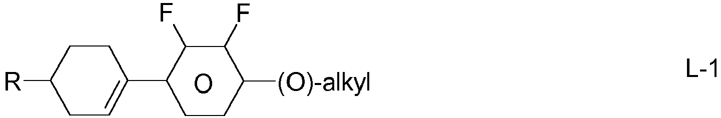 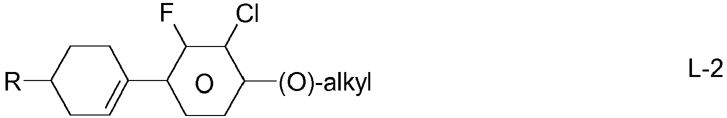 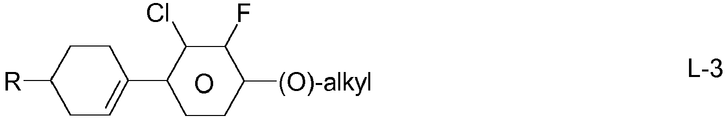 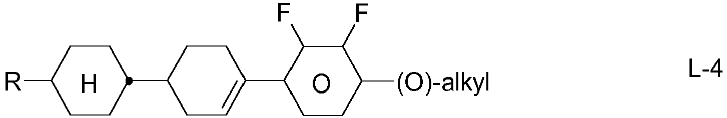 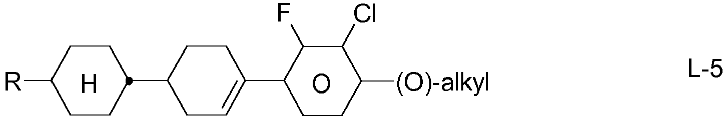 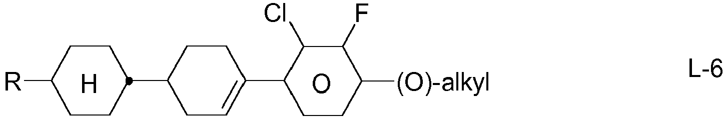 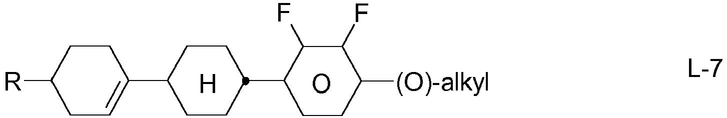 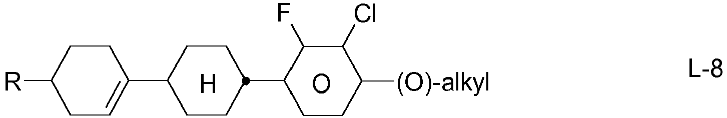 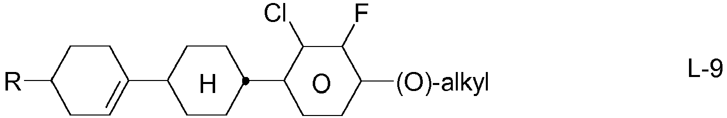 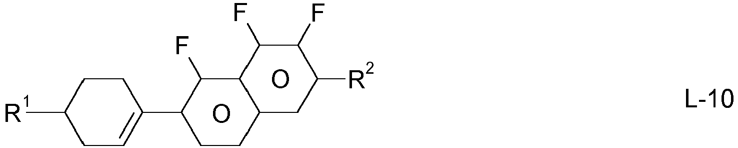 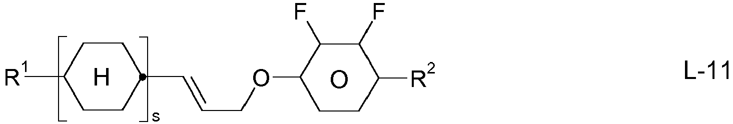 in which
   R, R¹ and R² each, independently of one another, have the meanings indicated for R^{2A} in Claim 10, and alkyl denotes an alkyl radical having 1-6 C atoms. s denotes 1 or 2.
   Particular preference is given to the compounds of the formulae L-1 and L-4, in particular L-4.
   The compounds of the formulae L-1 to L-11 are preferably employed in concentrations of 5 - 50 % by weight, in particular 5 - 40 % by weight and very particularly preferably 10 - 40 % by weight.
n) Preferred mixtures additionally comprise one or more tolan compounds of the formula To-1 and To-2, 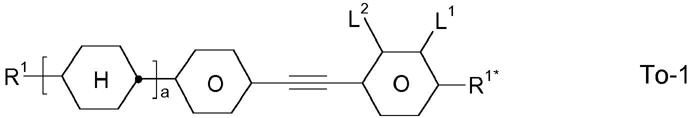 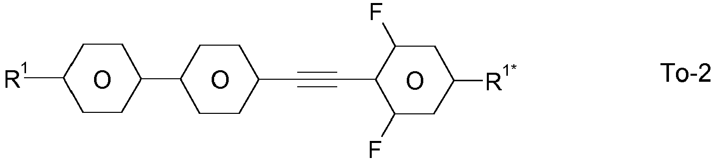 in which
   - R¹ and R^{1*}: each, independently of one another, denote an alkyl or alkoxy radical having 1 to 15 C atoms, where, in addition, one or more CH₂ groups in these radicals may each be replaced, independently of one another, by -C≡C-, -CF₂O-, -CH=CH-, 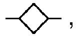 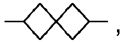 -O- , -CO-O-, -O-CO- in such a way that O atoms are not linked directly to one another, and in which, in addition, one or more H atoms may be replaced by halogen,
   - a: 0 or 1,
   - L¹ and L²: each, independently of one another, denote H, F, Cl, CF₃ or CHF₂, preferably H or F.

   Preferred compounds of the formulae To-1 and To-2 are the compounds of the formula 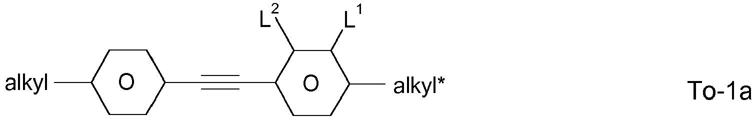 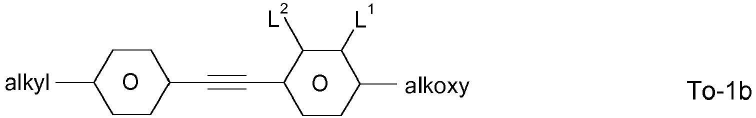 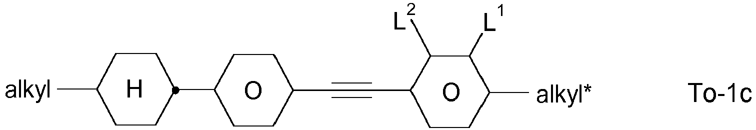 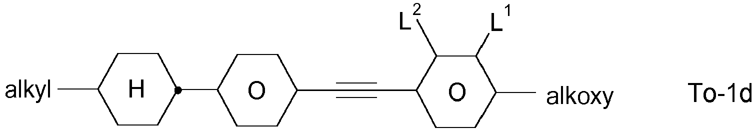 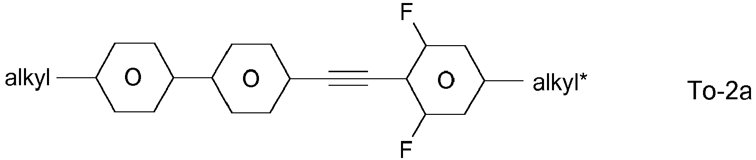 in which
   alkyl and alkyl* each, independently of one another, denote a straight-chain alkyl radical having 1-6 C atoms,
   alkoxy or O-alkyl denotes a straight-chain alkoxy radical having 1-6 C atoms, and
   L¹ and L² each, independently of one another, denote H, F, Cl, CF₃ or CHF₂, preferably H or F.

   In particular, the following compounds of the formula To-1 are preferred: 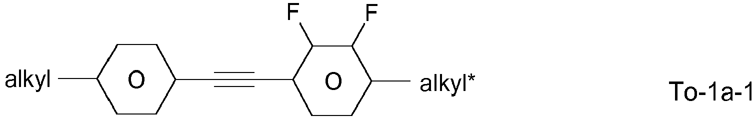 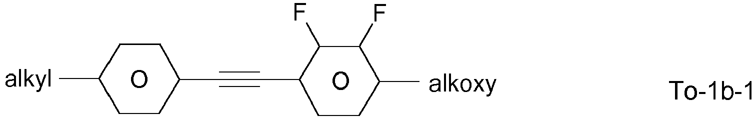 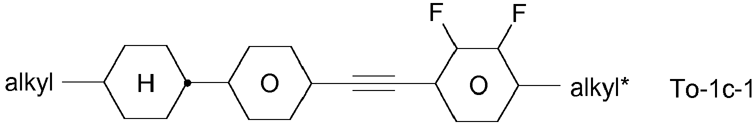 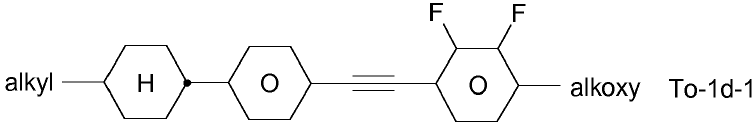 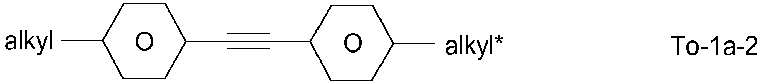 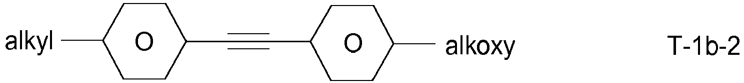 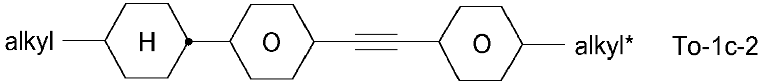 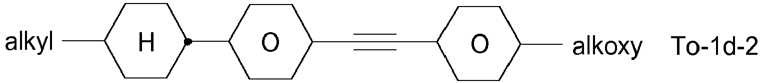 where
   alkyl, alkyl* and alkoxy have the meanings indicated above.
o) Preferred mixtures contain at least one compound of the formula P, 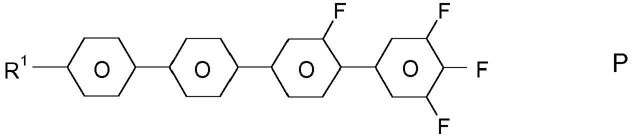 wherein R¹ has the meanings given for formula I in Claim 1. In a preferred embodiment R¹ denotes alkyl, in particular n-C₃H₇. The compound P is preferably used in amounts of 0.01-10 %, in particular 0.01-5 %, by weight.

Particularly preferred mixture concepts are indicated below: (the acronyms used are explained in Table A. n and m here each denote, independently of one another, 1-6).

The preferred mixtures contain:
- at least one self-aligning additive selected from the compounds of the formulae II-1c or I-8h 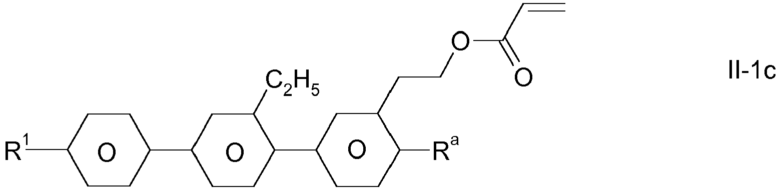 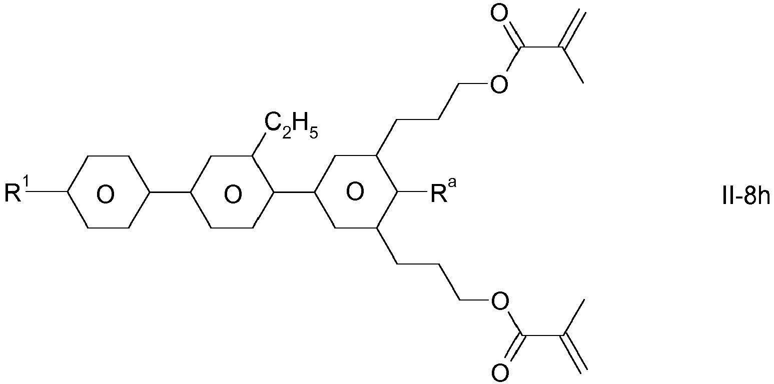 preferably in amounts of 0.1-5 wt.%, in particular 0.2-2 wt.%.
- CPY-n-Om, in particular CPY-2-O2, CPY-3-O2 and/or CPY-5-O2, preferably in concentrations > 5 %, in particular 10-30 %, based on the mixture as a whole,
   and/or
- CY-n-Om, preferably CY-3-O2, CY-3-O4, CY-5-O2 and/or CY-5-O4, preferably in concentrations > 5 %, in particular 15-50 %, based on the mixture as a whole,
   and/or
- CCY-n-Om, preferably CCY-4-O2, CCY-3-O2, CCY-3-O3, CCY-3-O1 and/or CCY-5-O2, preferably in concentrations > 5 %, in particular 10-30 %, based on the mixture as a whole,
   and/or
- CLY-n-Om, preferably CLY-2-O4, CLY-3-O2 and/or CLY-3-O3, preferably in concentrations > 5 %, in particular 10-30 %, based on the mixture as a whole,
   and/or
- B-nO-Om, preferably B-2O-O5, preferably in concentrations > 3 %, in particular 3-20 %, based on the mixture as a whole,
   and/or
- CK-n-F, preferably CK-3-F, CK-4-F and/or CK-5-F, preferably in concentrations of > 5 %, in particular 5-25 %, based on the mixture as a whole.
   Preference is furthermore given to mixtures according to the invention which comprise the following mixture concepts:
   (n and m each denote, independently of one another, 1-6.)
- CPY-n-Om and CY-n-Om, preferably in concentrations of 10-80%, based on the mixture as a whole,
   and/or
- CPY-n-Om and CK-n-F, preferably in concentrations of 10-70 %, based on the mixture as a whole,
   and/or
- CPY-n-Om and CLY-n-Om, preferably in concentrations of 10-80 %, based on the mixture as a whole.
   and/or
- PYP-n-m, preferably one, two or three compounds, preferably in concentrations of 1-20 % of the mixture as a whole,
   and/or
- PY-n-Om, preferably one, two or three compounds, preferably in concentrations of 1-20 % of the mixture as a whole.

The invention furthermore relates to an electro-optical display, preferably a PI-free display, having either passive- or active-matrix addressing (based on the ECB, VA, PS-VA, PSA, IPS, HT-VA, PM (passive matrix)-VA characterised in that it contains, as dielectric, a liquid-crystalline medium according to one or more of the Claims.

The liquid-crystalline medium according to the invention preferably has a nematic phase from ≤ -20 °C to ≥ 70 °C, particularly preferably from ≤ -30 °C to ≥ 80 °C, very particularly preferably from ≤ -40°C to ≥ 90 °C.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20 °C in a corresponding test cell is 1000 h or more, the medium is referred to as stable at this temperature. At temperatures of -30 °C and -40 °C, the corresponding times are 500 h and 250 h respectively. At high temperatures, the clearing point is measured by conventional methods in capillaries.

The liquid-crystal mixture preferably has a nematic phase range of at least 60 K and a flow viscosity ν₂₀ of at most 30 mm² · s⁻¹ at 20 °C.

The values of the birefringence Δn in the liquid-crystal mixture are generally between 0.07 and 0.16, preferably between 0.08 and 0.13.

The liquid-crystal mixture according to the invention has a Δε of -0.5 to -8.0, in particular -2.5 to -6.0, where Δε denotes the dielectric anisotropy. The rotational viscosity γ₁ at 20 °C is preferably ≤ 165 mPa·s, in particular ≤ 140 mPa·s.

The liquid-crystal media according to the invention have relatively low values for the threshold voltage (Vo). They are preferably in the range from 1.7 V to 3.0 V, particularly preferably ≤ 2.5 V and very particularly preferably ≤ 2.3 V.

For the present invention, the term "threshold voltage" relates to the capacitive threshold (Vo), also known as the Freedericks threshold, unless explicitly indicated otherwise.

Importantly, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10 % of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained VA) and PS-VA (polymer stabilized VA), as well as for PM-VA, HT (high transmission)-VA and VA-IPS applications.

The nematic liquid-crystal mixtures in the displays according to the invention generally comprise two components A and B, which themselves consist of one or more individual compounds.

Component A has significantly negative dielectric anisotropy and gives the nematic phase a dielectric anisotropy of ≤ -1.5. Preferably component A comprises the compounds of the formulae CY, PY and/or PYP, furthermore compounds of the formula III.

The proportion of component A is preferably between 45 and 100 %, in particular between 60 and 100 %.

For component A, one (or more) individual compound(s) which has (have) a value of Δε ≤ -0.8 is (are) preferably selected. This value must be more negative, the smaller the proportion A in the mixture as a whole.

Component B has pronounced nematogeneity and a flow viscosity of not greater than 30 mm² · s⁻¹, preferably not greater than 25 mm² · s⁻¹, at 20 °C.

Particularly preferred individual compounds in component B are extremely low-viscosity nematic liquid crystals having a flow viscosity of not greater than 18 mm² · s⁻¹, preferably not greater than 12 mm² · s⁻¹, at 20 °C.

Component B is monotropically or enantiotropically nematic, has no smectic phases and is able to prevent the occurrence of smectic phases down to very low temperatures in liquid-crystal mixtures. For example, if various materials of high nematogeneity are added to a smectic liquid-crystal mixture, the nematogeneity of these materials can be compared through the degree of suppression of smectic phases that is achieved.

The mixture may optionally also comprise a component C, comprising compounds having a dielectric anisotropy of Δε ≥1.5. These so-called positive compounds are generally present in a mixture of negative dielectric anisotropy in amounts of ≤ 20 % by weight, based on the mixture as a whole.

Besides compounds of the formula II and the compounds of the formulae CY, PY and/or PYP and optionally III, other constituents may also be present, for example in an amount of up to 45 % of the mixture as a whole, but preferably up to 35 %, in particular up to 10 %.

The other constituents are preferably selected from nematic or nematogenic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclohexylnaphthalenes, 1,4-biscyclohexylbiphenyls or cyclohexylpyrimidines, phenyl- or cyclohexyldioxanes, optionally halogenated stilbenes, benzyl phenyl ethers, tolans and substituted cinnamic acid esters.

The most important compounds which are suitable as constituents of liquid-crystal phases of this type can be characterised by the formula IV

R²⁰-L-G-E-R²¹ IV

in which L and E each denote a carbo- or heterocyclic ring system from the group formed by 1,4-disubstituted benzene and cyclohexane rings, 4,4'-disubstituted biphenyl, phenylcyclohexane and cyclohexylcyclohexane systems, 2,5-disubstituted pyrimidine and 1,3-dioxane rings, 2,6-disubstituted naphthalene, di- and tetrahydronaphthalene, quinazoline and tetrahydroquinazoline,

| | | |
|---|---|---|
| G denotes | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

or a C-C single bond, Q denotes halogen, preferably chlorine, or -CN, and R²⁰ and R²¹ each denote alkyl, alkenyl, alkoxy, alkoxyalkyl or alkoxycarbonyloxy having up to 18, preferably up to 8, carbon atoms, or one of these radicals alternatively denotes CN, NC, NO₂, NCS, CF₃, SF₅, OCF₃, F, Cl or Br.

In most of these compounds, R²⁰ and R²¹ are different from one another, one of these radicals usually being an alkyl or alkoxy group. Other variants of the proposed substituents are also common. Many such substances or also mixtures thereof are commercially available. All these substances can be prepared by methods known from the literature.

It goes without saying for the person skilled in the art that the VA mixture according to the invention may also comprise compounds in which, for example, H, N, O, Cl and F have been replaced by the corresponding isotopes.

Additional polymerisable compounds, so-called reactive mesogens (RMs), may furthermore be added to the mixtures according to the invention in concentrations of preferably 0.1 - 5% by weight, particularly preferably 0.2 - 2 % by weight, based on the mixture. These are also referred to as co-monomers below. Mixtures of this type can be used for so-called polymer-stabilised VA modes (PS-VA) or PSA (polymer sustained VA), in which polymerisation of the reactive mesogens is intended to take place in the liquid-crystalline mixture.

In a preferred embodiment of the invention, the additional polymerisable compounds (monomers) are selected from the compounds of the formula M,

R^{Ma}-A^{M1}-(Z^{M1}-A^{M2})ₘ₁-R^{Mb} M

in which the individual radicals have the following meanings:
- R^{Ma} and R^{Mb}: each, independently of one another, denote P, P-Sp-, H, halogen, SF₅, NO₂, an alkyl, alkenyl or alkynyl group, where at least one of the radicals R^{Ma} and R^{Mb} contains or preferably denotes a group P or P-Sp-,
- P: denotes a polymerisable group,
- Sp: denotes a spacer group or a single bond,
- A^{M1} and A^{M2}: each, independently of one another, denote an aromatic, heteroaromatic, alicyclic or heterocyclic group, preferably having 4 to 25 ring atoms, preferably C atoms, which may also encompass or contain fused rings, and which may optionally be mono- or polysubstituted by L,
- L: denotes P, P-Sp, F, Cl, Br, I, -CN, -NO₂, -NCO, -NCS, -OCN, -SCN, -C(=O)N(R^{X})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-, preferably P, P-Sp-, H, halogen, SF₅, NO₂, an alkyl, alkenyl or alkynyl group,
- Y¹: denotes halogen,
- Z^{M1}: denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-,-CF=CF-, -C≡C-, -CH=CH-, -COO-, -OCO-CH=CH-, CR⁰R⁰⁰ or a single bond,
- R⁰ and R⁰⁰: each, independently of one another, denote H or alkyl having 1 to 12 C atoms,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms,
- m1: denotes 0, 1, 2, 3 or 4, and
- n1: denotes 1, 2, 3 or 4,
where at least one, preferably one, two or three, particularly preferably one or two, from the group R^{Ma}, R^{Mb} and the substituents L present denotes a group P or P-Sp- or contains at least one group P or P-Sp-.

Particularly preferred compounds of the formula M are those in which
- R^{Ma} and R^{Mb}: each, independently of one another, denote P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-,-O-CO-, -O-CO-O- in such a way that O and/or S atoms are not linked directly to one another, and in which, in addition, one or more H atoms may be replaced by F, Cl, Br, I, CN, P or P-Sp-, where at least one of the radicals R^{Ma} and R^{Mb} preferably denotes or contains a group P or P-Sp-,
- A^{M1} and A^{M2}: each, independently of one another, denote 1,4-phenylene, naphthalene-1,4-diyl, naphthalene-2,6-diyl, phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1]-pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L,
- L: denotes P, P-Sp-, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
- P: denotes a polymerisable group,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Very particular preference is given to compounds of the formula M in which one of R^{Ma} and R^{Mb} or both denote(s) P or P-Sp-.

Suitable and preferred mesogenic comonomers, particularly for use in PSA displays, are selected, for example, from the following formulae: 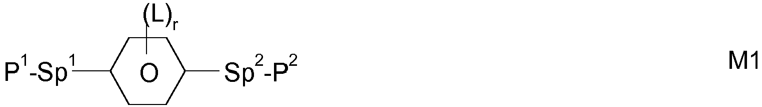 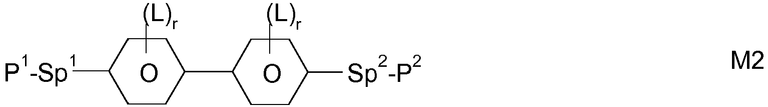 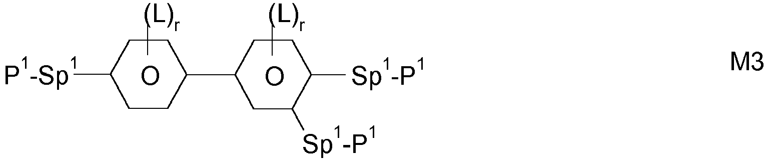 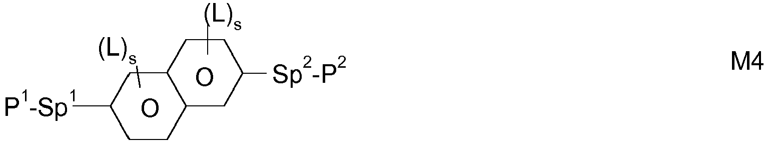 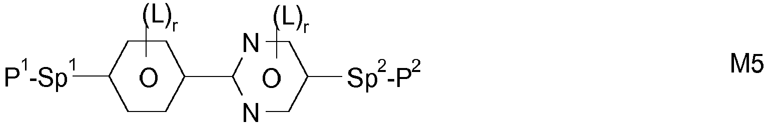 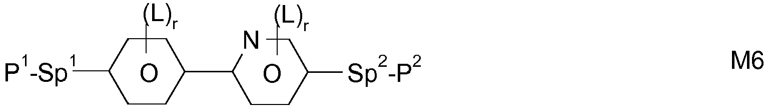 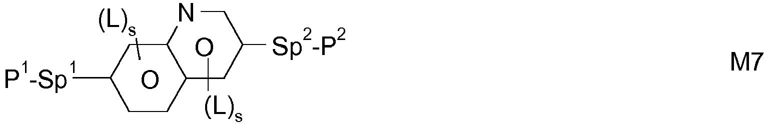 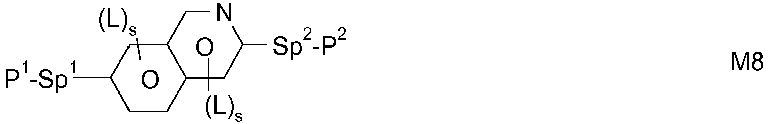 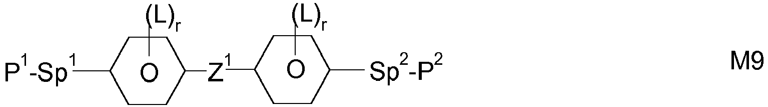 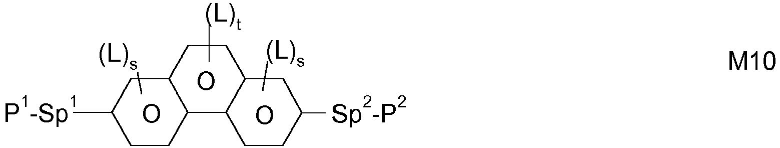 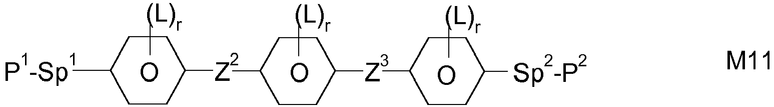 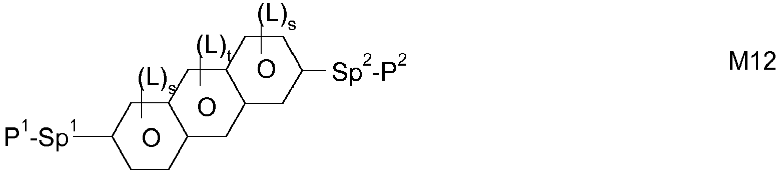 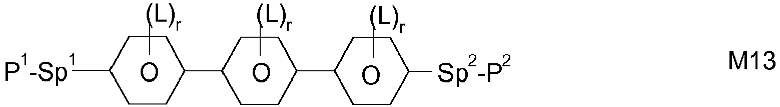 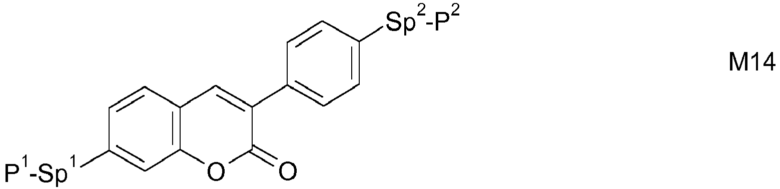 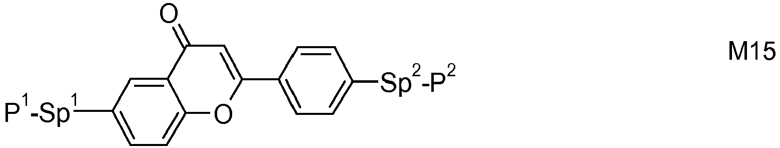 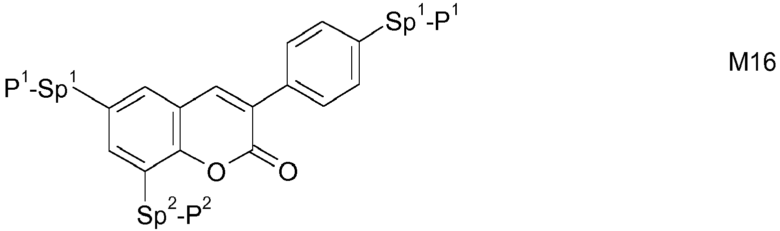 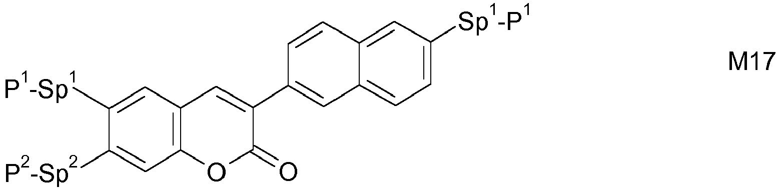 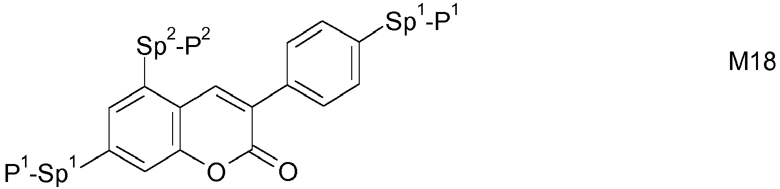 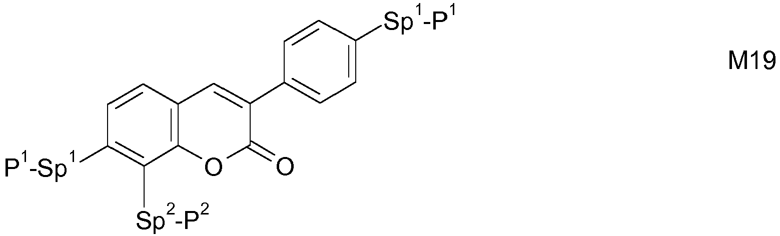 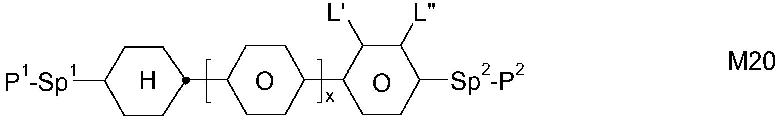 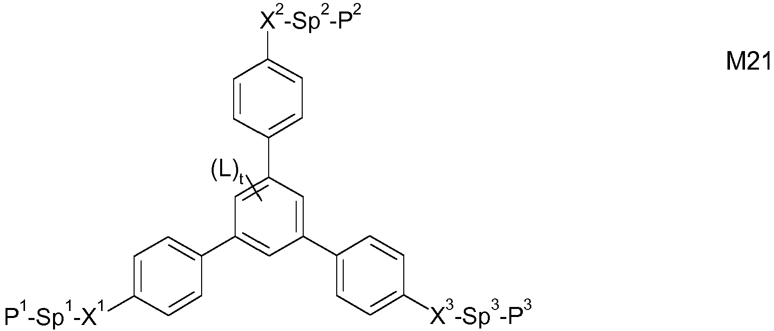 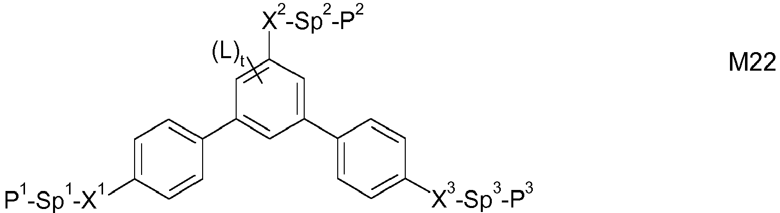 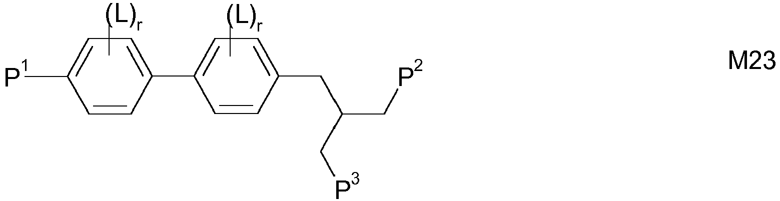 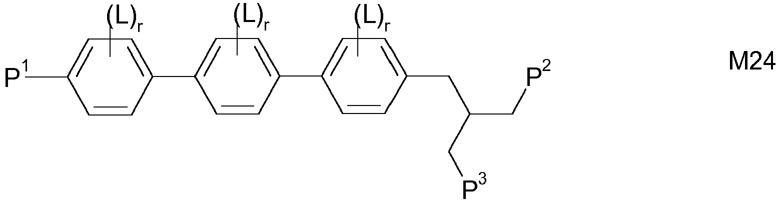 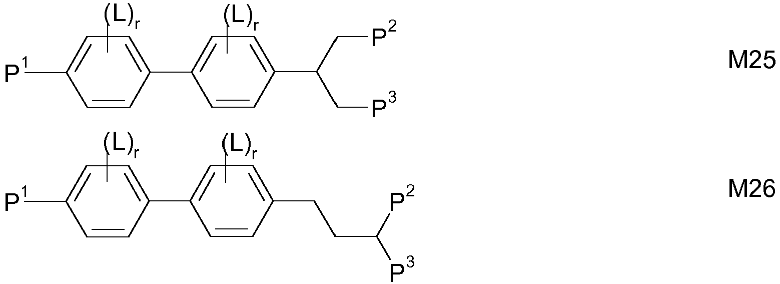 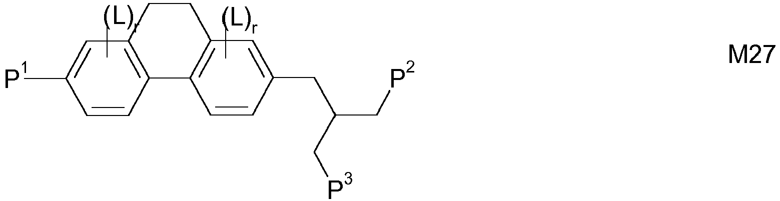 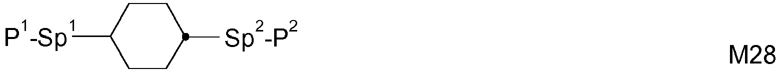 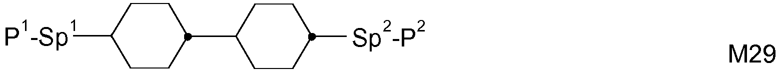 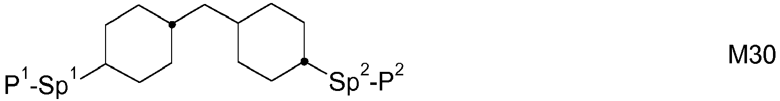 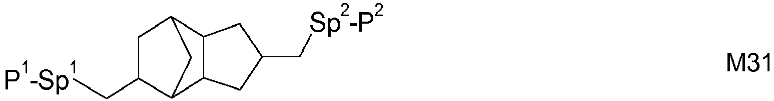 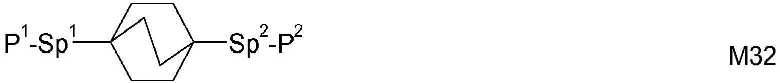 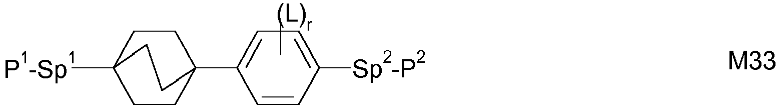 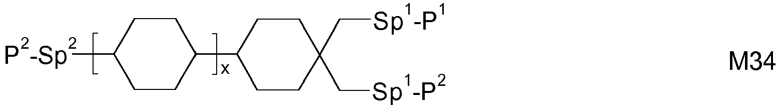 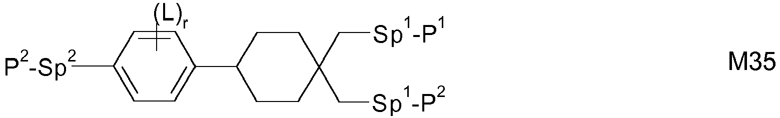 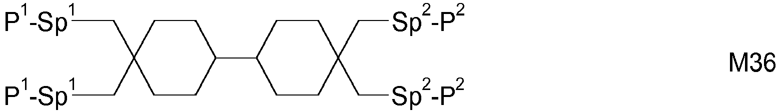 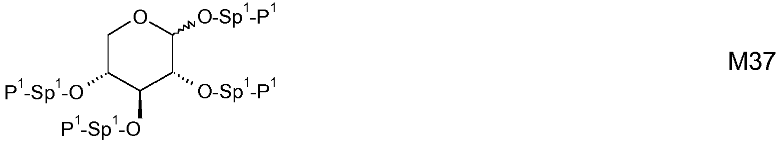 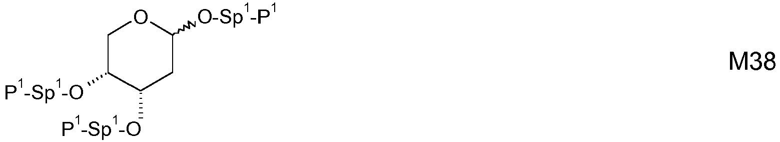 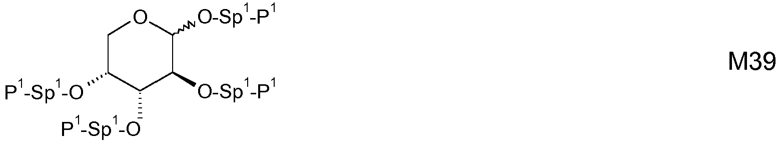 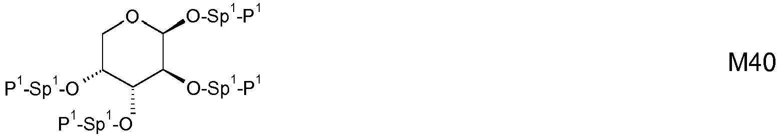 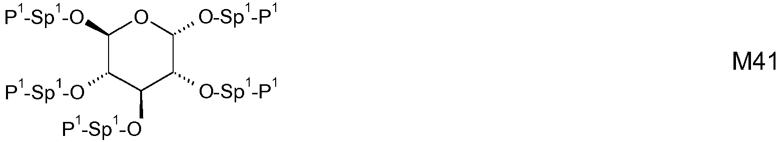 in which the individual radicals have the following meanings:
- P¹, P² and P³: each, independently of one another, denote a polymerisable group, preferably having one of the meanings indicated above and below for P, particularly preferably an acrylate, methacrylate, fluoroacrylate, oxetane, vinyl, vinyloxy or epoxide group,
- Sp¹,Sp² and Sp³: each, independently of one another, denote a single bond or a spacer group, preferably having one of the meanings indicated above and below for Sp, and particularly preferably denote -(CH₂)ₚ₁-, -(CH₂)ₚ₁-O-, -(CH₂)ₚ₁-CO-O- or -(CH₂)ₚ₁-O-CO-O-, in which p1 is an integer from 1 to 12, and where the linking to the adjacent ring in the last-mentioned groups takes place via the O atom, where, in addition, one or more of the radicals P¹-Sp¹-, P²-Sp²- and P³-Sp³- may denote R^{aa}, with the proviso that at least one of the radicals P¹-Sp¹-, P²-Sp²- and P³-Sp³- present does not denote R^{aa},
- R^{aa}: denotes H, F, Cl, CN or straight-chain or branched alkyl having 1 to 25 C atoms, in which, in addition, one or more non-adjacent CH₂ groups may each be replaced, independently of one another, by C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: each, independently of one another and identically or differently on each occurrence, denote H or alkyl having 1 to 12 C atoms,
- R^{y} and R^{z}: each, independently of one another, denote H, F, CH₃ or CF₃,
- X¹, X² and X³: each, independently of one another, denote -CO-O-, -O-CO- or a single bond,
- Z¹: denotes -O-, -CO-, -C(R^{y}R^{z})- or -CF₂CF₂-,
- Z² and Z³: each, independently of one another, denote -CO-O-, -O-CO-, -CH₂O-, -OCH₂-, -CF₂O-, -OCF₂- or -(CH₂)ₙ-, where n is 2, 3 or 4,
- L: on each occurrence, identically or differently, denotes F, Cl, CN or straight-chain or branched, optionally mono- or poly-fluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
- L' and L": each, independently of one another, denote H, F or Cl,
- r: denotes 0, 1, 2, 3 or 4,
- s: denotes 0, 1, 2 or 3,
- t: denotes 0, 1 or 2,
- x: denotes 0 or 1.

In the compounds of formulae M1 to M41 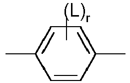 is preferably 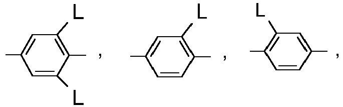 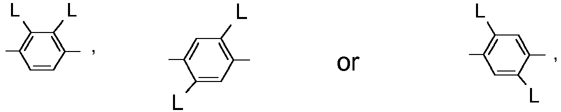 wherein L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ or OCF₃, especially F or CH₃.

Suitable polymerisable compounds are furthermore listed, for example, in Table D. LC mixtures containing at least one polymerisable compound listed in Table D are especially preferred.

The liquid-crystalline media in accordance with the present application preferably comprise in total 0.1 to 10 %, preferably 0.2 to 4.0 %, particularly preferably 0.2 to 2.0 %, of polymerisable compounds.

The combination of at least two liquid crystalline compounds, at least one self-aligning additive, a compound of formula I and preferably with at least one polymerisable compound selected from the formula M and/or the formulae M1 to M41, produces low threshold voltages, low rotational viscosities, very good low temperature stabilities (LTS) in the media but at the same time high clearing points and high VHR values, and enables the setting or a pretilt angle in VA displays without the need of any alignment layer, e.g., a polyimide layer.

The polymerisation can be carried out in one step. It is also possible firstly to carry out the polymerisation, optionally while applying a voltage, in a first step in order to produce a pretilt angle, and subsequently, in a second polymerisation step without an applied voltage, to polymerise or crosslink the compounds which have not reacted in the first step ("end curing").

Suitable and preferred polymerisation methods are, for example, thermal or photopolymerisation, preferably photopolymerisation, in particular UV induced photopolymerisation, which can be achieved by exposure of the polymerisable compounds to UV radiation.

Optionally one or more polymerisation initiators are added to the liquid-crystalline medium. Suitable conditions for the polymerisation and suitable types and amounts of initiators are known to the person skilled in the art and are described in the literature. Suitable for free-radical polymerisation are, for example, the commercially available photoinitiators Irgacure651®, Irgacure184®, Irgacure907®, Irgacure369® or Darocure1173® (Ciba AG). If a polymerisation initiator is employed, its proportion is preferably 0.001 to 5% by weight, particularly preferably 0.001 to 1% by weight.

The polymerisable compounds and components according to the invention are also suitable for polymerisation without an initiator, which is accompanied by advantages, such, for example, lower material costs and in particular less contamination of the liquid-crystalline medium by possible residual amounts of the initiator or degradation products thereof. The polymerisation can thus also be carried out without the addition of an initiator. In a preferred embodiment, the liquid-crystalline medium thus does not contain a polymerisation initiator.

The liquid-crystalline medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers from the Irganox® series (Ciba AG), such as, for example, Irganox® 1076. If stabilisers are employed, their proportion, based on the total amount of RMs or the polymerisable component (component A), is preferably 10-500,000 ppm, particularly preferably 50-50,000 ppm.

However, the liquid-crystalline medium may additionally comprise one or more further components or additives, preferably selected from the list including but not limited to co-monomers, chiral dopants, polymerisation initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

The structure of the liquid-crystal displays according to the invention corresponds to the usual geometry, as described, for example, in EP 0 240 379. The following examples are intended to explain the invention without limiting it. Above and below, per cent data denote per cent by weight; all temperatures are indicated in degrees Celsius.

Throughout the patent application and in the working examples, the structures of the liquid-crystalline compounds are indicated by means of acronyms. Unless indicated otherwise, the transformation into chemical formulae is carried out in accordance with Tables 1-3. All radicals CₙH₂ₙ₊₁, CₘH₂ₘ₊₁ and C_{m'}H_{2m'+1} or CₙH₂ₙ and CₘH₂ₘ are straight-chain alkyl radicals or alkylene radicals in each case having n, m, m' or z C atoms respectively. n, m, m', z each denote, independently of one another, 1, 2, 3, 4, 5, 6, 7, 8, 9, 10, 11 or 12, preferably 1, 2, 3, 4, 5 or 6. In Table 1 the ring elements of the respective compound are coded, in Table 2 the bridging members are listed and in Table 3 the meanings of the symbols for the left-hand or right-hand side chains of the compounds are indicated.

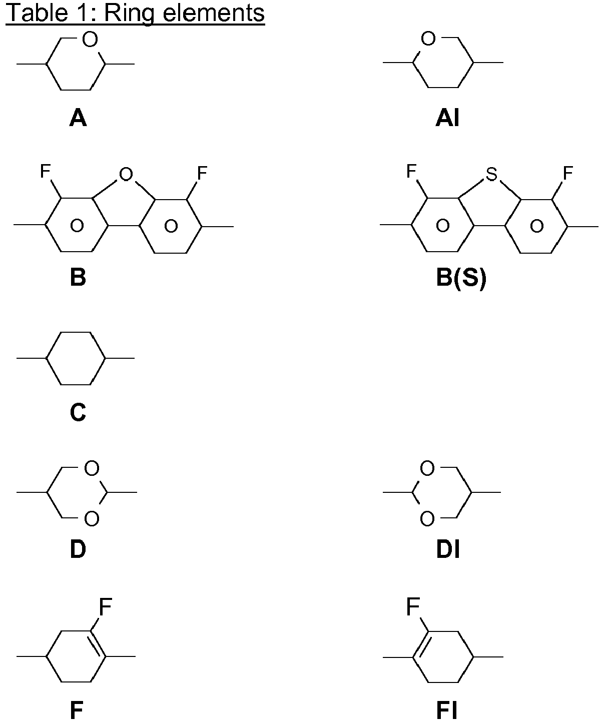

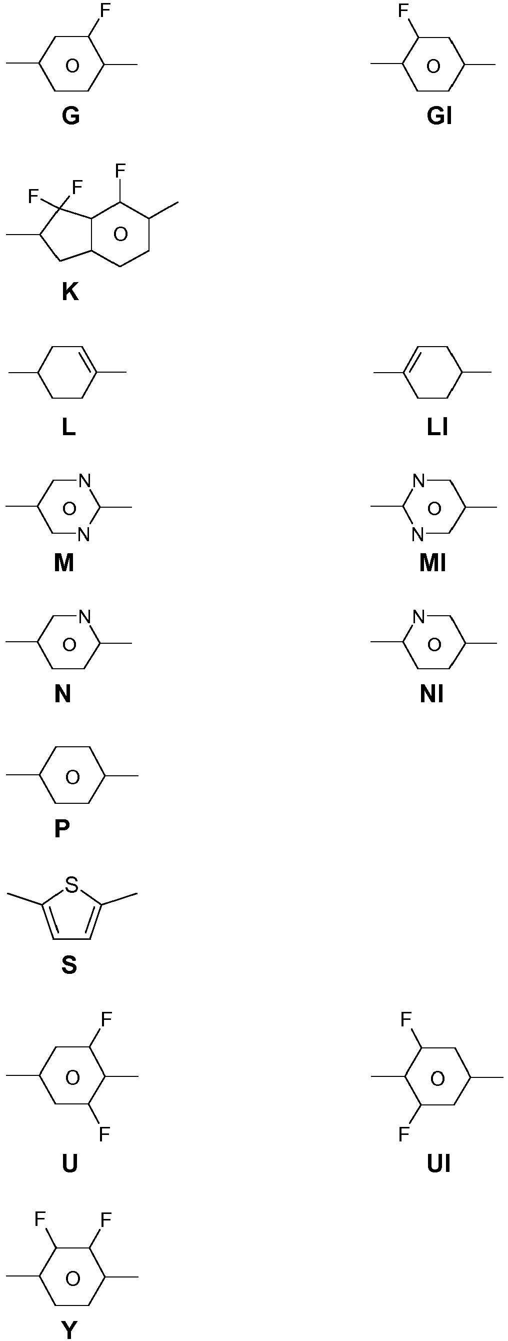

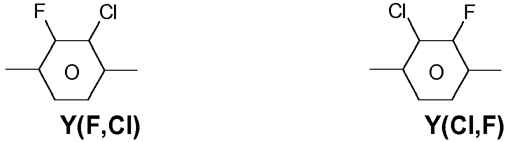

**Table 2: Bridging members**

| | | | |
|---|---|---|---|
| **E** | -CH₂CH₂- | | |
| **V** | -CH=CH- | | |
| **T** | -C≡C- | | |
| **W** | -CF₂CF₂- | | |
| **Z** | -COO- | **ZI** | -OCO- |
| **O** | -CH₂O- | **OI** | -OCH₂- |
| **Q** | -CF₂O- | **QI** | -OCF₂- |

**Table 3: Side chains**

| Left-hand side chain | | Right-hand side chain | |
|---|---|---|---|
| **n-** | CₙH₂ₙ₊₁- | **-n** | -CₙH₂ₙ₊₁ |
| **nO-** | CnH₂ₙ₊₁-O- | **-On** | -O-CₙH₂ₙ₊₁ |
| V**-** | CH₂=CH- | **-V** | -CH=CH₂ |
| **nV-** | CₙH₂ₙ₊₁-CH=CH- | **-nV** | -CₙH₂ₙ-CH=CH₂ |
| **Vn-** | CH₂=CH-CₙH₂ₙ- | **-Vn** | -CH=CH-CₙH₂ₙ₊₁ |
| **nVm-** | CₙH₂ₙ₊₁-CH=CH-CₘH₂ₘ- | **-nVm** | -CₙH₂ₙ-CH=CH-CₘH₂ₘ₊₁ |
| **N-** | N≡C- | **-N** | -C≡N |
| **F-** | F- | **-F** | -F |
| **Cl-** | Cl- | **-Cl** | -Cl |
| **M-** | CFH₂- | **-M** | -CFH₂ |
| **D-** | CF₂H- | **-D** | -CF₂H |
| **T-** | CF₃- | **-T** | -CF₃ |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF₃ |
| **A-** | H-C≡C- | **-A** | -C≡C-H |

In a preferred embodiment the mixtures according to the invention contain at least one compound of the of the formula I and at least two compounds selected from the compounds listed in Table A.

**Table A**

| |
|---|
| The following abbreviations are used: (n, m, m', z: each, independently of one another, 1, 2, 3, 4, 5 or 6; (O)CₘH₂ₘ₊₁ denotes OCₘH₂ₘ₊₁ or CₘH₂ₘ₊₁) |
| 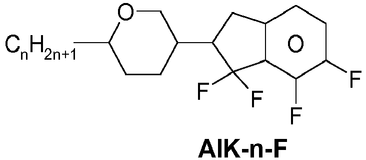 |
| 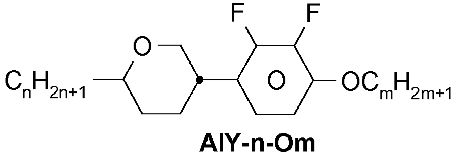 |
| 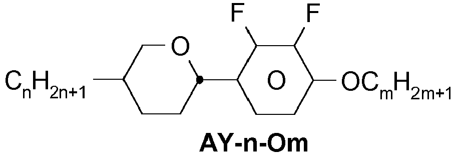 |
| 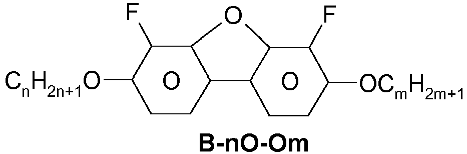 |
| 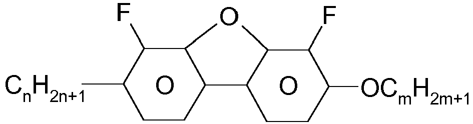 |
| 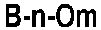 |
| 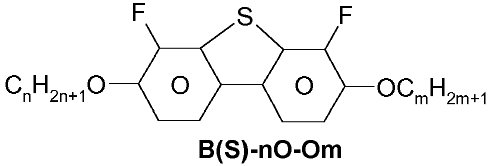 |
| 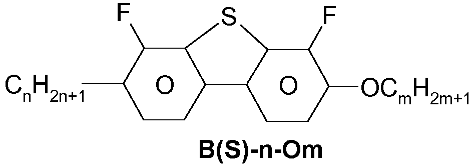 |
| 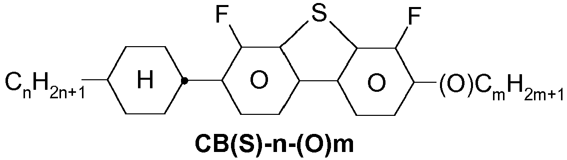 |
| 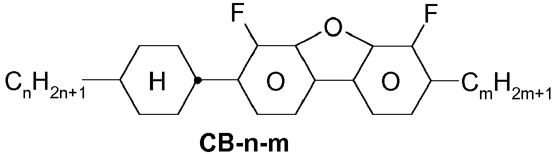 |
| 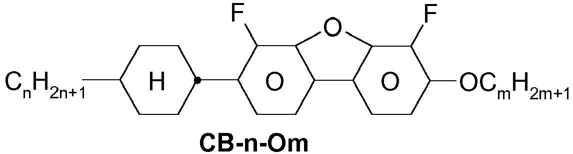 |
| 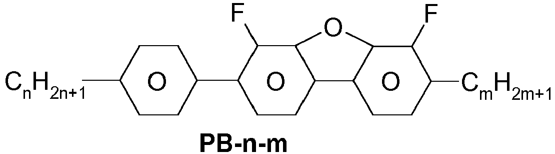 |
| 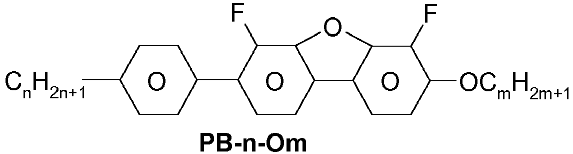 |
| 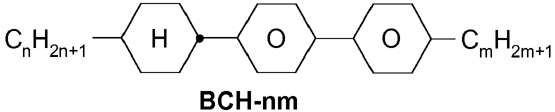 |
| 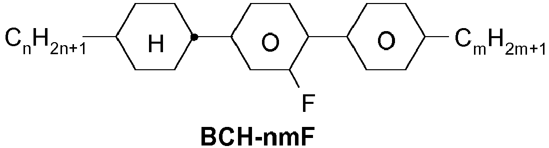 |
| 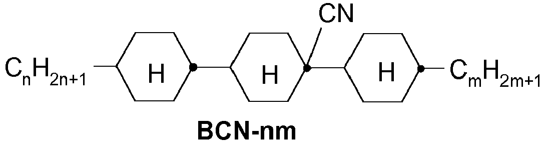 |
| 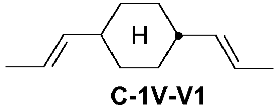 |
| 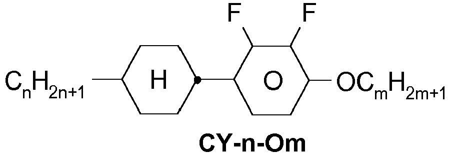 |
| 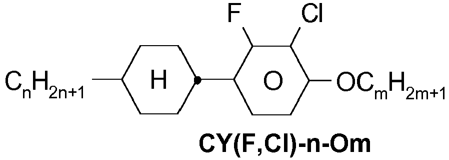 |
| 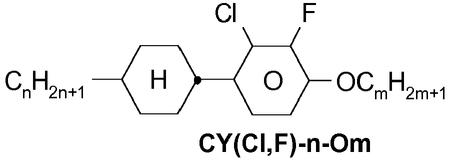 |
| 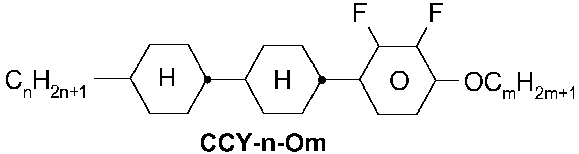 |
| 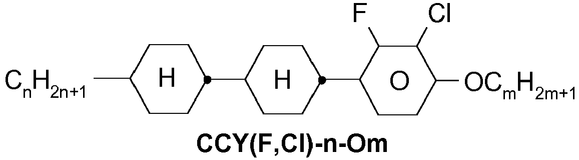 |
| 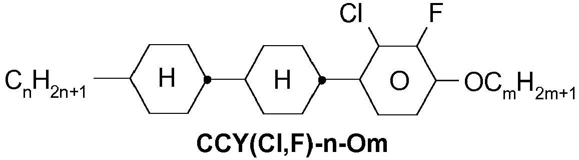 |
| 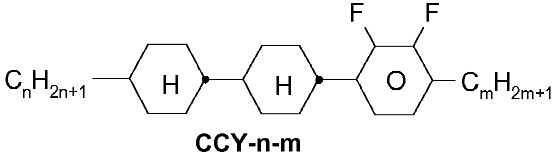 |
| 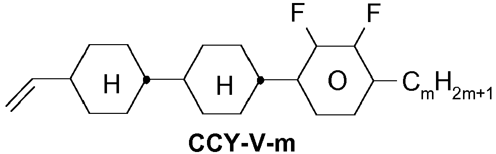 |
| 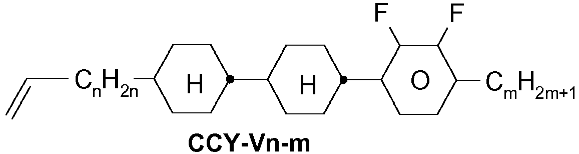 |
| 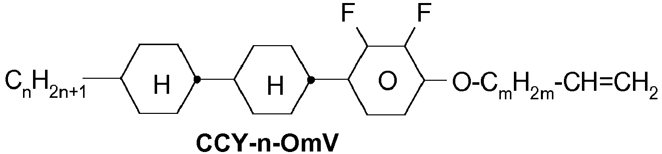 |
| 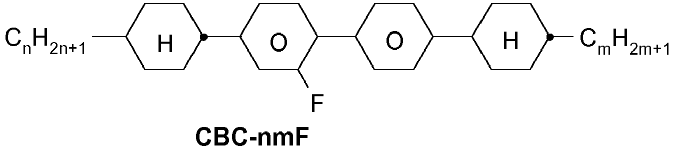 |
| 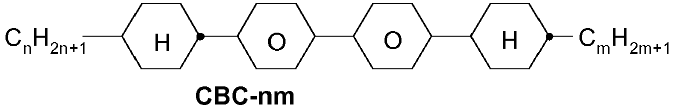 |
| 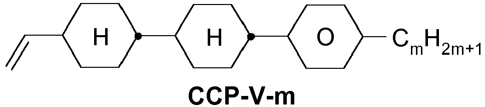 |
| 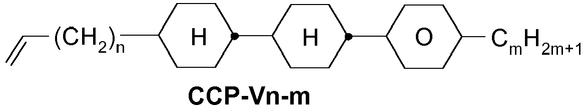 |
| 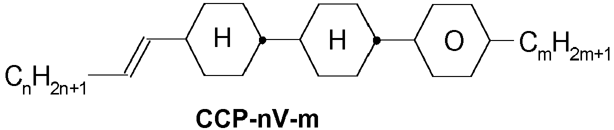 |
| 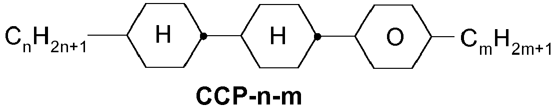 |
| 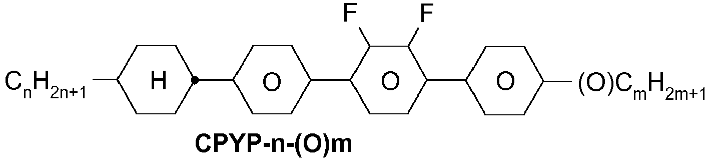 |
| 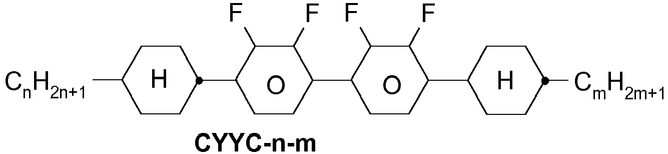 |
| 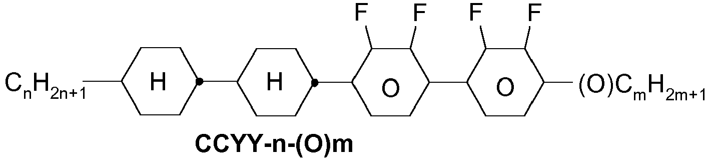 |
| 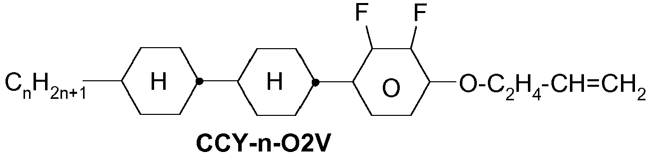 |
| 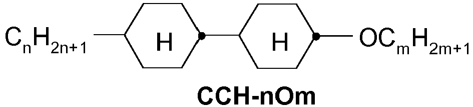 |
| 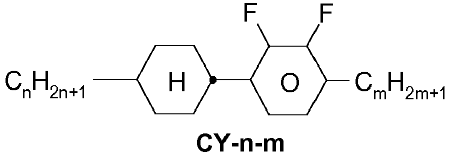 |
| 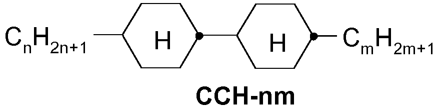 |
| 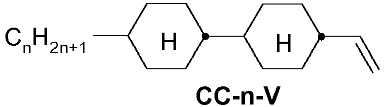 |
| 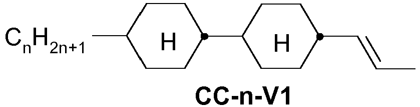 |
| 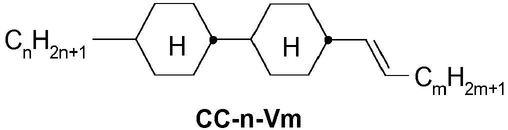 |
| 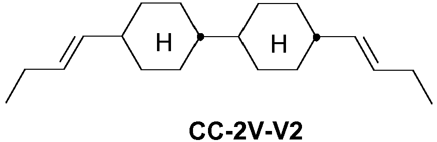 |
| 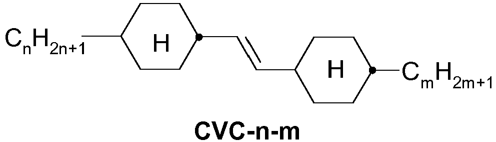 |
| 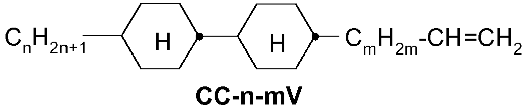 |
| 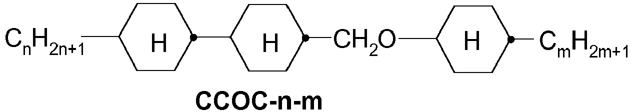 |
| 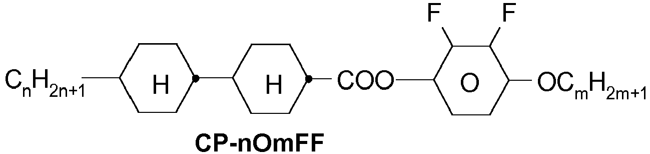 |
| 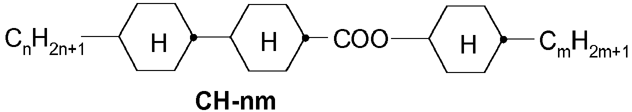 |
| 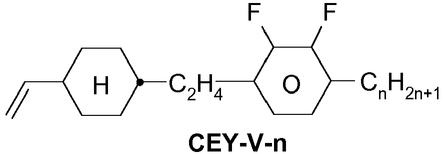 |
| 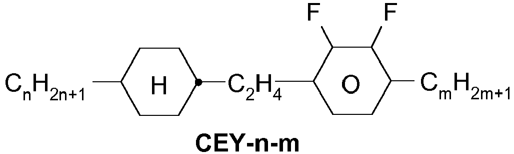 |
| 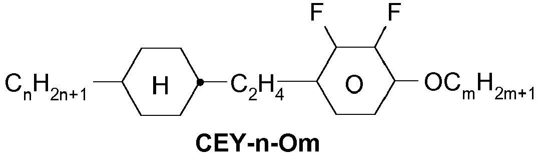 |
| 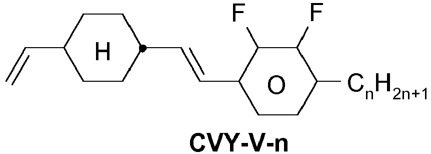 |
| 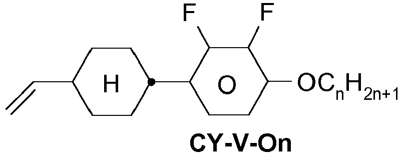 |
| 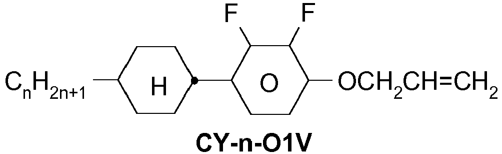 |
| 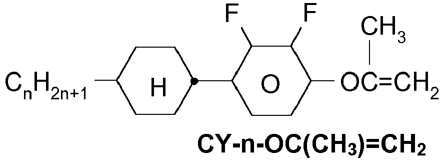 |
| 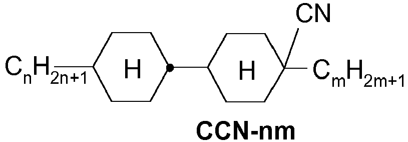 |
| 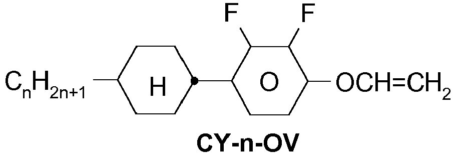 |
| 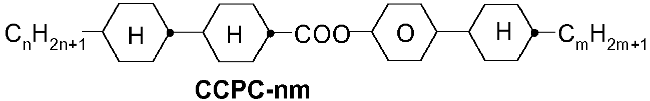 |
| 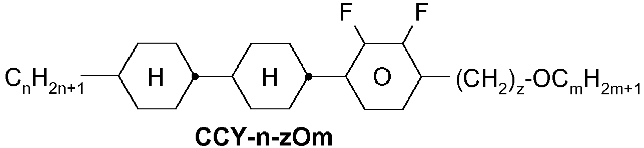 |
| 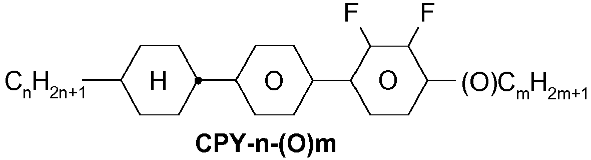 |
| 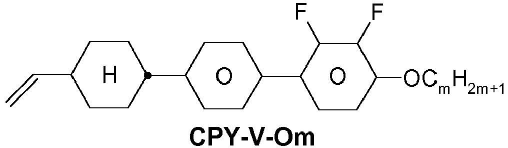 |
| 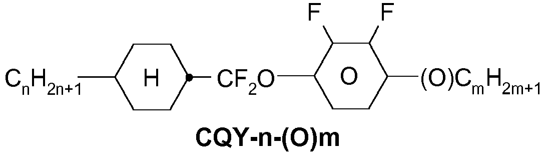 |
| 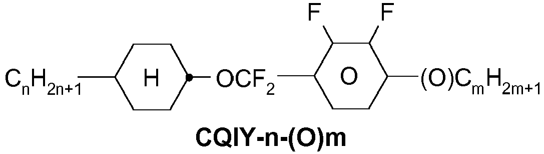 |
| 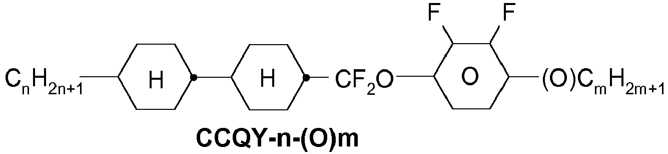 |
| 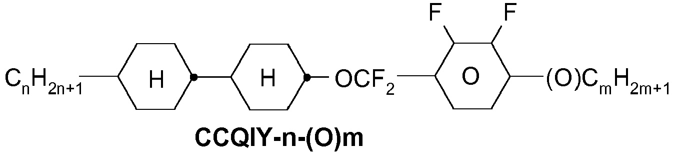 |
| 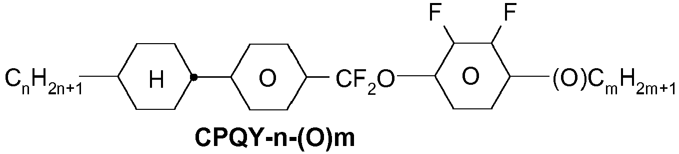 |
| 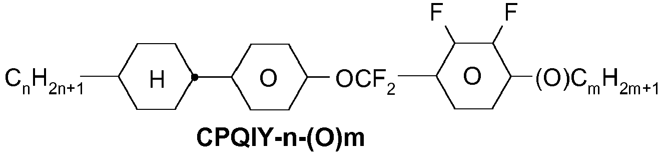 |
| 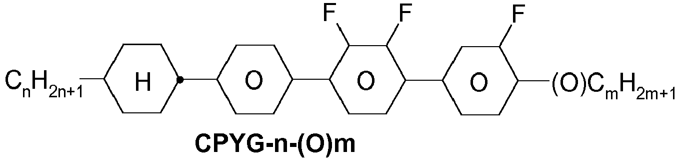 |
| 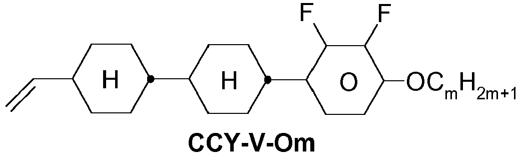 |
| 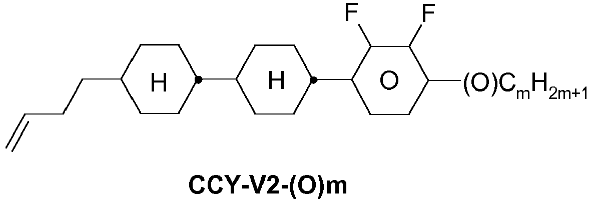 |
| 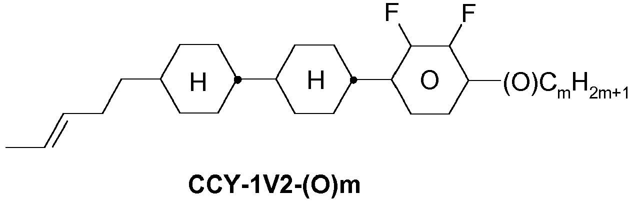 |
| 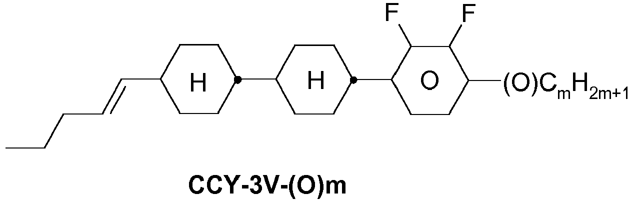 |
| 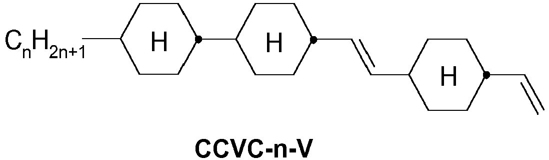 |
| 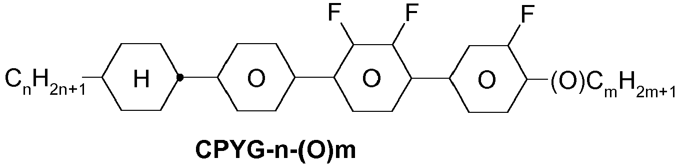 |
| 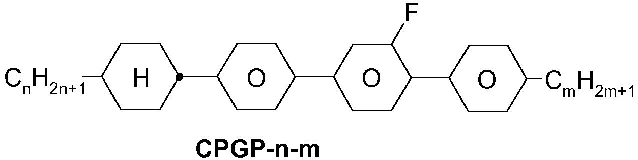 |
| 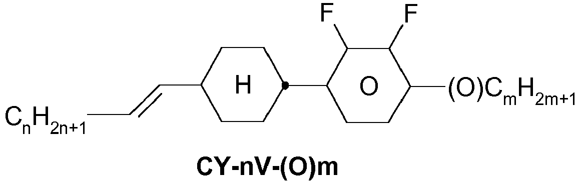 |
| 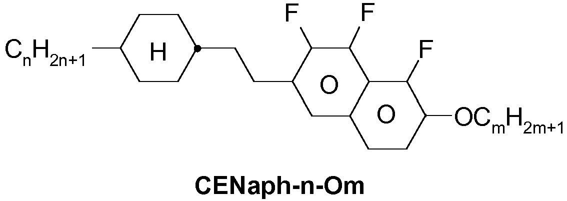 |
| 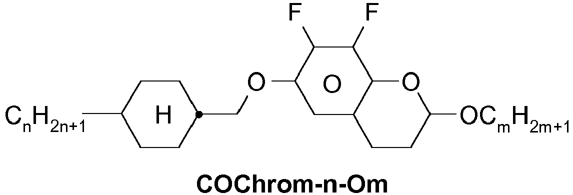 |
| 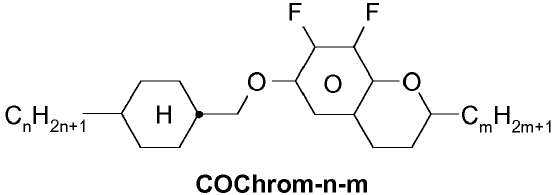 |
| 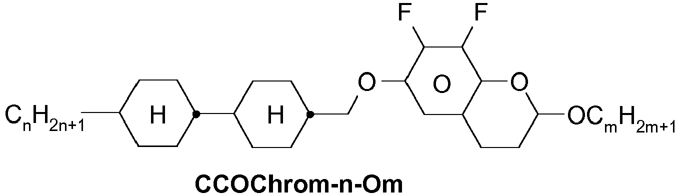 |
| 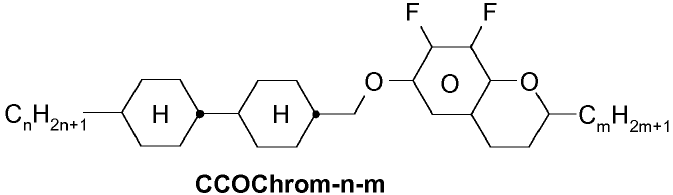 |
| 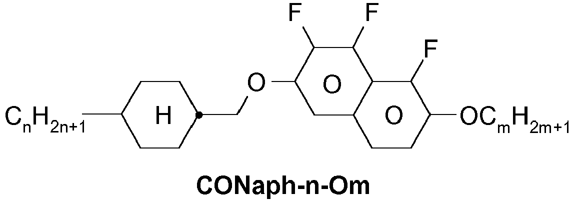 |
| 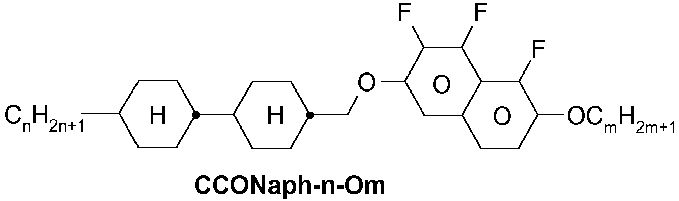 |
| 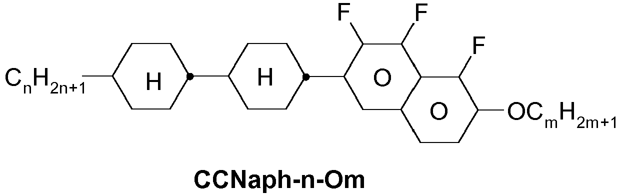 |
| 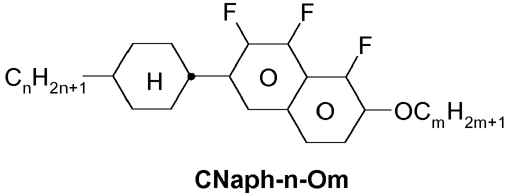 |
| 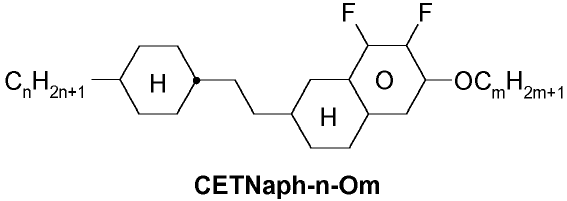 |
| 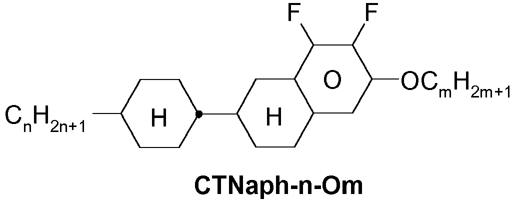 |
| 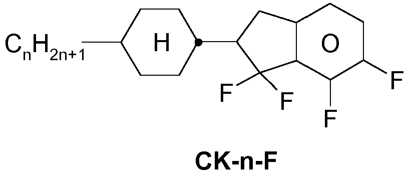 |
| 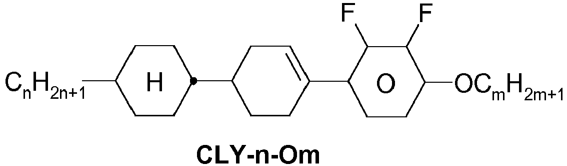 |
| 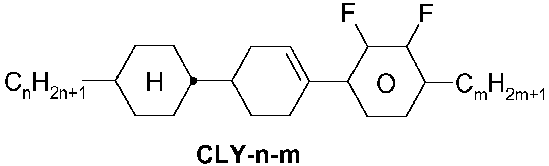 |
| 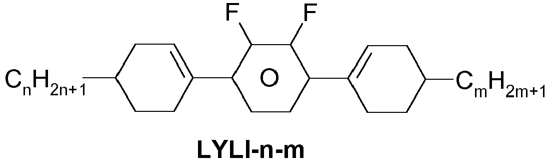 |
| 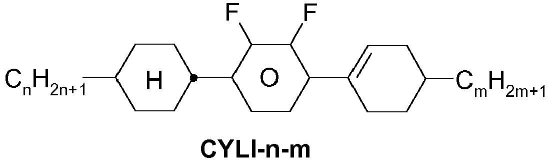 |
| 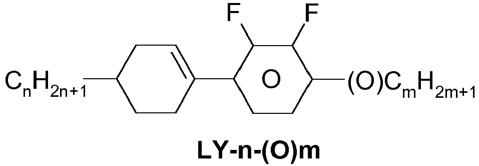 |
| 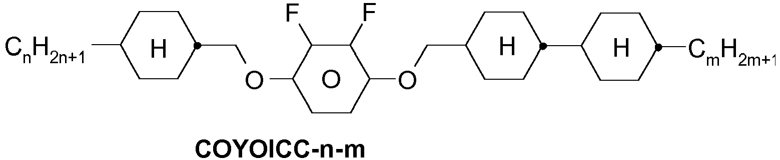 |
| 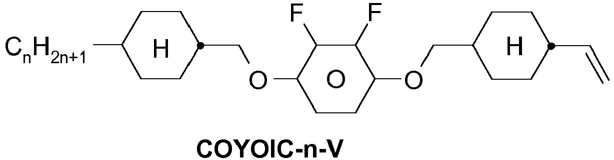 |
| 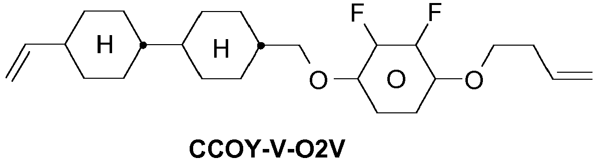 |
| 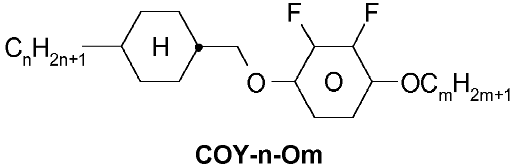 |
| 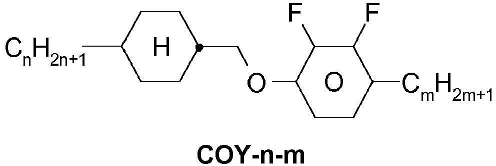 |
| 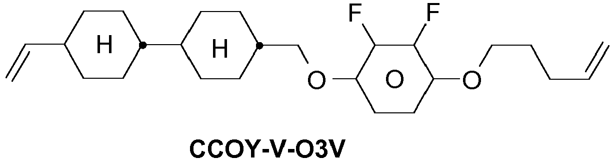 |
| 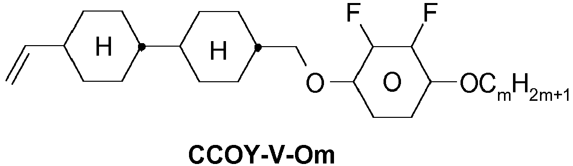 |
| 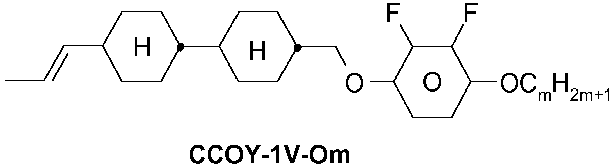 |
| 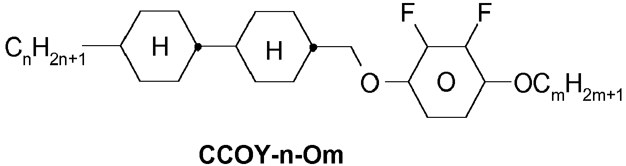 |
| 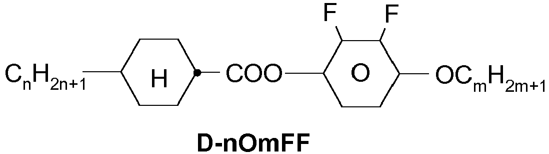 |
| 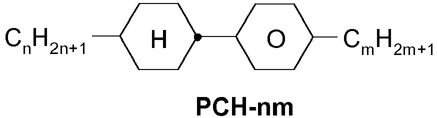 |
| 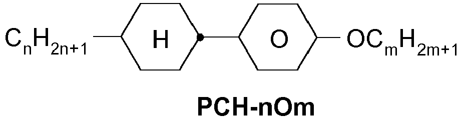 |
| 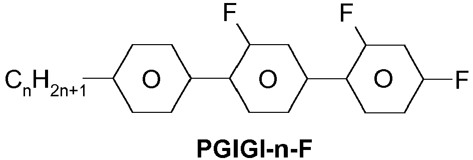 |
| 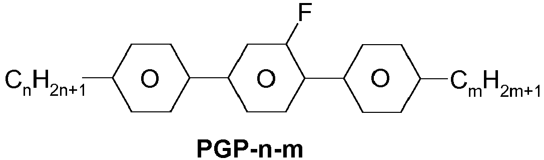 |
| 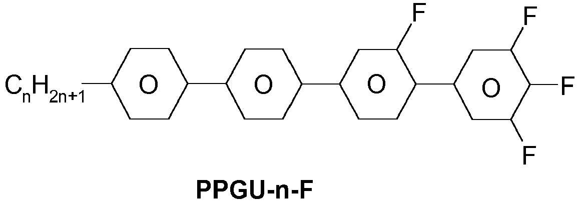 |
| 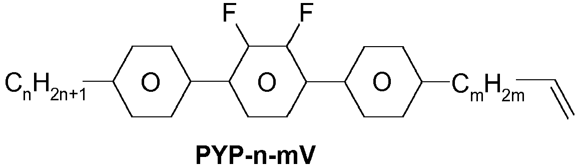 |
| 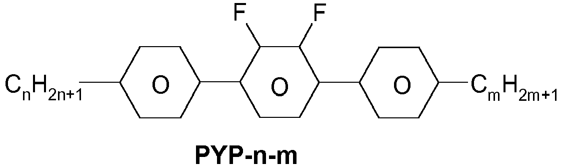 |
| 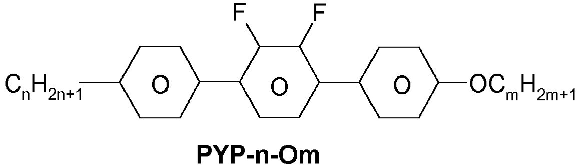 |
| 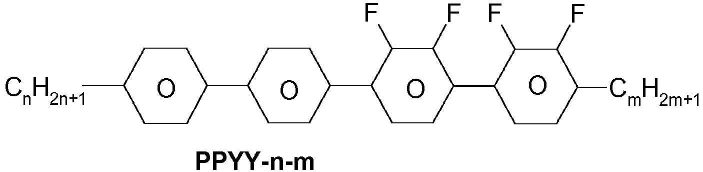 |
| 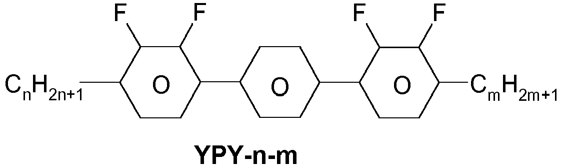 |
| 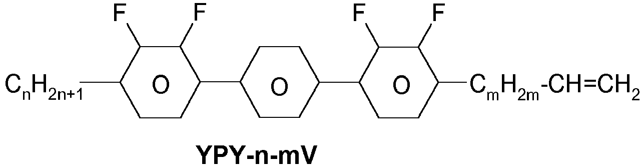 |
| 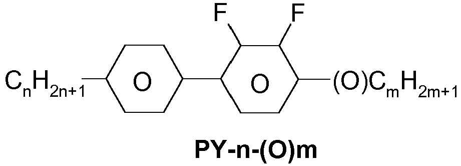 |
| 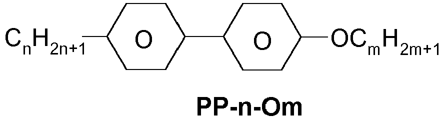 |
| 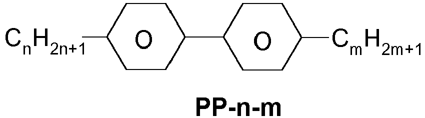 |
| 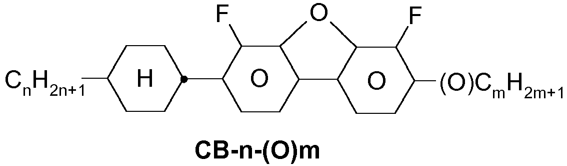 |
| 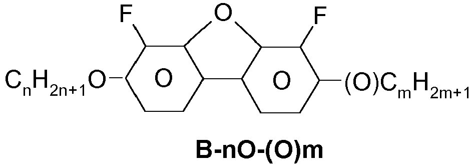 |
| 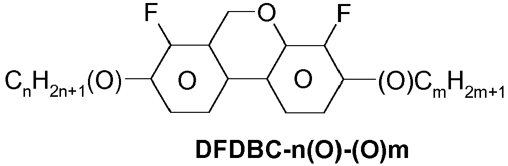 |
| 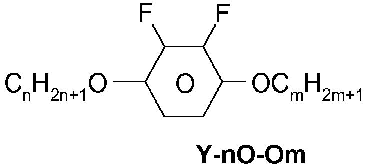 |
| 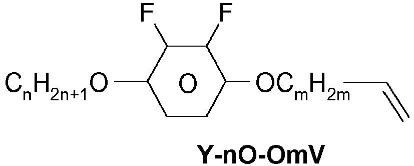 |
| 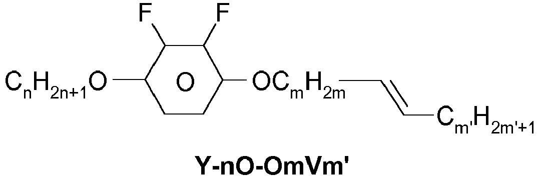 |
| 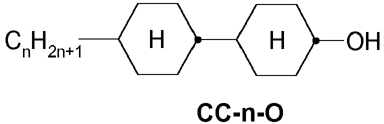 |
| 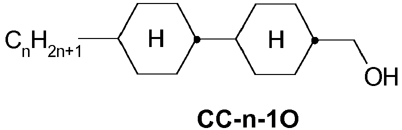 |
| 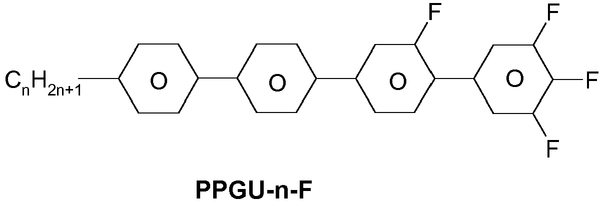 |
| 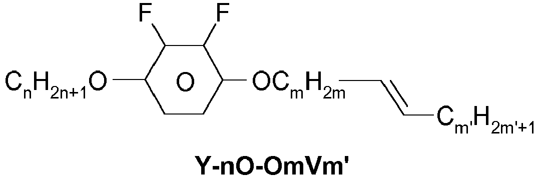 |
| 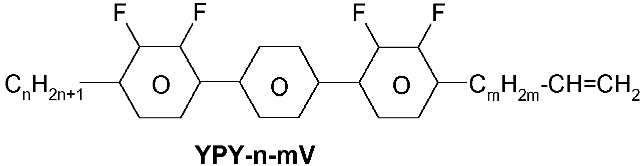 |
| 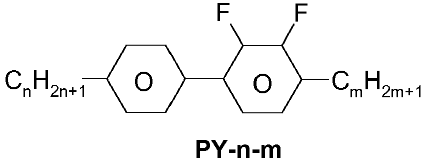 |
| 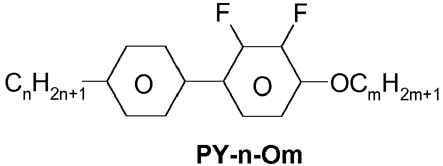 |
| 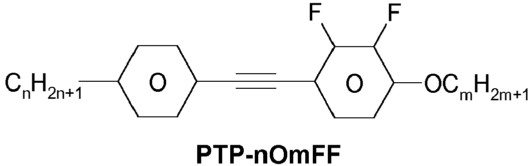 |
| 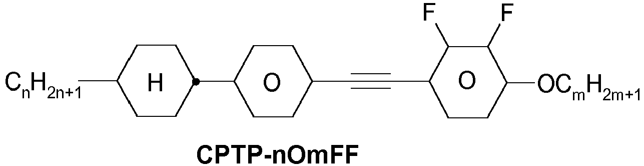 |
| 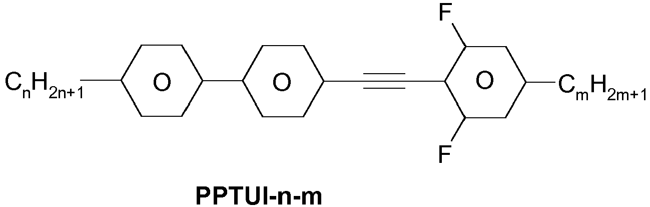 |
| 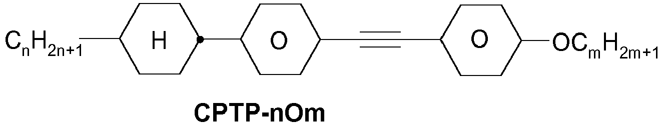 |
| 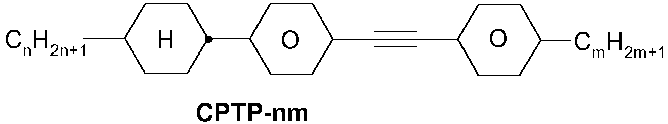 |
| 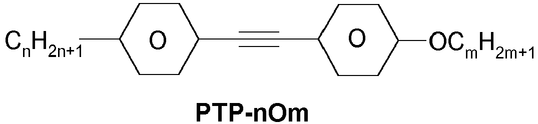 |
| 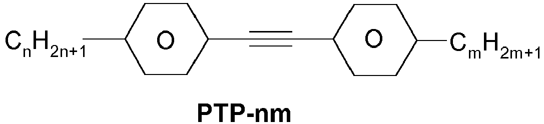 |
| 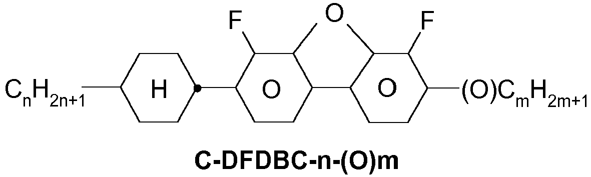 |
| 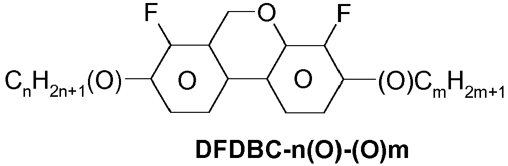 |
| 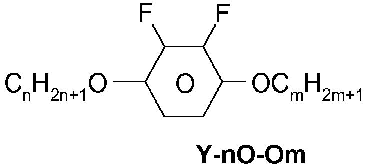 |
| 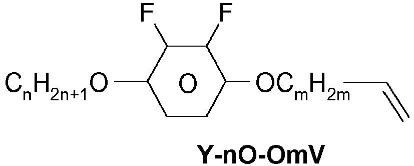 |
| 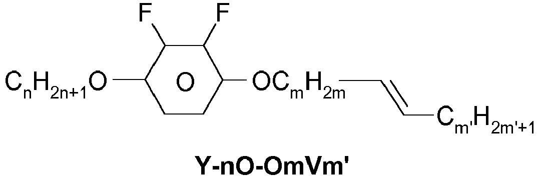 |

The liquid-crystal mixtures which can be used in accordance with the invention are prepared in a manner which is conventional per se. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

By means of suitable additives, the liquid-crystal phases according to the invention can be modified in such a way that they can be employed in any type of, for example, ECB, VAN, GH or ASM-VA, PS-VA, PM-VA, HT-VA, VA-IPS LCD display that has been disclosed to date.

The dielectrics may also comprise further additives known to the person skilled in the art and described in the literature, such as, for example, UV absorbers, antioxidants, nanoparticles and free-radical scavengers. For example, 0-15% of pleochroic dyes, stabilisers or chiral dopants may be added. Suitable stabilisers for the mixtures according to the invention are, in particular, those listed in Table C.

For example, 0-15 % of pleochroic dyes may be added, furthermore conductive salts, preferably ethyldimethyldodecylammonium 4-hexoxybenzoate, tetrabutylammonium tetraphenylboranate or complex salts of crown ethers (cf., for example, Haller et al., Mol. Cryst. Liq. Cryst. Volume 24, pages 249-258 (1973)), may be added in order to improve the conductivity or substances may be added in order to modify the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

Table B shows possible dopants which can be added to the mixtures according to the invention. If the mixtures comprise a dopant, it is employed in amounts of 0.01-4% by weight, preferably 0.1-1.0% by weight.

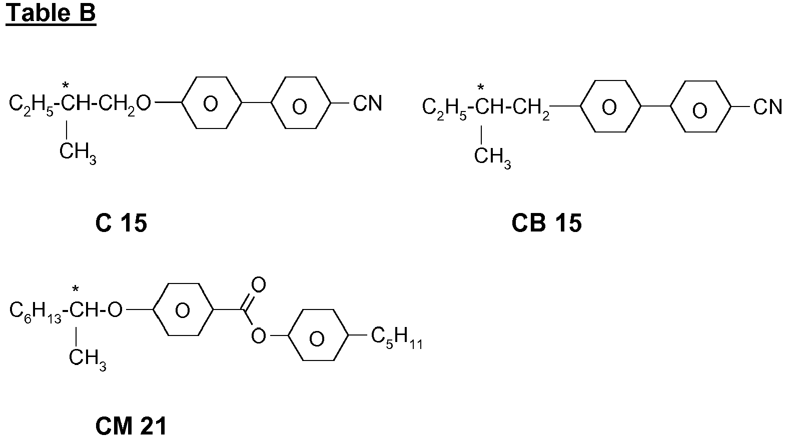

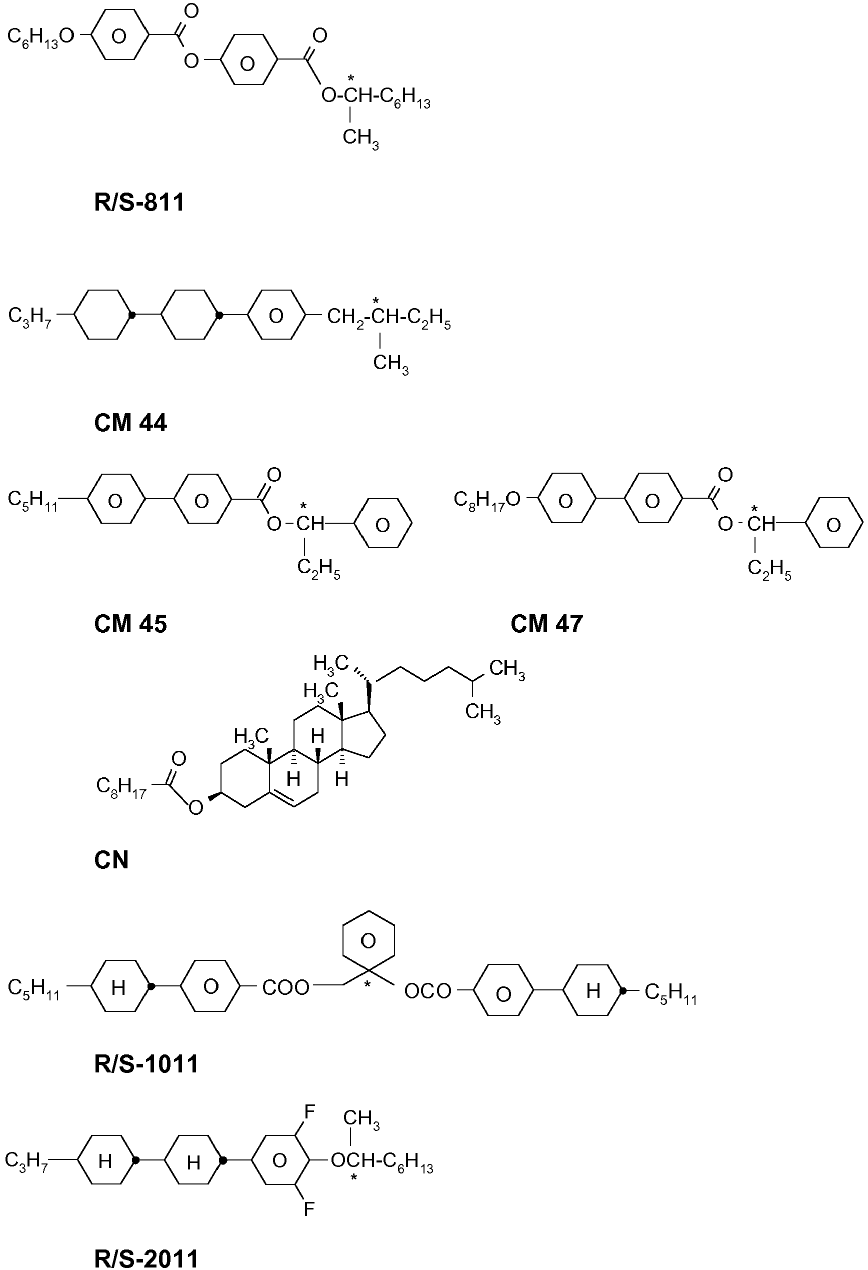

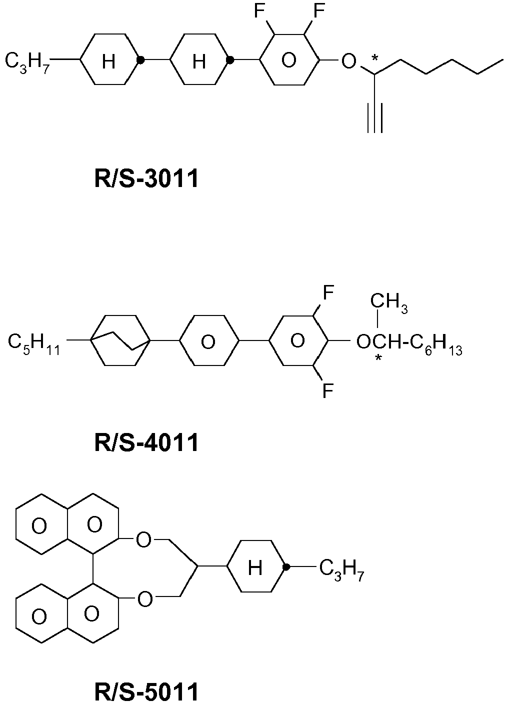

Stabilisers which can be added, for example, to the mixtures according to the invention in amounts of up to 10% by weight, based on the total amount of the mixture, preferably 0.01 to 6% by weight, in particular 0.1 to 3% by weight, are shown below in Table C. Preferred stabilisers are, in particular, BHT derivatives, for example 2,6-di-tert-butyl-4-alkylphenols, and Tinuvin® 770, as well as Tunuvin® P and Tempol.

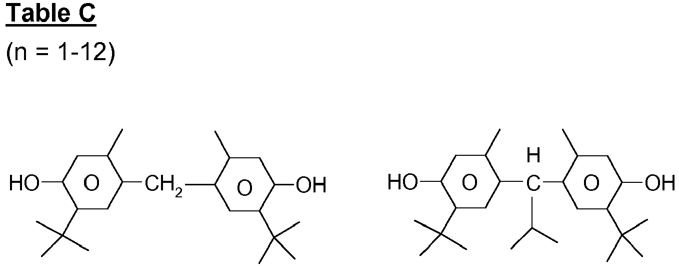

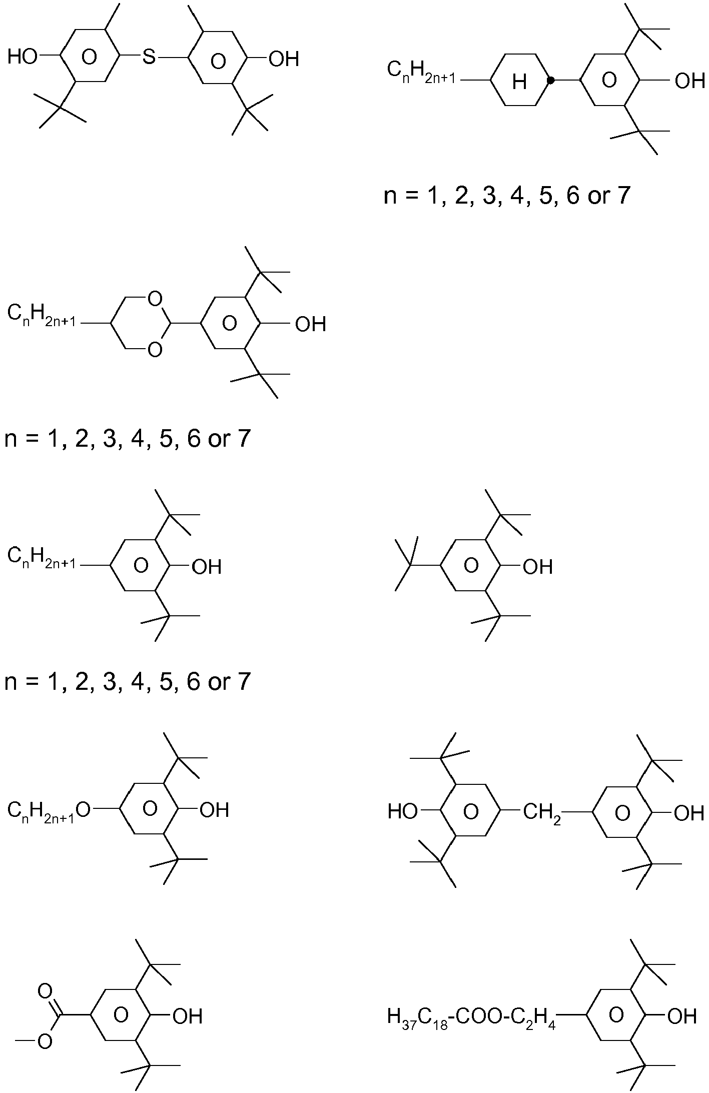

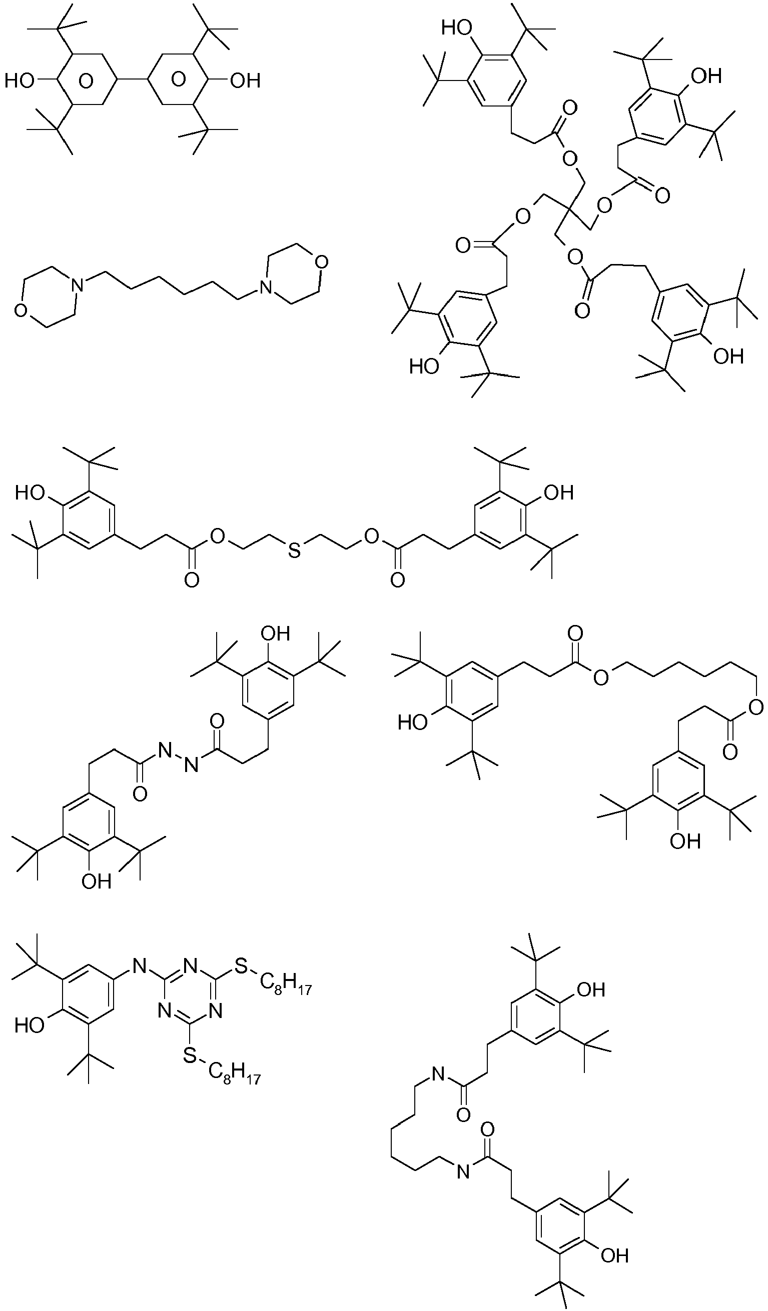

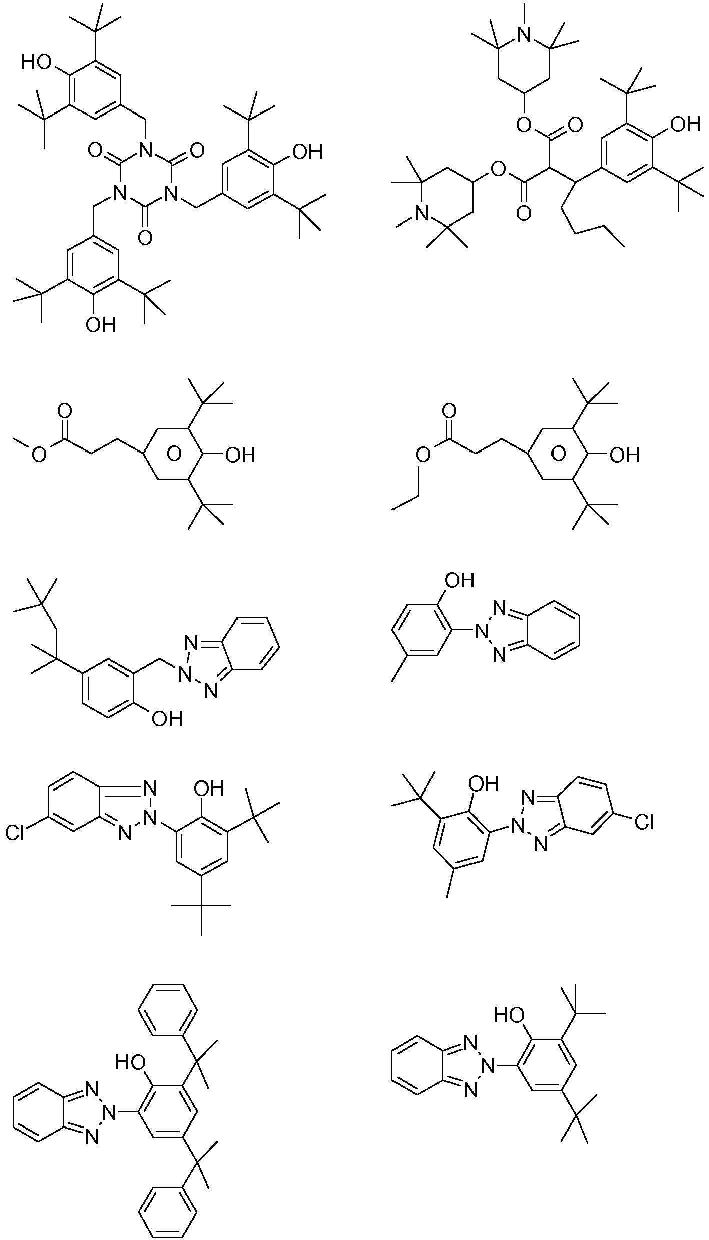

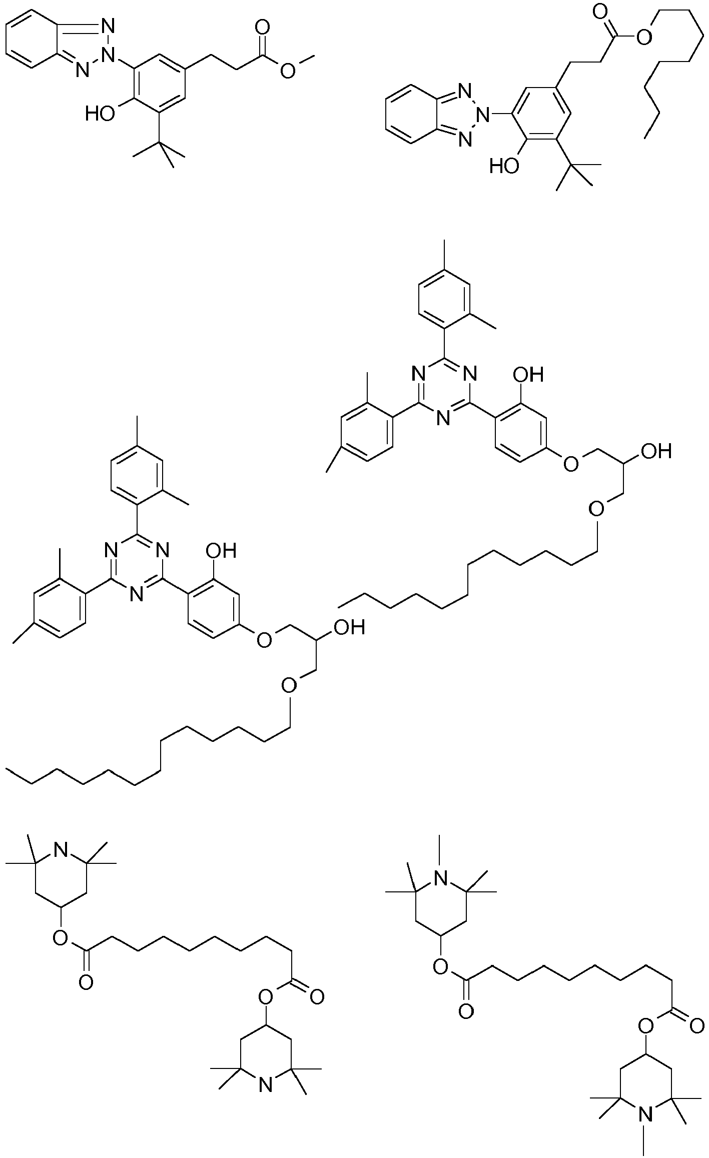

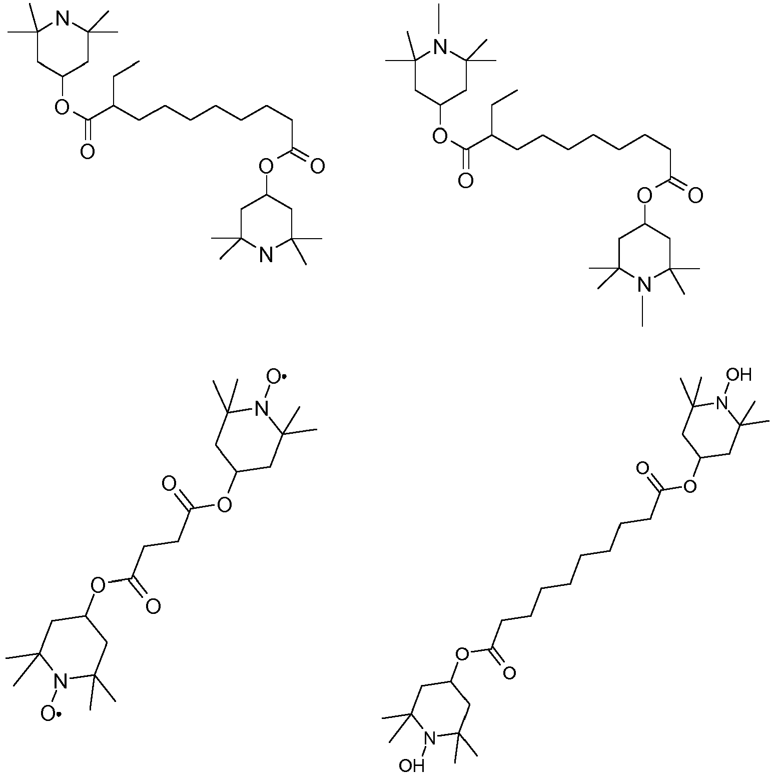

Preferred reactive mesogens (polymerisable compounds) for use in the mixtures according to the invention, preferably in PSA and PS-VA applications are shown in Table D below:

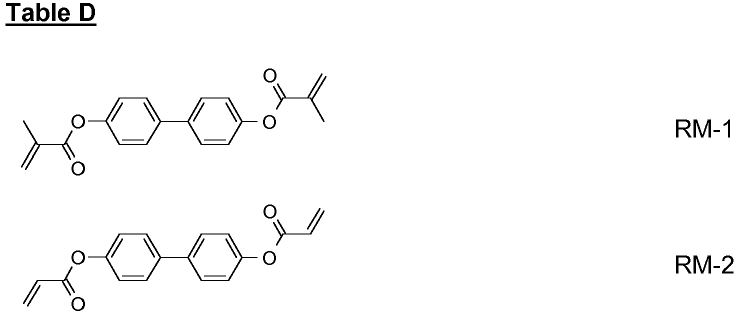

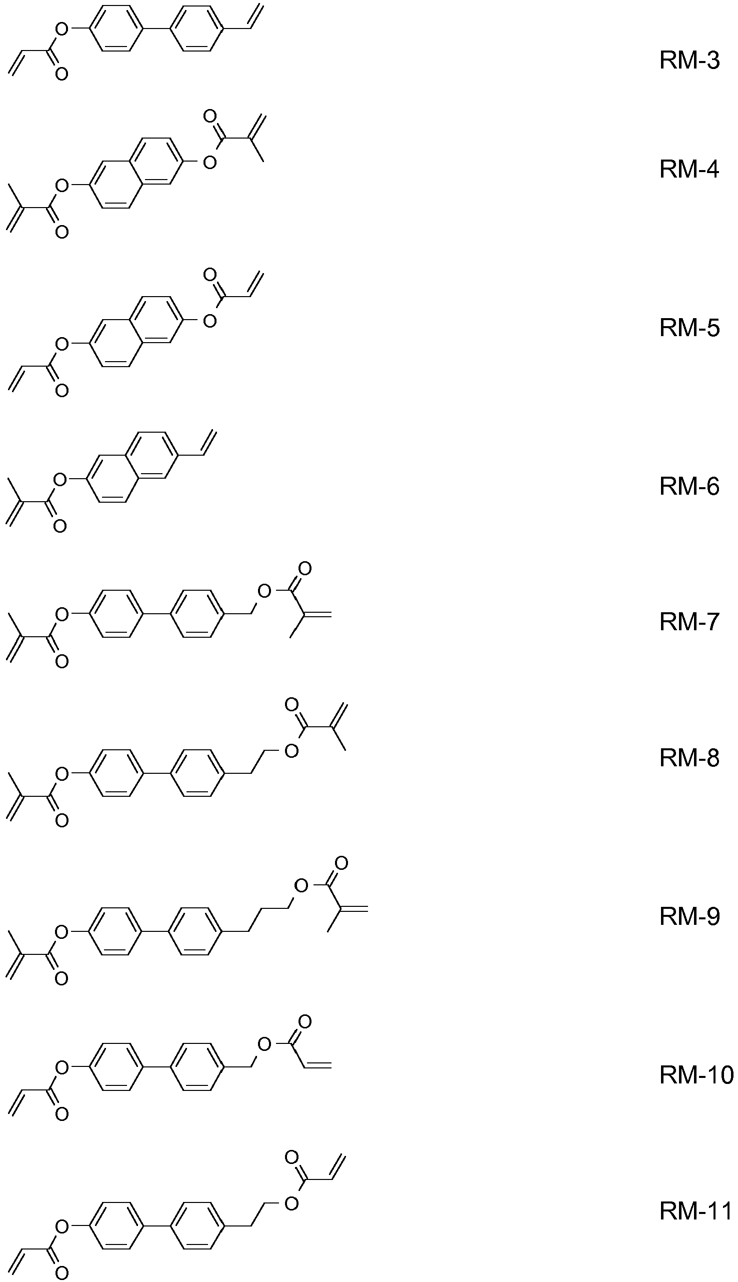

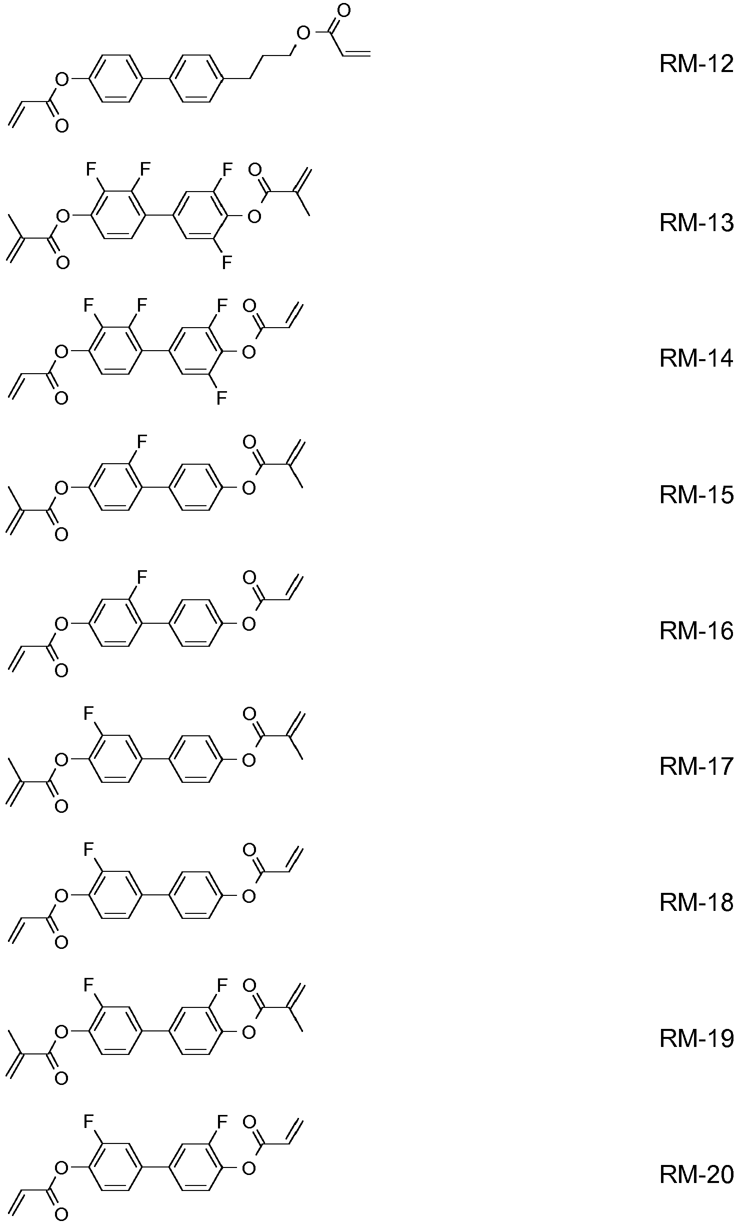

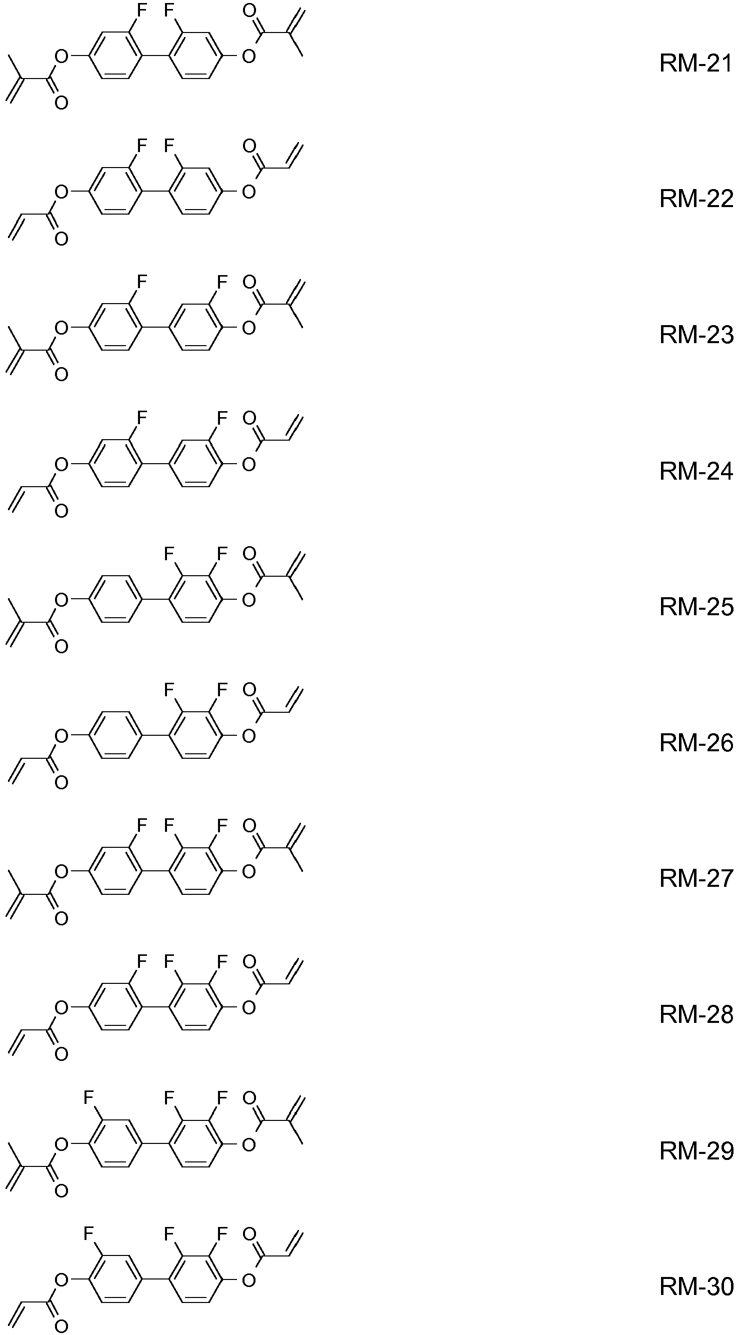

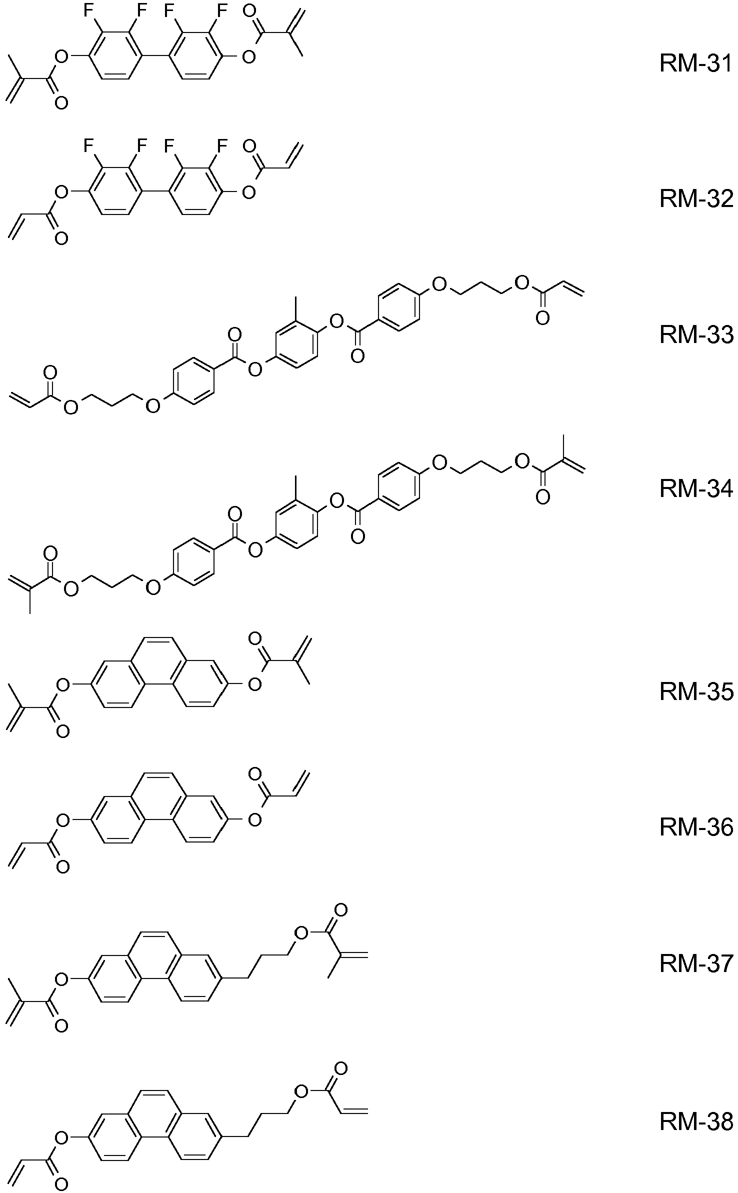

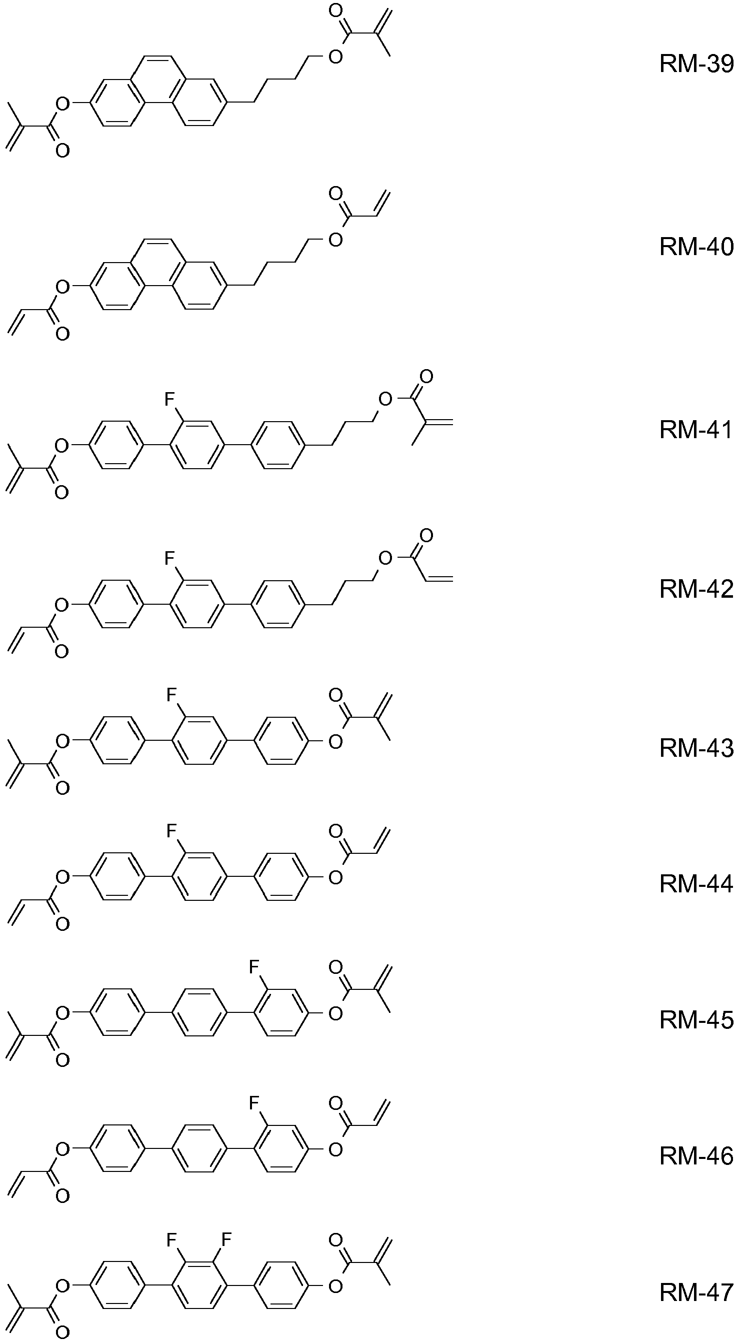

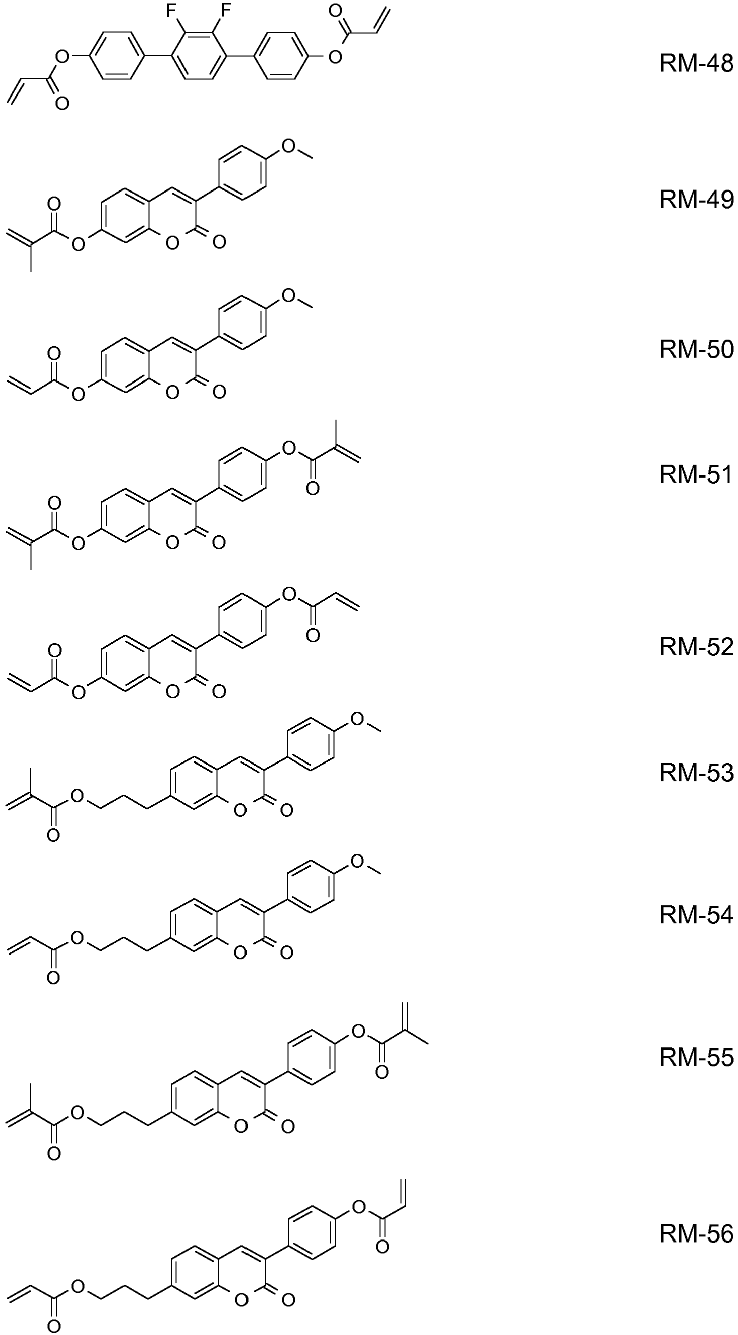

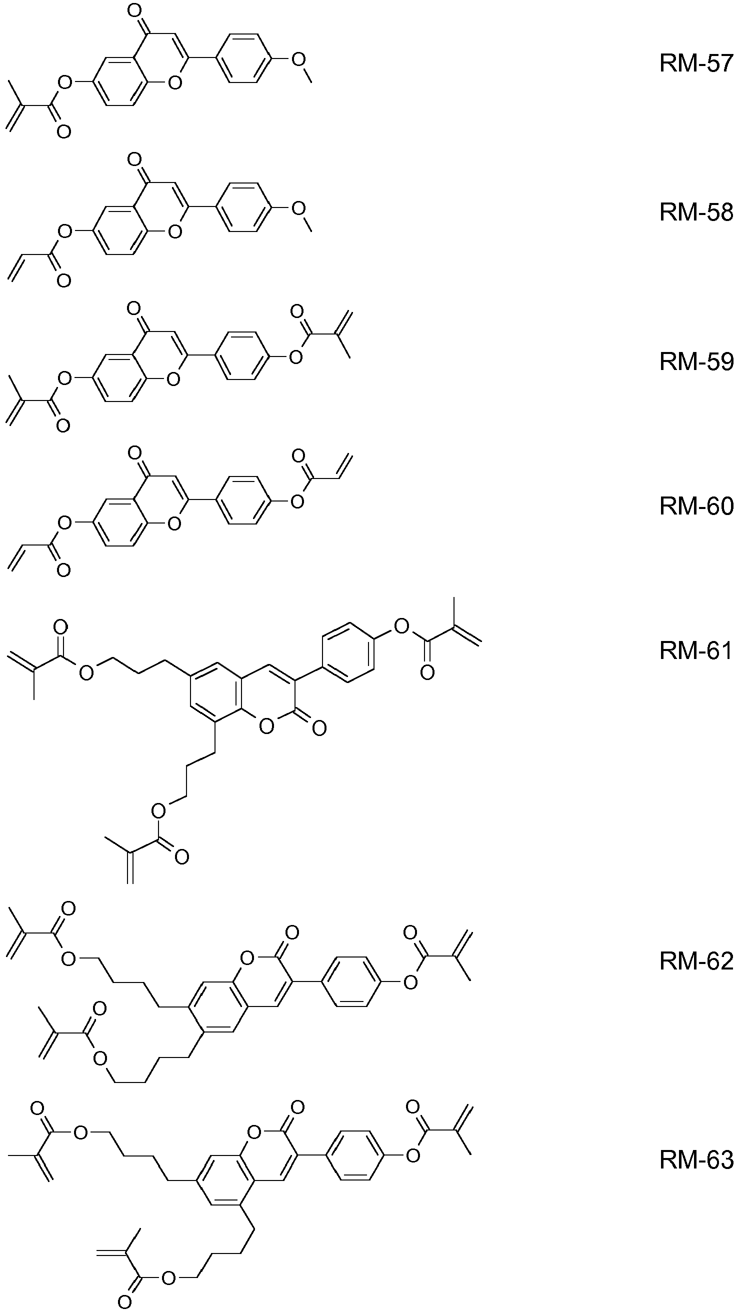

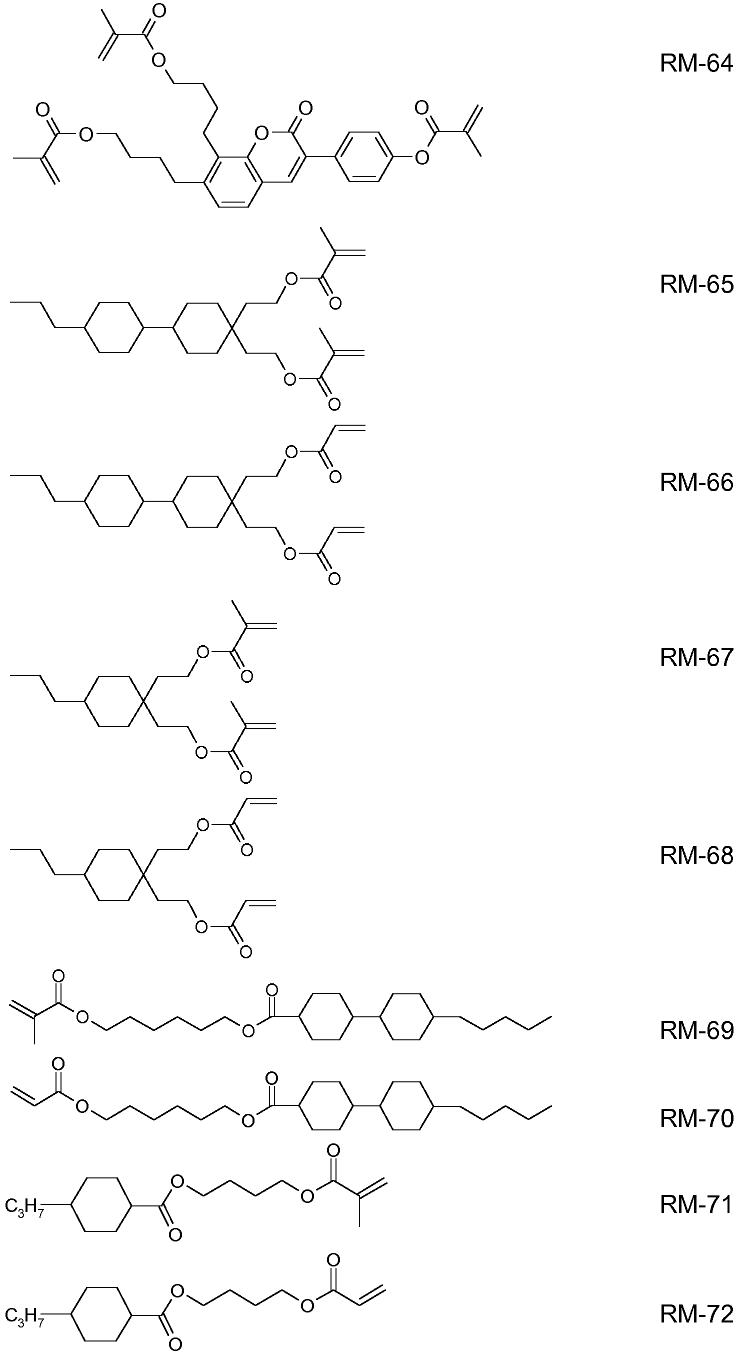

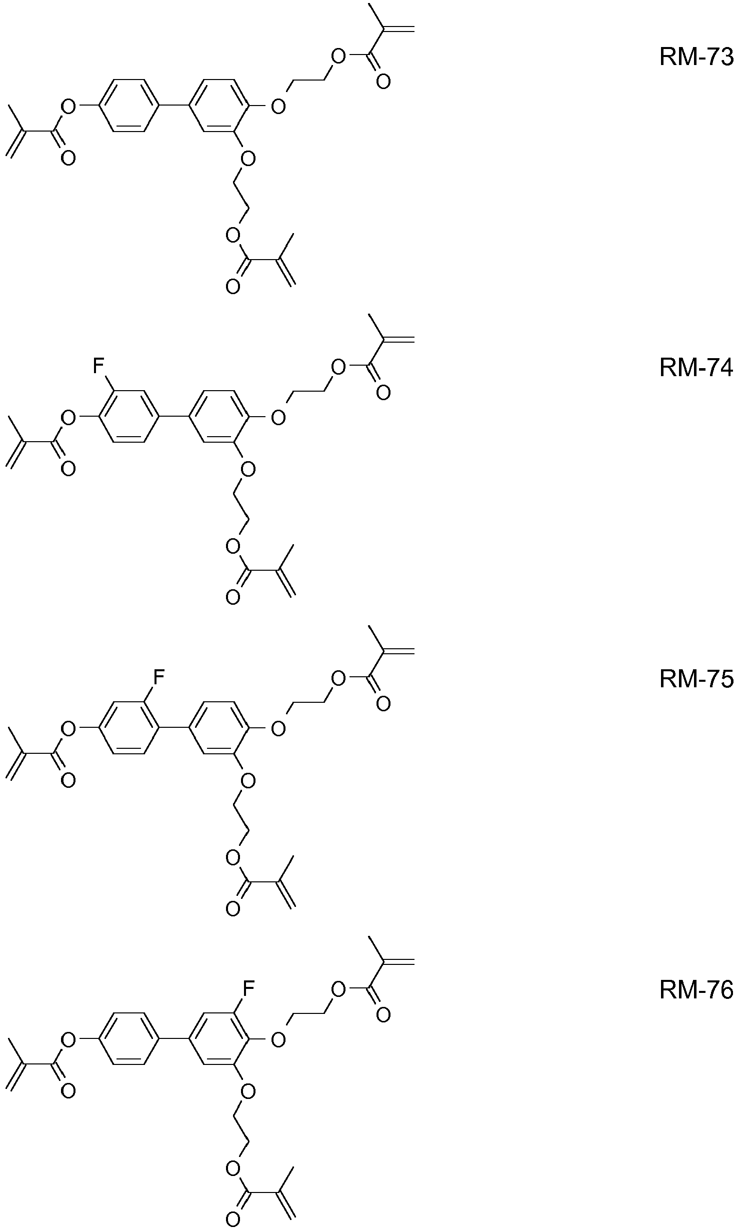

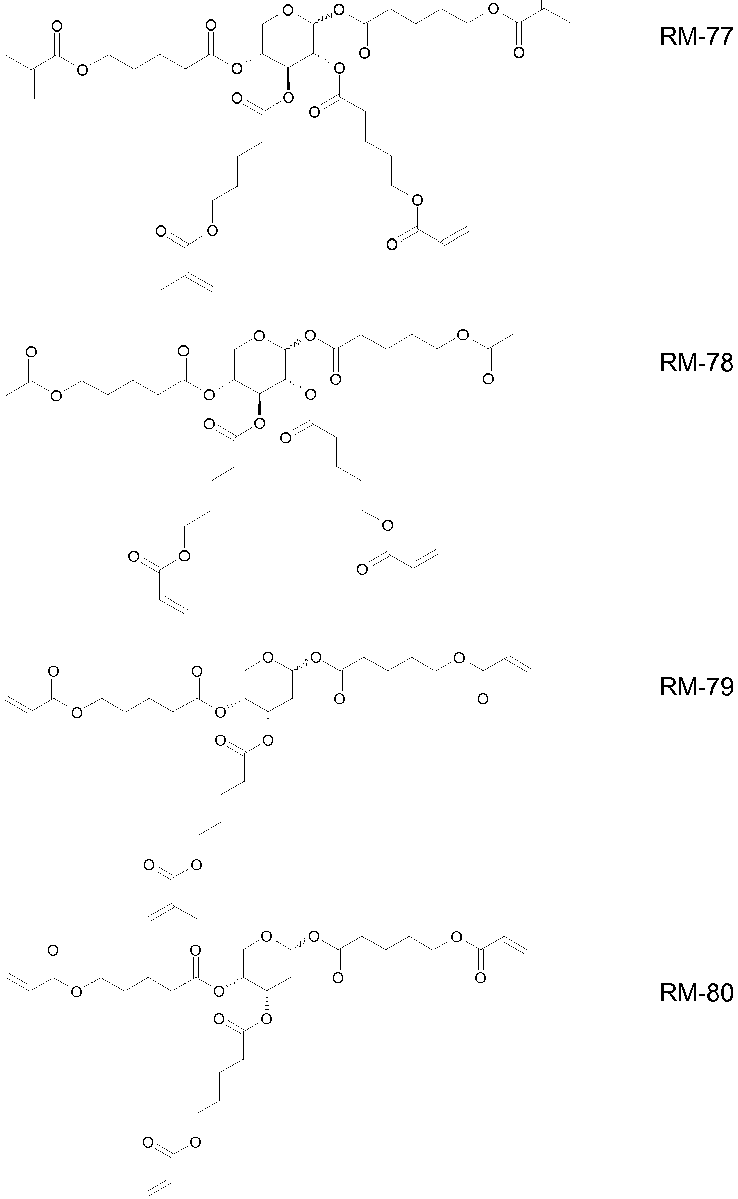

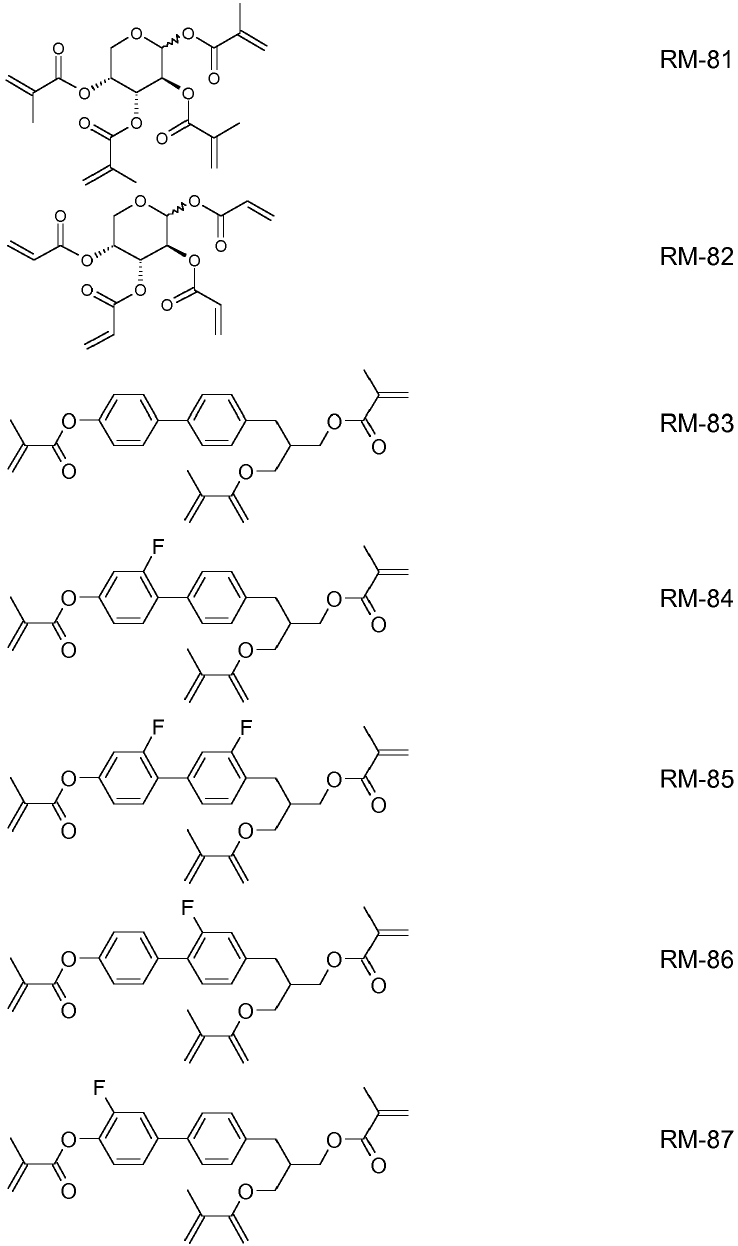

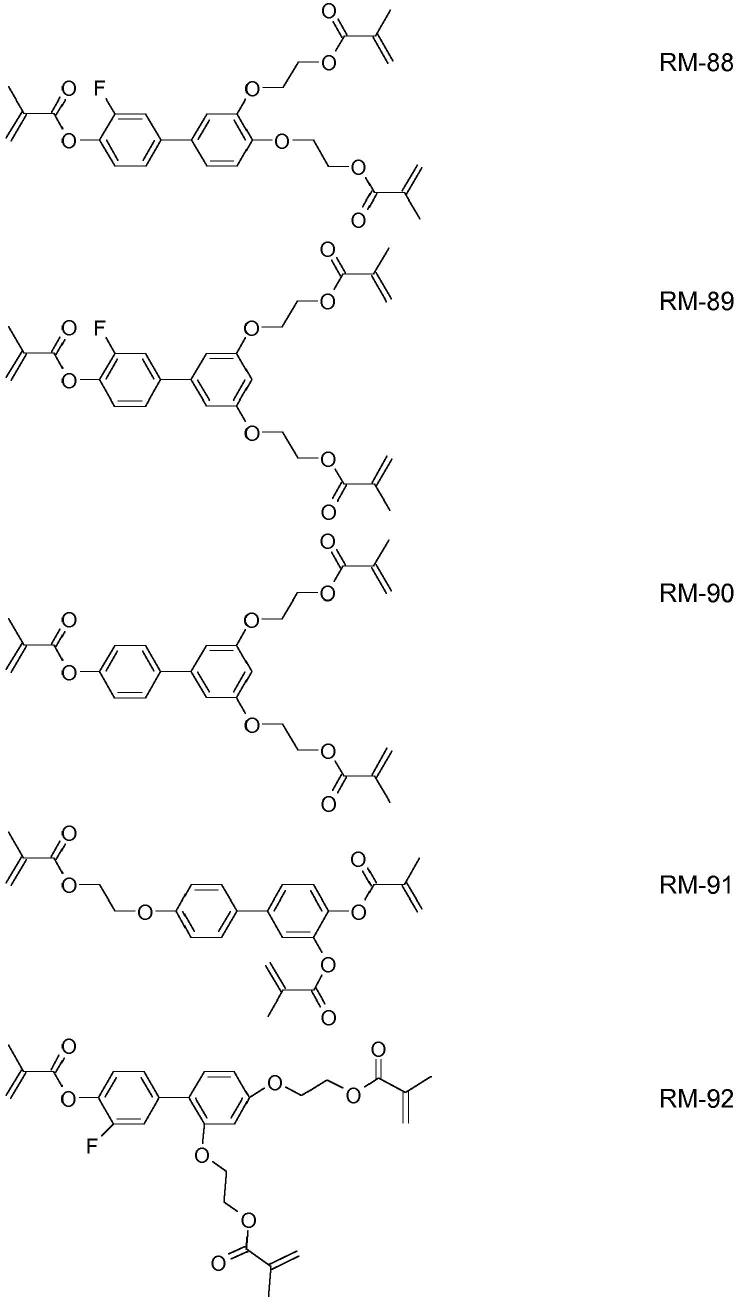

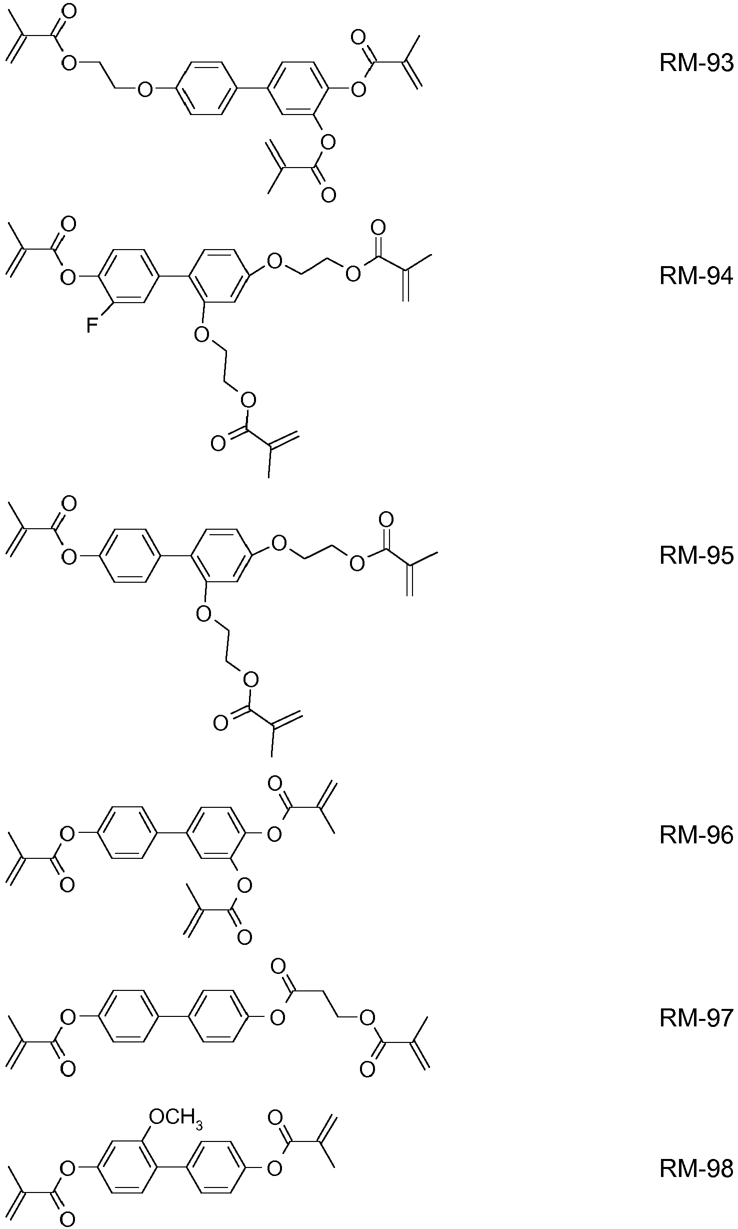

### Examples

The following examples are intended to explain the invention without restricting it. In the examples, m.p. denotes the melting point and C denotes the clearing point of a liquid-crystalline substance in degrees Celsius; boiling points are denoted by b.p. Furthermore:
C denotes crystalline solid state, S denotes smectic phase (the index denotes the phase type), N denotes nematic state, Ch denotes cholesteric phase, I denotes isotropic phase, T_{g} denotes glass transition temperature. The number between two symbols indicates the conversion temperature in degrees Celsius.

### Example 1

### Synthesis of 3-{5-[2-ethyl-4-(4-pentylphenyl)phenyl]-2-[4-hydroxy-3-(hydroxymethyl)butoxy]-3-{3-[(2-methylprop-2-enoyl)oxy]propyl}phenyl}-propyl 2-methylprop-2-enoate 1

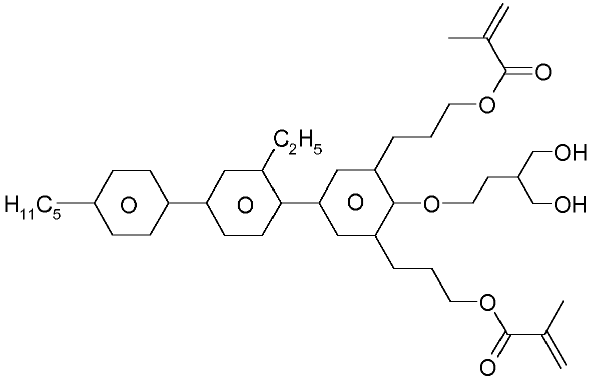

The additive is prepared as provided in WO 2017/041893.
Phases: T_{g} -33 K 26 I

In the following examples
- V₀: denotes the threshold voltage, capacitive [V] at 20°C
- Δn: denotes the optical anisotropy measured at 20°C and 589 nm
- Δε: denotes the dielectric anisotropy at 20°C and 1 kHz
- cl.p.: denotes the clearing point [°C]
- K₁: denotes the elastic constant, "splay" deformation at 20°C [pN]
- K₃: denotes the elastic constant, "bend" deformation at 20°C [pN]
- γ₁: denotes the rotational viscosity measured at 20°C [mPa·s], determined by the rotation method in a magnetic field
- LTS: denotes the low-temperature stability (nematic phase), determined in test cells.

The display used for measurement of the threshold voltage has two plane-parallel outer plates at a separation of 20 µm and electrode layers with overlying alignment layers of JALS-2096 on the insides of the outer plates, which effect a homeotropic alignment of the liquid crystals.

All concentrations in this application relate to the corresponding mixture or mixture component, unless explicitly indicated otherwise. All physical properties are determined as described in "Merck Liquid Crystals, Physical Properties of Liquid Crystals", status November 1997, Merck KGaA, Germany, and apply for a temperature of 20 °C, unless explicitly indicated otherwise.

Unless indicated otherwise, parts or per cent data denote parts by weight or per cent by weight.

The polymerisable compounds are polymerised in the display or test cell by irradiation with UVA light of defined intensity for a prespecified time, with a voltage simultaneously being applied to the display (usually 10 V to 30 V alternating current, 1 kHz). In the examples, unless indicated otherwise, a metal halide lamp and an intensity of 100 mW/cm² is used for polymerisation. The intensity is measured using a standard UVA meter (Hoenle UV-meter high end with UVA sensor).

The tilt angle is determined by crystal rotation experiment (Autronic-Melchers TBA-105). A low value (i.e. a large deviation from the 90° angle) corresponds to a large tilt here.

The VHR value is measured as follows: 0.3% of a polymerisable monomeric compound is added to the LC host mixture, and the resultant mixture is introduced into VA-VHR test cells. The VHR value is determined after 5 min at 60°C before and after UV exposure at 1 V, 60 Hz, 64 µs pulse (measuring instrument: Autronic-Melchers VHRM-105).

### Mixture examples

For the production of the examples according to the present invention the following host mixtures **H1** to **H34** are used:
**H1:** Nematic host-mixture

| | | | |
|---|---|---|---|
| CC-3-V | 15 % | Clearing point [°C]: | 74.4 |
| CC-3-V1 | 9 % | Δn (589 nm, 20°C): | 0.1086 |
| CCH-23 | 8 % | Δε (1 kHz, 20°C): | -3.2 |
| CCH-34 | 7.5 % | ε_{∥} (1 kHz, 20°C): | 3.5 |
| CCY-3-O2 | 10 % | ε_{⊥} (1 kHz, 20°C): | 6.7 |
| CCY-5-O2 | 8 % | K₁ (20°C) [pN]: | 14.3 |
| CPY-2-O2 | 3 % | K₃ (20°C) [pN]: | 15.7 |
| CPY-3-O2 | 8.5 % | γ₁ (20°C) [mPa·s]: | 102 |
| CY-3-O2 | 7 % | V₀ [20°C, V]: | 2.33 |
| PY-3-O2 | 16 % | | |
| PYP-2-3 | 8 % | | |

**H2:** Nematic host-mixture

| | | | |
|---|---|---|---|
| B-2O-O5 | 4 % | Clearing point [°C]: | 74.2 |
| BCH-32 | 8 % | Δn (589 nm, 20°C): | 0.109 |
| CC-3-V1 | 9 % | Δε (1 kHz, 20°C): | -3.1 |
| CCH-301 | 2 % | ε_{∥} (1 kHz, 20°C): | 3.6 |
| CCH-34 | 8 % | ε_{⊥} (1 kHz, 20°C): | 6.7 |
| CCH-35 | 7 % | K₁ (20°C) [pN]: | 14.5 |
| CCP-3-1 | 8 % | K₃ (20°C) [pN]: | 16.5 |
| CCP-V2-1 | 5 % | γ₁ (20°C) [mPa·s]: | 108 |
| CCY-3-O2 | 10.5 | V₀ [20°C, V]: | 2.41 |
| CLY-3-O2 | 1 | | |
| CPY-3-O2 | 2.5 | | |
| CY-3-O2 | 11.5 | | |
| PCH-301 | 5.5 % | | |
| PY-3-O2 | 18 % | | |

**H3:** Nematic host-mixture

| | | | |
|---|---|---|---|
| CC-3-V1 | 9.00 % | Clearing point [°C]: | 74.7 |
| CCH-23 | 18.00 % | Δn (589 nm, 20°C): | 0.098 |
| CCH-34 | 3.00 % | Δε (1 kHz, 20°C): | -3.4 |
| CCH-35 | 7.00 % | ε_{∥} (1 kHz, 20°C): | 3.5 |
| CCP-3-1 | 5.50 % | ε_{⊥} (1 kHz, 20°C): | 6.9 |
| CCY-3-O2 | 11.50 % | K₁ (20°C) [pN]: | 14.9 |
| CPY-2-O2 | 8.00 % | K₃ (20°C) [pN]: | 15.9 |
| CPY-3-O2 | 11.00 % | γ₁ (20°C) [mPa·s]: | 108 |
| CY-3-O2 | 15.50 % | V₀ [20°C, V]: | 2.28 |
| PY-3-O2 | 11.50 % | | |

**H4:** Nematic host-mixture

| | | | |
|---|---|---|---|
| CC-3-V | 37.50 % | Clearing point [°C]: | 74.8 |
| CC-3-V1 | 2.00 % | Δn (589 nm, 20°C): | 0.099 |
| CCY-4-O2 | 14.50 % | Δε (1 kHz, 20°C): | -2.9 |
| CPY-2-O2 | 10.50 % | ε_{∥} (1 kHz, 20°C): | 3.7 |
| CPY-3-O2 | 9.50 % | ε_{⊥} (1 kHz, 20°C): | 6.6 |
| CY-3-O2 | 15.00 % | K₁ (20°C) [pN]: | 12.2 |
| CY-3-O4 | 4.50 % | K₃ (20°C) [pN]: | 13.4 |
| PYP-2-4 | 5.50 % | γ₁ (20°C) [mPa·s]: | 92 |
| PPGU-3-F | 1.00 % | V₀ [20°C, V]: | 2.28 |

**H5:** Nematic host-mixture

| | | | |
|---|---|---|---|
| CC-4-V | 17.00 % | Clearing point [°C]: | 106.1 |
| CCP-V-1 | 15.00 % | Δn (589 nm, 20°C): | 0.120 |
| CCPC-33 | 2.50 % | Δε (1 kHz, 20°C): | -3.6 |
| CCY-3-O2 | 4.00 % | ε_{∥} (1 kHz, 20°C): | 3.5 |
| CCY-3-O3 | 5.00 % | ε_{⊥} (1 kHz, 20°C): | 7.0 |
| CCY-4-O2 | 5.00 % | K₁ (20°C) [pN]: | 16.8 |
| CLY-3-O2 | 3.50 % | K₃ (20°C) [pN]: | 17.3 |
| CLY-3-O3 | 2.00 % | γ₁ (20°C) [mPa·s]: | 207 |
| CPY-2-O2 | 8.00 % | V₀ [20°C, V]: | 2.33 |
| CPY-3-O2 | 10.00 % | | |
| CY-3-O4 | 17.00 % | | |
| PYP-2-3 | 11.00 % | | |

**H6:** Nematic host-mixture

| | | | |
|---|---|---|---|
| CY-3-O2 | 15.00 % | Clearing point [°C]: | 74.7 |
| CY-5-O2 | 6.50 % | Δn (589 nm, 20°C): | 0.108 |
| CCY-3-O2 | 11.00 % | Δε (1 kHz, 20°C): | -3.0 |
| CPY-2-O2 | 5.50 % | ε_{∥} (1 kHz, 20°C): | 3.6 |
| CPY-3-O2 | 10.50 % | ε_{⊥} (1 kHz, 20°C): | 6.6 |
| CC-3-V | 28.50 % | K₁ (20°C) [pN]: | 12.9 |
| CC-3-V1 | 10.00 % | K₃ (20°C) [pN]: | 15.7 |
| PYP-2-3 | 12.50 % | γ₁ (20°C) [mPa·s]: | 97 |
| PPGU-3-F | 0.50 % | V₀ [20°C, V]: | 2.42 |

**H7:** Nematic host-mixture

| | | | |
|---|---|---|---|
| CY-3-O2 | 15.00 % | Clearing point [°C]: | 75.5 |
| CCY-4-O2 | 9.50 % | Δn (589 nm, 20°C): | 0.107 |
| CCY-5-O2 | 5.00 % | Δε (1 kHz, 20°C): | -3.0 |
| CPY-2-O2 | 9.00 % | | |
| CPY-3-O2 | 9.00 % | ε_{∥} (1 kHz, 20°C): | 3.5 |
| CCH-34 | 9.00 % | ε_{⊥} (1 kHz, 20°C): | 6.5 |
| CCH-23 | 22.00 % | K₁ (20°C) [pN]: | 12.9 |
| PYP-2-3 | 7.00 % | K₃ (20°C) [pN]: | 13.0 |
| PYP-2-4 | 7.50 % | γ₁ (20°C) [mPa·s]: | 115 |
| PCH-301 | 7.00 % | V₀ [20°C, V]: | 2.20 |

**H8:** Nematic host-mixture

| | | | |
|---|---|---|---|
| Y-4O-O4 | 3.00% | Clearing point [°C]: | 100 |
| PYP-2-3 | 10.00% | Δn (589 nm, 20°C): | 0.1603 |
| PYP-2-4 | 10.00% | Δε (1 kHz, 20°C): | -0.7 |
| CC-3-V | 25.00% | ε_{∥} (1 kHz, 20°C): | 3.1 |
| CCP-V-1 | 11.00% | ε_{⊥} (1 kHz, 20°C): | 3.8 |
| CCP-V2-1 | 10.00% | | |
| BCH-32 | 5.00% | | |
| CVCP-1V-O1 | 5.00% | | |
| PTP-3O2FF | 3.00% | | |
| CPTP-3O2FF | 2.50% | | |
| PTP-101 | 5.00% | | |
| PTP-201 | 5.00% | | |
| CPTP-301 | 5.00% | | |
| PPTUI-3-2 | 0.50% | | |

stabilized with 0.01 % of the compound of the formula 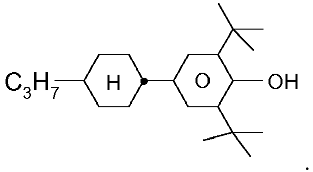
**H9:** Nematic host-mixture

| | | | |
|---|---|---|---|
| CY-3-O2 | 15.00 % | Clearing point [°C]: | 91 |
| CY-3-O4 | 20.00 % | Δn (589 nm, 20°C): | 0.1099 |
| CY-5-O2 | 10.00 % | ε_{∥} (1 kHz, 20°C): | 4.2 |
| CCY-3-O2 | 6.50 % | ε_{⊥} (1 kHz, 20°C): | 10.3 |
| CCY-3-O3 | 6.00 % | Δε (1 kHz, 20°C): | -6.1 |
| CCY-4-O2 | 6.00 % | γ₁ (20°C) [mPa·s]: | 297 |
| CCY-5-O2 | 6.00 % | | |
| CPY-2-O2 | 8.00 % | | |
| CPY-3-O2 | 8.00 % | | |
| CC-4-V | 2.50 % | | |
| CCP-V-1 | 3.50 % | | |
| CPTP-3-1 | 2.50 % | | |
| CCPC-33 | 4.00 % | | |
| CCPC-34 | 2.00 % | | |

**H10:** Nematic host-mixture

| | | | |
|---|---|---|---|
| CY-3-O2 | 15.00 % | Clearing point [°C]: | 91 |
| CY-3-O4 | 20.00 % | Δn (589 nm, 20°C): | 0.0897 |
| CY-5-O2 | 6.00 % | ε_{∥} (1 kHz, 20°C): | 3.7 |
| CCY-3-O2 | 6.00 % | ε_{⊥} (1 kHz, 20°C): | 8.0 |
| CCY-3-O3 | 6.00 % | Δε (1 kHz, 20°C): | -4.3 |
| CCY-4-O2 | 6.00 % | γ₁ [mPa·s, 20°C]: | 204 |
| CPY-2-O2 | 6.00 % | | |
| CC-4-V | 15.00 % | | |
| CCP-V2-1 | 6.50 % | | |
| CCPC-33 | 4.50 % | | |
| CCPC-34 | 4.50 % | | |
| CCPC-35 | 4.50 % | | |

**H11:** Nematic host-mixture

| | | | |
|---|---|---|---|
| CY-3-O2 | 15.00 % | Clearing point [°C]: | 91 |
| CY-3-O4 | 20.00 % | Δn (589 nm, 20°C): | 0.1106 |
| CCY-3-O2 | 6.00 % | ε_{∥} (1 kHz, 20°C): | 3.9 |
| CCY-3-O3 | 6.00 % | ε_{⊥} (1 kHz, 20°C): | 8.4 |
| CCY-4-O2 | 6.00 % | Δε (1 kHz, 20°C): | -4.5 |
| CCY-5-O2 | 2.00 % | γ₁ [mPa·s, 20°C]: | 202 |
| CPY-2-O2 | 8.00 % | | |
| CPY-3-O2 | 8.00 % | | |
| CC-4-V | 8.00 % | | |
| CCP-V-1 | 12.00 % | | |
| CCP-V2-1 | 5.00 % | | |
| CPTP-3-1 | 4.00 % | | |

**H12:** Nematic host-mixture

| | | | |
|---|---|---|---|
| CY-3-O2 | 15.00 % | Clearing point [°C]: | 95 |
| CY-3-O4 | 20.00 % | Δn (589 nm, 20°C): | 0.0974 |
| CY-5-O2 | 8.50 % | ε_{∥} (1 kHz, 20°C): | 4.1 |
| CCY-3-O2 | 6.50 % | ε_{⊥} (1 kHz, 20°C): | 9.9 |
| CCY-3-O3 | 6.50 % | Δε (1 kHz, 20°C): | -5.8 |
| CCY-4-O2 | 6.50 % | K₁ (20°C) [pN]: | 14.3 |
| CCY-5-O2 | 6.50 % | K₃ (20°C) [pN]: | 16.8 |
| CPY-2-O2 | 7.50 % | V₀ (20°C) [pN]: | 1.79 |
| CPY-3-O2 | 3.50 % | γ₁ (20°C) [mPa·s]: | 292 |
| CC-4-V | 6.00 % | | |
| CH-33 | 3.50 % | | |
| CCPC-33 | 5.00 % | | |
| CCPC-34 | 5.00 % | | |

**H13:** Nematic host-mixture

| | | | |
|---|---|---|---|
| CY-3-O2 | 15.00 % | Clearing point [°C]: | 95 |
| CY-3-O4 | 20.00 % | Δn (589 nm, 20°C): | 0.1126 |
| CY-5-O2 | 2.00 % | ε_{∥} (1 kHz, 20°C): | 4.0 |
| CCY-3-O2 | 6.50 % | ε_{⊥} (1 kHz, 20°C): | 9.8 |
| CCY-3-O3 | 6.50 % | Δε (1 kHz, 20°C): | -5.8 |
| CCY-4-O2 | 6.50 % | K₁ (20°C) [pN]: | 15.1 |
| CCY-5-O2 | 6.50 % | K₃ (20°C) [pN]: | 17.8 |
| CPY-2-O2 | 8.00 % | V₀ (20°C) [pN]: | 1.84 |
| CPY-3-O2 | 8.00 % | γ₁ (20°C) [mPa·s]: | 270 |
| CPTP- | 4.00 % | | |
| CC-4-V | 5.00 % | | |
| CCP-V-1 | 10.50 % | | |
| CCPC-33 | 1.50 % | | |

**H14:** Nematic host-mixture

| | | | |
|---|---|---|---|
| CY-3-O2 | 12.00 % | Clearing point [°C]: | 95 |
| CY-3-O4 | 16.00 % | Δn (589 nm, 20°C): | 0.0972 |
| CCY-3-O2 | 6.50 % | ε_{∥} (1 kHz, 20°C): | 3.6 |
| CCY-3-O3 | 6.50 % | ε_{⊥} (1 kHz, 20°C): | 7.6 |
| CCY-4-O2 | 6.50 % | Δε (1 kHz, 20°C): | -4.0 |
| CCY-5-O2 | 6.00 % | K₁ (20°C) [pN]: | 14.9 |
| CPY-2-O2 | 6.00 % | K₃ (20°C) [pN]: | 17.0 |
| CPY-3-O2 | 5.50 % | V₀ (20°C) [pN]: | 2.17 |
| CC-4-V | 15.00 % | γ₁ (20°C) [mPa·s]: | 180 |
| CCP-V-1 | 10.00 % | | |
| CCP-V2-1 | 10.00 % | | |

stabilized with 0.03 % of 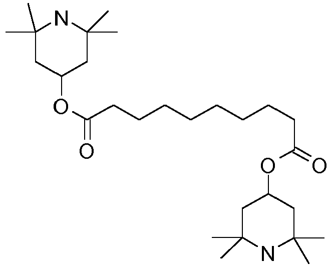
**H15:** Nematic host-mixture

| | | | |
|---|---|---|---|
| CY-3-O2 | 11.00 % | Clearing point [°C]: | 95 |
| CY-3-O4 | 16.00 % | Δn (589 nm, 20°C): | 0.1121 |
| CCY-3-O2 | 6.50 % | ε_{∥} (1 kHz, 20°C): | 3.7 |
| CCY-3-O3 | 6.00 % | ε_{⊥} (1 kHz, 20°C): | 7.7 |
| CCY-4-O2 | 6.00 % | Δε (1 kHz, 20°C): | -4.0 |
| CPY-2-O2 | 8.00 % | K₁ (20°C) [pN]: | 14.8 |
| CPY-3-O2 | 8.00 % | K₃ (20°C) [pN]: | 16.2 |
| CPTP-3O2FF | 5.00 % | V₀ (20°C) [V]: | 2.13 |
| CC-4-V | 16.00 % | γ₁ (20°C) [mPa·s]: | 179 |
| CCP-V-1 | 12.00 % | | |
| BCH-32 | 5.50 % | | |

**H16:** Nematic host-mixture

| | | | |
|---|---|---|---|
| CY-3-O2 | 3.50 % | Clearing point [°C]: | 102.5 |
| CY-3-O4 | 16.00 % | Δn (589 nm, 20°C): | 0.1112 |
| CY-5-O2 | 8.75 % | ε_{∥} (1 kHz, 20°C): | 3.8 |
| CCY-3-O2 | 6.00 % | ε_{⊥} (1 kHz, 20°C): | 8.8 |
| CCY-3-O3 | 6.00 % | Δε (1 kHz, 20°C): | -5.0 |
| CCY-4-O2 | 6.00 % | K₁ (20°C) [pN]: | 15.0 |
| CCY-5-O2 | 6.00 % | K₃ (20°C) [pN]: | 18.7 |
| CPY-2-O2 | 8.00 % | V₀ (20°C) [V]: | 2.04 |
| CPY-3-O2 | 8.50 % | γ₁ (20°C) [mPa·s]: | 280 |
| CC-4-V | 3.00 % | | |
| CCP-V-1 | 7.25 % | | |
| CCP-V2-1 | 3.25 % | | |
| CCPC-33 | 2.75 % | | |
| CY-5-O4 | 6.50 % | | |
| CC-5-V | 3.50 % | | |
| CCPC-34 | 2.00 % | | |
| CPTP-301 | 1.75 % | | |
| PTP-102 | 1.25 % | | |

**H17:** Nematic host-mixture

| | | | |
|---|---|---|---|
| CY-3-O2 | 6.00 % | Clearing point [°C]: | 102 |
| CY-3-O4 | 14.00 % | Δn (589 nm, 20°C): | 0.0898 |
| CCY-3-O2 | 4.00 % | ε_{∥} (1 kHz, 20°C): | 3.1 |
| CCY-3-O3 | 4.00 % | ε_{⊥} (1 kHz, 20°C): | 5.3 |
| CPY-2-O2 | 9.00 % | Δε (1 kHz, 20°C): | -2.1 |
| CCH-301 | 5.00 % | K₁ (20°C) [pN]: | 16.7 |
| CC-3-V1 | 8.00 % | K₃ (20°C) [pN]: | 18.3 |
| CC-5-V | 13.00 % | V₀ (20°C) [V]: | 3.11 |
| CCP-V-1 | 13.00 % | γ₁ (20°C) [mPa·s]: | 133 |
| CCP-V2-1 | 13.00 % | | |
| CH-33 | 3.00 % | | |
| CH-35 | 3.00 % | | |
| CP-43 | 3.00 % | | |
| CCPC-33 | 2.00 % | | |

**H18:** Nematic host-mixture

| | | | |
|---|---|---|---|
| CY-3-O2 | 2.00 % | Clearing point [°C]: | 100 |
| CY-3-O4 | 6.00 % | Δn (589 nm, 20°C): | 0.1508 |
| CY-5-O4 | 2.00 % | ε_{∥} (1 kHz, 20°C): | 3.3 |
| CCY-3-O2 | 1.50 % | ε_{⊥} (1 kHz, 20°C): | 5.3 |
| CPY-2-O2 | 9.00 % | Δε (1 kHz, 20°C): | -1.9 |
| CPY-3-O2 | 9.00 % | K₁ (20°C) [pN]: | 15.7 |
| PYP-2-3 | 10.00 % | K₃ (20°C) [pN]: | 16.4 |
| PYP-2-4 | 10.00 % | V₀ (20°C) [V]: | 3.06 |
| PTP-102 | 1.50 % | γ₁ (20°C) [mPa·s]: | 122 |
| CPTP-301 | 5.00 % | | |
| CPTP-302 | 4.00 % | | |
| PCH-301 | 5.50 % | | |
| CC-4-V | 14.00 % | | |
| CC-5-V | 8.00 % | | |
| CCP-V-1 | 7.50 % | | |
| BCH-32 | 5.00 % | | |

**H19:** Nematic host-mixture

| | | | |
|---|---|---|---|
| CY-3-O2 | 16.00 % | Clearing point [°C]: | 101 |
| CY-3-O4 | 20.00 % | Δn (589 nm, 20°C): | 0.0953 |
| CCY-3-O2 | 5.00 % | ε_{∥} (1 kHz, 20°C): | 3.9 |
| CCY-3-O3 | 5.00 % | ε_{⊥} (1 kHz, 20°C): | 9.4 |
| CCY-4-O2 | 5.00 % | Δε (1 kHz, 20°C): | -5.5 |
| CCY-5-O2 | 5.00 % | K₁ (20°C) [pN]: | 16.2 |
| CLY-2-O4 | 5.00 % | K₃ (20°C) [pN]: | 17.2 |
| CLY-3-O2 | 5.00 % | V₀ (20°C) [V]: | 1.85 |
| CLY-3-O3 | 5.00 % | γ₁ (20°C) [mPa·s]: | 276 |
| CPY-2-O2 | 5.00 % | | |
| CC-5-V | 9.00 % | | |
| CH-33 | 3.00 % | | |
| CH-35 | 3.00 % | | |
| CP-33 | 3.00 % | | |
| CCPC-33 | 3.00 % | | |
| CCPC-34 | 3.00 % | | |

**H20:** Nematic host-mixture

| | | | |
|---|---|---|---|
| CY-3-O2 | 8.00 % | Clearing point [°C]: | 100 |
| CY-3-O4 | 15.00 % | Δn (589 nm, 20°C): | 0.0948 |
| CY-5-O2 | 8.00 % | ε_{∥} (1 kHz, 20°C): | 3.9 |
| CY-5-O4 | 10.00 % | ε_{⊥} (1 kHz, 20°C): | 9.2 |
| CCY-3-O2 | 6.00 % | Δε (1 kHz, 20°C): | -5.3 |
| CCY-3-O3 | 6.00 % | K₁ (20°C) [pN]: | 14.6 |
| CCY-4-O2 | 6.00 % | K₃ (20°C) [pN]: | 17.3 |
| CCY-5-O2 | 6.00 % | V₀ (20°C) [V]: | 1.90 |
| CPY-2-O2 | 10.00 % | γ₁ (20°C) [mPa·s]: | 298 |
| CC-5-V | 7.00 % | | |
| CH-33 | 3.00 % | | |
| CH-35 | 3.00 % | | |
| CP-33 | 3.00 % | | |
| CCPC-33 | 3.00 % | | |
| CCPC-34 | 3.00 % | | |
| CCPC-35 | 3.00 % | | |

**H21:** Nematic host-mixture

| | | | |
|---|---|---|---|
| CY-3-O2 | 9.00 % | Clearing point [°C]: | 106 |
| CY-3-O4 | 9.00 % | Δn (589 nm, 20°C): | 0.1077 |
| CY-5-O2 | 12.00 % | ε_{∥} (1 kHz, 20°C): | 3.9 |
| CY-5-O4 | 11.00 % | ε_{⊥} (1 kHz, 20°C): | 9.5 |
| CCY-3-O2 | 6.00 % | Δε (1 kHz, 20°C): | -5.6 |
| CCY-3-O3 | 6.00 % | K₁ (20°C) [pN]: | 15.8 |
| CCY-4-O2 | 6.00 % | K₃ (20°C) [pN]: | 19.4 |
| CCY-5-O2 | 6.00 % | V₀ (20°C) [V]: | 1.96 |
| CPY-2-O2 | 8.00 % | γ₁ (20°C) [mPa·s]: | 341 |
| CPY-3-O2 | 7.00 % | | |
| CCP-V-1 | 11.00 % | | |
| CCPC-33 | 3.00 % | | |
| CCPC-34 | 3.00 % | | |
| CCPC-35 | 3.00 % | | |

**H22:** Nematic host-mixture

| | | | |
|---|---|---|---|
| CY-3-O2 | 8.00 % | Clearing point [°C]: | 98 |
| CY-3-O4 | 17.00 % | Δn (589 nm, 20°C): | 0.0914 |
| CY-5-O2 | 8.00 % | ε_{∥} (1 kHz, 20°C): | 3.8 |
| CCY-3-O2 | 8.00 % | ε_{⊥} (1 kHz, 20°C): | 8.9 |
| CCY-3-O3 | 8.00 % | Δε (1 kHz, 20°C): | -5.1 |
| CCY-4-O2 | 8.00 % | K₁ (20°C) [pN]: | 15.5 |
| CCY-5-O2 | 8.00 % | K₃ (20°C) [pN]: | 16.8 |
| CPY-2-O2 | 8.00 % | V₀ (20°C) [V]: | 1.92 |
| CCH-301 | 3.00 % | γ₁ (20°C) [mPa·s]: | 256 |
| CC-5-V | 10.00 % | | |
| CH-33 | 3.00 % | | |
| CH-35 | 3.00 % | | |
| CP-33 | 3.00 % | | |
| CP-35 | 2.00 % | | |
| CCPC-33 | 3.00 % | | |

**H23:** Nematic host-mixture

| | | | |
|---|---|---|---|
| CY-3-O2 | 7.00 % | Clearing point [°C]: | 105 |
| CY-3-O4 | 16.00 % | Δn (589 nm, 20°C): | 0.1024 |
| CCY-3-O2 | 6.00 % | ε_{∥} (1 kHz, 20°C): | 3.4 |
| CCY-3-O3 | 6.00 % | ε_{⊥} (1 kHz, 20°C): | 6.6 |
| CCY-4-O2 | 6.00 % | Δε (1 kHz, 20°C): | -3.2 |
| CPY-2-O2 | 7.50 % | K₁ (20°C) [pN]: | 18.4 |
| CPY-3-O2 | 7.50 % | K₃ (20°C) [pN]: | 21.2 |
| CC-3-V1 | 8.00 % | V₀ (20°C) [V]: | 2.79 |
| CC-5-V | 9.00 % | γ₁ (20°C) [mPa·s]: | 171 |
| CCP-V-1 | 13.50 % | | |
| CCP-V2-1 | 13.50 % | | |

**H24:** Nematic host-mixture

| | | | |
|---|---|---|---|
| CY-3-O2 | 9.00 % | Clearing point [°C]: | 106 |
| CY-3-O4 | 9.00 % | Δn (589 nm, 20°C): | 0.1077 |
| CY-5-O2 | 12.00 % | ε_{∥} (1 kHz, 20°C): | 3.9 |
| CY-5-O4 | 11.00 % | ε_{⊥} (1 kHz, 20°C): | 9.5 |
| CCY-3-O2 | 6.00 % | Δε (1 kHz, 20°C): | -5.6 |
| CCY-3-O3 | 6.00 % | K₁ (20°C) [pN]: | 15.8 |
| CCY-4-O2 | 6.00 % | K₃ (20°C) [pN]: | 19.4 |
| CCY-5-O2 | 6.00 % | V₀ (20°C) [V]: | 1.96 |
| CPY-2-O2 | 8.00 % | γ₁ (20°C) [mPa·s]: | 341 |
| CPY-3-O2 | 7.00 % | | |
| CCP-V-1 | 11.00 % | | |
| CCPC-33 | 3.00 % | | |
| CCPC-34 | 3.00 % | | |
| CCPC-35 | 3.00 % | | |

**H25:** Nematic host-mixture

| | | | |
|---|---|---|---|
| CY-3-O2 | 4.00 % | Clearing point [°C]: | 100 |
| CY-3-O4 | 12.50 % | Δn (589 nm, 20°C): | 0.1566 |
| CCY-3-O2 | 3.50 % | ε_{∥} (1 kHz, 20°C): | 3.6 |
| CPY-2-O2 | 12.00 % | ε_{⊥} (1 kHz, 20°C): | 6.6 |
| CPY-3-O2 | 12.00 % | Δε (1 kHz, 20°C): | -3.0 |
| PYP-2-3 | 11.00 % | K₁ (20°C) [pN]: | 15.5 |
| PYP-2-4 | 11.00 % | K₃ (20°C) [pN]: | 17.1 |
| CPTP-301 | 5.00 % | V₀ (20°C) [V]: | 2.50 |
| CPTP-302 | 5.00 % | γ₁ (20°C) [mPa·s]: | 202 |
| CC-4-V | 14.00 % | | |
| CC-5-V | 7.00 % | | |
| BCH-32 | 3.00 % | | |

**H26:** Nematic host-mixture

| | | | |
|---|---|---|---|
| CY-3-O2 | 8.00 % | Clearing point [°C]: | 98 |
| CY-3-O4 | 17.00 % | Δn (589 nm, 20°C): | 0.0914 |
| CY-5-O2 | 8.00 % | ε_{∥} (1 kHz, 20°C): | 3.8 |
| CCY-3-O2 | 8.00 % | ε_{⊥} (1 kHz, 20°C): | 8.9 |
| CCY-3-O3 | 8.00 % | Δε (1 kHz, 20°C): | -5.1 |
| CCY-4-O2 | 8.00 % | K₁ (20°C) [pN]: | 15.5 |
| CCY-5-O2 | 8.00 % | K₃ (20°C) [pN]: | 16.8 |
| CPY-2-O2 | 8.00 % | V₀ (20°C) [V]: | 1.92 |
| CCH-301 | 3.00 % | γ₁ (20°C) [mPa·s]: | 256 |
| CC-5-V | 10.00 % | | |
| CH-33 | 3.00 % | | |
| CH-35 | 3.00 % | | |
| CP-33 | 3.00 % | | |
| CP-35 | 2.00 % | | |
| CCPC-33 | 3.00 % | | |

**H27:** Nematic host-mixture

| | | | |
|---|---|---|---|
| CY-3-O2 | 6.00 % | Clearing point [°C]: | 101 |
| CY-3-O4 | 13.00 % | Δn (589 nm, 20°C): | 0.1483 |
| CCY-3-O2 | 6.00 % | ε_{∥} (1 kHz, 20°C): | 3.6 |
| CCY-3-O3 | 5.00 % | ε_{⊥} (1 kHz, 20°C): | 7.0 |
| CPY-2-O2 | 4.00 % | Δε (1 kHz, 20°C): | -3.4 |
| CC-4-V | 14.00 % | K₁ (20°C) [pN]: | 16.6 |
| CCP-V-1 | 10.00 % | K₃ (20°C) [pN]: | 18.8 |
| CCP-V2-1 | 11.00 % | V₀ (20°C) [V]: | 2.47 |
| CPTP-3-1 | 5.00 % | γ₁ (20°C) [mPa·s]: | |
| PTP-3O2FF | 8.00 % | | |
| PTP-5O2FF | 8.00 % | | |
| CPTP-3O2FF | 5.00 % | | |
| CPTP-5O2FF | 5.00 % | | |

**H28:** Nematic host-mixture

| | | | |
|---|---|---|---|
| CY-3-O2 | 3.00 % | Clearing point [°C]: | 102 |
| CY-3-O4 | 10.00 % | Δn (589 nm, 20°C): | 0.1602 |
| CCY-3-O2 | 6.00 % | ε_{∥} (1 kHz, 20°C): | 3.8 |
| CCY-3-O3 | 6.00 % | ε_{⊥} (1 kHz, 20°C): | 7.8 |
| CCY-4-O2 | 6.00 % | Δε (1 kHz, 20°C): | -4.0 |
| CPY-2-O2 | 5.00 % | K₁ (20°C) [pN]: | 16.8 |
| CC-4-V | 14.00 % | K₃ (20°C) [pN]: | 19.3 |
| CCP-V-1 | 5.00 % | V₀ (20°C) [V]: | 2.32 |
| CCP-V2-1 | 10.00 % | γ₁ (20°C) [mPa·s]: | 216 |
| PPTUI-3-2 | 3.00 % | | |
| PTP-3O2FF | 11.00 % | | |
| PTP-5O2FF | 11.00 % | | |
| CPTP-3O2FF | 5.00 % | | |
| CPTP-5O2FF | 5.00 % | | |

**H29:** Nematic host-mixture

| | | | |
|---|---|---|---|
| CY-3-O4 | 12.00 % | Clearing point [°C]: | 91 |
| PY-3-O2 | 6.50 % | Δn (589 nm, 20°C): | 0.2100 |
| CCY-3-O2 | 2.00 % | ε_{∥} (1 kHz, 20°C): | 4.0 |
| CPY-2-O2 | 3.50 % | ε_{⊥} (1 kHz, 20°C): | 7.1 |
| CC-4-V | 13.50 % | Δε (1 kHz, 20°C): | -3.1 |
| CC-5-V | 4.00 % | K₁ (20°C) [pN]: | 15.3 |
| PPTUI-3-2 | 15.00 % | K₃ (20°C) [pN]: | 19.3 |
| PPTUI-3-4 | 5.50 % | V₀ (20°C) [V]: | 2.64 |
| PTP-3O2FF | 12.00 % | γ₁ (20°C) [mPa·s]: | 211 |
| PTP-5O2FF | 12.00 % | | |
| CPTP-3O2FF | 5.00 % | | |
| CPTP-5O2FF | 5.00 % | | |
| CCPC-33 | 4.00 % | | |

**H30:** Nematic host-mixture

| | | | |
|---|---|---|---|
| CCPC-33 | 1.50 % | Clearing point [°C]: | 91 |
| CCPC-34 | 1.50 % | Δn (589 nm, 20°C): | 0.1029 |
| CCPC-35 | 1.50 % | ε_{∥} (1 kHz, 20°C): | 3.5 |
| CCY-2-1 | 4.50 % | ε_{⊥} (1 kHz, 20°C): | 7.2 |
| CCY-3-1 | 3.50 % | Δε (1 kHz, 20°C): | -3.7 |
| CCY-3-O2 | 7.00 % | K₁ (20°C) [pN]: | 15.5 |
| CCY-3-O3 | 8.00 % | K₃ (20°C) [pN]: | 15.2 |
| CCY-4-O2 | 7.00 % | V₀ (20°C) [V]: | 2.21 |
| CPY-2-O2 | 6.00 % | γ₁ (20°C) [mPa·s]: | 231 |
| CPY-3-O2 | 6.00 % | | |
| CY-3-O4 | 12.00 % | | |
| CY-5-O4 | 12.00 % | | |
| PCH-53 | 10.50 % | | |
| CCH-34 | 5.50 % | | |
| CCOC-3-3 | 2.00 % | | |
| CCOC-4-3 | 2.00 % | | |
| CCOC-3-5 | 2.00 % | | |
| CBC-33 | 1.50 % | | |
| PP-1-2V1 | 6.00 % | | |

**H31:** Nematic host-mixture

| | | | |
|---|---|---|---|
| CY-5-O2 | 7.00 % | Clearing point [°C]: | 95 |
| CPY-2-O2 | 11.00 % | Δn (589 nm, 20°C): | 0.1268 |
| CPY-3-O2 | 10.00 % | ε_{∥} (1 kHz, 20°C): | 4.0 |
| PYP-2-3 | 6.00 % | ε_{⊥} (1 kHz, 20°C): | 7.7 |
| PYP-2-4 | 7.00 % | Δε (1 kHz, 20°C): | -3.7 |
| CC-4-V | 17.00 % | K₁ (20°C) [pN]: | 15.5 |
| CC-3-V1 | 9.00 % | K₃ (20°C) [pN]: | 15.2.0 |
| CCH-34 | 5.00 % | V₀ (20°C) [V]: | 2.15 |
| CPYP-3-2 | 5.00 % | γ₁ (20°C) [mPa·s]: | 155 |
| CPYP-2-1 | 5.00 % | | |
| CK-3-F | 9.00 % | | |
| CK-5-F | 9.00 % | | |

**H32:** Nematic host-mixture

| | | | |
|---|---|---|---|
| CY-3-O4 | 18.00 % | Clearing point [°C]: | 96 |
| CY-5-O2 | 10.00 % | Δn (589 nm, 20°C): | 0.1275 |
| CCY-4-O2 | 10.00 % | ε_{∥} (1 kHz, 20°C): | 4.0 |
| CCY-3-O3 | 10.00 % | ε_{⊥} (1 kHz, 20°C): | 9.1 |
| CPY-2-O2 | 11.00 % | Δε (1 kHz, 20°C): | -5.1 |
| CPY-3-O2 | 12.00 % | K₁ (20°C) [pN]: | 14.4 |
| PYP-2-3 | 5.00 % | K₃ (20°C) [pN]: | 15.6 |
| PYP-2-4 | 4.00 % | V₀ (20°C) [V]: | 1.84 |
| CC-4-V | 13.00 % | γ₁ (20°C) [mPa·s]: | 253 |
| CPYP-3-2 | 7.00 % | | |

**H33:** Nematic host-mixture

| | | | |
|---|---|---|---|
| CC-3-V | 34.00 % | Clearing point [°C]: | 74.6 |
| CC-3-V1 | 10.00 % | Δn (589 nm, 20°C): | 0.1089 |
| CCY-3-O1 | 8.50 % | Δε (1 kHz, 20°C): | -3.2 |
| CCY-3-O2 | 3.50 % | ε_{⊥} (1 kHz, 20°C): | 6.8 |
| CLY-3-O2 | 10.00 % | ε_{∥} (1 kHz, 20°C): | 3.6 |
| CPY-3-O2 | 6.50 % | K₁ (20°C) [pN]: | 14.4 |
| PY-1-O4 | 9.00 % | K₃ (20°C) [pN]: | 15.7 |
| PY-3-O2 | 10.50 % | V₀ (20°C) [V]: | 2.33 |
| PGIY-2-O4 | 8.00 % | γ₁ (20°C) [mPa·s]: | 89 |

**H34:** Nematic host-mixture

| | | | |
|---|---|---|---|
| CC-3- | 34.00 % | Clearing point [°C]: | 75.1 |
| CC-3-V1 | 10.00 % | Δn (589 nm, 20°C): | 0.1087 |
| CCY-3-O1 | 8.50 % | Δε (1 kHz, 20°C): | -3.8 |
| CCY-3-O2 | 3.50 % | ε_{⊥} (1 kHz, 20°C): | 7.5 |
| CLY-3-O2 | 10.00 % | ε_{∥} (1 kHz, 20°C): | 3.7 |
| CPY-3-O2 | 6.50 % | γ₁ (20°C) [mPa·s]: | 100 |
| PY-1-O4 | 9.00 % | | |
| PY-3-O2 | 10.50 % | | |
| PGIY-2-O4 | 8.00 % | | |

### Use Examples

Together with the above host mixtures the following polymerizable stabilizers (polymerizable HALS) are used:

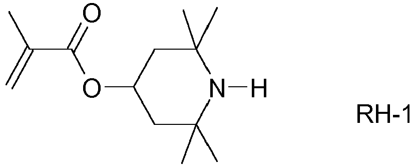

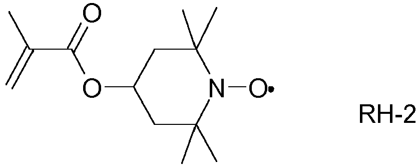

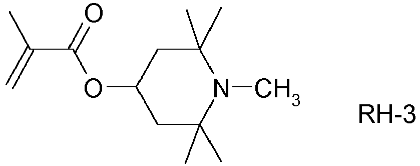

The following alignment additives are used: 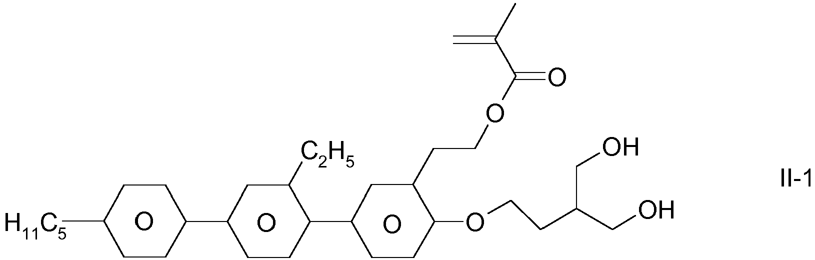 (prepared as described in EP 2918658) 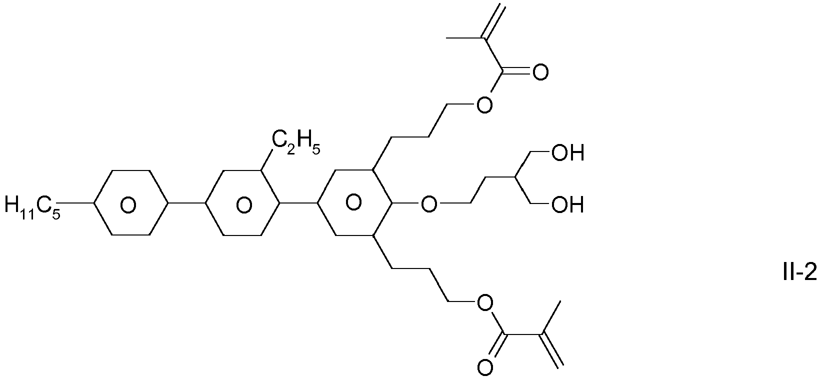 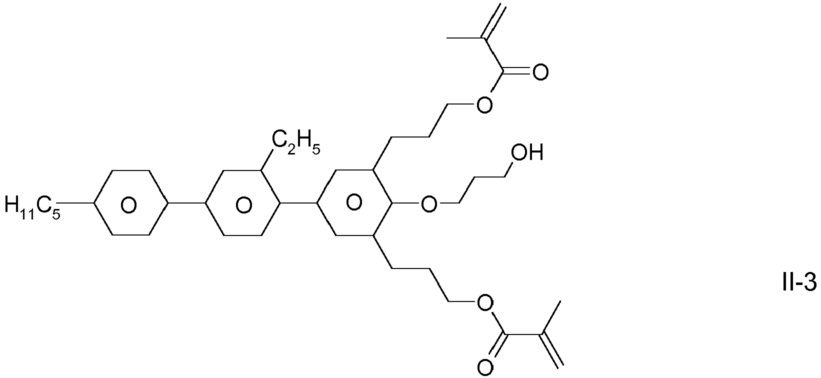 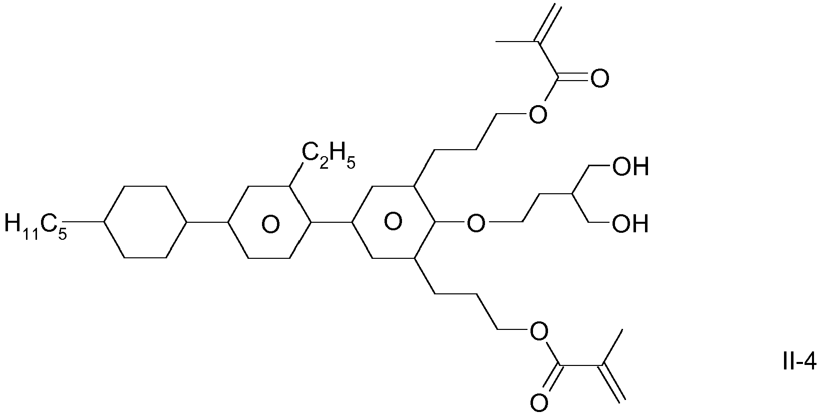 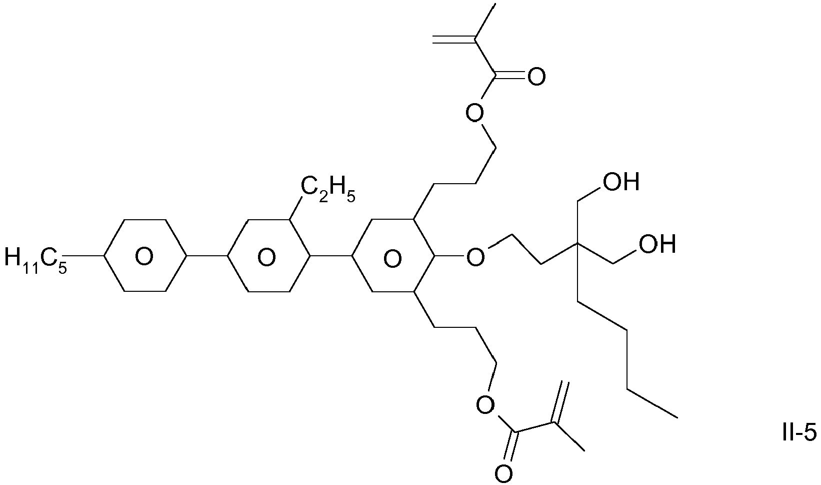 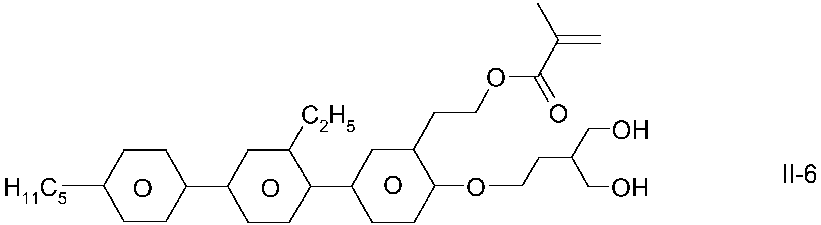 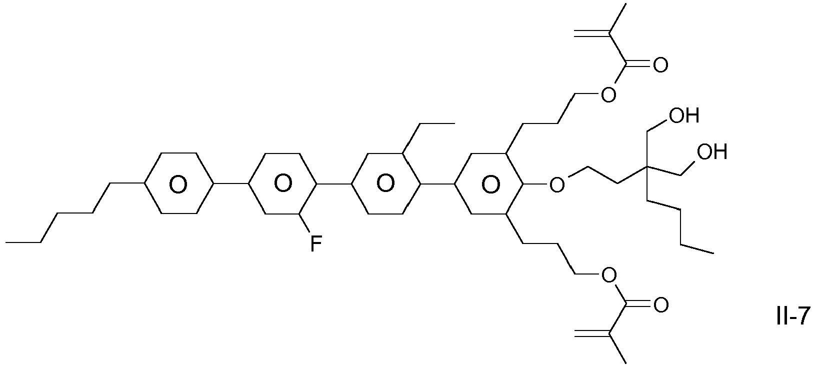 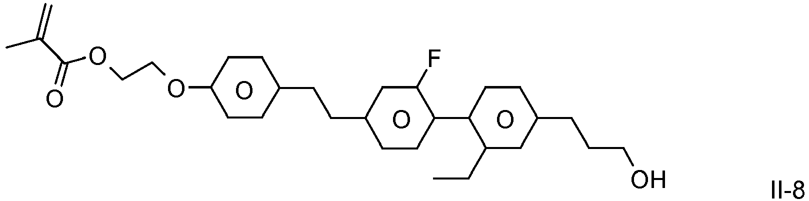 all prepared analogously to compound II-2.

### Comparative Mixture Examples C1, C2

A polymerisable base mixture C1 or C2 respectively is prepared by adding the direactive monomer RM-1 (see Table D above) in an amount of 0.3% by weight and an alignment additive of formula II-1 or II-2 respectively in an amount of 0.3% by weight to the nematic LC host mixture **H1.**

### Mixture Examples P1, P2

Polymerisable mixtures (P) according to the present invention are prepared by adding 100 ppm (0.01%) of the polymerisable compounds RH-1, RH-2 or RH-3 to the base mixtures C1 or C2 (the latter as described in Comparative Mixture Examples C1, C2).

The compositions of the resulting polymerisable mixtures are shown in Table 1 below.

**Table 1 - Polymerisable Mixture Composition:**

| Mix. No. | LC Host | RM-1 [%] | II-1 [%] | II-2 [%] | RH-1 [%] | RH-2 [%] |
|---|---|---|---|---|---|---|
| **C1** | H1 | 0.3 | 0.3 | - | - | - |
| **C2** | H1 | 0.3 | - | 0.3 | - | - |
| **P1.1** | H1 | 0.3 | 0.3 | - | 0.01 | - |
| **P1.2** | H1 | 0.3 | 0.3 | - | - | 0.01 |
| **P2.1** | H1 | 0.3 | - | 0.3 | 0.01 | - |
| **P2.2** | H1 | 0.3 | - | 0.3 | - | 0.01 |

The resulting mixtures are homogenised and filled into "alignment-free" test cells (cell thickness d ∼ 4.0 µm, ITO coating on both sides (structured ITO in case of a multi-domain switching), no alignment layer and no passivation layer).

The LC-mixtures show a spontaneous homeotropic (vertical) orientation with respect to the surface of the substrates. The orientation is stable to elevated temperatures until the clearing point of the respective host mixture H1. The resulting VA-cell can be reversibly switched. Crossed polarizers are applied to visualize the switching operation.

By using alignment additives like the compound of the formula II-1 to II-3, no alignment layer (e.g. no PI coating) is required for vertical orientation for any kind of display technologies.

### Polymer stabilization of the LC mixture

The resulting VA-cell is polymerized with UV-light in a two-step process (step 1: high-pressure mercury lamp, 50 mW/cm² for 120 s (6 J) for pre-tilt generation; step 2: Fluorescent lamp (Type C) for 80 min for polymer stabilization). The polymerizable derivative polymerizes and, consequently, the homeotropic self-orientation is stabilized and the tilt of the mixture is tuned. The resulting PSA-VA-cell can be reversibly switched even at high temperatures. The switching times are reduced compared to the non-polymerized system.

Additives like Irganox® 1076 (BASF) may be added (e.g. 0.001 %) for preventing spontaneous polymerization. UV-cut filter may be used during polymerization for preventing damage of the mixtures (e.g. 340 nm cut-filter).

As above for the non-polymerized cell, no alignment layer is required to maintain vertical alignment.

### VHR measurement: Effect of polymerizable HALS under backlight load

The voltage-holding ratio (VHR) of the polymer-stabilized test cells is measured before and after intensive light load (120 min). The irradiated light is equivalent to 500 h of a typical white CCFL backlight for displays.

| Mixture No. | **C1** | **P1.1** | **P1.2** | **C2** | **P2.1** |
|---|---|---|---|---|---|
| Backlight Load time / min | VHR / % at 60°C | | | | |
| 0 (BL*) | 98.4 | 97.6 | 97.3 | 98.3 | 98.0 |
| **120 (BL)** | **97.2** | **98.3** | **97.5** | **97.8** | **98.3** |

| | | | | | |
|---|---|---|---|---|---|
| *BL = Backlight Load test; 120 h accelerated LED-based backlight compares to 500 h of conventional CCFL backlight. | | | | | |

By using additives like the compound of the formula RH-1 in combination with **RM-1,** the VHR drop after backlight load is avoided. The test cells (P1.1, P2.1) show no decrease of VHR, while the comparative cells without any HALS additive (C1, C2) show a small VHR drop.

In addition, the reliability of a display improves by the addition of a reactive HALS additive. The display based on the mixture shows little image sticking.

### Comparative Mixture Examples C3

Based on the host mixture H7 a base mixture is composed by adding the direactive monomer RM-1 (see Table D above) in an amount of 0.3% by weight and an alignment additive of formula II-3 in an amount of 0.3% by weight. This mixture is used as a comparative mixture.

### Mixture Example P3

Polymerisable mixtures according to the present invention are prepared by adding 100 ppm (0.01%) of the polymerisable compounds RH-1, RH-2 or RH-3 to the base mixtures C3 as described in the Comparative Mixture Example C3 above.

The compositions of the polymerisable mixtures C3 and P3 are shown in Table 2 below.

**Table 2 - Polymerisable Mixture Composition:**

| Mix. No. | LC Host | RM-1 [%] | II-3 [%] | RH-1 [%] | RH-2 [%] | RH-3 [%] |
|---|---|---|---|---|---|---|
| **C3** | H7 | 0.3 | 0.3 | - | - | - |
| **P3.1** | H7 | 0.3 | 0.3 | 0.01 | - | - |
| **P3.2** | H7 | 0.3 | 0.3 | - | 0.01 | - |
| **P3.3** | H7 | 0.3 | 0.3 | - | - | 0.01 |

### VHR measurement: Effect of polymerizable HALS in polymer stabilization process

The voltage-holding ratio (VHR) of the polymer-stabilized test cells is measured before and after the polymer stabilization process.

| Example No. | **C3** | **P3.2** | **P3.3** |
|---|---|---|---|
| Two-step UV (120 min) | VHR / % at 60°C | | |
| before UV | 99.3 | 99.4 | 95.6 |
| **after UV** | **98.5** | **99.1** | **98.9** |

| | | | |
|---|---|---|---|
| *BL = Backlight Load test; 120 h accelerated LED-based backlight compares to 500 h of conventional CCFL backlight. | | | |

By using additives like the compound of the formula RH-2 or RH-3 in combination with **RM-1,** a VHR gain after the UV polymerization process is achieved. The test cells (P3.2, P3.3) show high values of the voltage-holding ratio VHR after the final UV curing step.

## Claims

1. Liquid-crystalline medium comprising a self-alignment additive for vertical alignment,
**characterized in that** it additionally comprises at least one polymerizable compound from the following formulae I-1 to I-45 or a polymer comprising its polymerized form, 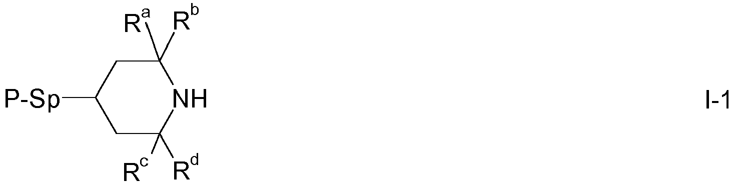 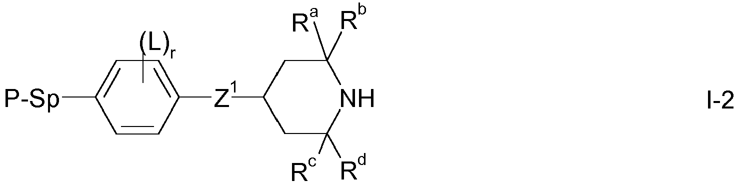 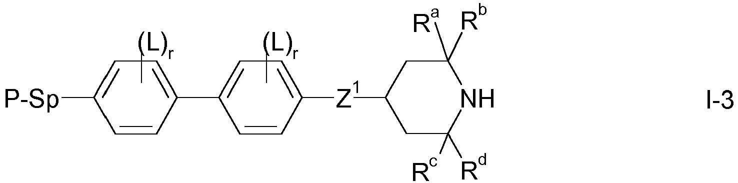 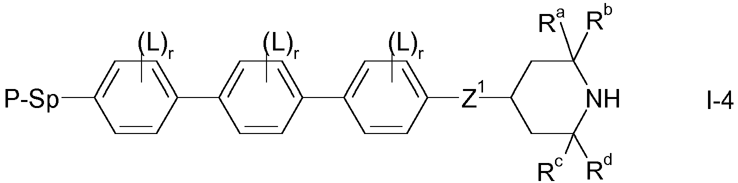 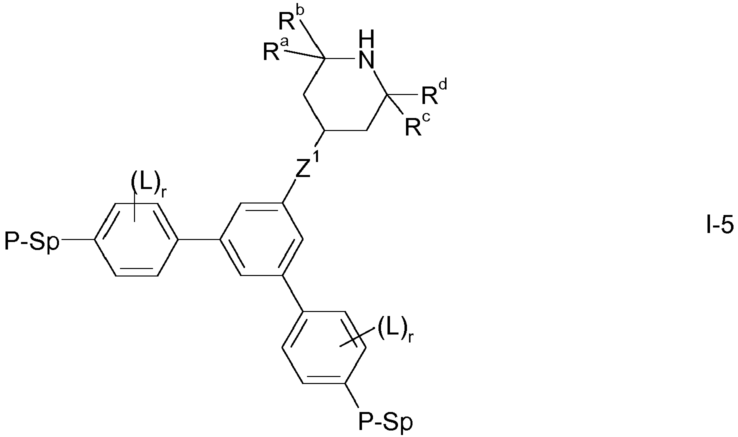 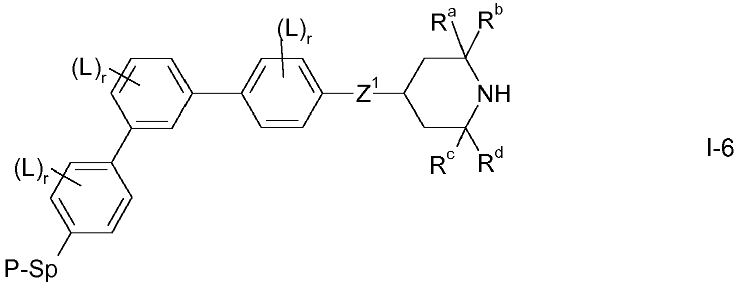 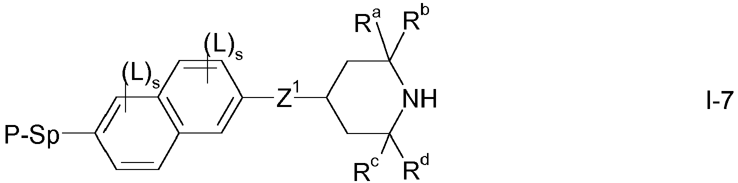 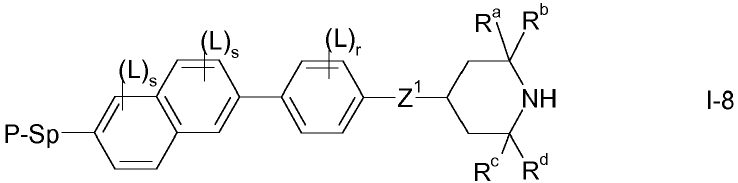 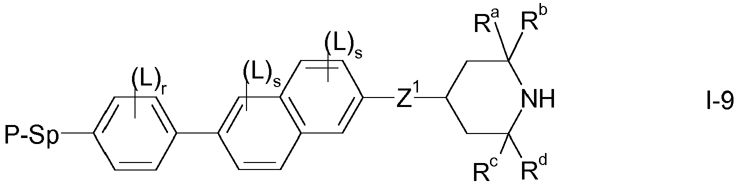 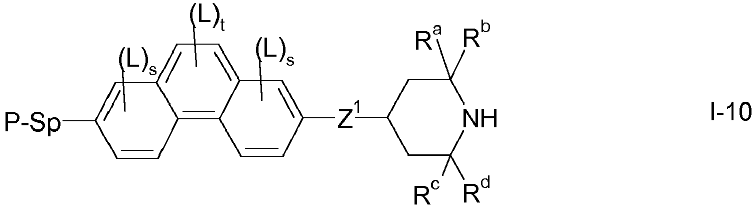 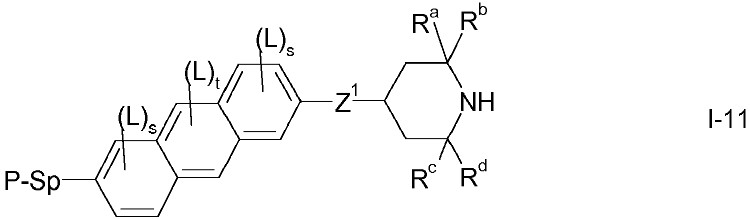 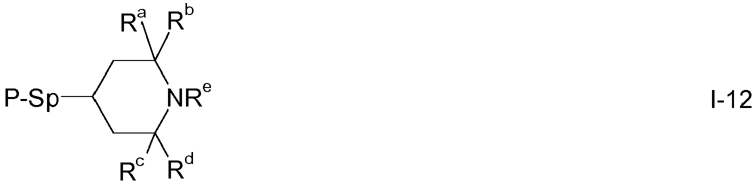 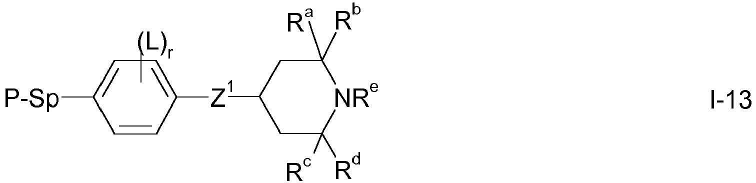 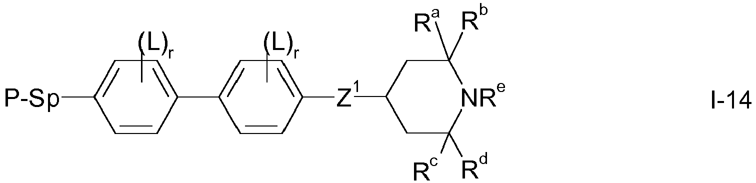 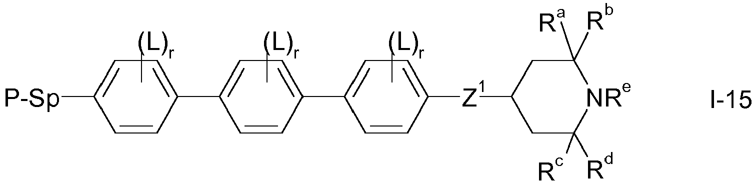 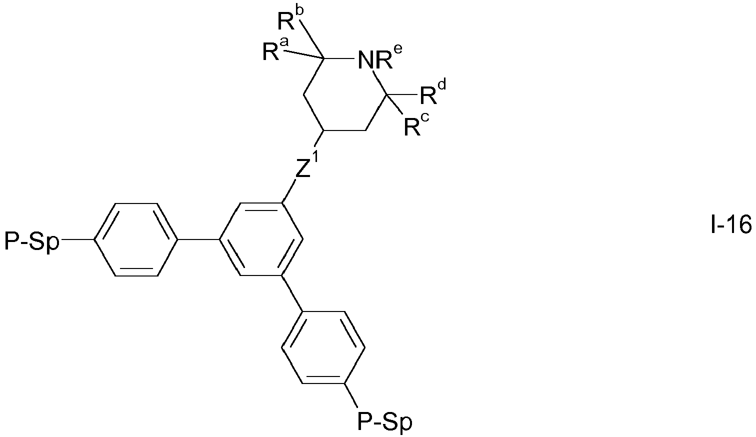 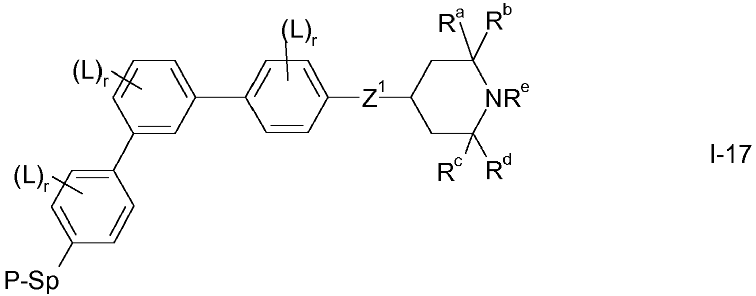 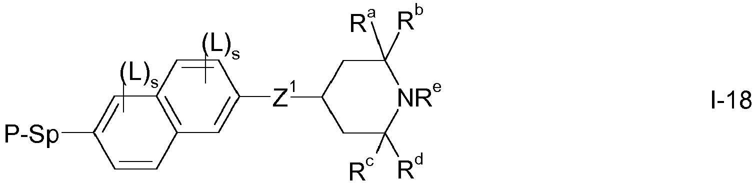 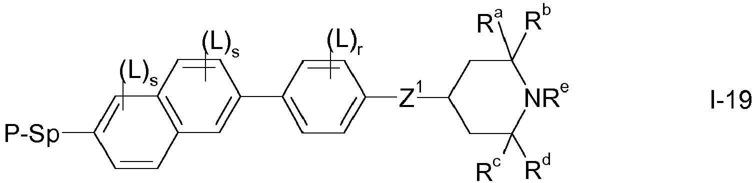 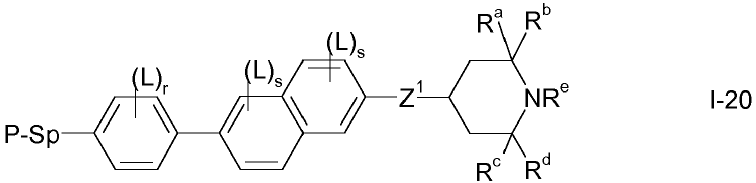 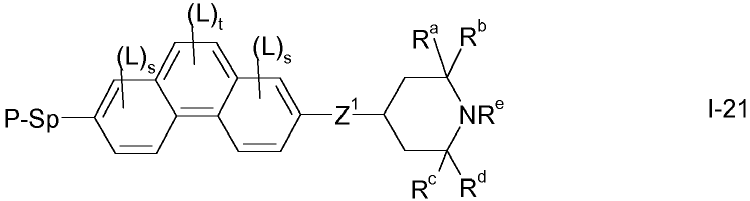 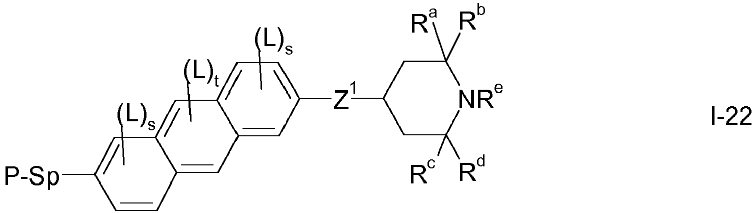 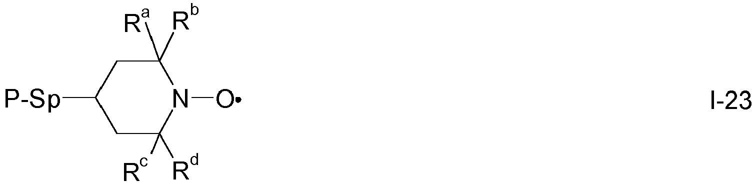 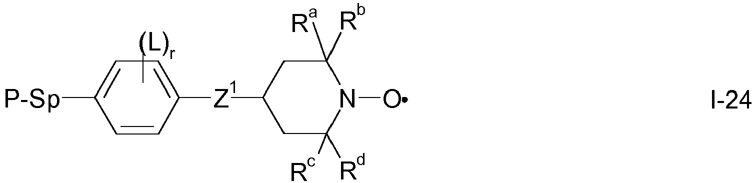 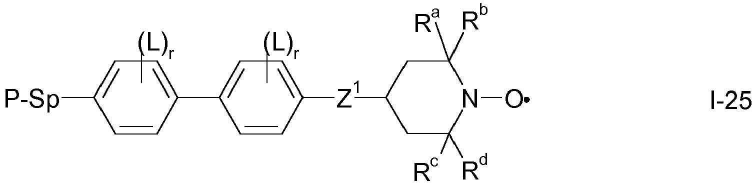 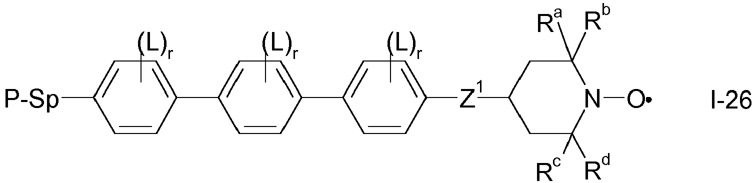 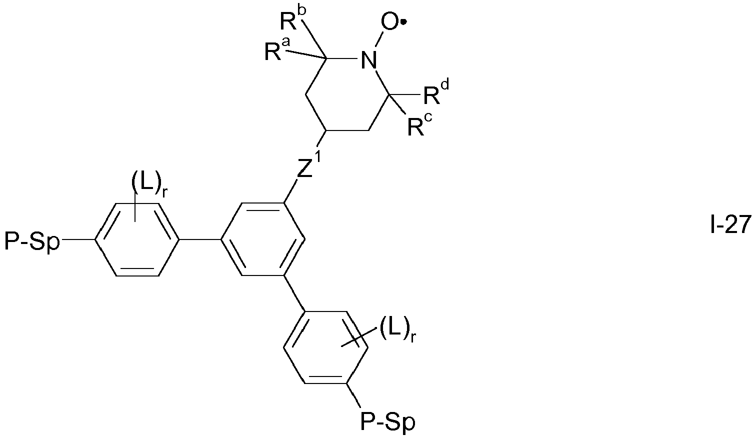 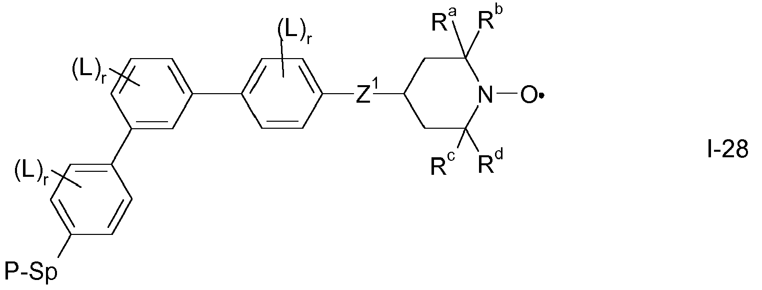 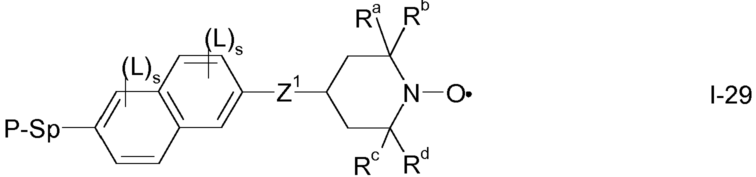 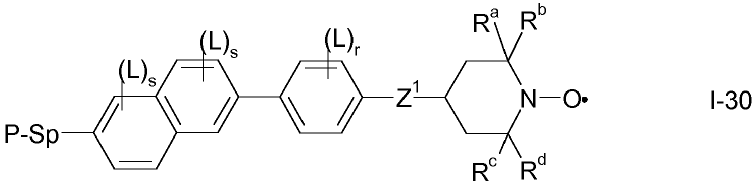 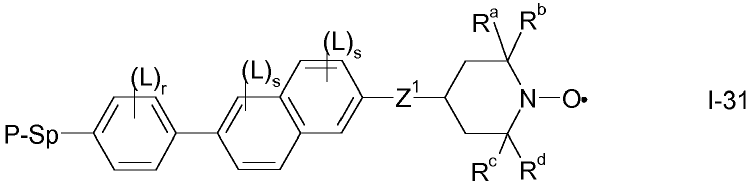 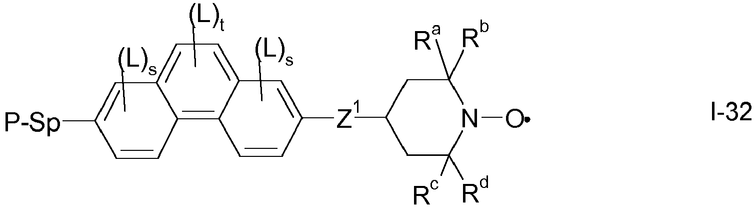 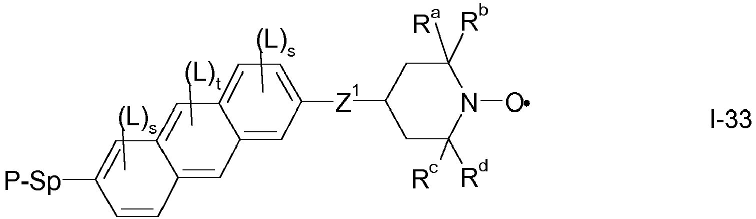 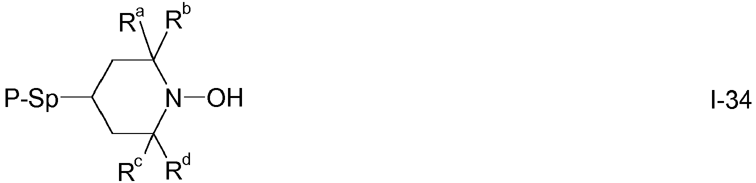 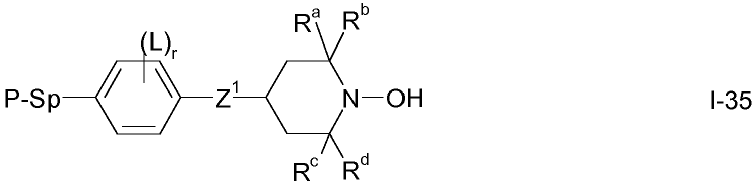 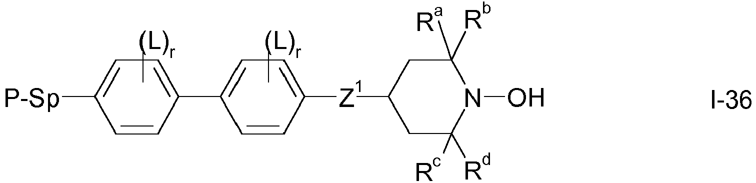 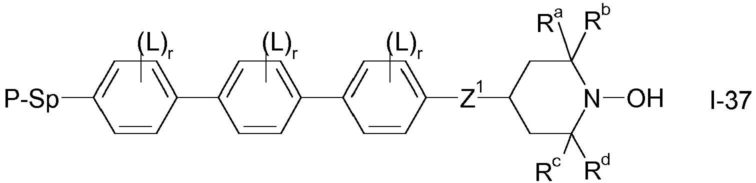 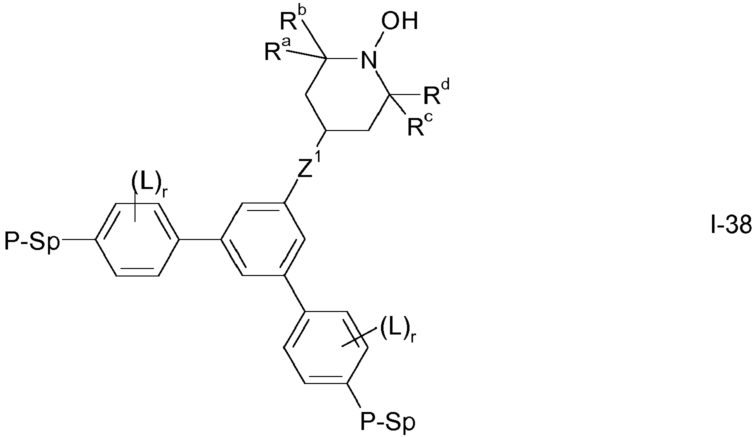 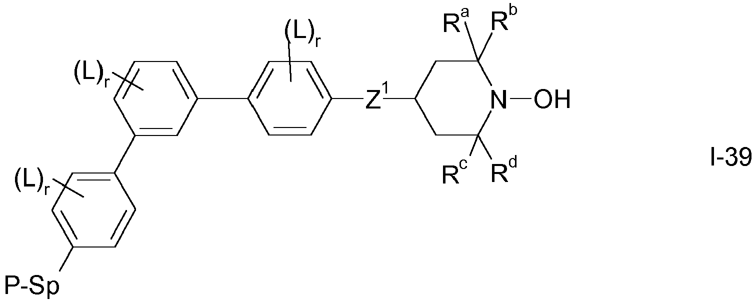 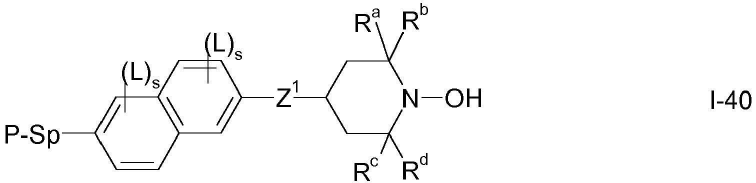 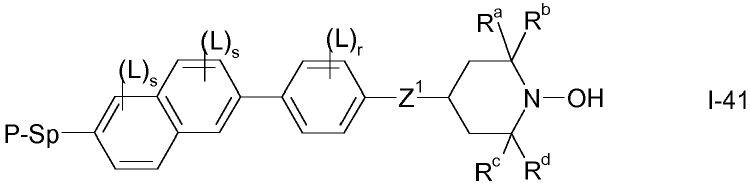 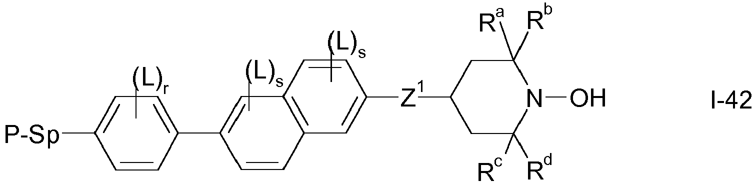 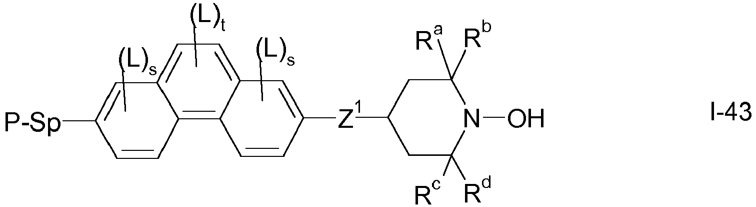 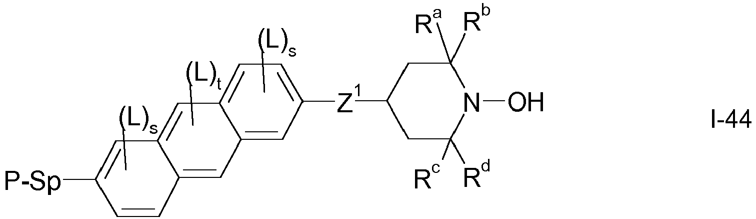 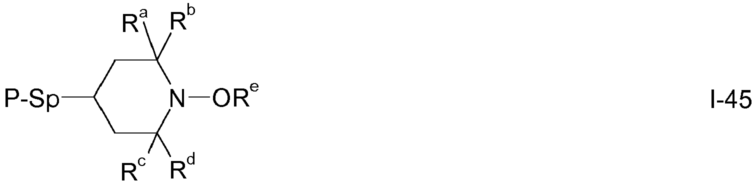 wherein the individual radicals, independently of each other, and on each occurrence identically or differently, have the following meanings
R^{a, b, c, d} straight chain or branched alkyl with 1 to 10 C atoms,
P vinyloxy, acrylate, methacrylate, fluoroacrylate, chloro-acrylate, oxetane or epoxy,
Sp a spacer group or a single bond,
Z¹ -O-, -S-, -CO-, -CO-O-, -O-CO-, -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰⁰R⁰⁰⁰-, or a single bond,
Z², Z³ -O-, -S-, -CO-, -CO-O-, -O-CO-, -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰⁰R⁰⁰⁰-, or a single bond,
R⁰⁰, R⁰⁰⁰ H or alkyl having 1 to 12 C atoms,
L P-Sp-, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl or P-Sp-,
n 1, 2, 3 or 4,
R^{e} is alkyl having 1 to 12 C atoms,
r is 0, 1, 2, 3 or 4 and
s is 0, 1, 2 or 3.

2. Liquid-crystalline medium according to Claim 1 **characterized in that** it comprises one or more additional polymerizable compounds or a polymer comprising their polymerized form.

3. Liquid-crystalline medium according to Claim 1 or 2 **characterized in that** the self-alignment additive for vertical alignment is of formula II
MES-R² II
in which
MES is a mesogenic group comprising one or more rings and optionally one or more polymerizable groups,
and
R² is a polar anchor group.

4. Liquid-crystalline medium according to one or more of Claims 1 to 3 **characterized in that** the self-alignment additive for vertical alignment is of formula IIa
R¹-[A²-Z²]ₘ-A¹-R^{a} (IIa)
in which
A¹, A² each, independently of one another, denote an aromatic, heteroaromatic, alicyclic or heterocyclic group, which may also contain fused rings, and which may also be mono- or polysubstituted by a group L or -Sp-P,
L in each case, independently of one another, denotes H, F, Cl, Br, I, -CN, -NO₂, -NCO, -NCS, -OCN, -SCN, -C(=O)N(R⁰)₂, -C(=O)R⁰, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F or Cl,
P denotes a polymerisable group,
Sp denotes a spacer group or a single bond,
Z² in each case, independently of one another, denotes a single bond, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH-(-Sp-P)-, -CH(-Sp-P)CH(-Sp-P)-,
n1 denotes 1, 2, 3 or 4,
m denotes 0, 1, 2, 3, 4, 5 or 6,
R⁰ in each case, independently of one another, denotes alkyl having 1 to 12 C atoms,
R⁰⁰ in each case, independently of one another, denotes H or alkyl having 1 to 12 C atoms,
R¹ independently of one another, denotes H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another and in which, in addition, one or more H atoms may be replaced by F or Cl, or a group -Sp-P,
and
R^{a} denotes a polar anchor group having at least one group selected from -OH, -NH₂, NHR¹¹, C(O)OH and -CHO, where R¹¹ denotes alkyl having 1 to 12 C atoms.

5. Liquid crystalline medium according to one or more of Claims 1 to 4 **characterized in that** the self-alignment additive has an anchor group R² or R^{a} which is selected from the formulae 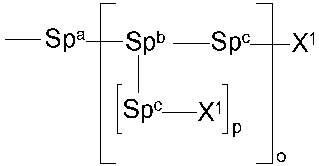 or 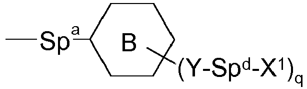 wherein
p denotes 1 or 2,
q denotes 2 or 3,
B denotes a substituted or unsubstituted ring system or condensed ring system,
Y independently of one another, denotes -O-, -S-, -C(O)-, -C(O)O-, -OC(O)-, -NR¹¹- or a single bond,
o denotes 0 or 1,
X¹ independently of one another, denotes H, alkyl, fluoroalkyl, OH, NH₂, NHR¹¹, NR¹¹₂, OR¹¹, C(O)OH, -CHO, where at least one group X¹ denotes a radical selected from -OH, -NH₂, NHR¹¹, C(O)OH and -CHO,
R¹¹ denotes alkyl having 1 to 12 C atoms,
Sp^{a}, Sp^{c}, Sp^{d} each, independently of one another, denote a spacer group or a single bond, and
Sp^{b} denotes a tri- or tetravalent group.

6. Liquid-crystalline medium according to one or more of Claims 1 to 5, **characterized in that** the self-alignment additive for vertical alignment is selected from the following group of compounds of the formulae II-A to II-D, 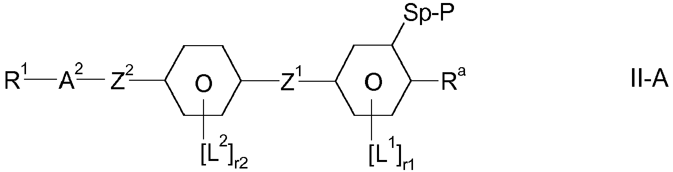 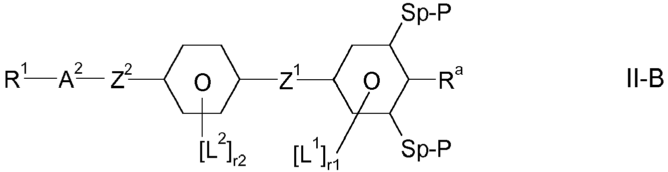 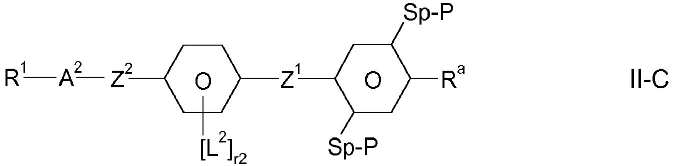 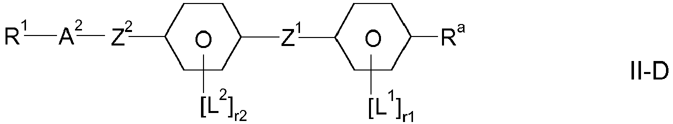 in which R¹, R^{a}, A², Z¹, Z², Sp, P have the meanings as defined for formula II in Claim 4,
L¹, L², are independently defined as L in Claim 4,
and
r1, r2 independently are 0, 1, 2, 3, or 4.

7. Liquid-crystalline medium according to any one of Claims 1 to 6, **characterized in that** in formula I Z¹, Z² and Z³ denote -CO-O-, -O-CO- or a single bond.

8. Liquid-crystalline medium according to any one of Claims 1 to 7, **characterized in that** in formula I P is acrylate or methacrylate.

9. Liquid-crystalline medium according to one or more of Claims 1 to 8 **characterized in that** the mixture contains 0.01 to 10 % by weight of the self-alignment additive based on the mixture as a whole.

10. Liquid-crystalline medium according to one or more of Claims 1 to 9 **characterized in that** it contains 0.001 to 0,01 % by weight of the compound of the formula I based on the medium as a whole.

11. Liquid-crystalline medium according to any of claims 1 to 10, **characterized in that** it additionally comprises one or more polymerisable compounds that are different from formula I or II.

12. Liquid-crystalline medium according to one or more of Claims 1 to 11 **characterized in that** the additional polymerisable compound is selected from the compounds of the formula M
R^{Ma}-A^{M1}-(Z^{M1}-A^{M2})ₘ₁-R^{Mb} M
in which the individual radicals have the following meanings:
R^{Ma} and R^{Mb} each, independently of one another, denote P, P-Sp-, H, halogen, SF₅, NO₂, an alkyl, alkenyl or alkynyl group, where at least one of the radicals R^{Ma} and R^{Mb} preferably denotes or contains a group P or P-Sp-,
P denotes a polymerisable group,
Sp denotes a spacer group or a single bond,
A^{M1} and A^{M2} each, independently of one another, denote an aromatic, heteroaromatic, alicyclic or heterocyclic group, preferably having 4 to 25 ring atoms, preferably C atoms, which may also encompass or contain fused rings, and which may optionally be mono- or polysubstituted by L,
L denotes P, P-Sp-, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-, preferably P, P-Sp-, H, halogen, SF₅, NO₂, an alkyl, alkenyl or alkynyl group,
Y¹ denotes halogen,
Z^{M1} denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ or a single bond,
R⁰ and R⁰⁰ each, independently of one another, denote H or alkyl having 1 to 12 C atoms,
R^{x} denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms,
m1 denotes 0, 1, 2, 3 or 4, and
n1 denotes 1, 2, 3 or 4, where at least one, preferably one, two or three, particularly preferably one or two, from the group R^{Ma}, R^{Mb} and the substituents L present denotes a group P or P-Sp- or contains at least one group P or P-Sp-.

13. Liquid-crystalline medium according to one or more of Claims 1 to 12, **characterised in that** it additionally contains one or more compounds selected from the group of the compounds of the formulae CY, PY and PYP 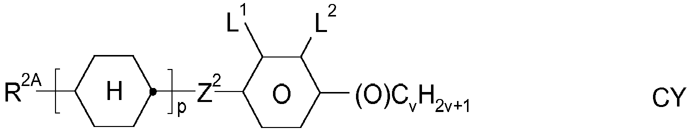 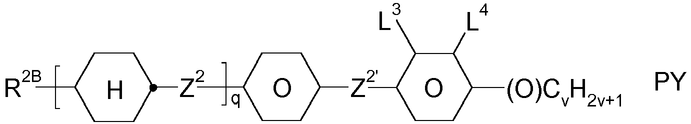 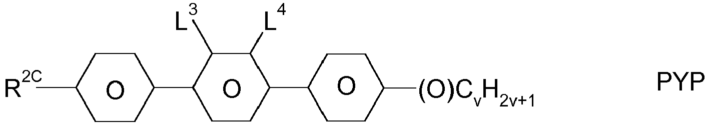 in which
R^{2A}, R^{2B} and R^{2C} each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 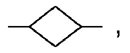 -C≡C-, -CF₂O-, -OCF₂-, -OC-O- o r -O-CO- in such a way that O atoms are not linked directly to one another,
L¹⁻⁴ each, independently of one another, denote F, CI, CF₃ or OCHF₂
Z² and Z^{2'} each, independently of one another, denote a single bond, -CH₂CH₂-, -CH=CH-, -CF₂O-, -OCF₂-, -CH₂O-, -O CH₂-, -COO-, -OCO-, -C₂F₄-, -CF=CF-, -CH=CHCH₂O-, (O)CᵥH₂ᵥ₊₁, denotes OCᵥH₂ᵥ₊₁ or CᵥH₂ᵥ₊₁
p denotes 0, 1 or 2,
q denotes 0 or 1, and
v denotes 1 to 6.

14. Liquid-crystalline medium according to any one of Claims 1 to 13, **characterized in that** it comprises one or more non-polymerizable alkenyl compounds.

15. Liquid-crystalline medium according to any one of Claims 1 to 14, **characterized in that** it comprises one or more alkenyl compounds selected from the following formulae: 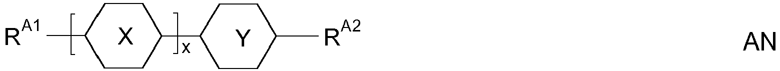 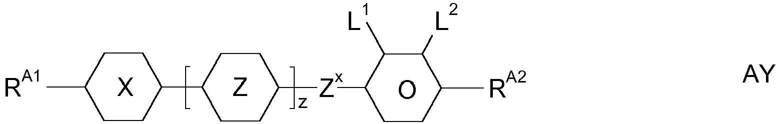 in which the individual radicals, on each occurrence identically or differently, each, independently of one another, have the following meaning: 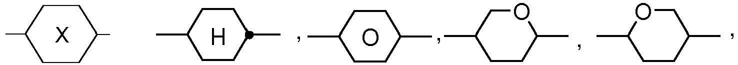 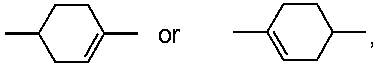 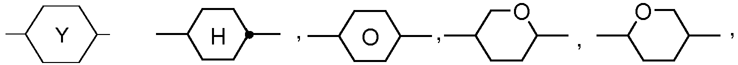 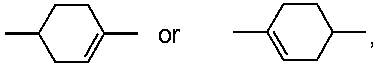 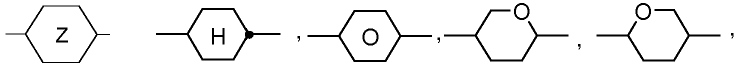 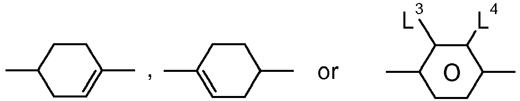
R^{A1} alkenyl having 2 to 9 C atoms or, if at least one of the rings X, Y and Z denotes cyclohexenyl, also one of the meanings of R^{A2},
R^{A2} alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
Z^{x} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond,
L¹⁻² each, independently of one another, H, F, CI, OCF₃, CF₃, CH₃, CH₂F or CHF₂H, preferably H, F or CI, wherein at least L¹ or L² is not H,
L³⁻⁴ each, independently of one another, H, F, CI, OCF₃, CF₃, CH₃, CH₂F or CHF₂H, preferably H, F or CI,
x 1 or 2,
z 0 or 1.

16. Liquid-crystalline medium according to one or more of Claims 1 to 15, **characterised in that** it additionally contains one or more compounds of the formula III, 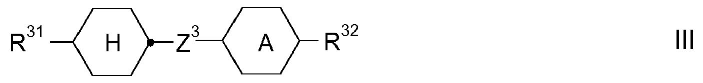 in which
R³¹ and R³² each, independently of one another, denote a straight-chain alkyl, alkoxyalkyl or alkoxy radical having up to 12 C atoms, 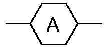 denotes 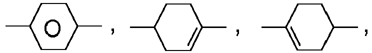 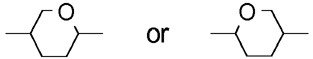
Z³ denotes a single bond, -CH₂CH₂-, -CH=CH-, -CF₂O-, -OCF₂-, -CH₂O-, -O CH₂-, -COO-, -OCO-, -C₂F₄-, -C₄H₈-, -CF=CF-.

17. Liquid-crystalline medium according to any one of Claims 1 to 16, **characterized in that** the polymerisable compounds are polymerised.

18. Process for the preparation of a liquid-crystalline medium according to one or more of Claims 1 to 17, **characterised in that** at least one self-aligning additive is mixed with at least two liquid-crystalline compounds and at least one compound of formula I, and optionally with at least one polymerisable compound and optionally one or more additional additives.

19. Use of the liquid-crystalline medium according to one or more of Claims 1 to 17 in electro-optical displays.

20. Use of the liquid-crystalline medium according to Claim 19 in electro-optical displays for self-aligning VA mode.

21. Electro-optical display having active-matrix or passive-matrix addressing, **characterised in that** it contains, as dielectric, a liquid-crystalline medium according to one or more of Claims 1 to 17.

22. Electro-optical display according to Claim 21, **characterised in that** it comprises a polymer-stabilized liquid-crystalline medium.

23. The display of Claims 21 or 22, **characterized in that** it comprises two substrates, at least one which is transparent to light, an electrode provided on each substrate or two electrodes provided on only one of the substrates, and located between the substrates a layer of a liquid-crystalline medium as defined in any one of Claims 1 to 18, comprising one or more polymerisable compounds, wherein the polymerisable compounds are polymerised.

## Patentansprüche

1. Flüssigkristallines Medium enthaltend ein Selbstorientierungsadditiv zur vertikalen Orientierung,
**dadurch gekennzeichnet, dass** es zusätzlich mindestens eine polymerisierbare Verbindung von den folgenden Formeln I-1 bis I-45 oder ein ihre polymerisierte Form enthaltendes Polymer 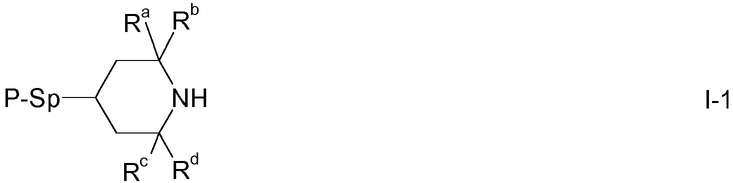 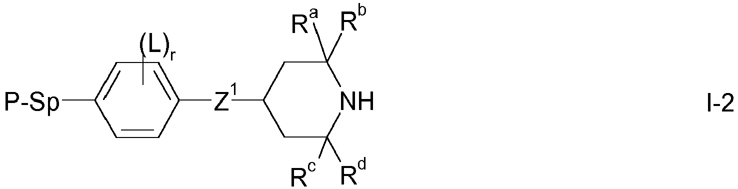 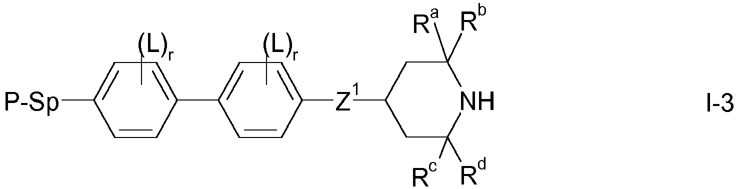 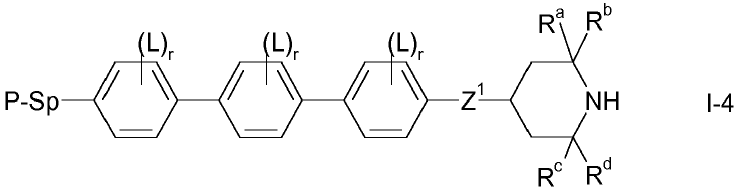 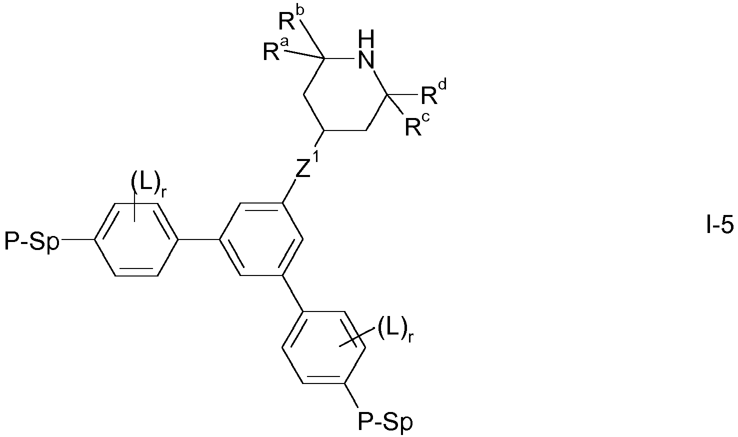 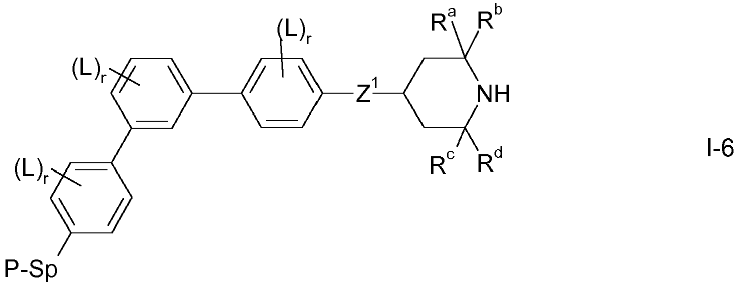 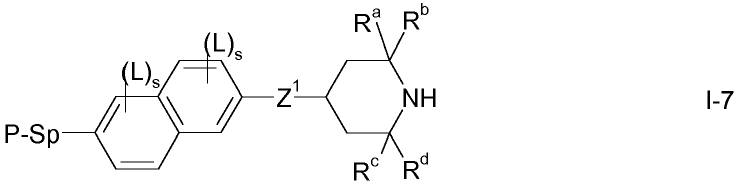 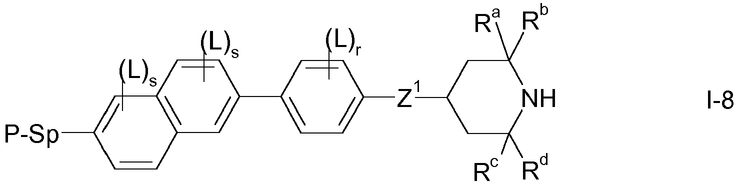 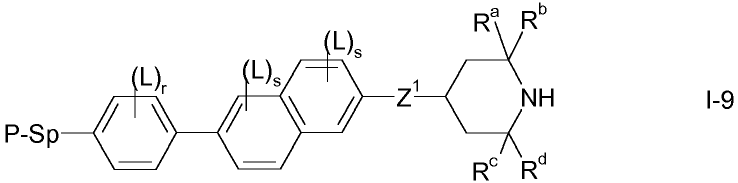 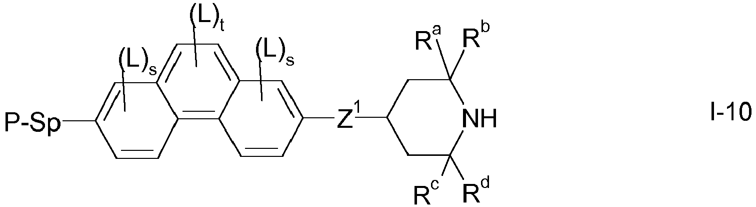 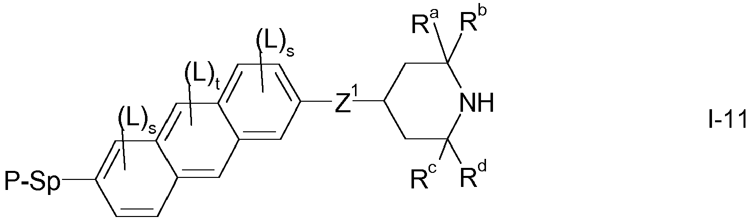 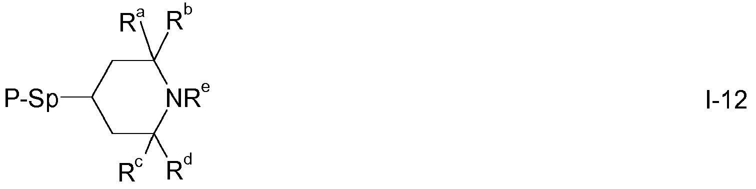 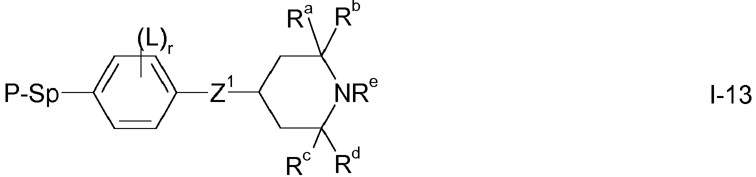 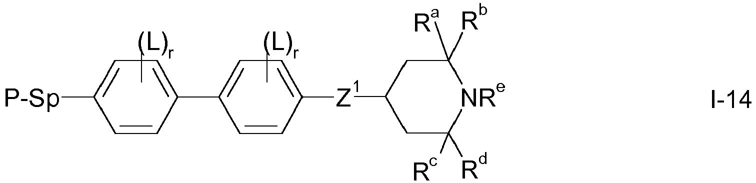 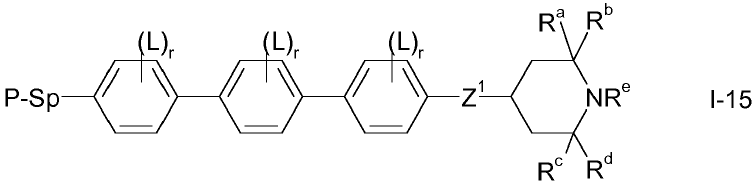 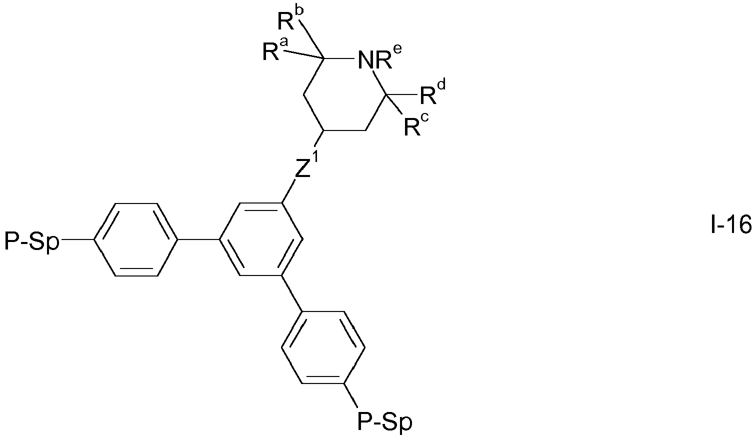 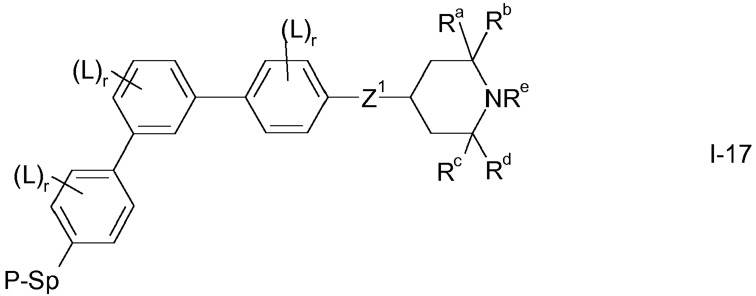 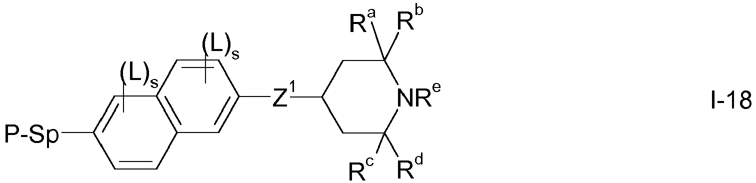 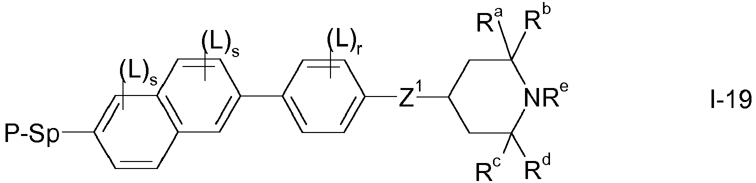 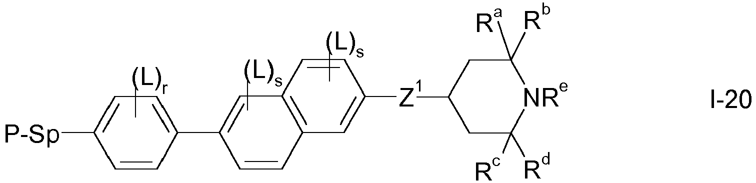 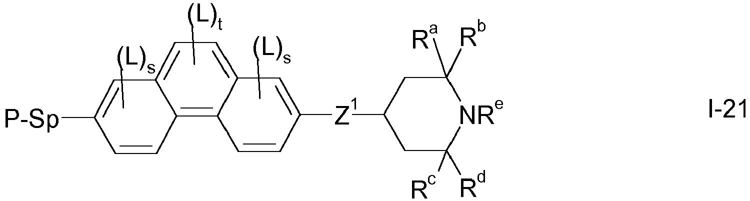 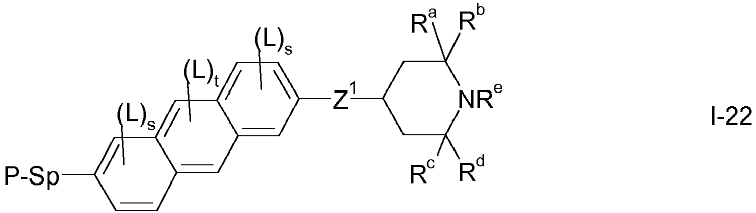 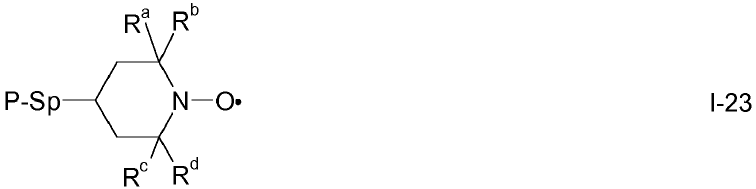 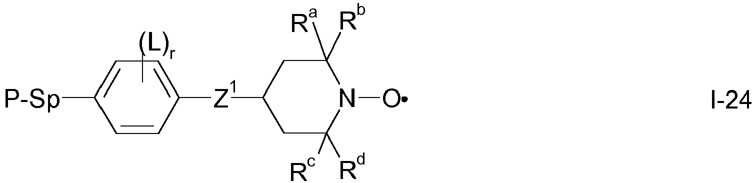 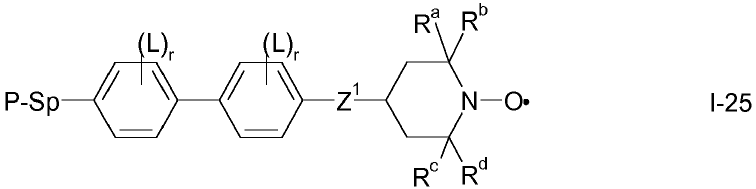 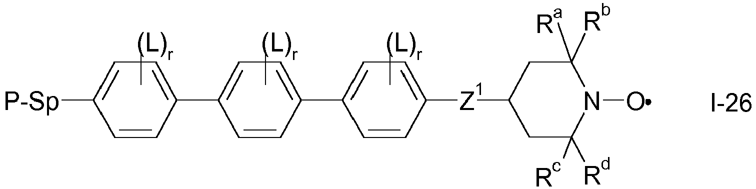 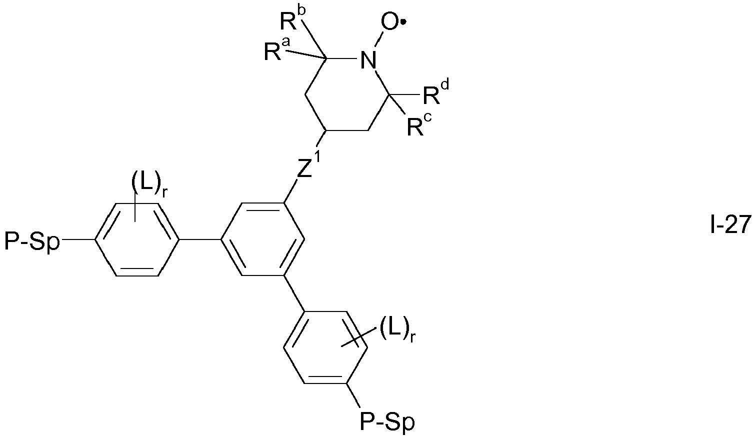 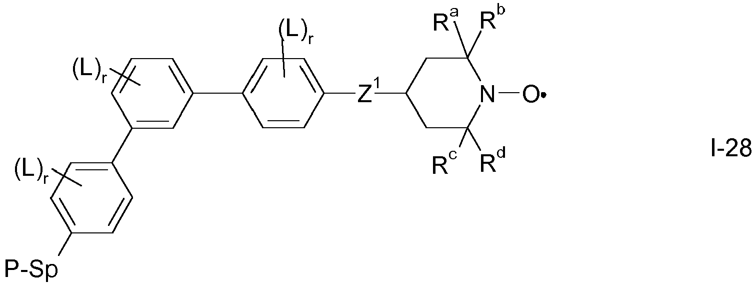 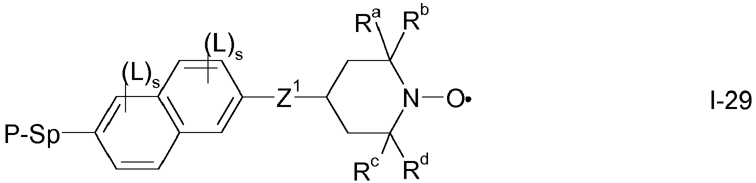 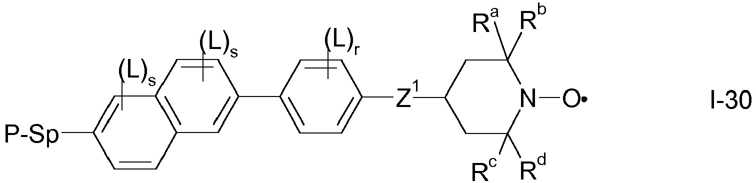 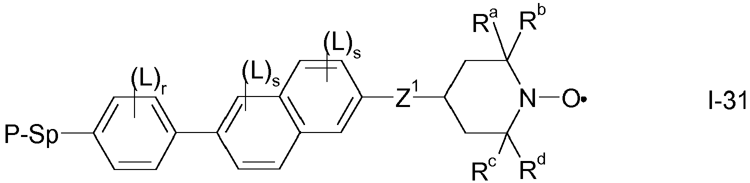 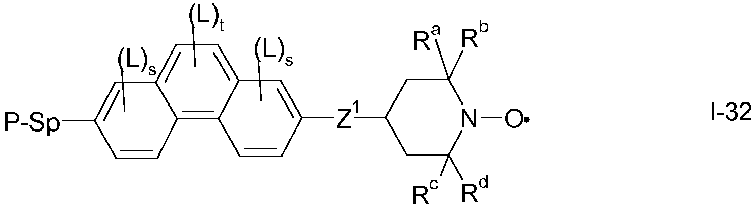 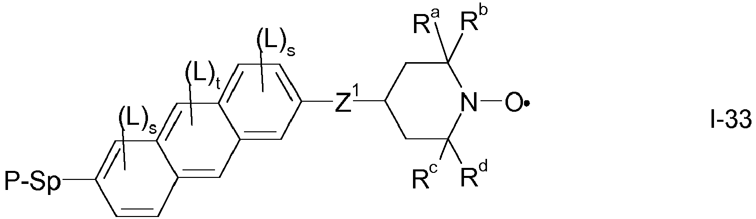 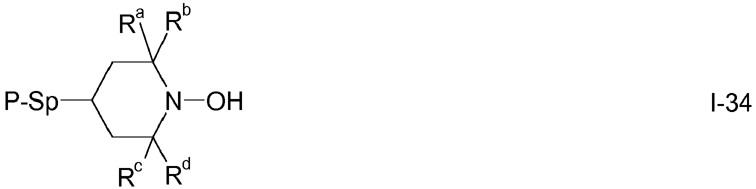 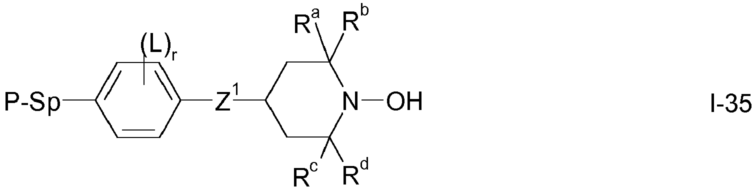 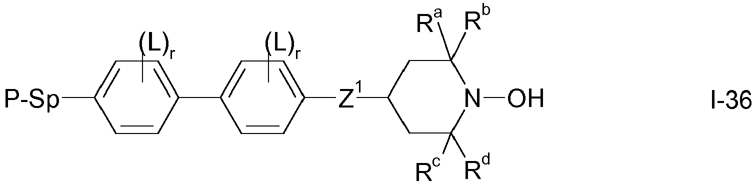 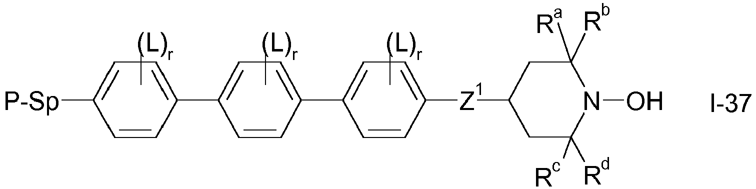 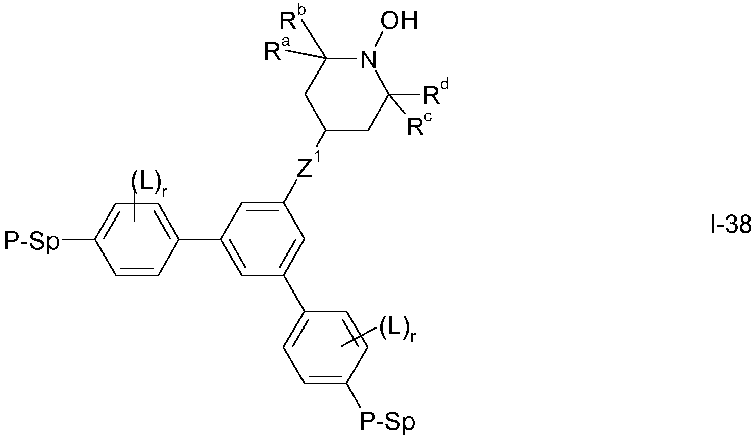 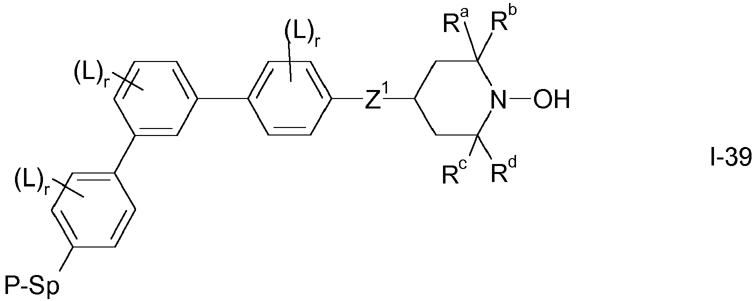 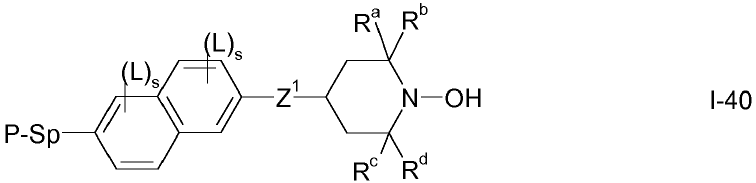 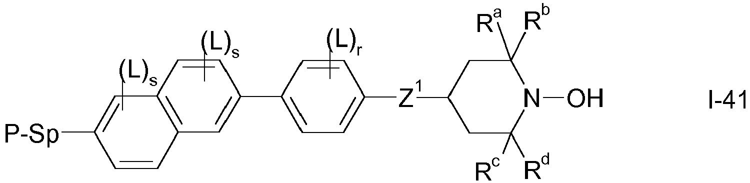 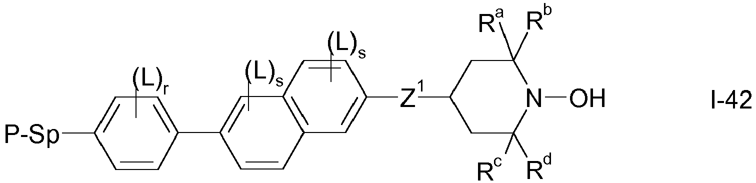 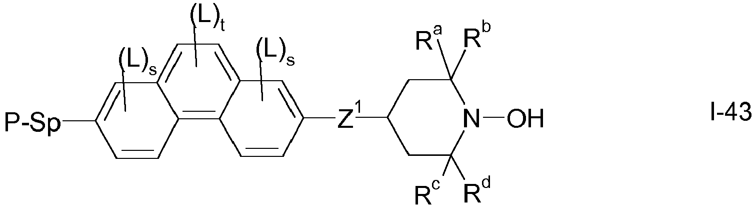 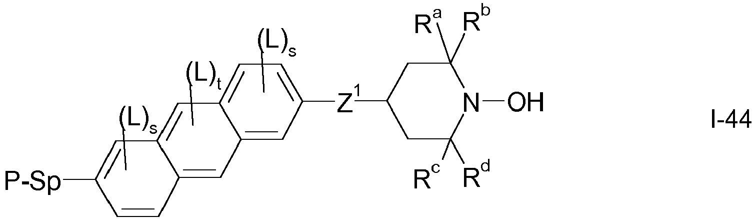 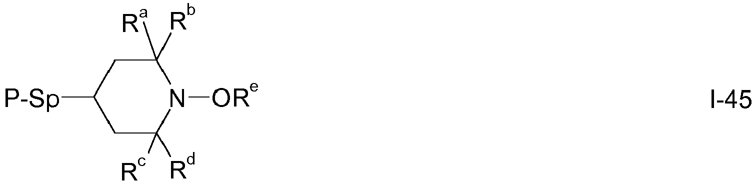 enthält, bei denen die einzelnen Reste unabhängig voneinander und bei jedem Auftreten gleich oder verschieden die folgenden Bedeutungen besitzen
R^{a, b, c, d} geradkettiges oder verzweigtes Alkyl mit 1 bis 10 C-Atomen,
P Vinyloxy, Acrylat, Methacrylat, Fluoracrylat, Chloracrylat, Oxetan oder Epoxy,
Sp eine Spacergruppe oder eine Einfachbindung,
Z¹ -O-, -S-, -CO-, -CO-O-, -O-CO-, -O-CO-O- , -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰⁰R⁰⁰⁰- oder eine Einfachbindung,
Z², Z³ -O-, -S-, -CO-, -CO-O-, -O-CO-, -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰⁰R⁰⁰⁰- oder eine Einfachbindung,
R⁰⁰, R⁰⁰⁰ H oder Alkyl mit 1 bis 12 C-Atomen,
L P-Sp-, F, Cl, CN oder geradkettiges, verzweigtes oder cyclisches Alkyl mit 1 bis 25 C-Atomen, bei dem eine oder mehrere nicht benachbarte CH₂-Gruppen gegebenenfalls so durch -O-, -S-, -CO-, -CO-O-, -O-CO-, -O-CO-O- ersetzt sind, dass O- und/oder S-Atome nicht direkt miteinander verknüpft sind, und bei dem gegebenenfalls ein oder mehrere H-Atome jeweils durch F, Cl oder P-Sp- ersetzt sind,
n 1, 2, 3 oder 4,
R⁰ ist Alkyl mit 1 bis 12 C-Atomen,
r ist 0, 1, 2, 3 oder 4 und
s ist 0, 1, 2 oder 3.

2. Flüssigkristallines Medium nach Anspruch 1, **dadurch gekennzeichnet, dass** es eine oder mehrere zusätzliche polymerisierbare Verbindungen oder ein ihre polymerisierte Form enthaltendes Polymer enthält.

3. Flüssigkristallines Medium nach Anspruch 1 oder 2, **dadurch gekennzeichnet, dass** das Selbstorientierungsadditiv zur vertikalen Orientierung die Formel II
MES-R² II
aufweist, worin
MES eine mesogene Gruppe ist, die einen oder mehrere Ringe und gegebenenfalls eine oder mehrere polymerisierbare Gruppen enthält,
und
R² eine polare Ankergruppe ist.

4. Flüssigkristallines Medium nach einem oder mehreren der Ansprüche 1 bis 3, **dadurch gekennzeichnet, dass** das Selbstorientierungsadditiv zur vertikalen Orientierung die Formel IIa
R¹-[A²-Z²]ₘ-A¹-R^{a} (IIa)
aufweist, worin
A¹, A² jeweils unabhängig voneinander eine aromatische, heteroaromatische, alicyclische oder heterocyclische Gruppe bedeuten, die auch anellierte Ringe enthalten kann und die auch ein- oder mehrfach durch eine Gruppe L oder -Sp-P substituiert sein kann,
L jeweils unabhängig voneinander H, F, Cl, Br, I, -CN, -NO₂, -NCO, -NCS, -OCN, -SCN, -C(=O)N(R⁰)₂, -C(=O)R⁰, gegebenenfalls substituiertes Silyl, gegebenenfalls substituiertes Aryl oder Cycloalkyl mit 3 bis 20 C-Atomen oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen bedeutet, worin zusätzlich ein oder mehrere H-Atome durch F oder Cl ersetzt sein können,
P eine polymerisierbare Gruppe bedeutet,
Sp eine Spacergruppe oder eine Einfachbindung bedeutet,
Z² jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)- bedeutet,
n1 1, 2, 3 oder 4 bedeutet,
m 0, 1, 2, 3, 4, 5 oder 6 bedeutet,
R⁰ jeweils unabhängig voneinander Alkyl mit 1 bis 12 C-Atomen bedeutet,
R⁰⁰ jeweils unabhängig voneinander H oder Alkyl mit 1 bis 12 C-Atomen bedeutet,
R¹ unabhängig voneinander H, Halogen, geradkettiges, verzweigtes oder cyclisches Alkyl mit 1 bis 25 C-Atomen, worin zusätzlich eine oder mehrere nicht benachbarte CH₂-Gruppen so durch -O-, -S-, -CO-, -CO-O-, -O-CO-, -O-CO-O- ersetzt sein können, dass O- und/oder S-Atome nicht direkt miteinander verknüpft sind, und worin zusätzlich ein oder mehrere H-Atome durch F oder Cl ersetzt sein können, oder eine Gruppe -Sp-P bedeutet,
und
R^{a} eine polare Ankergruppe mit mindestens einer aus -OH, -NH₂, NHR¹¹, C(O)OH und -CHO ausgewählten Gruppe bedeutet, wobei R¹¹ Alkyl mit 1 bis 12 C-Atomen bedeutet.

5. Flüssigkristallines Medium nach einem oder mehreren der Ansprüche 1 bis 4, **dadurch gekennzeichnet, dass** das Selbstorientierungsadditiv eine Ankergruppe R² oder R^{a} aufweist, die aus den Formeln 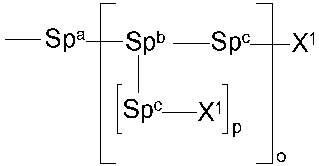 oder 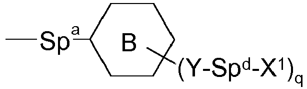 ausgewählt ist, bei denen
p 1 oder 2 bedeutet,
q 2 oder 3 bedeutet,
B ein substituiertes oder unsubstituiertes Ringsystem oder kondensiertes Ringsystem bedeutet,
Y unabhängig voneinander -O-, -S-, -C(O)-, -C(O)O-, -OC(O)-, -NR¹¹- oder eine Einfachbindung bedeutet,
o 0 oder 1 bedeutet,
X¹ unabhängig voneinander H, Alkyl, Fluoralkyl, OH, NH₂, NHR¹¹, NR¹¹₂, OR¹¹, C(O)OH, -CHO bedeutet, wobei mindestens eine Gruppe X¹ einen aus -OH, -NH₂, NHR¹¹, C(O)OH und -CHO ausgewählten Rest bedeutet,
R¹¹ Alkyl mit 1 bis 12 C-Atomen bedeutet,
Sp^{a}, Sp^{c}, Sp^{d} jeweils unabhängig voneinander eine Spacergruppe oder eine Einfachbindung bedeuten, und
Sp^{b} eine drei- oder vierwertige Gruppe bedeutet.

6. Flüssigkristallines Medium nach einem oder mehreren der Ansprüche 1 bis 5, **dadurch gekennzeichnet, dass** das Selbstorientierungsadditiv zur vertikalen Orientierung aus der folgenden Gruppe von Verbindungen der Formeln II-A bis II-D 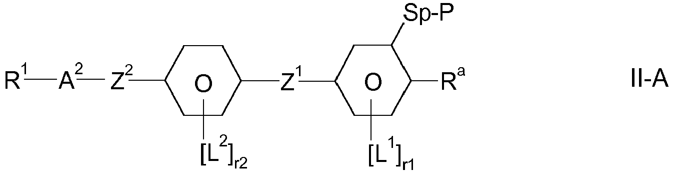 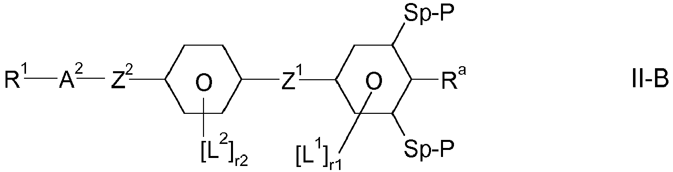 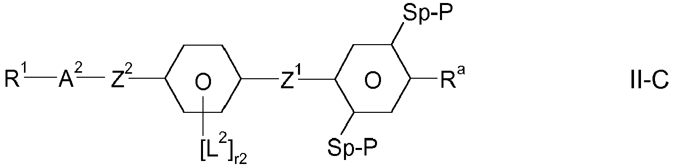 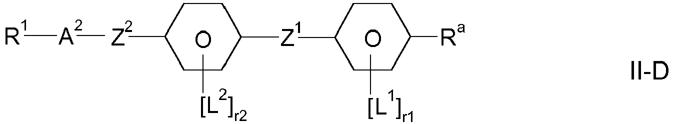 ausgewählt ist, worin R¹, R^{a}, A², Z¹, Z², Sp, P die wie für Formel II in Anspruch 4 definierten Bedeutungen besitzen,
L¹, L² unabhängig wie L in Anspruch 4 definiert sind,
und
r1, r2 unabhängig 0, 1, 2, 3 oder 4 sind.

7. Flüssigkristallines Medium nach einem beliebigen der Ansprüche 1 bis 6, **dadurch gekennzeichnet, dass** in Formel I Z¹, Z² und Z³ -CO-O-, -O-CO- oder eine Einfachbindung bedeuten.

8. Flüssigkristallines Medium nach einem beliebigen der Ansprüche 1 bis 7, **dadurch gekennzeichnet, dass** in Formel I P Acrylat oder Methacrylat ist.

9. Flüssigkristallines Medium nach einem oder mehreren der Ansprüche 1 bis 8, **dadurch gekennzeichnet, dass** das Gemisch 0,01 bis 10 Gew.-% des Selbstorientierungsadditivs, bezogen auf das Gesamtgemisch, enthält.

10. Flüssigkristallines Medium nach einem oder mehreren der Ansprüche 1 bis 9, **dadurch gekennzeichnet, dass** es 0,001 bis 0,01 Gew.-% der Verbindung der Formel I, bezogen auf das Gesamtmedium, enthält.

11. Flüssigkristallines Medium nach beliebigen der Ansprüche 1 bis 10, **dadurch gekennzeichnet, dass** es zusätzlich eine oder mehrere polymerisierbare Verbindungen enthält, die von Formel I oder II verschieden sind.

12. Flüssigkristallines Medium nach einem oder mehreren der Ansprüche 1 bis 11, **dadurch gekennzeichnet, dass** die zusätzliche polymerisierbare Verbindung aus den Verbindungen der Formel M
R^{Ma}-A^{M1}-(Z^{M1}-A^{M2})ₘ₁-R^{Mb} M
ausgewählt ist, worin die einzelnen Reste die folgenden Bedeutungen besitzen:
R^{Ma} und R^{Mb} bedeuten jeweils unabhängig voneinander P, P-Sp-, H, Halogen, SF₅, NO₂, eine Alkyl-, Alkenyl- oder Alkinylgruppe, wobei mindestens einer der Reste R^{Ma} und R^{Mb} vorzugsweise eine Gruppe P oder P-Sp- bedeutet oder enthält,
P bedeutet eine polymerisierbare Gruppe,
Sp bedeutet eine Spacergruppe oder eine Einfachbindung,
A^{M1} und A^{M2} bedeuten jeweils unabhängig voneinander eine aromatische, heteroaromatische, alicyclische oder heterocyclische Gruppe, vorzugsweise mit 4 bis 25 Ringatomen, vorzugsweise C-Atomen, die auch anellierte Ringe umfassen oder enthalten kann und die gegebenenfalls ein- oder mehrfach durch L substituiert sein kann,
L bedeutet P, P-Sp-, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, gegebenenfalls substituiertes Silyl, gegebenenfalls substituiertes Aryl mit 6 bis 20 C-Atomen oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin zusätzlich ein oder mehrere H-Atome durch F, Cl, P oder P-Sp- ersetzt sein können, vorzugsweise P, P-Sp-, H, Halogen, SF₅, NO₂, eine Alkyl-, Alkenyl- oder Alkinylgruppe,
Y¹ bedeutet Halogen,
Z^{M1} bedeutet -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ oder eine Einfachbindung,
R⁰ und R⁰⁰ bedeuten jeweils unabhängig voneinander H oder Alkyl mit 1 bis 12 C-Atomen,
R^{x} bedeutet P, P-Sp-, H, Halogen, geradkettiges, verzweigtes oder cyclisches Alkyl mit 1 bis 25 C-Atomen, worin zusätzlich eine oder mehrere nicht benachbarte CH₂-Gruppen so durch -O-, -S-, -CO-, -CO-O-, -O-CO-, -O-CO-O- ersetzt sein können, dass O- und/oder S-Atome nicht direkt miteinander verknüpft sind, und worin zusätzlich ein oder mehrere H-Atome durch F, Cl, P oder P-Sp- ersetzt sein können, eine gegebenenfalls substituierte Aryl- oder Aryloxygruppe mit 6 bis 40 C-Atomen oder eine gegebenenfalls substituierte Heteroaryl- oder Heteroaryloxygruppe mit 2 bis 40 C-Atomen,
m1 bedeutet 0, 1, 2, 3 oder 4, und
n1 bedeutet 1, 2, 3 oder 4, wobei mindestens eine, vorzugsweise eine, zwei oder drei, besonders bevorzugt eine oder zwei, von der Gruppe R^{Ma}, R^{Mb} und den Substituenten L, die vorhanden sind, eine Gruppe P oder P-Sp-bedeutet oder mindestens eine Gruppe P oder P-Sp- enthält.

13. Flüssigkristallines Medium nach einem oder mehreren der Ansprüche 1 bis 12, **dadurch gekennzeichnet, dass** es zusätzlich eine oder mehrere Verbindungen enthält, die aus der Gruppe der Verbindungen der Formeln CY, PY und PYP 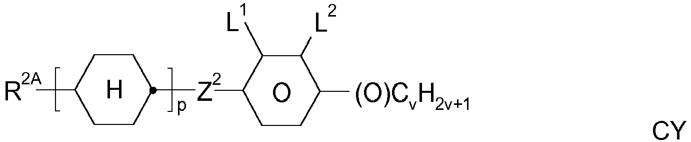 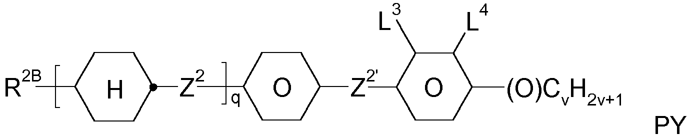 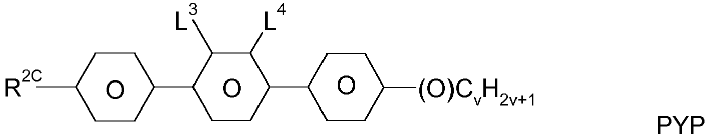 ausgewählt sind, worin
R^{2A}, R^{2B} und R^{2C} jeweils unabhängig voneinander H, einen Alkyl- oder Alkenylrest mit bis zu 15 C-Atomen bedeuten, der unsubstituiert, einfach durch CN oder CF₃ substituiert oder mindestens einfach durch Halogen substituiert ist, wobei zusätzlich eine oder mehrere CH₂-Gruppen in diesen Resten so durch -O-, -S-, 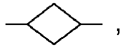 -C≡C-, -CF₂O-, -OCF₂-, -OC-O- oder -O-CO- ersetzt sein können, dass O-Atome nicht direkt miteinander verknüpft sind,
L¹⁻⁴ jeweils unabhängig voneinander F, Cl, CF₃ oder OCHF₂ bedeuten,
Z² und Z² jeweils unabhängig voneinander eine Einfachbindung, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O- bedeuten, (O)CᵥH₂ᵥ₊₁ OCᵥH₂ᵥ₊₁ oder CᵥH₂ᵥ₊₁ bedeutet,
p 0, 1 oder 2 bedeutet,
q 0 oder 1 bedeutet, und
v 1 bis 6 bedeutet.

14. Flüssigkristallines Medium nach einem beliebigen der Ansprüche 1 bis 13, **dadurch gekennzeichnet, dass** es eine oder mehrere nicht polymerisierbare Alkenylverbindungen enthält.

15. Flüssigkristallines Medium nach einem beliebigen der Ansprüche 1 bis 14, **dadurch gekennzeichnet, dass** es eine oder mehrere Alkenylverbindungen enthält, die aus den folgenden Formeln ausgewählt sind: 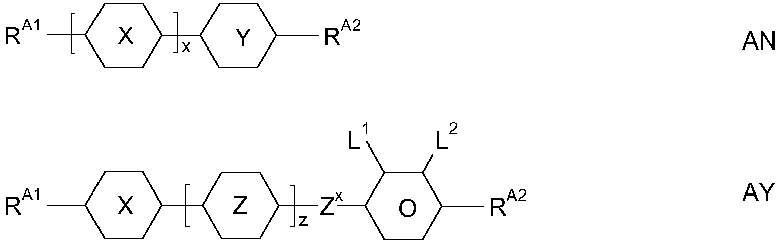 worin die einzelnen Reste bei jedem Auftreten gleich oder verschieden, jeweils unabhängig voneinander, die folgende Bedeutung besitzen: 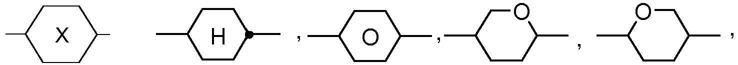 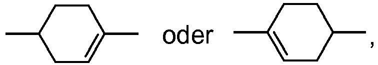 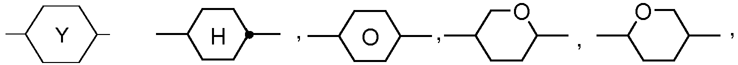 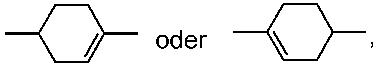 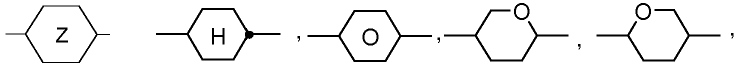 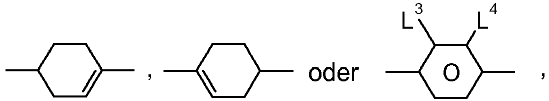
R^{A1} Alkenyl mit 2 bis 9 C-Atomen oder, wenn mindestens einer der Ringe X, Y und Z Cyclohexenyl bedeutet, auch eine der Bedeutungen von R^{A2},
R^{A2} Alkyl mit 1 bis 12 C-Atomen, worin zusätzlich eine oder zwei nicht benachbarte CH₂-Gruppen so durch -O-, -CH=CH-, -CO-, -OCO- oder -COO- ersetzt sein können, dass O-Atome nicht direkt miteinander verknüpft sind,
Z^{x} -CH₂CH₂-, -CH=CH-, -CF₂O-, -OCF₂-, -CH₂O-, -OCH₂-, CO-O-, -O-CO-, -C₂F₄-, -CF=CF-, -CH=CH-CH₂O- oder eine Einfachbindung,
L¹⁻² jeweils unabhängig voneinander H, F, Cl, OCF₃, CF₃, CH₃, CH₂F oder CHF₂H, vorzugsweise H, F oder Cl, bei denen mindestens L¹ oder L² nicht H ist,
L³⁻⁴ jeweils unabhängig voneinander H, F, Cl, OCF₃, CF₃, CH₃, CH₂F oder CHF₂H, vorzugsweise H, F oder Cl,
x 1 oder 2,
z 0 oder 1.

16. Flüssigkristallines Medium nach einem oder mehreren der Ansprüche 1 bis 15, **dadurch gekennzeichnet, dass** es zusätzlich eine oder mehrere Verbindungen der Formel III 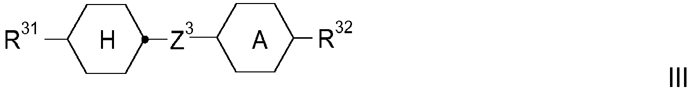 enthält, worin
R³¹ und R³² jeweils unabhängig voneinander einen geradkettigen Alkyl-, Alkoxyalkyl- oder Alkoxyrest mit bis zu 12 C-Atomen bedeuten, 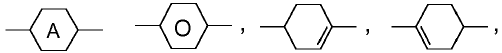 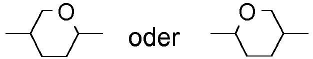 bedeutet,
Z³ eine Einfachbindung, -CH₂CH₂-, -CH=CH-, -CF₂O-, -OCF₂-, -CH₂O-, -OCH₂-, -COO-, -OCO-, -C₂F₄-, -C₄H₈-, -CF=CF- bedeutet.

17. Flüssigkristallines Medium nach einem beliebigen der Ansprüche 1 bis 16, **dadurch gekennzeichnet, dass** die polymerisierbaren Verbindungen polymerisiert sind.

18. Verfahren zur Herstellung eines flüssigkristallinen Mediums nach einem oder mehreren der Ansprüche 1 bis 17, **dadurch gekennzeichnet, dass** man mindestens ein Selbstorientierungsadditiv mit mindestens zwei flüssigkristallinen Verbindungen und mindestens einer Verbindung der Formel I und gegebenenfalls mit mindestens einer polymerisierbaren Verbindung und gegebenenfalls einem oder mehreren weiteren Zusatzstoffen mischt.

19. Verwendung des flüssigkristallinen Mediums nach einem oder mehreren der Ansprüche 1 bis 17 in elektrooptischen Anzeigen.

20. Verwendung des flüssigkristallinen Mediums nach Anspruch 19 in elektrooptischen Anzeigen für den selbstorientierenden VA-Modus.

21. Elektrooptische Anzeige mit Aktivmatrix- oder Passivmatrix-Adressierung, **dadurch gekennzeichnet, dass** sie als Dielektrikum ein flüssigkristallines Medium nach einem oder mehreren der Ansprüche 1 bis 17 enthält.

22. Elektrooptische Anzeige nach Anspruch 21, **dadurch gekennzeichnet, dass** sie ein polymerstabilisiertes flüssigkristallines Medium enthält.

23. Anzeige der Ansprüche 21 oder 22, **dadurch gekennzeichnet, dass** sie zwei Substrate, von denen mindestens eines lichtdurchlässig ist, eine auf jedem Substrat vorgesehene Elektrode oder zwei auf nur einem der Substrate vorgesehene Elektroden und zwischen den Substraten angeordnet eine Schicht eines flüssigkristallinen Mediums wie in einem beliebigen der Ansprüche 1 bis 18 definiert enthält, enthaltend eine oder mehrere polymerisierbare Verbindungen, bei der die polymerisierbaren Verbindungen polymerisiert sind.

## Revendications

1. Milieu cristallin liquide comprenant un additif d'auto-alignement pour l'alignement vertical,
**caractérisé en ce qu'**il comprend de façon additionnelle au moins un composé polymérisable pris parmi les formules qui suivent I-1 à I-45 ou un polymère qui comprend sa forme polymérisée : 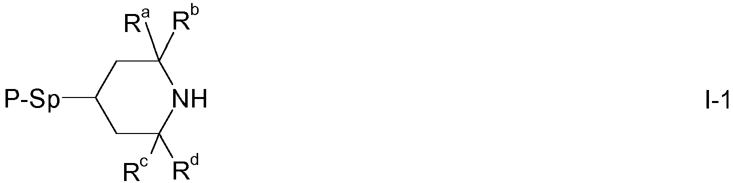 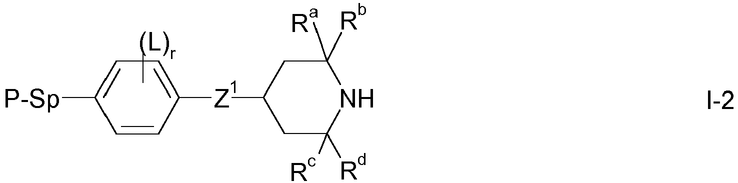 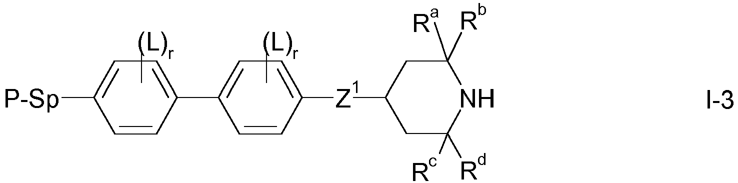 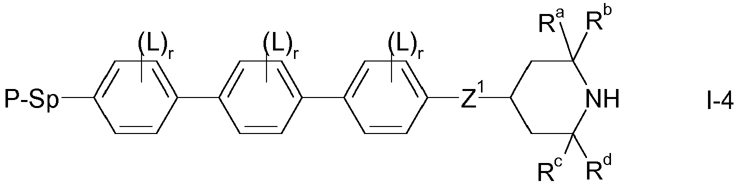 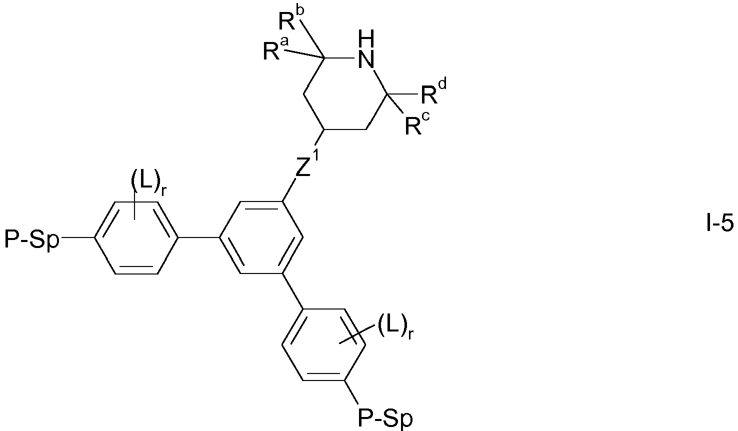 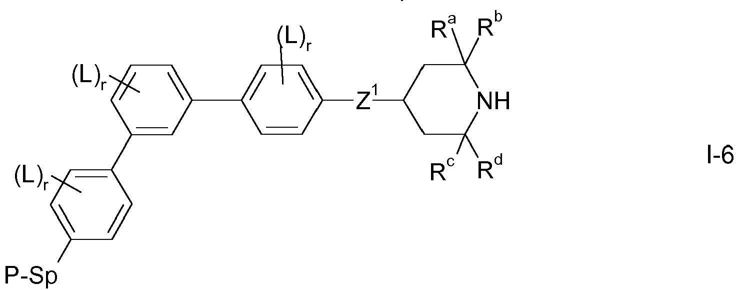 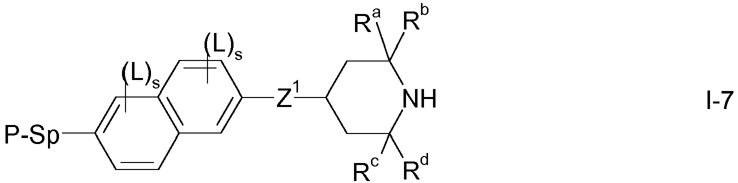 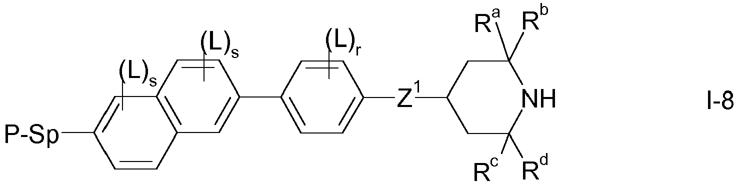 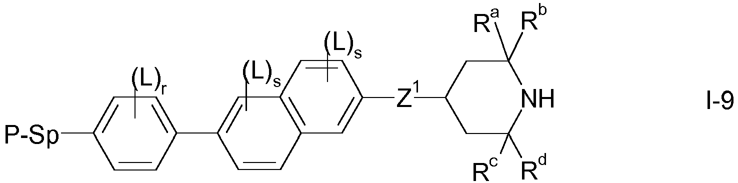 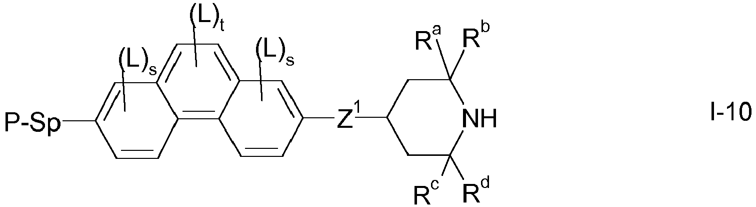 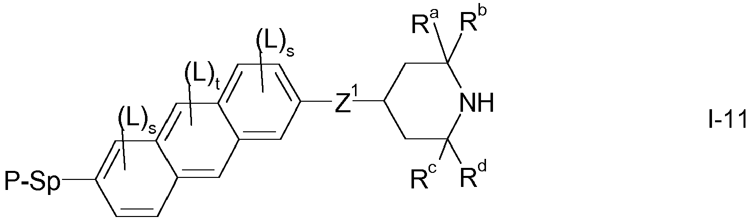 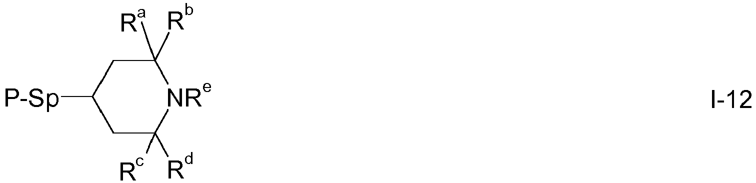 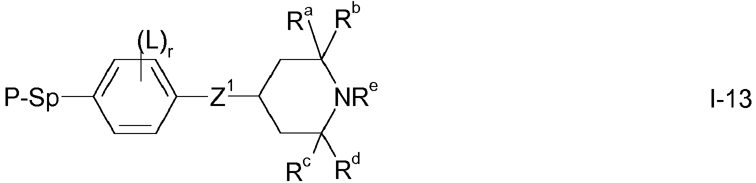 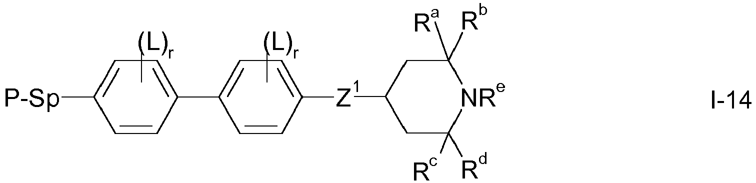 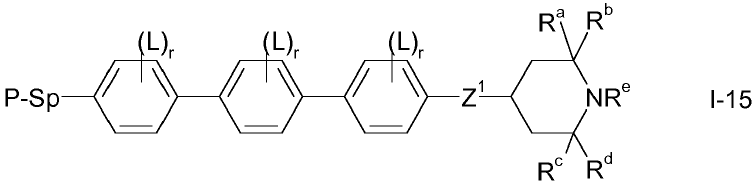 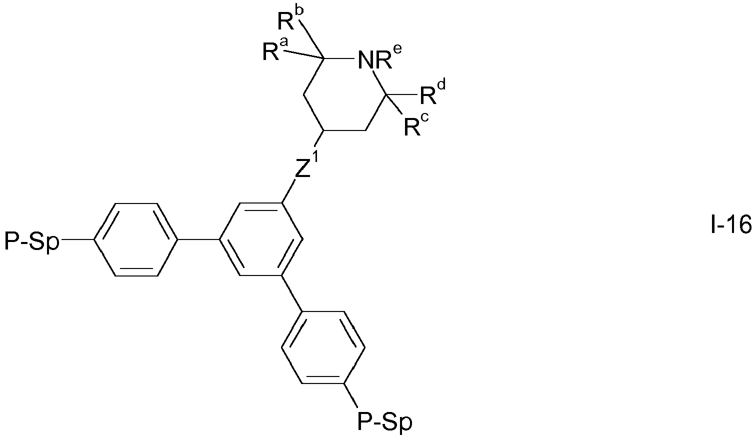 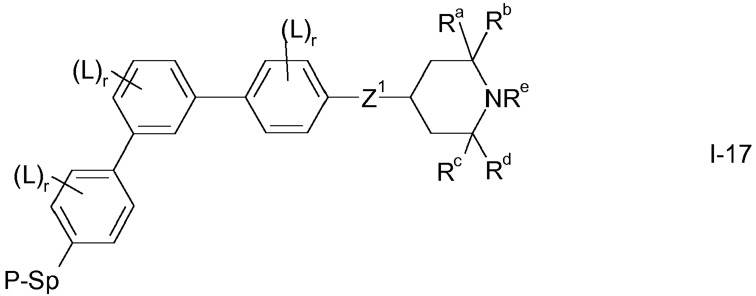 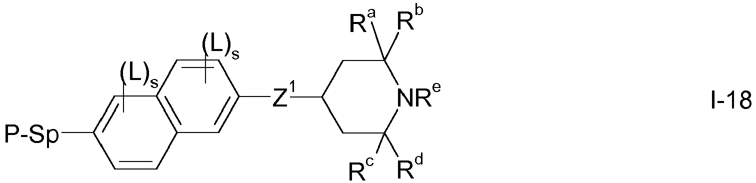 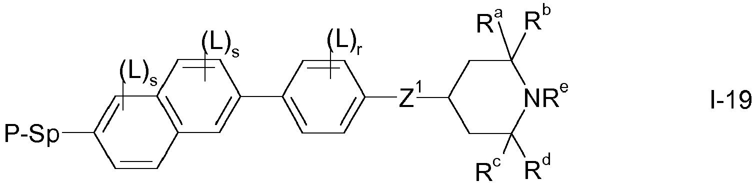 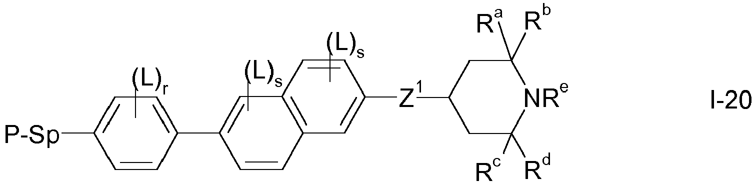 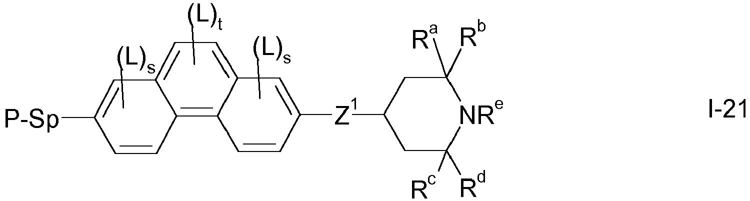 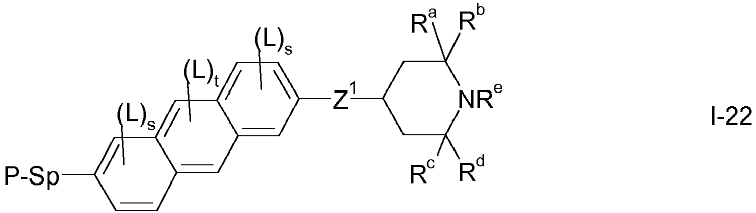 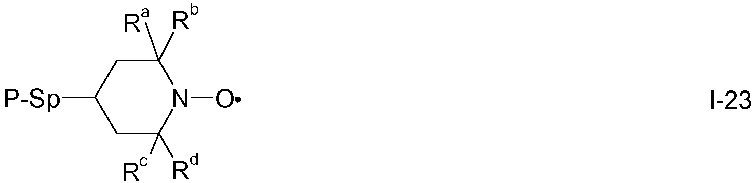 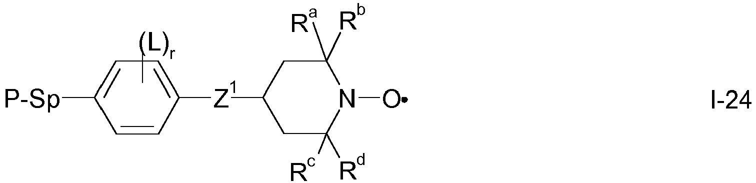 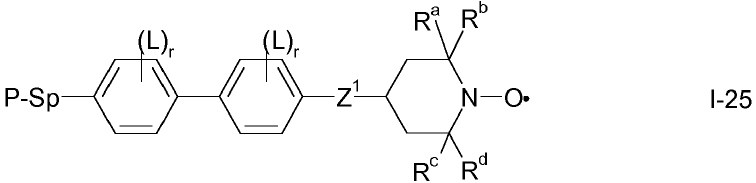 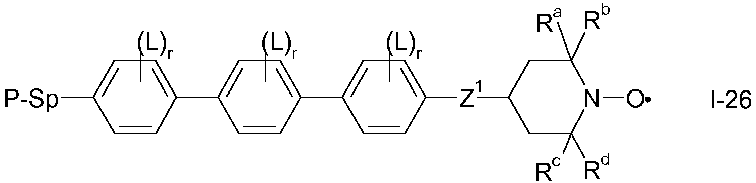 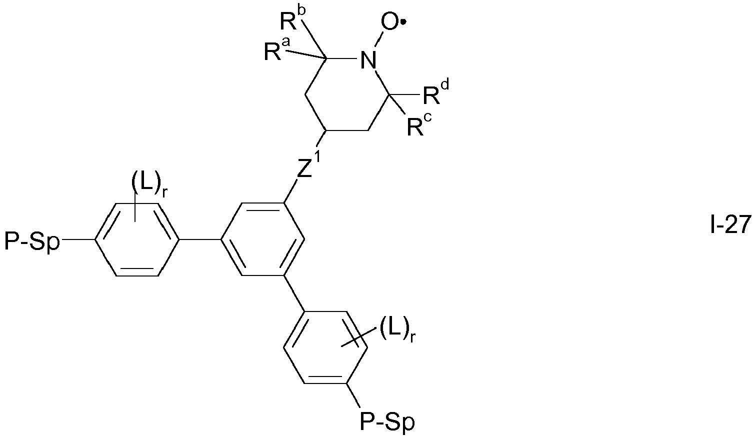 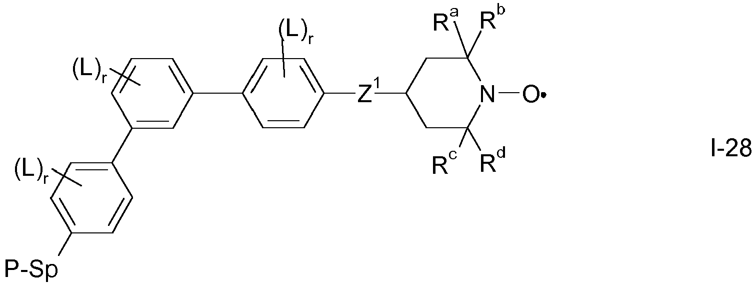 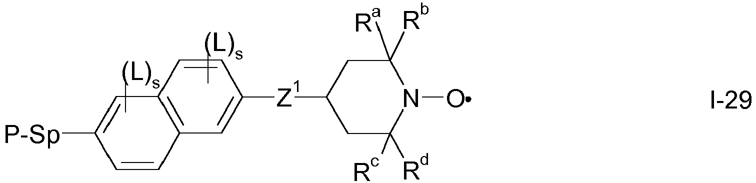 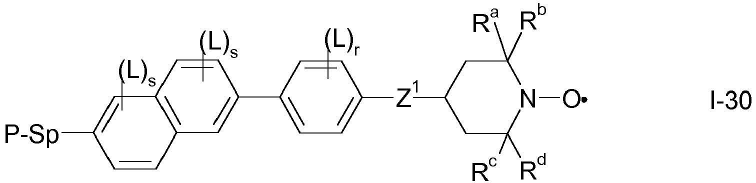 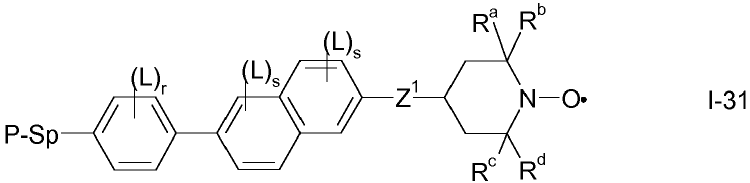 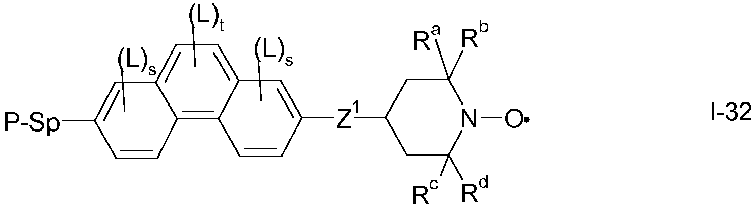 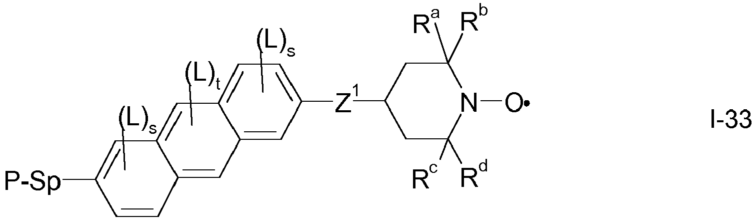 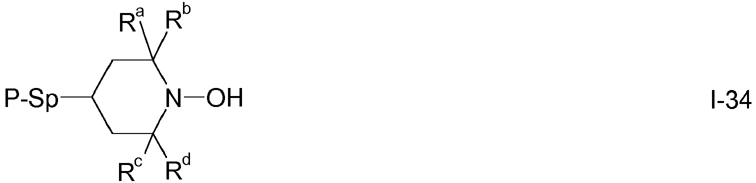 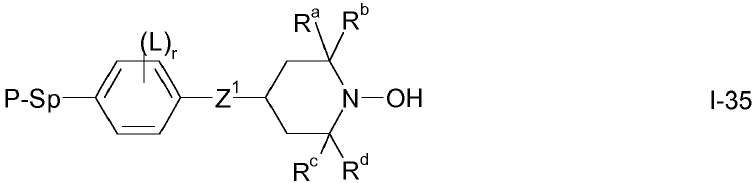 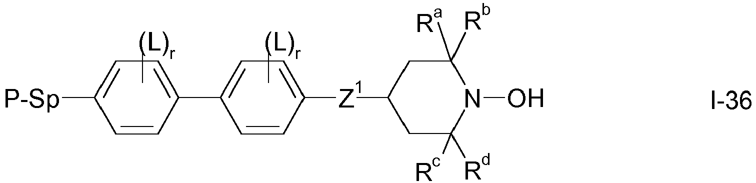 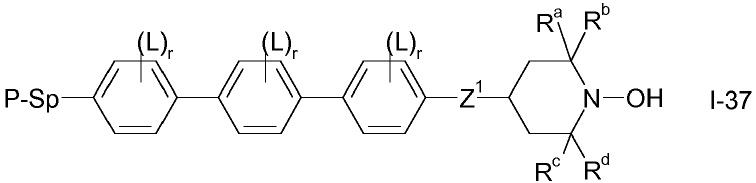 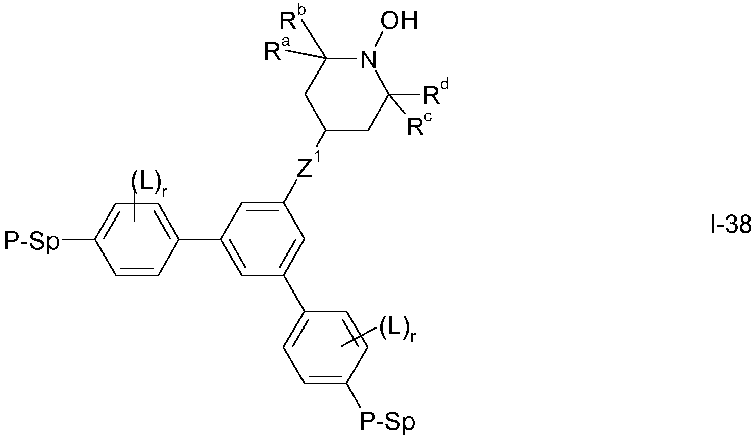 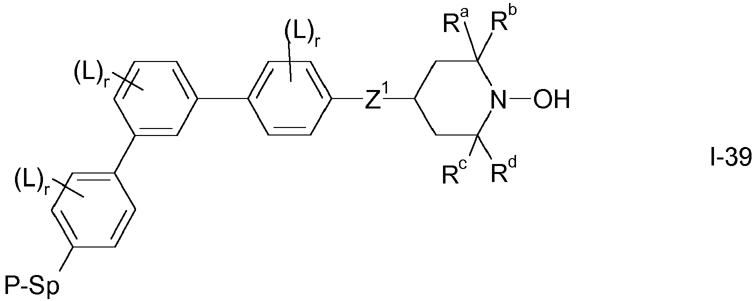 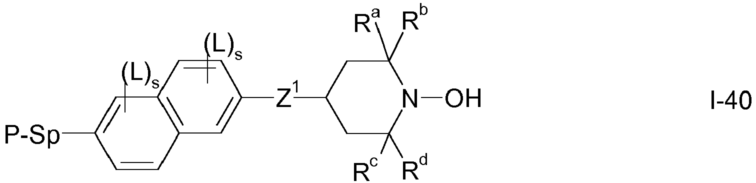 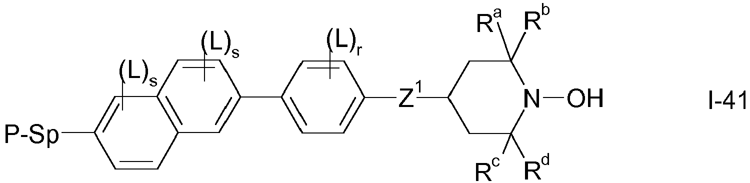 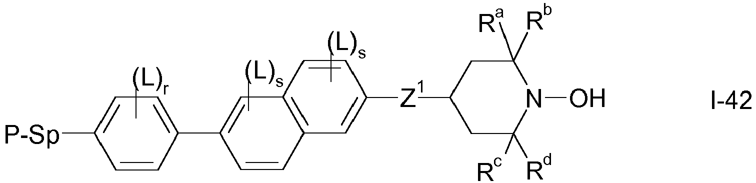 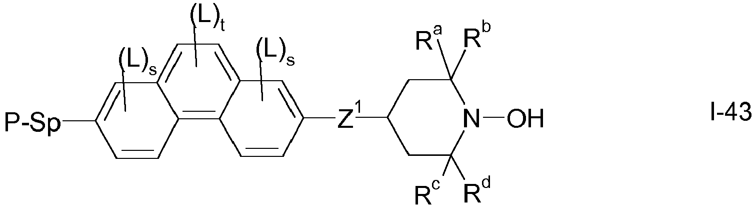 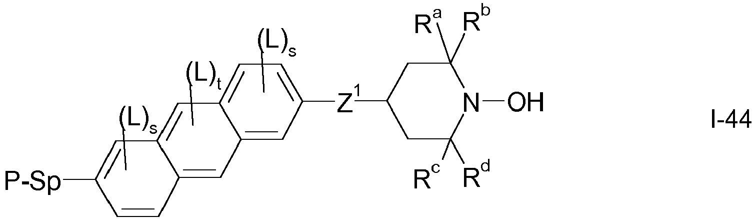 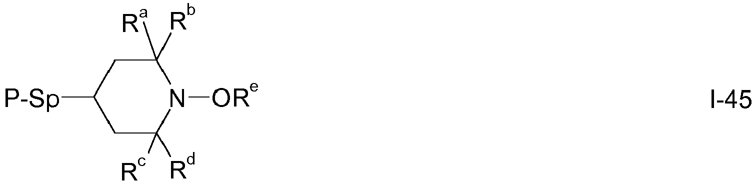 dans lesquelles les radicaux individuels, de manière indépendante les uns des autres et pour chaque occurrence, de manière identique ou différente, présentent les significations qui suivent :
R^{a, b, c, d} alkyle en chaîne droite ou ramifié qui comporte de 1 à 10 atome(s) de C ;
P vinyloxy, acrylate, méthacrylate, fluoroacrylate, chloroacrylate, oxétane ou époxy ;
Sp un groupe d'espaceur ou une liaison simple ;
Z¹ -O-, -S-, -CO-, -CO-O-, -O-CO-, -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰⁰R⁰⁰⁰-, ou une liaison simple ;
Z², Z³ -O-, -S-, -CO-, -CO-O-, -O-CO-, -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -CH=CF-, -CF=CH-, -C≡C-, -CH=CH-CO-O-, -O-CO-CH=CH-, -CH₂-CH₂-CO-O-, -O-CO-CH₂-CH₂-, -CR⁰⁰R⁰⁰⁰-, ou une liaison simple ;
R⁰⁰, R⁰⁰⁰ H ou alkyle qui comporte de 1 à 12 atome(s) de C ;
L P-Sp-, F, Cl, CN, ou alkyle en chaîne droite, ramifié ou cyclique qui comporte de 1 à 25 atome(s) de C, dans lequel un ou plusieurs groupe(s) CH₂ non adjacents est/sont en option remplacé(s) par -O-, -S-, -CO-, -CO-O-, -O-CO-, -O-CO-O- de telle sorte que des atomes de O- et/ou de S ne soient pas connectés directement les uns aux autres, et dans lequel un ou plusieurs atome(s) de H est/sont chacun en option remplacé(s) par F, Cl ou P-Sp- ;
n est 1, 2, 3 ou 4;
R^{e} est alkyle qui comporte de 1 à 12 atome(s) de C ;
r est 0, 1, 2, 3 ou 4 ; et
s est 0, 1, 2 ou 3.

2. Milieu cristallin liquide selon la revendication 1, **caractérisé en ce qu'**il comprend un ou plusieurs composé(s) polymérisable(s) additionnel(s) ou un polymère qui comprend leur forme polymérisée.

3. Milieu cristallin liquide selon la revendication 1 ou 2, **caractérisé en ce que** l'additif d'auto-alignement pour l'alignement vertical est de la formule II :
MES-R² II
dans laquelle :
MES est un groupe mésogène qui comprend un ou plusieurs cycle(s) et en option, un ou plusieurs groupe(s) polymérisable(s) ;
et
R² est un groupe d'ancrage polaire.

4. Milieu cristallin liquide selon une ou plusieurs des revendications 1 à 3, **caractérisé en ce que** l'additif d'auto-alignement pour l'alignement vertical est de la formule IIa :
R¹-[A²-Z²]ₘ-A¹-R^{a} (IIa)
dans laquelle :
A¹, A² représentent chacun, de manière indépendante l'un de l'autre, un groupe aromatique, hétéroaromatique, alicyclique ou hétérocyclique, lequel peut également contenir des cycles fusionnés, et lequel peut également être mono- ou polysubstitué par un groupe L ou -Sp-P ;
L représente dans chaque cas, de manière indépendante des autres occurrences, H, F, Cl, Br, I, -CN, -NO₂, -NCO, -NCS, -OCN, -SCN, -C(=O)N(R⁰)₂, -C(=O)R⁰, silyle en option substitué, aryle ou cycloalkyle en option substitué qui comporte de 3 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F ou par Cl ;
P représente un groupe polymérisable ;
Sp représente un groupe d'espaceur ou une liaison simple ;
Z2 représente dans chaque cas, de manière indépendante des autres occurrences, une liaison simple, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, -CH(-Sp-P)CH(-Sp-P)- ;
n1 représente 1, 2, 3 ou 4 ;
m représente 0, 1, 2, 3, 4, 5 ou 6 ;
R⁰ représente, dans chaque cas de manière indépendante des autres occurrences, alkyle qui comporte de 1 à 12 atome(s) de C ;
R⁰⁰ représente, dans chaque cas de manière indépendante des autres occurrences, H ou alkyle qui comporte de 1 à 12 atome(s) de C ;
R¹ représente, de manière indépendante des autres occurrences, H, halogène, alkyle en chaîne droite, ramifié ou cyclique qui comporte de 1 à 25 atome(s) de C, où, en outre, un ou plusieurs groupe(s) CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres et où, en outre, un ou plusieurs atome(s) de H peut/peuvent être remplacé(s) par F ou par Cl ; ou un groupe -Sp-P ;
et
R^{a} représente un groupe d'ancrage polaire qui comporte au moins un groupe qui est sélectionné parmi -OH, -NH₂, NHR¹¹, C(O)OH et -CHO, où R¹¹ représente alkyle qui comporte de 1 à 12 atome(s) de C.

5. Milieu cristallin liquide selon une ou plusieurs des revendications 1 à 4, **caractérisé en ce que** l'additif d'auto-alignement comporte un groupe d'ancrage R² ou R^{a} qui est sélectionné parmi les formules : 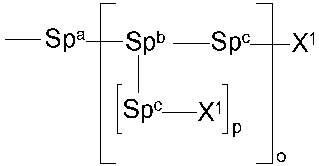 ou 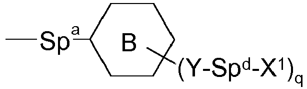 dans lesquelles :
p représente 1 ou 2 ;
q représente 2 ou 3 ;
B représente un système de cycle substitué ou non substitué ou un système de cycle condensé ;
Y représente, de manière indépendante des autres occurrences, -O-, -S-, -C(O)-, -C(O)O-, -OC(O)-, -NR¹¹- ou une liaison simple ;
o représente 0 ou 1 ;
X¹ représente, de manière indépendante des autres occurrences, H, alkyle, fluoroalkyle, OH, NH₂, NHR¹¹, NR¹¹₂, OR¹¹, C(O)OH, -CHO, où au moins un groupe X¹ représente un radical qui est sélectionné parmi -OH, -NH₂, NHR¹¹, C(O)OH et -CHO ;
R¹¹ représente alkyle qui comporte de 1 à 12 atome(s) de C ;
Sp^{a}, Sp^{c}, Sp^{d} représentent chacun, de manière indépendante les uns des autres, un groupe d'espaceur ou une liaison simple ; et
Sp^{b} représente un groupe tri- ou tétravalent.

6. Milieu cristallin liquide selon une ou plusieurs des revendications 1 à 5, **caractérisé en ce que** l'additif d'auto-alignement pour l'alignement vertical est sélectionné parmi le groupe de composés qui suit des formules II-A à II-D : 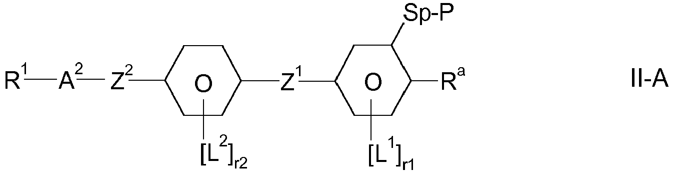 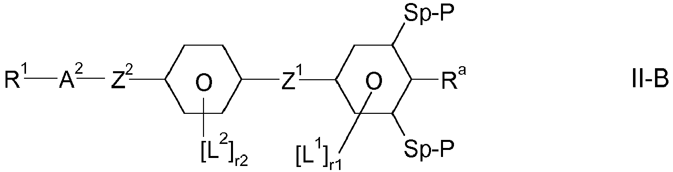 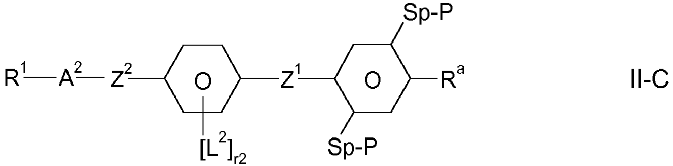 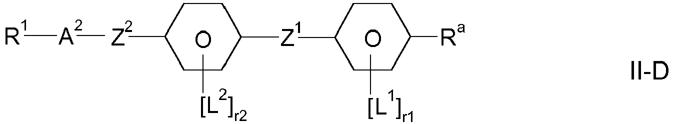
dans lesquelles R¹, R^{a}, A², Z¹, Z², Sp, P présentent les significations qui ont été définies pour la formule II selon la revendication 4 ;
L¹, L², sont définis de manière indépendante tels que L selon la revendication 4 ;
et
r1, r2 sont, de manière indépendante l'un de l'autre, 0, 1, 2, 3, ou 4.

7. Milieu cristallin liquide selon l'une quelconque des revendications 1 à 6, **caractérisé en ce que**, dans la formule I, Z¹, Z² et Z³ représentent -CO-O-, -O-CO- ou une liaison simple.

8. Milieu cristallin liquide selon l'une quelconque des revendications 1 à 7, **caractérisé en ce que**, dans la formule I, P est acrylate ou méthacrylate.

9. Milieu cristallin liquide selon l'une quelconque des revendications 1 à 8, **caractérisé en ce que** le mélange contient de 0,01 % à 10 % en poids de l'additif d'auto-alignement sur la base du mélange pris dans sa globalité.

10. Milieu cristallin liquide selon l'une quelconque des revendications 1 à 9, **caractérisé en ce qu'**il contient de 0,001 % à 0,01 % en poids du composé de la formule I sur la base du milieu pris dans sa globalité.

11. Milieu cristallin liquide selon l'une quelconque des revendications 1 à 10, **caractérisé en ce qu'**il comprend de façon additionnelle un ou plusieurs composé(s) polymérisable(s) qui est/sont différent(s) de la formule I ou II.

12. Milieu cristallin liquide selon l'une quelconque des revendications 1 à 11, **caractérisé en ce que** le composé polymérisable additionnel est sélectionné parmi les composés de la formule M :
R^{Ma}-A^{M1}-(Z^{M1}-A^{M2})ₘ₁-R^{Mb} M
dans laquelle les radicaux individuels présentent les significations qui suivent :
R^{Ma} et R^{Mb} représentent chacun, de manière indépendante l'un de l'autre, P, P-Sp-, H, halogène, SF₅, NO₂, un groupe alkyle, alkényle ou alkynyle, où au moins l'un des radicaux R^{Ma} et R^{Mb} représente ou contient de préférence un groupe P ou P-Sp- ;
P représente un groupe polymérisable ;
Sp représente un groupe d'espaceur ou une liaison simple ;
A^{M1} et A^{M2} représentent chacun, de manière indépendante l'un de l'autre, un groupe aromatique, hétéroaromatique, alicyclique ou hétérocyclique, de préférence qui comporte de 4 à 25 atomes de cycle, de préférence des atomes de C, lequel peut également englober ou contenir des cycles fusionnés, et lequel peut en option être mono- ou polysubstitué par L ;
L représente P, P-Sp-, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, silyle en option substitué, aryle en option substitué qui comporte de 6 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F, Cl, P ou P-Sp-, de préférence P, P-Sp-, H, halogène, SF₅, NO₂, un groupe alkyle, alkényle ou alkynyle ;
Y¹ représente halogène ;
Z^{M1} représente -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-, -COO-, -OCO-CH=CH-, CR⁰R⁰⁰ ou une liaison simple ;
R⁰ et R⁰⁰ représentent chacun, de manière indépendante l'un de l'autre, H ou alkyle qui comporte de 1 à 12 atome(s) de C ;
R^{x} représente P, P-Sp-, H, halogène, alkyle en chaîne droite, ramifié ou cyclique qui comporte de 1 à 25 atome(s) de C, où, en outre, un ou plusieurs groupe(s) CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, Cl, P ou P-Sp-, un groupe aryle ou aryloxy en option substitué qui comporte de 6 à 40 atomes de C, ou un groupe hétéroaryle ou hétéroaryloxy en option substitué qui comporte de 2 à 40 atomes de C;
m1 représente 0, 1, 2, 3 ou 4 ; et
n1 représente 1, 2, 3 ou 4 ; où au moins un, de préférence un, deux ou trois, de façon particulièrement préférable, un ou deux, pris parmi le groupe R^{Ma}, R^{Mb} et les substituants L qui sont présents, représente(nt) un groupe P ou P-Sp- ou contient au moins un groupe P ou P-Sp-.

13. Milieu cristallin liquide selon l'une quelconque des revendications 1 à 12, **caractérisé en ce qu'**il contient de façon additionnelle un ou plusieurs composé(s) qui est/sont sélectionné(s) parmi le groupe des composés des formules CY, PY et PYP : 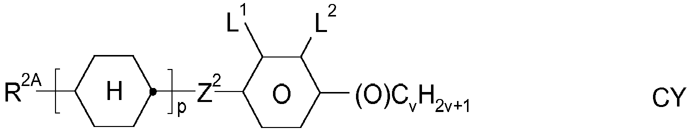 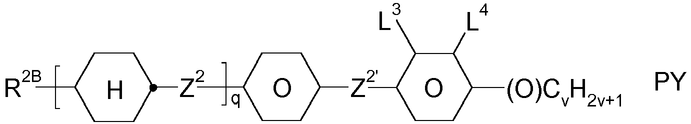 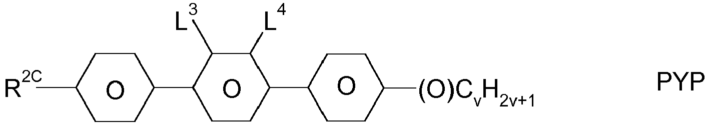 dans lesquelles :
R^{2A}, R^{2B} et R^{2C} représentent chacun, de manière indépendante les uns des autres, un radical alkyle ou alkényle qui comporte jusqu'à 15 atomes de C, lequel est non substitué, monosubstitué par CN ou CF₃ ou au moins monosubstitué par halogène, où, en outre, un ou plusieurs groupe(s) CH₂ dans ces radicaux peut/ peuvent être remplacé(s) par -O-, -S-, 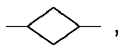 -C≡C-, -CF₂O-, -OCF₂-, -OC-O- ou -O-CO- de telle sorte que des atomes de O ne soient pas liés directement les uns aux autres ;
L¹⁻⁴ représentent chacun, de manière indépendante les uns des autres, F, Cl, CF₃ ou OCHF₂;
Z² et Z^{2'} représentent chacun, de manière indépendante l'un de l'autre, une liaison simple, -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O- ;
(O)CᵥH₂ᵥ₊₁ représente OCᵥH₂ᵥ₊₁ ou CᵥH₂ᵥ₊₁ ;
p représente 0, 1 ou 2 ;
q représente 0 ou 1 ; et
v représente 1 à 6.

14. Milieu cristallin liquide selon l'une quelconque des revendications 1 à 13, **caractérisé en ce qu'**il comprend un ou plusieurs composé(s) alkényle non polymérisable(s).

15. Milieu cristallin liquide selon l'une quelconque des revendications 1 à 14, **caractérisé en ce qu'**il comprend un ou plusieurs composé(s) alkényle qui est/sont sélectionné(s) parmi les formules qui suivent : 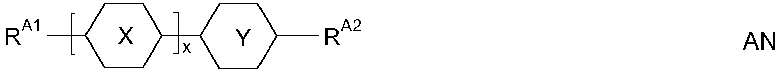 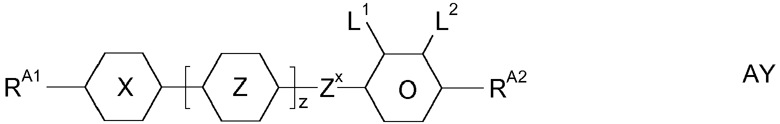 dans lesquelles les radicaux individuels, pour chaque occurrence de manière identique ou différente, présentent chacun, de manière indépendante les uns des autres, les significations qui suivent : 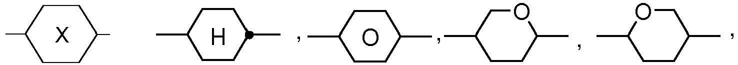 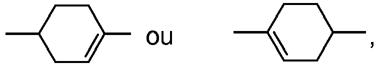 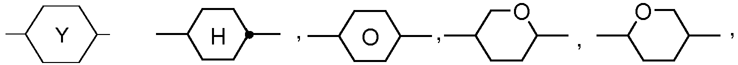 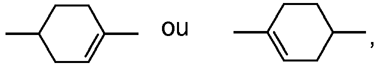 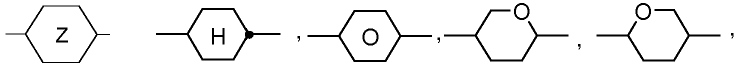 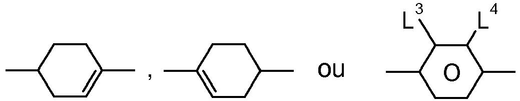
R^{A1} alkényle qui comporte de 2 à 9 atomes de C ou, si au moins l'un des cycles X, Y et Z représente cyclohexényle, également l'une des significations de R^{A2} ;
R^{A2} alkyle qui comporte de 1 à 12 atome(s) de C, où, en outre, un ou deux groupe(s) CH₂ non adjacents peut/peuvent être remplacé(s) par -O-, -CH=CH-, -CO-, -OCO- ou -COO- de telle sorte que des atomes de O ne soient pas liés directement les uns aux autres ;
Z^{x} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, ou une liaison simple ;
L¹⁻² chacun, de manière indépendante l'un de l'autre, H, F, Cl, OCF₃, CF₃, CH₃, CH₂F ou CHF₂H, de préférence H, F ou Cl, dans lequel au moins L¹ ou L² n'est pas H ;
L³⁻⁴ chacun, de manière indépendante l'un de l'autre, H, F, Cl, OCF₃, CF₃, CH₃, CH₂F ou CHF₂H, de préférence H, F ou Cl ;
x 1 ou 2 ;
z 0 ou 1.

16. Milieu cristallin liquide selon une ou plusieurs des revendications 1 à 15, **caractérisé en ce qu'**il contient de façon additionnelle un ou plusieurs composé(s) de la formule III : 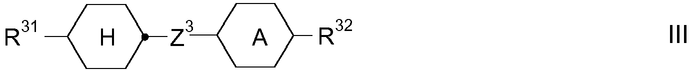 dans laquelle :
R³¹ et R³² représentent chacun, de manière indépendante l'un de l'autre, un radical alkyle, alcoxyalkyle ou alcoxy en chaîne droite qui comporte jusqu'à 12 atomes de C ; 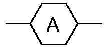 représen- 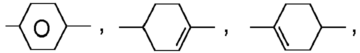 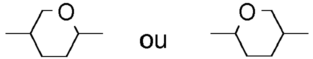
Z³ représente une liaison simple, -CH₂CH₂-, -CH=CH-, -CF₂O-, -OCF₂-, -CH₂O-, -OCH₂-, -COO-, -OCO-, -C₂F₄-, -C₄H₈-, -CF=CF-.

17. Milieu cristallin liquide selon l'une quelconque des revendications 1 à 16, **caractérisé en ce que** les composés polymérisables sont polymérisés.

18. Procédé pour la préparation d'un milieu cristallin liquide selon une ou plusieurs des revendications 1 à 17, **caractérisé en ce qu'**au moins un additif d'auto-alignement est mélangé avec au moins deux composés cristallins liquides et au moins un composé de la formule I, et en option, avec au moins un composé polymérisable et en option, avec un ou plusieurs additif(s) additionnel(s).

19. Utilisation du milieu cristallin liquide selon une ou plusieurs des revendications 1 à 17 dans les affichages électro-optiques.

20. Utilisation du milieu cristallin liquide selon la revendication 19 dans les affichages électrooptiques pour le mode VA à auto-alignement.

21. Affichage électro-optique présentant un adressage par matrice active ou par matrice passive, **caractérisé en ce qu'**il contient, en tant que diélectrique, un milieu cristallin liquide selon une ou plusieurs des revendications 1 à 17.

22. Affichage électro-optique selon la revendication 21, **caractérisé en ce qu'**il comprend un milieu cristallin liquide stabilisé en termes de polymère(s).

23. Affichage selon la revendication 21 ou 22, **caractérisé en ce qu'**il comprend deux substrats, dont au moins l'un est transparent vis-à-vis de la lumière, une électrode qui est prévue sur chaque substrat ou deux électrodes qui sont prévues sur seulement l'un des substrats, et, localisée entre les substrats, une couche en un milieu cristallin liquide tel que défini selon l'une quelconque des revendications 1 à 18, comprenant un ou plusieurs composé(s) polymérisable(s), dans lequel les composés polymérisables sont polymérisés.
